# EUROPÄISCHE PATENTSCHRIFT

(11) **EP 3 260 518 B1**
(45) Veröffentlichungstag und Bekanntmachung des Hinweises auf die Patenterteilung: **25.12.2019**
(21) Anmeldenummer: 17183085.4
(22) Anmeldetag: 08.03.2012
(51) Int. Cl.: C09K 19/30, C09K 19/34, C09K 19/44, C09K 19/06, C09K 19/04, C09K 19/12, C09K 19/32, C09K 19/54

(54) **FLÜSSIGKRISTALLINES MEDIUM**
LIQUID CRYSTALLINE MEDIUM
MILIEU CRISTALLIN LIQUIDE

(30) Priorität: 29.03.2011 DE 102011015461
(43) Veröffentlichungstag der Anmeldung: 27.12.2017
(62) Teilanmeldung aus: 12710137.6
(73) Patentinhaber: Merck Patent GmbH, 64293 Darmstadt (DE)
(72) Erfinder: Klasen-Memmer, Melanie, 67259 Heuchelheim (DE); Goetz, Achim, 64665 Alsbach-Haehnlein (DE); Bernatz, Georg, 64289 Darmstadt (DE)

(56) Entgegenhaltungen:
- EP-A1- 1 378 557
- EP-A1- 2 128 225
- EP-A1- 2 380 947
- DE-A1-102008 064 171
- GB-A- 2 078 727
- US-A1- 2006 198 968
- US-A1- 2008 075 891
- US-A1- 2009 278 088
- US-A1- 2010 051 864
- US-B1- 6 576 303

## Beschreibung

Die Erfindung betrifft ein flüssigkristallines Medium nach Anspruch 1, welches mindestens eine Verbindung der Formel I, 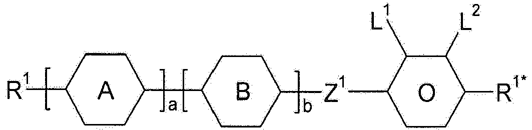 worin
- R¹ und R^{1*}: jeweils unabhängig voneinander einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 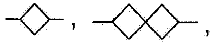 -O-, -CO-O-, -O-CO- so ersetzt sein können, dass O-Atome nicht direkt miteinander verknüpft sind, und worin auch ein oder mehrere H-Atome durch Halogen ersetzt sein können,
- Z¹: -CH₂O- oder -OCH₂-
- a: 0, 1 oder 2
- b: 1 oder 2, 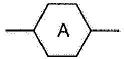 und 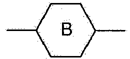 jeweils unabhängig voneinander 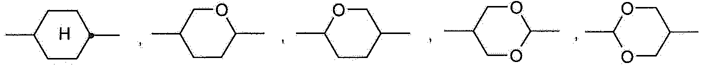 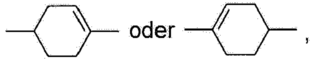
- L¹ und L²: jeweils unabhängig voneinander F, Cl, CF₃, OCF₃ oder CHF₂,
bedeuten, und zusätzlich einen oder mehrere Stabilisatoren
enthält.

Derartige Medien sind insbesondere für elektrooptische Anzeigen mit einer Aktivmatrix-Adressierung basierend auf dem ECB-Effekt sowie für IPS-Anzeigen (In plane switching) oder FFS-Anzeigen (Fringe Field Switching) zu verwenden. Insbesondere sind die erfindungsgemäßen Flüssigkristallmischungen zur Verwendung in FK-Anzeigen des PS-(polymer stabilized) oder PSA- (polymer sustained alignment) Typs geeignet.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen. Wesentlich bessere Blickwinkelabhängigkeiten weisen VA-Displays auf und werden daher hauptsächlich für Fernseher und Monitore verwendet. Hier besteht jedoch weiterhin der Bedarf die Schaltzeiten zu verbessern, insbesondere im Hinblick auf die Verwendung für Fernseher mit "Frame Rates" (Bildwechselfrequenz/Wiederholraten) von mehr als 60 Hz. Dabei dürfen allerdings die Eigenschaften, wie beispielsweise die Tieftemperaturstabilität nicht verschlechtert werden.

Die derzeit verwendeten Flüssigkristallanzeigen (FK-Anzeigen) sind meist solche des TN-Typs (twisted nematic). Diese weisen allerdings den Nachteil einer starken Blickwinkelabhängigkeit des Kontrastes auf. Daneben sind sogenannte VA-Anzeigen (vertical alignment) bekannt, die einen breiteren Blickwinkel aufweisen. Die FK-Zelle einer VA-Anzeige enthält eine Schicht eines flüssigkristallines Mediums zwischen zwei transparenten Elektroden, wobei das flüssigkristalline Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle parallel zu den Elektrodenflächen statt. Weiterhin sind OCB-Anzeigen (optically compensated bend) bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten. Weiterhin sind IPS-Anzeigen (In-Plane Switching) bekannt, die eine FK-Schicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur FK-Schicht aufweist. Dies bewirkt eine Umorientierung der FK-Moleküle in der Schichtebene. Des weiteren wurden sogenannte FFS-Anzeigen (Fringe-Field-Switching) vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist. Stattdessen wird die Vorzugsrichtung des Kipp- oder Tilt-Winkels (engl. "pretilt") durch eine spezielle Ausgestaltung der Elektroden kontrolliert. In den sogenannten MA-Anzeigen (multidomain vertical alignment) wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit. Ein Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den "slits" und "protrusions" vergrößert werden, was jedoch wiederum zu einer Verlängerung der Schaltzeiten führt. Beim sogenannten PVA (Patterned VA) kommt man ganz ohne "Protrusions" aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige gefragt.

Eine Weiterentwicklung stellen die sogenannten PS-Anzeigen (polymer stabilized) dar, die auch unter dem Begriff "PSA" (polymer sustained alignment) bekannt sind. Darin wird dem flüssigkristallinen Medium eine geringe Menge (zum Beispiel 0,3 %, typischerweise <1 %) einer polymerisierbaren Verbindung zugesetzt, welche nach Einfüllen in die FK-Zelle mit oder ohne angelegte elektrische Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als "reaktive Mesogene" (RM) bezeichnet, zur FK-Mischung erwiesen. Mittlerweile wird das PSA-Prinzip in diversen klassischen FK-Anzeigen angewendet. So sind beispielsweise PSA-VA-, PSA-OCB-, PS-IPS, PS-FFS- und PS-TN-Anzeigen bekannt. Die in-situ-Polymerisation der polymerisierbaren Verbindung(en) erfolgt zum Beispiel bei PSA-VA-Anzeigen üblicherweise bei angelegter elektrischer Spannung, bei PSA-IPS-Anzeigen mit oder ohne angelegte elektrische Spannung. Wie man in Testzellen nachweisen kann, führt das PSA-Verfahren zu einem pretilt in der Zelle. Bei PSA-OCB-Anzeigen kann man daher erreichen, dass die Bend-Struktur stabilisiert wird, so dass man ohne Offset-Spannung auskommt oder diese reduzieren kann. Im Falle von PSA-VA-Anzeigen wirkt sich dieser pretilt positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt. PSA-VA-Anzeigen sind beispielsweise in JP 10-036847 A, EP 1 170 626 A2, EP 1 378 557 A1, EP 1 498 468 A1, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PS-IPS-Anzeigen sind zum Beispiel in US 6,177,972 und Appl. Phys. Lett. 1999, 75(21), 3264 beschrieben. PS-TN-Anzeigen sind zum Beispiel in Optics Express 2004, 12(7), 1221 beschrieben.

Flüssigkristalline Medien für die Anwendung in Flüssigkristallanzeigen sind aus diversen Dokumenten bekannt. Z.B. DE 10 2008 064171 A1, US 6,576,303 B1, EP 2 128 225 A1, US 2009/278088 A1, US 2008/075891 A1, GB 2 078 727 A, US 2010/051864 A1, US 2006/198968 A1 und EP 2 380 947 A1 offenbaren flüssigkristalline Medien. Diese weisen jedoch verschiedene anwendungstechnische Nachteile auf.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere beim PSA-VA kann man ohne nennenswerte Einbußen sonstiger Parameter eine Verkürzung der Schaltzeiten erreichen, die mit einem in Testzellen messbaren pretilt korrelieren.

Es hat sich jedoch gezeigt, dass bei Verwendung in VA- und PSA-Anzeigen die aus dem Stand der Technik bekannten FK-Mischungen noch einige Nachteile aufweisen. So eignet sich bei weitem nicht jedes beliebige lösliche RM zur Verwendung in PSA-Anzeigen, und es ist oft schwierig, geeignetere Auswahlkriterien als eben das direkte PSA-Experiment mit pretilt-Messung zu finden. Noch kleiner wird die Auswahl, wenn eine Polymerisation mittels UV-Licht ohne den Zusatz von Photoinitiatoren gewünscht ist, was für bestimmte Anwendungen von Vorteil sein kann. Darüber hinaus sollte die Flüssigkristallmischung bzw. das gewählte "Materialsystem" Flüssigkristallmischung (nachfolgend auch als "FK-Hostmischung" bezeichnet) + polymerisierbare Komponente eine möglichst geringe Rotationsviskosität sowie möglichst gute elektrische Eigenschaften aufweisen, hierbei ist die sog. "Voltage Holding Ratio" (VHR oder HR) hervorzuheben. Im Zusammenhang mit PSA-Anzeigen ist insbesondere eine hohe VHR nach Bestrahlung mit UV-Licht von zentraler Bedeutung, da die UV-Belichtung ein notwendiger Teil des Herstellungsprozesses der Anzeige ist, aber natürlich auch als "normale" Belastung im fertigen Display auftritt.

Es ergibt sich zudem das Problem, dass bei weitem nicht alle Kombinationen FK-Mischung + polymerisierbare Komponente für PSA-Anzeigen geeignet sind, weil sich zum Beispiel kein oder kein ausreichender Tilt einstellt, oder weil zum Beispiel die VHR für TFT-Display-Anwendungen unzureichend ist.

Insbesondere wäre es wünschenswert, neue Materialien für PSA-Anzeigen zur Verfügung zu haben, die einen besonders kleinen pretilt-Winkel erzeugen. Besonders wünschenswert wären Materialien, die während der Polymerisation bei gleicher Belichtungszeit einen niedrigeren pretilt-Winkel erzeugen als die bisher bekannten Materialien, und/oder durch deren Verwendung der mit den bekannten Materialien erzielbare (höhere) pretilt-Winkel bereits nach kürzerer Belichtungszeit erreicht werden kann. Dadurch könnten die Produktionszeit (tact time) der Anzeige verkürzt und die Kosten des Produktionsprozesses verringert werden.

Es besteht somit immer noch ein großer Bedarf nach Flüssigkristallmischungen für MFK-Anzeigen mit sehr hohem spezifischem Widerstand bei gleichzeitig großem Arbeitstemperaturbereich, kurzen Schaltzeiten und niedriger Schwellenspannung, mit deren Hilfe verschiedene Graustufen erzeugt werden können. Weiterhin sollten die flüssigkristallinen Mischungen sowohl in VA-, IPS- und FFS-, PALC- als auch in PS-VA, PSA-, PS-IPS, PS-FFS-Anzeigen eingesetzt werden können und die oben beschriebenen Nachteile nicht oder nur in geringem Maße zeigen und gleichzeitig verbesserte Eigenschaften besitzen. Bei PS-VA bzw. PSA-Anzeigen sollten die flüssigkristallinen Medien enthaltend eine polymerisierbare Komponente in den MFK-Anzeigen in der Lage sein einen ausreichenden pre-tilt einzustellen und eine relativ hohe Voltage Holding Ratio (VHR oder HR) aufweisen.

Der Erfindung liegt die Aufgabe zugrunde flüssigkristalline Medien bereitzustellen, die insbesondere sowohl in IPS-, FFS-, VA- als auch in PS-VA-Anzeigen eingesetzt werden können und insbesondere für Monitor- und TV-Anwendungen geeignet sind, die die oben angegebenen Nachteile nicht oder nur in geringerem Maße aufweisen. Insbesondere muss für Monitore und Fernseher gewährleistet sein, dass diese auch bei extrem hohen und extrem niedrigen Temperaturen arbeiten und gleichzeitig niedrige Schaltzeiten aufweisen und gleichzeitig ein verbessertes Reliability-Verhalten, insbesondere kein oder ein deutlich verringertes Image-Sticking nach langen Laufzeiten aufweisen.

Überraschenderweise ist es möglich die Rotationsviskositäten und damit die Schaltzeiten zu verbessern, wenn man polare Verbindungen der allgemeinen Formel I in Flüssigkristallmischungen verwendet, insbesondere in LC-Mischungen mit negativer dielektrischer Anisotropie, vorzugsweise für VA-Displays. Weiterhin wurde überraschenderweise gefunden, dass die Verwendung erfindungsgemäßer flüssigkristalliner Medien in PS-VA- und PSA-Anzeigen besonders niedrige pretilt-Winkel und die schnelle Einstellung der gewünschten Tiltwinkel ermöglichen. Dies konnte bei den erfindungsgemäßen Medien mittels pretilt-Messungen nachgewiesen werden. Insbesondere konnte ein pretilt ohne den Zusatz von Photoinitiator erreicht werden. Darüber hinaus zeigen die erfindungsgemäßen Medien eine deutlich schnellere Generierung des pretilt-Winkels im Vergleich zu den aus dem Stand der Technik bekannten Materialien, wie durch belichtungszeitabhängige Messungen des pretilt-Winkels nachgewiesen werden konnte.

Gegenstand der Erfindung ist somit ein flüssigkristallines Medium, welches mindestens eine Verbindung der Formel I enthält.

Die Verbindungen der Formel I in flüssigkristallinen Medien weisen gleichzeitig sehr niedrige Rotationsviskositäten und hohe Absolutwerte der dielektrischen Anisotropie auf. Daher können Flüssigkristallmischungen, vorzugsweise VA- und PS-VA-Mischungen, hergestellt werden, die niedrige Schaltzeiten, gleichzeitig gute Phaseneigenschaften und ein gutes Tieftemperaturverhalten aufweisen.

Ein weiterer Gegenstand der Erfindung ist ein flüssigkristallines Medium enthaltend eine erfindungsgemäße FK-Mischung wie vor- und nachstehend beschrieben, sowie eine oder mehrere polymerisierbare Verbindungen, vorzugsweise ausgewählt aus der Gruppe bestehend aus reaktiven Mesogenen.

Ein weiterer Gegenstand der Erfindung ist ein flüssigkristallines Medium enthaltend eine erfindungsgemäße FK-Mischung wie vor- und nachstehend beschrieben, sowie ein Polymer erhältlich durch Polymerisation einer oder mehrerer polymerisierbarer Verbindungen, welche vorzugsweise aus der Gruppe bestehend aus reaktiven Mesogenen ausgewählt sind.

Ein weiterer Gegenstand der Erfindung ist ein FK-Medium enthaltend
- eine polymerisierbare Komponente A), enthaltend eine oder mehrere polymerisierbare Verbindungen, vorzugsweise ausgewählt aus reaktiven Mesogenen, sowie
- eine flüssigkristalline Komponente B), im Folgenden auch als "FK-Hostmischung" bezeichnet, bestehend aus einer erfindungsgemäßen FK-Mischung enthaltend eine oder mehrere Verbindungen der Formel I wie vor- und nachstehend beschrieben.

Ein weiterer Gegenstand der Erfindung ist ein FK-Medium enthaltend
- ein Polymer erhältlich durch Polymerisation einer polymerisierbaren Komponente A), enthaltend eine oder mehrere polymerisierbare Verbindungen, vorzugsweise ausgewählt aus reaktiven Mesogenen, sowie
- eine flüssigkristalline Komponente B), im Folgenden auch als "FK-Hostmischung" bezeichnet, bestehend aus einer erfindungsgemäßen FK-Mischung enthaltend eine oder mehrere Verbindungen der Formel I wie vor- und nachstehend beschrieben.

Ein weiterer Gegenstand der Erfindung ist die Verwendung von erfindungsgemäßen FK-Mischungen in PS- und PSA-Anzeigen, insbesondere die Verwendung in PS- und PSA-Anzeigen enthaltend ein flüssigkristallines Medium, zur Erzeugung eines Tiltwinkels im flüssigkristallines Medium durch in situ-Polymerisation der polymerisierbare(n) Verbindung(en) in der PSA-Anzeige, vorzugsweise unter Anlegen eines elektrischen und/oder magnetischen Feldes, vorzugsweise eines elektrischen Feldes.

Ein weiterer Gegenstand der Erfindung ist eine FK-Anzeige enthaltend ein erfindungsgemäßes FK-Medium, insbesondere eine PS- oder PSA-Anzeige, besonders bevorzugt eine PSA-VA-, PSA-IPS- oder PS-FFS-Anzeige.

Ein weiterer Gegenstand der Erfindung ist eine FK-Anzeige des PS- oder PSA-Typs, enthaltend eine FK-Zelle bestehend aus zwei Substraten und zwei Elektroden, wobei mindestens ein Substrat lichtdurchlässig ist und mindestens ein Substrat eine Elektrode aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium, vorzugsweise unter Anlegen einer elektrischen Spannung an die Elektroden, wobei die niedermolekulare Komponente eine erfindungsgemäße FK-Mischung wie vor- und nachstehend beschrieben ist.

Ein weiterer Gegenstand der Erfindung ist ein Verfahren zur Herstellung einer erfindungsgemäßen Flüssigkristallmischung, indem man mindestens eine Verbindung der Formel I mit weiteren mesogenen Verbindungen und ggf. mit einer oder mehreren polymerisierbaren Verbindungen und/oder einem oder mehreren Additiven und Stabilisatoren mischt.

Gegenstand der Erfindung ist weiterhin ein Verfahren zur Herstellung einer FK-Anzeige, indem man eine erfindungsgemäße FK-Mischung mit einer oder mehreren polymerisierbaren Verbindungen, und gegebenenfalls mit weiteren flüssigkristallinen Verbindungen und/oder Additiven und Stabilisatoren mischt, die so erhaltene Mischung in eine FK-Zelle mit zwei Substraten und zwei Elektroden, wie vor- und nachstehend beschrieben, füllt, und die polymerisierbare(n) Verbindung(en), vorzugsweise unter Anlegen einer elektrischen Spannung, an die Elektroden polymerisiert. Die erfindungsgemäßen Mischungen zeigen vorzugsweise sehr breite nematische Phasenbereiche mit Klärpunkten ≥ 70 °C, vorzugsweise ≥ 75 °C, insbesondere ≥ 80 °C, sehr günstige Werte für die kapazitive Schwelle, relativ hohe Werte für die Holding Ratio und gleichzeitig sehr gute Tieftemperaturstabilitäten bei -20 °C und -30 °C sowie sehr geringe Rotationsviskositäten und niedrige Schaltzeiten. Die erfindungsgemäßen Mischungen zeichnen sich weiterhin dadurch aus, dass zusätzlich zur Verbesserung der Rotationsviskosität γ₁, relativ hohe Werte der elastischen Konstanten K₃₃ zur Verbesserung der Schaltzeiten zu beobachten sind.

Einige bevorzugte Ausführungsformen der erfindungsgemäßen Mischungen werden im Folgenden genannt.

In den Verbindungen der Formel I bedeutet R¹ vorzugsweise geradkettiges Alkyl, insbesondere C₂H₅, n-C₃H₇, n-C₄H₉, n-C₅H₁₁, n-C₆H₁₃, ferner Alkenyl und Alkoxy, wie z. B. CH₂=CH, CH₃CH=CH, CH₃CH₂CH=CH, C₃H₇CH=CH, OC₂H₅, OC₃H₇, OC₄H₉, OC₅H₁₁, OC₆H₁₃ und Alkenyloxy, wie z. B. OCH₂CH=CH₂, OCH₂CH=CHCH₃, OCH₂CH=CHC₂H₅. Ganz besonders bevorzugt bedeutet R¹ C₂H₅, n-C₃H₇, n-C₄H₉, n-C₅H₁₁.

In den Verbindungen der Formel I bedeutet R^{1*} vorzugsweise geradkettiges Alkyl oder Alkoxy, insbesondere OC₂H₅, OC₃H₇, OC₄H₉, OC₅H₁₁, OC₆H₁₃, C₂H₅, C₃H₇, C₄H₉, C₅H₁₁, C₆H₁₃, und ferner Alkenyloxy, wie z. B. OCH₂CH=CH₂, OCH₂CH=CHCH₃, OCH₂CH=CHC₂H₅. Ganz besonders bevorzugt bedeutet R^{1*} C₂H₅, C₃H₇, C₄H₉ oder C₅H₁₁.

Bevorzugte Verbindungen der Formel I sind die Verbindungen der Formeln I-1 bis I-192, 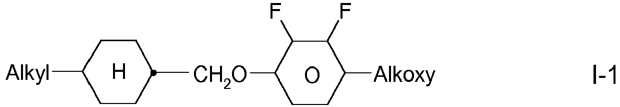 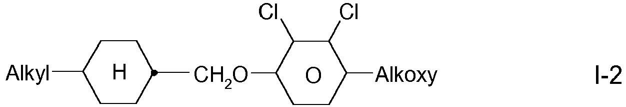 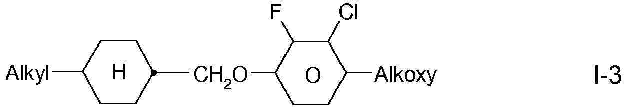 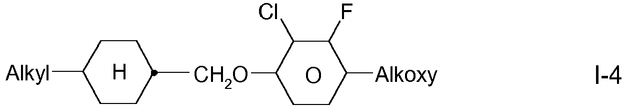 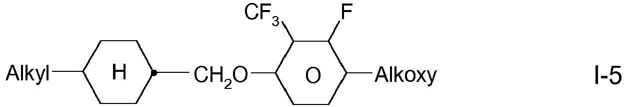 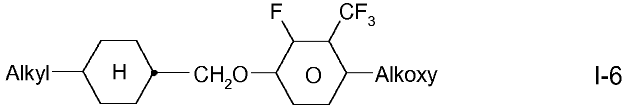 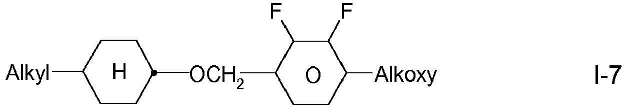 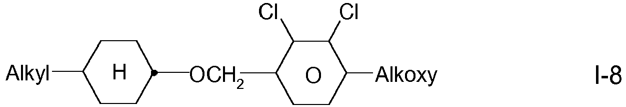 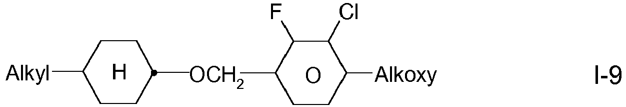 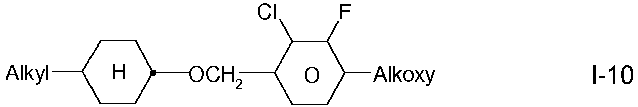 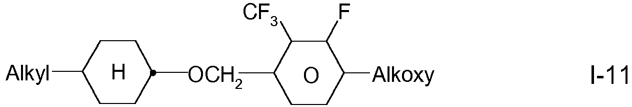 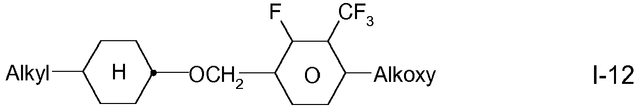 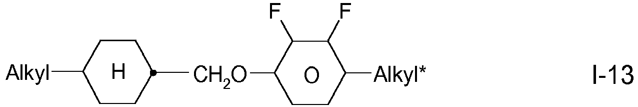 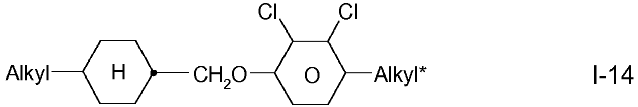 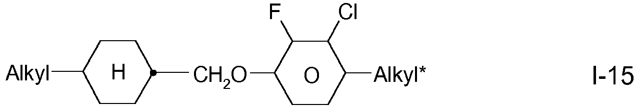 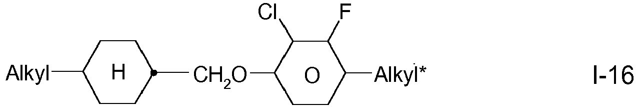 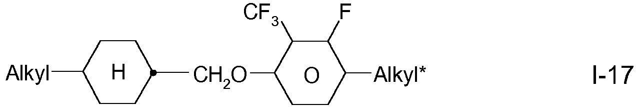 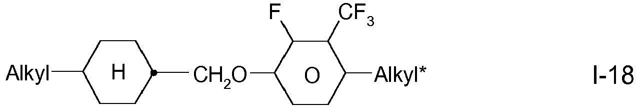 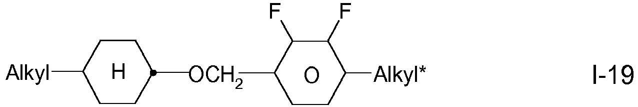 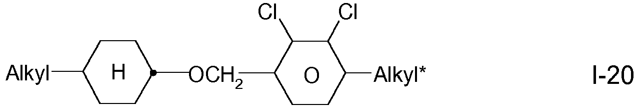 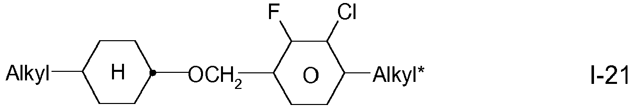 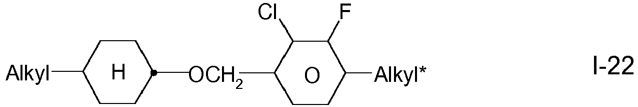 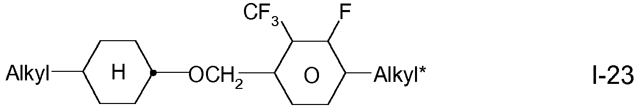 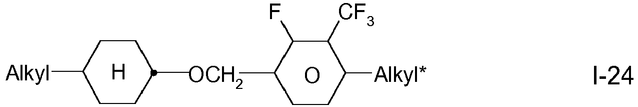 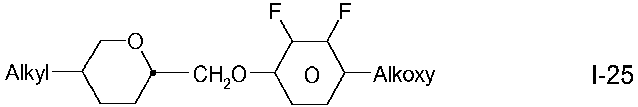 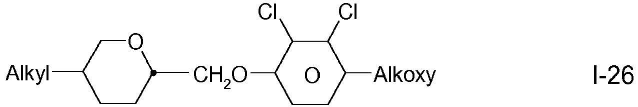 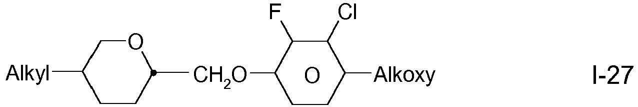 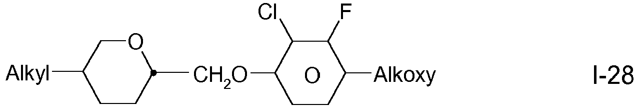 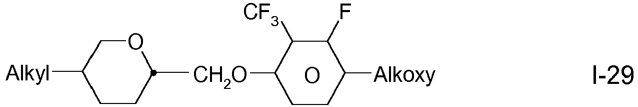 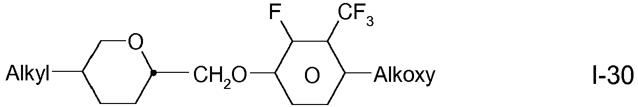 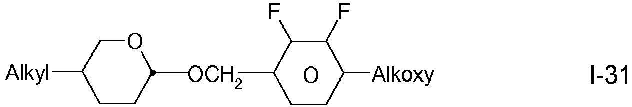 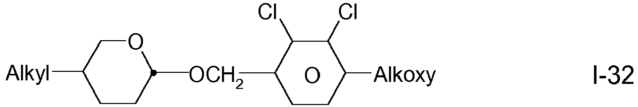 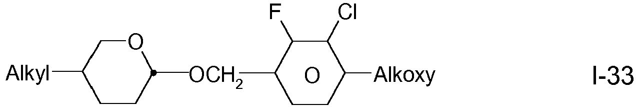 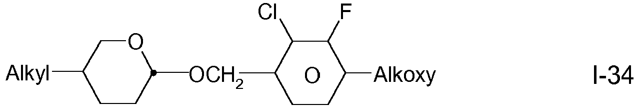 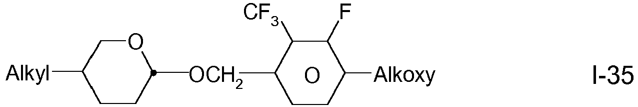 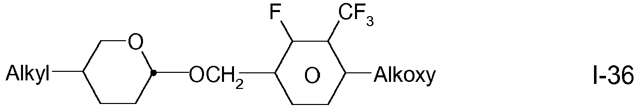 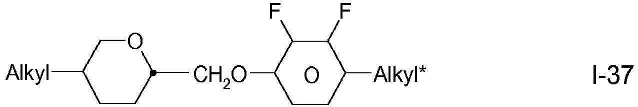 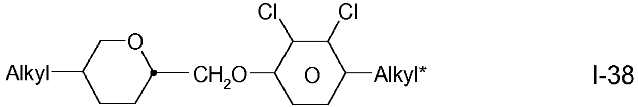 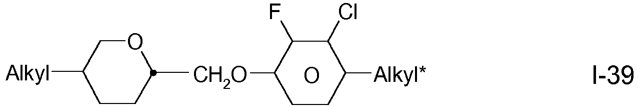 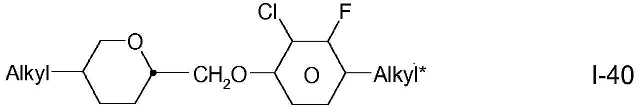 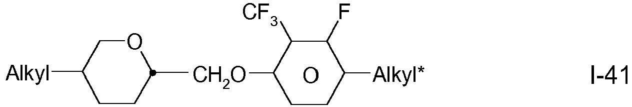 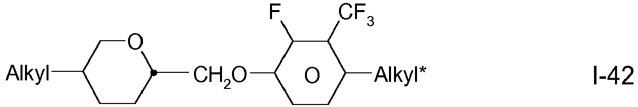 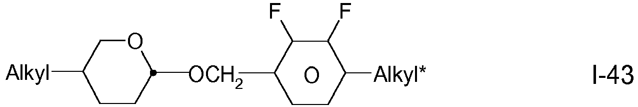 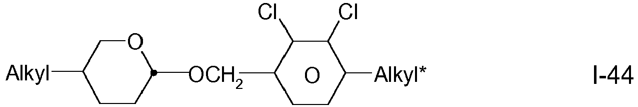 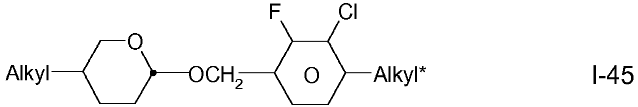 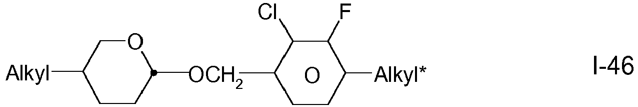 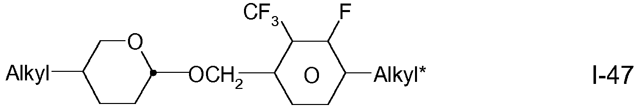 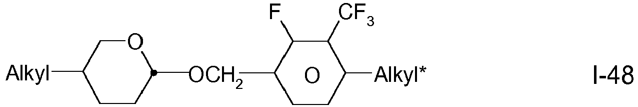 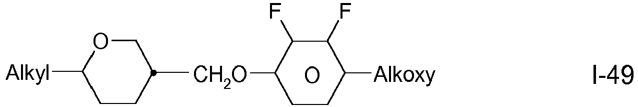 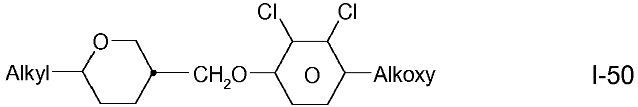 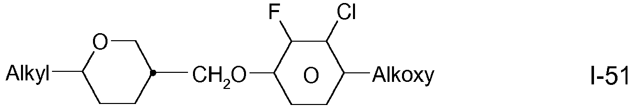 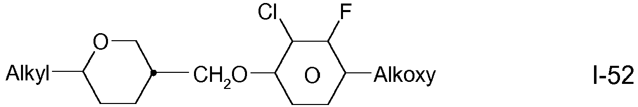 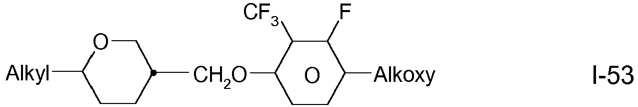 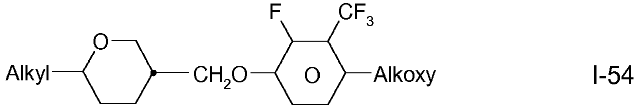 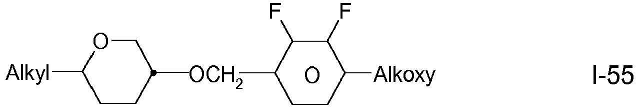 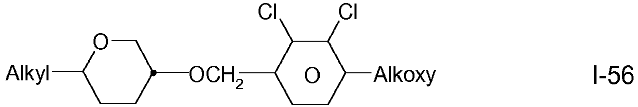 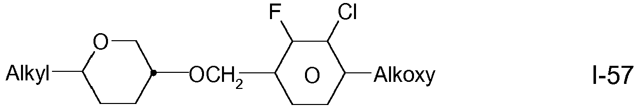 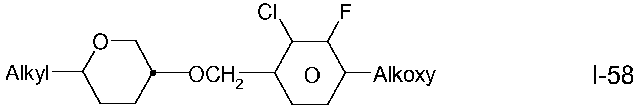 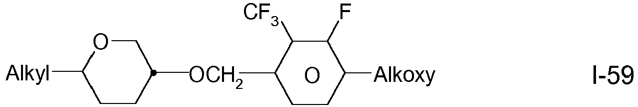 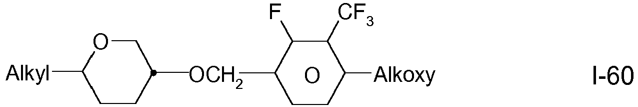 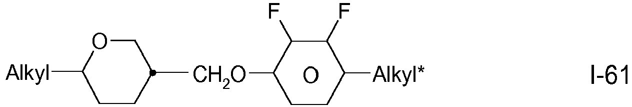 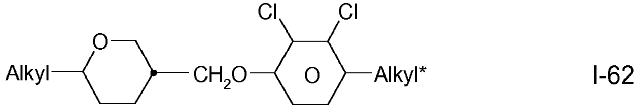 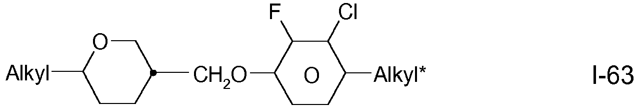 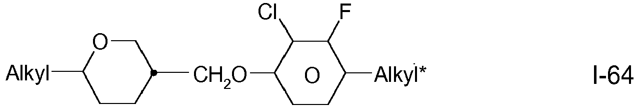 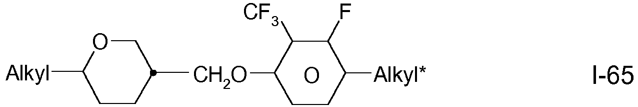 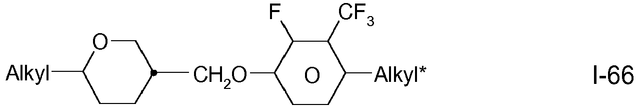 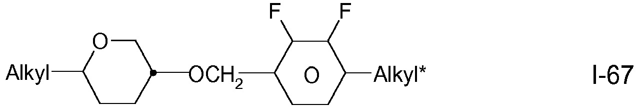 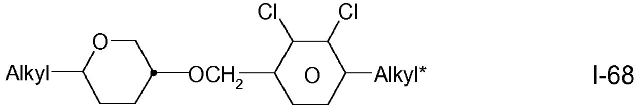 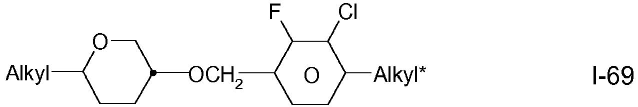 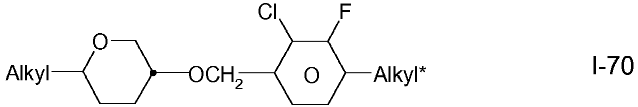 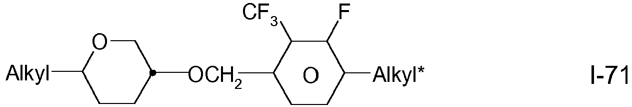 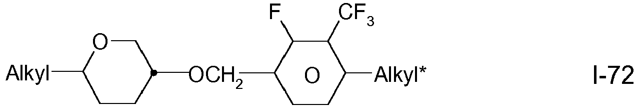 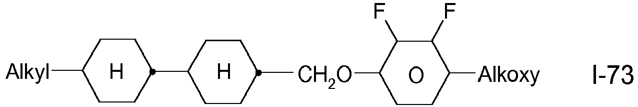 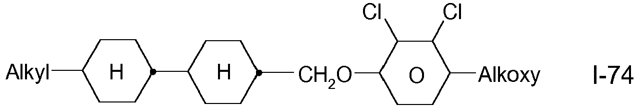 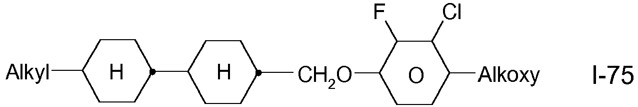 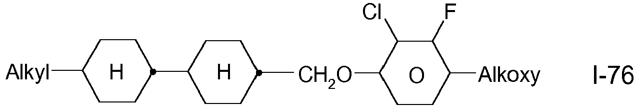 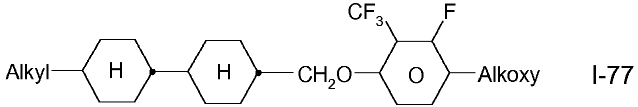 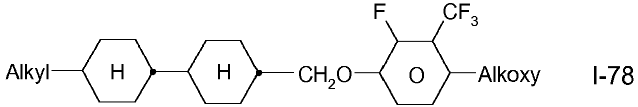 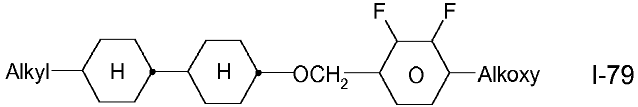 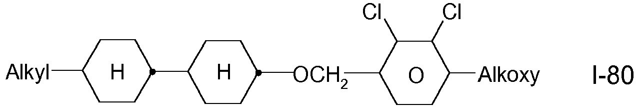 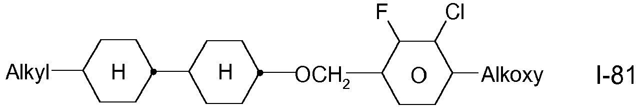 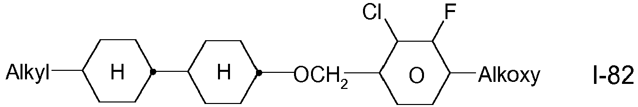 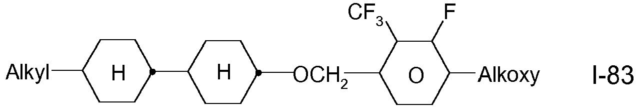 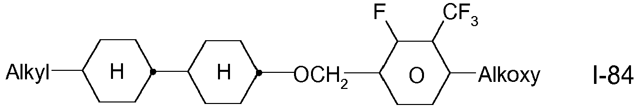 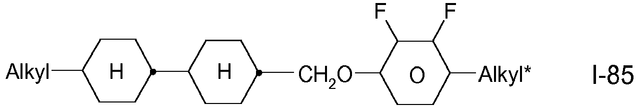 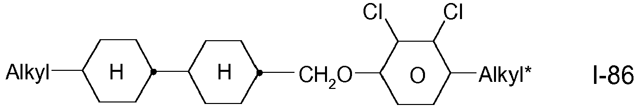 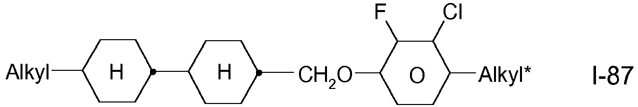 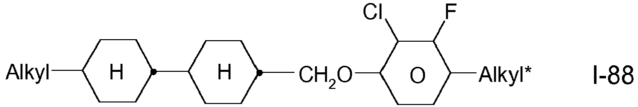 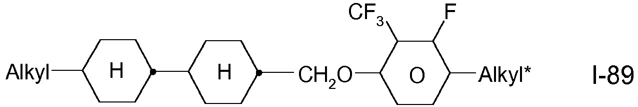 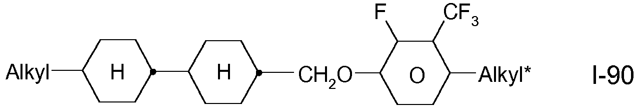 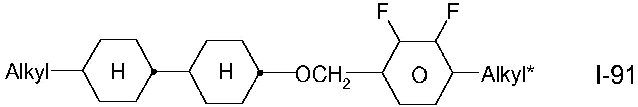 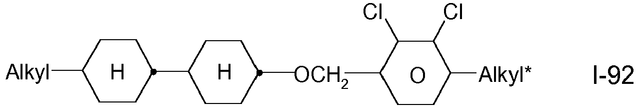 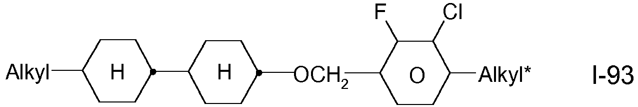 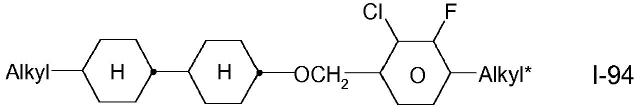 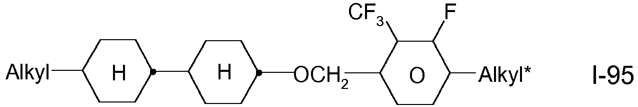 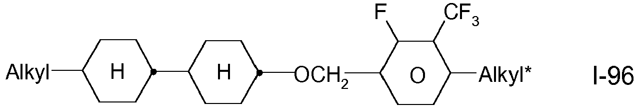 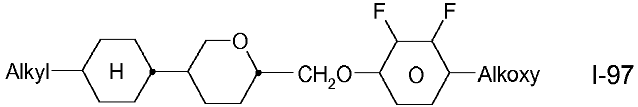 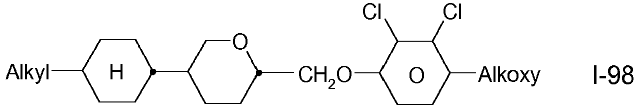 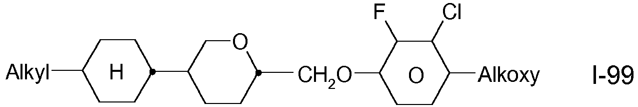 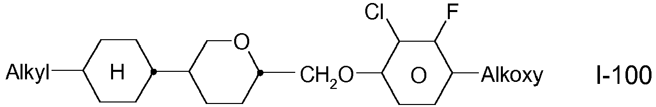 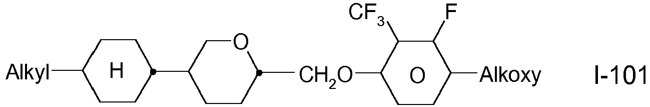 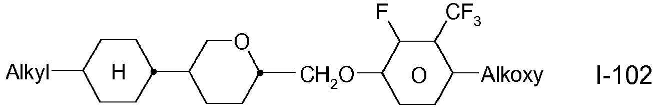 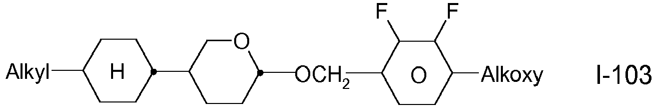 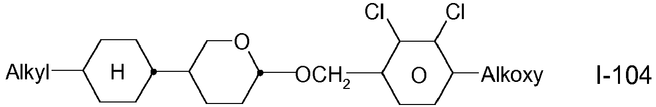 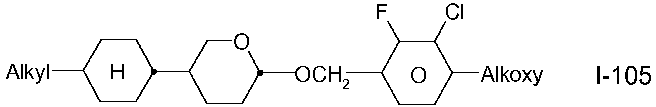 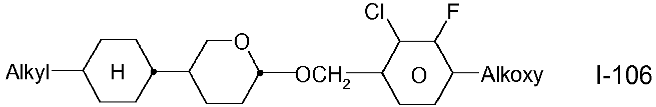 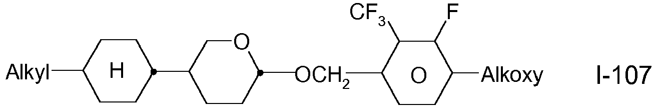 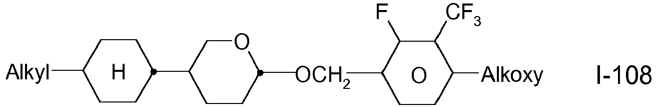 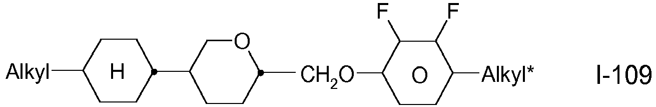 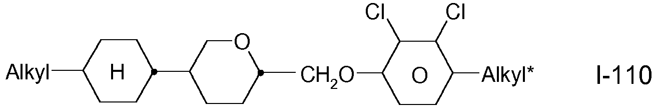 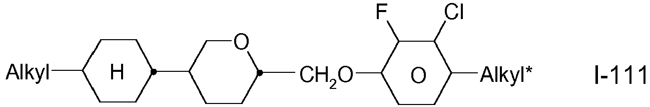 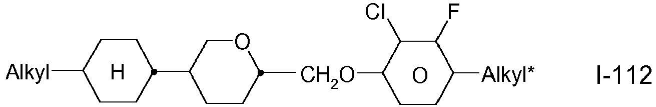 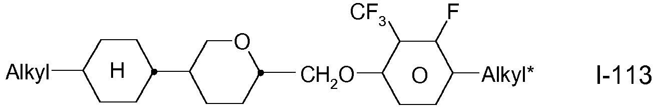 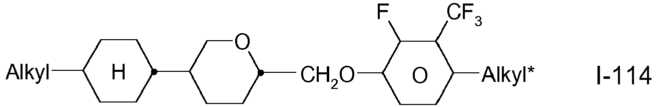 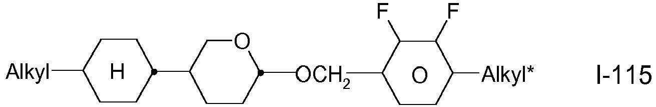 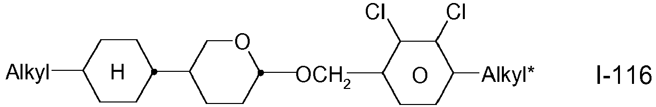 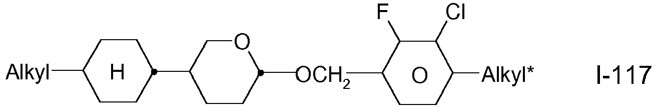 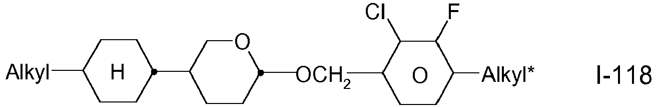 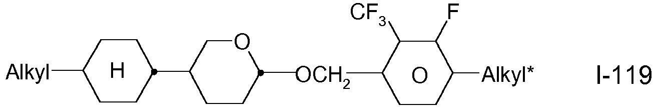 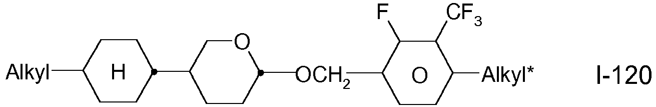 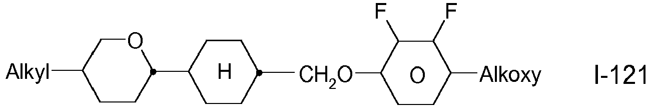 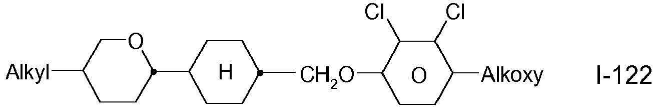 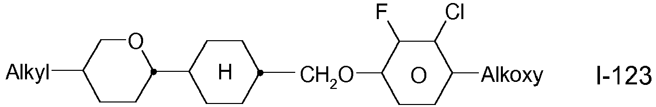 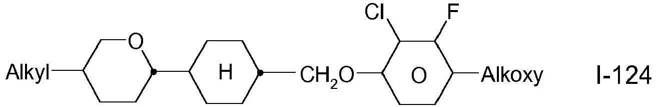 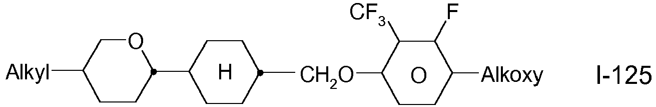 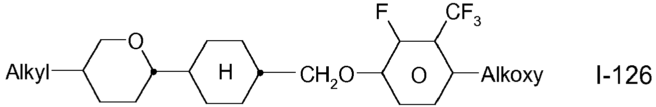 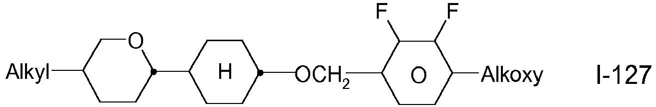 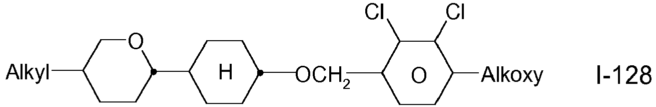 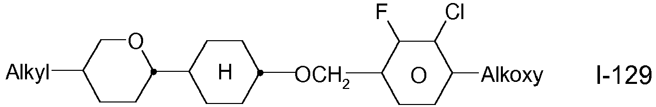 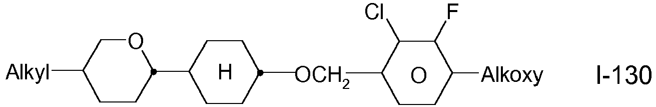 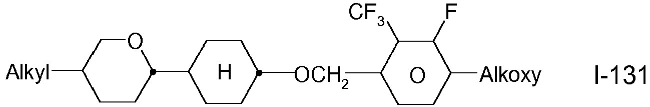 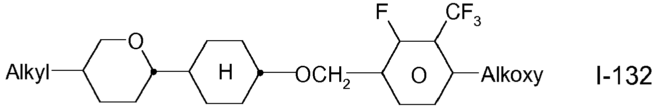 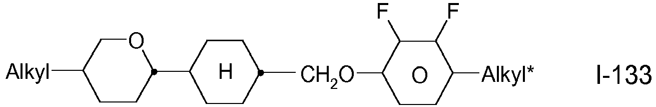 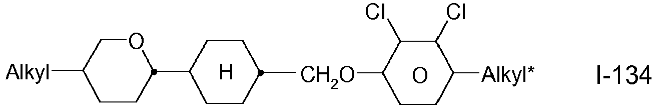 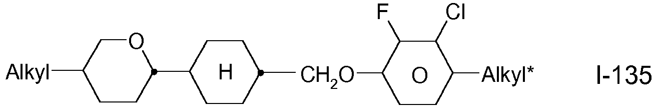 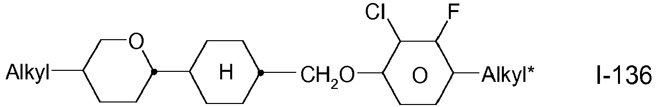 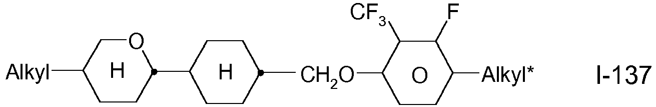 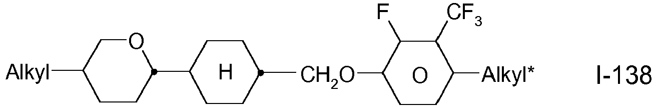 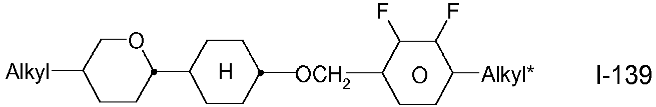 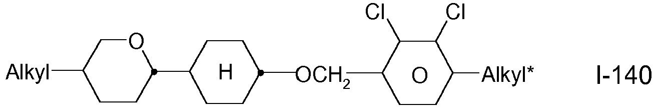 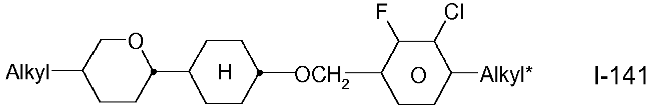 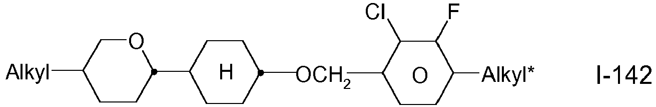 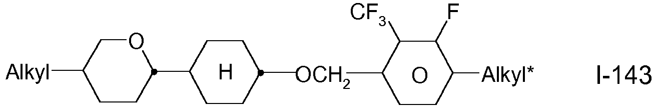 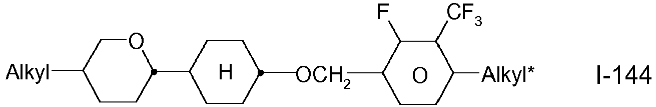 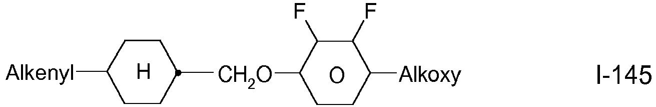 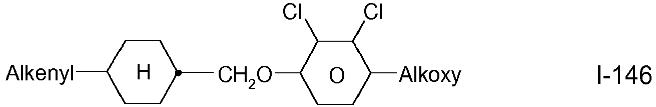 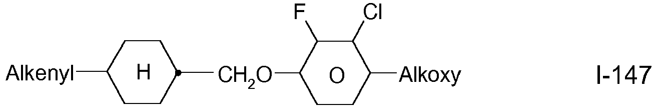 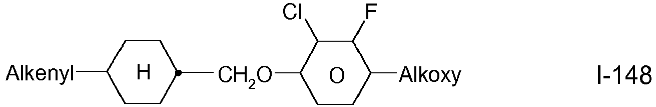 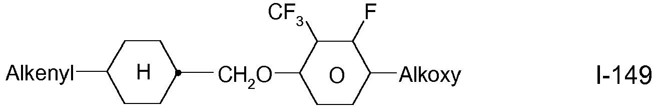 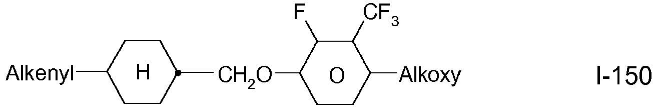 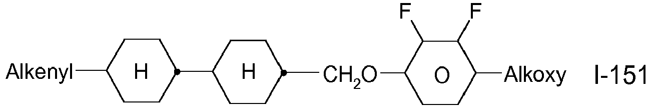 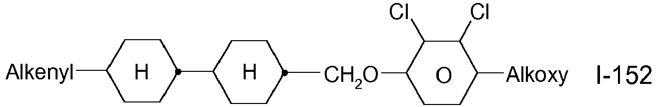 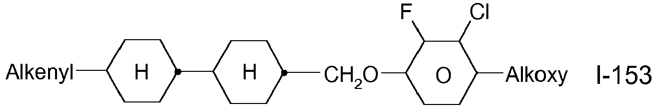 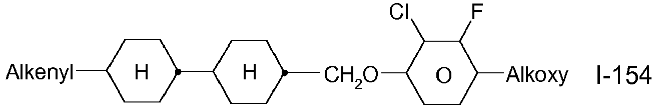 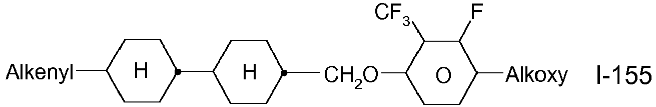 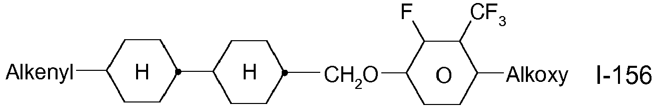 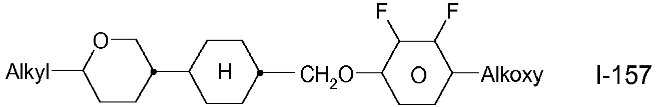 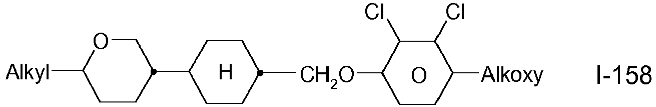 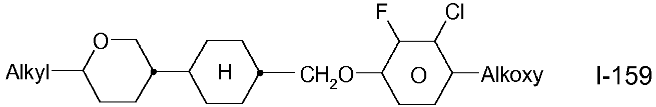 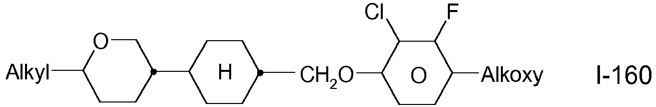 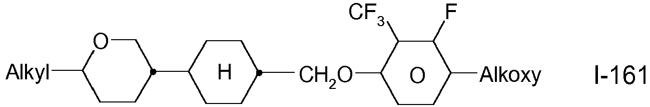 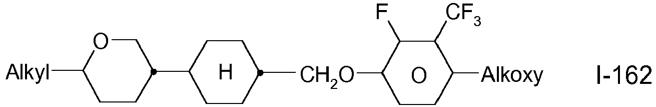 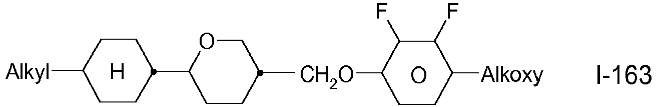 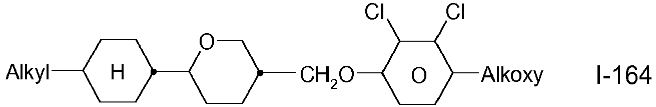 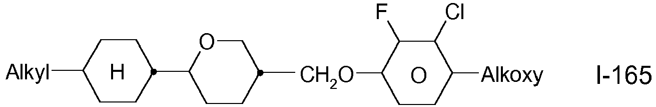 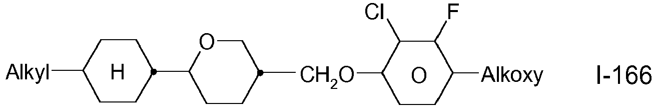 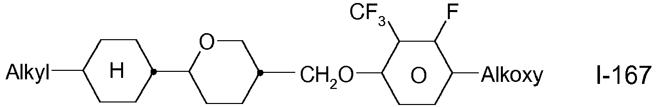 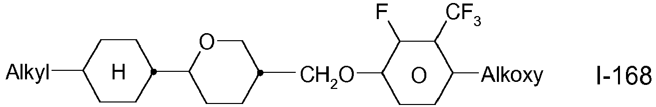 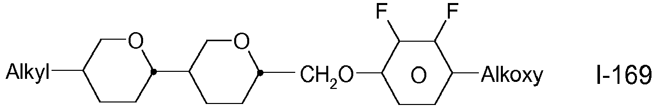 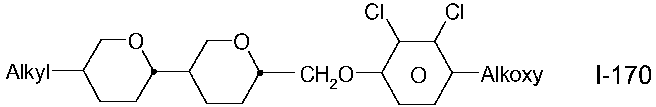 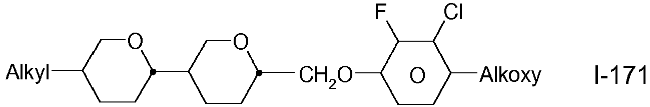 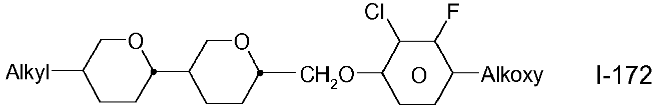 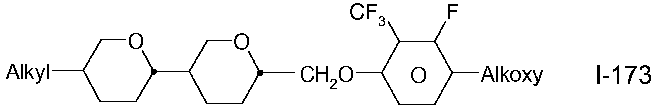 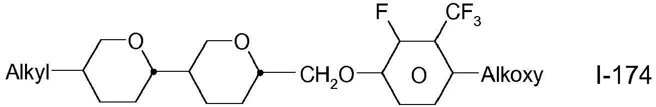 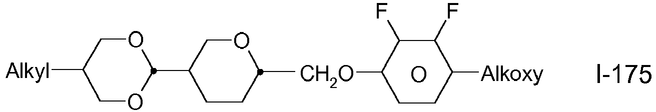 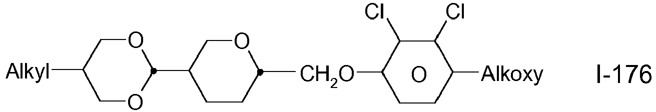 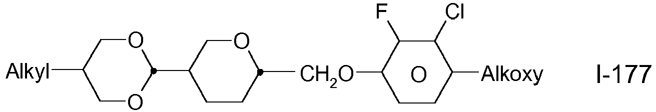 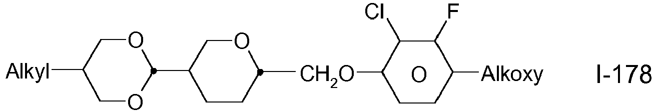 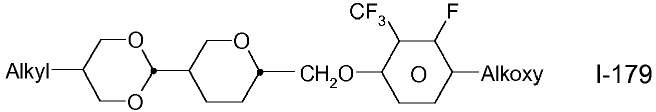 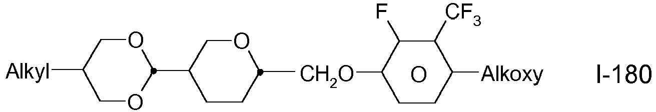 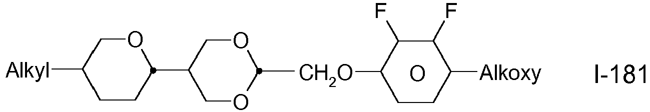 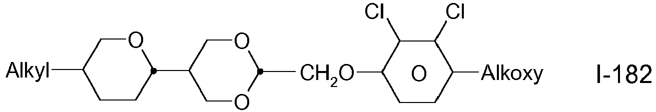 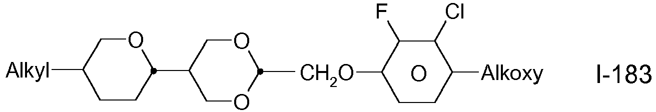 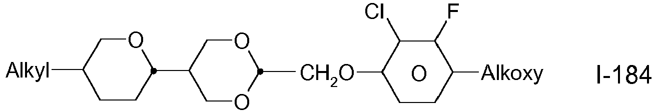 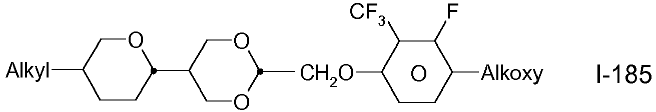 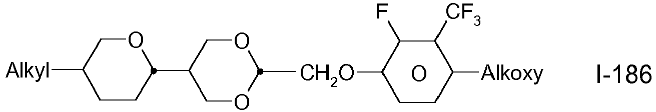 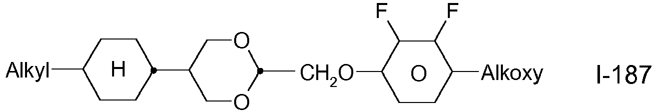 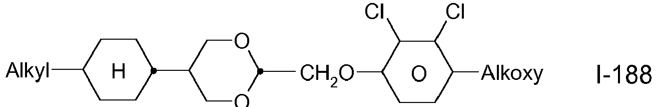 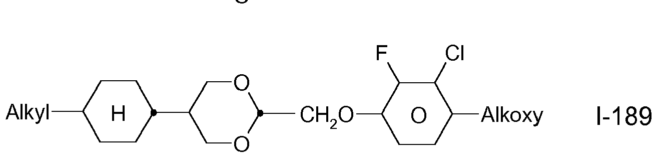 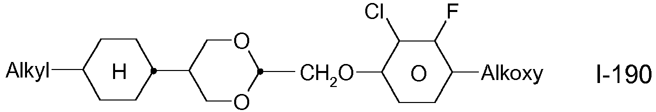 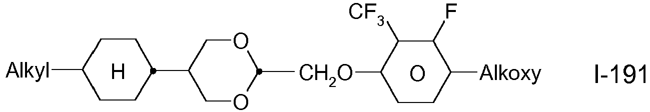 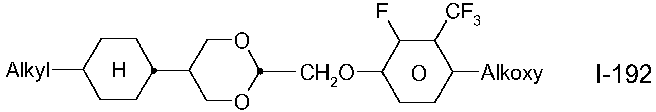 worin
Alkyl und Alkyl* jeweils unabhängig voneinander einen geradkettigen Alkylrest mit 1-6 C-Atomen, Alkoxy einen geradkettigen Alkoxyrest mit 1-6 C-Atome, und Alkenyl einen geradkettigen Alkenylrest mit 2-6 C-Atomen bedeuten.

Von den genannten Unterformeln I-1 bis I-192 sind insbesondere die Verbindungen der Formeln I-1, I-13, I-73 und I-85 bevorzugt.

Ganz besonders bevorzugt enthalten die erfindungsgemäßen Mischungen mindestens eine Verbindung aus der folgenden Gruppe:

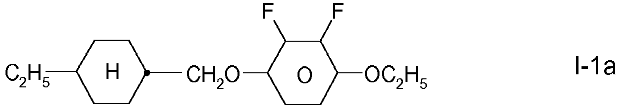

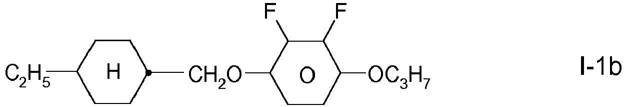

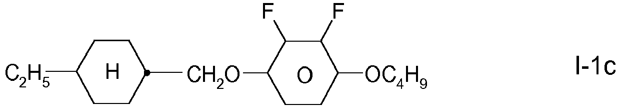

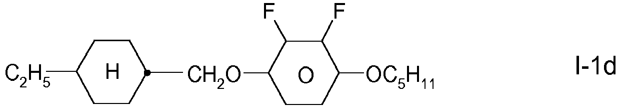

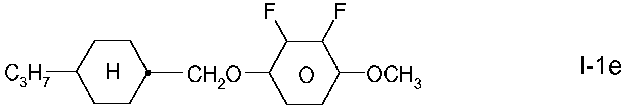

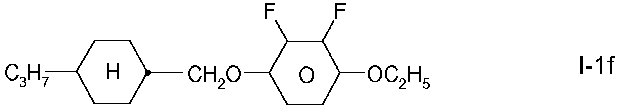

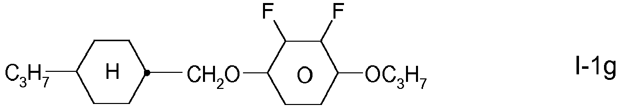

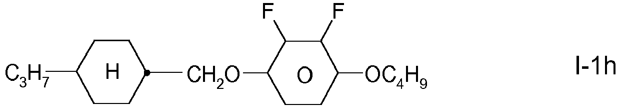

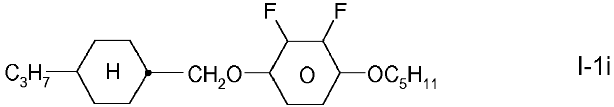

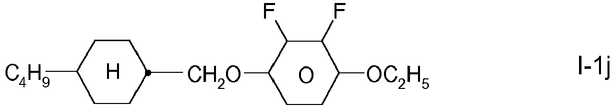

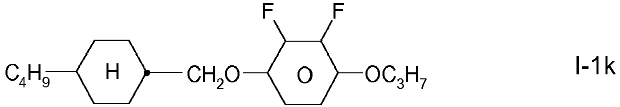

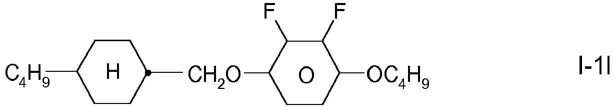

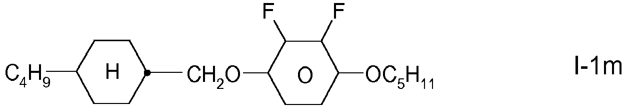

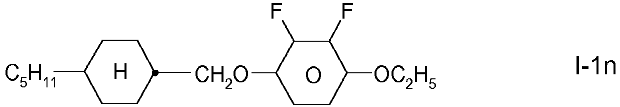

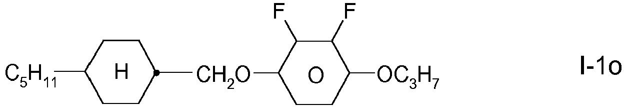

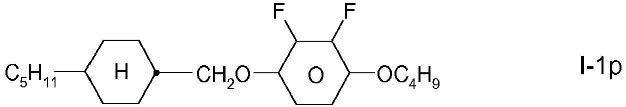

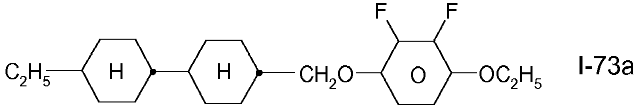

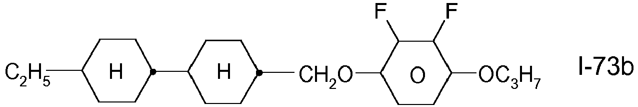

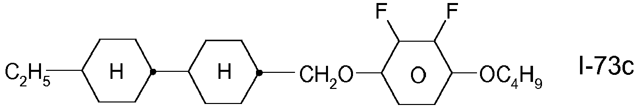

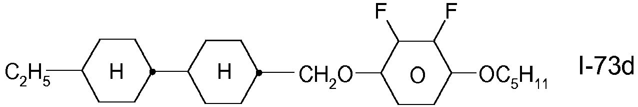

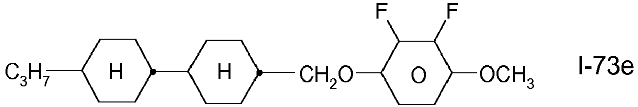

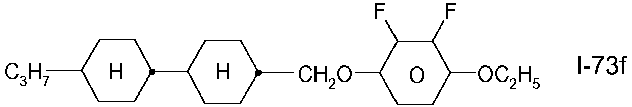

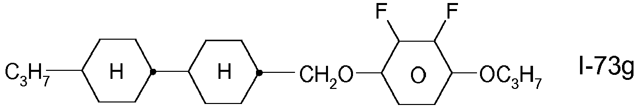

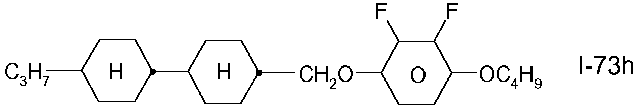

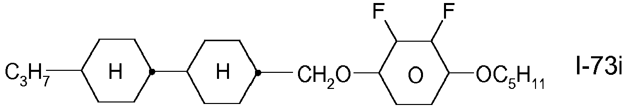

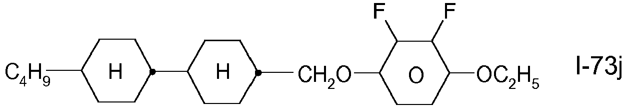

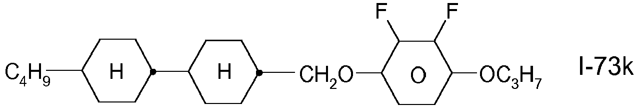

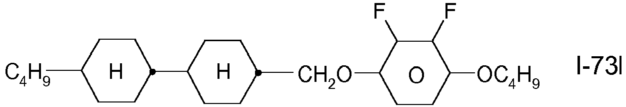

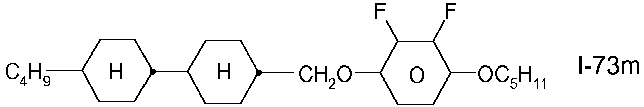

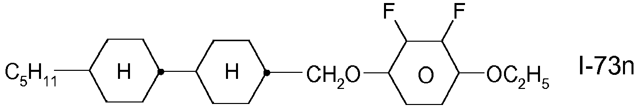

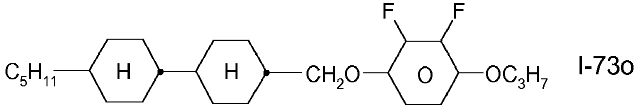

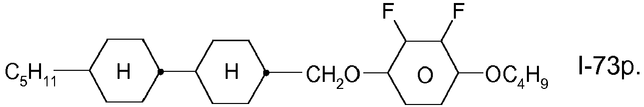

Von den bevorzugten Verbindungen der Formeln I-1a bis I-1p und I-73a bis I-73p sind insbesondere die Verbindungen der Formeln I-1f und I-73f ganz besonders bevorzugt.

Die Verbindungen der Formel I und deren Unterformeln werden vorzugsweise in Mengen von 1-15 Gew.%, bevorzugt von 1-10 Gew.%, pro Homologes und bezogen auf die Mischung eingesetzt. Sofern mehrere Verbindungen der Formel I in den erfindungsgemäßen Mischungen eingesetzt werden, beträgt die Gesamtkonzentration aller Verbindungen der Formel I 1- 30 Gew.%, vorzugsweise 1-20 Gew.%, bezogen auf die Mischung.

In den Verbindungen der Formel I und den Unterformeln bedeuten L¹ und L² jeweils unabhängig voneinander vorzugsweise F oder Cl, insbesondere L¹ = L² = F und R¹ bedeutet vorzugsweise geradkettiges Alkoxy und R^{1*} bedeutet vorzugsweise geradkettiges Alkyl.

Die Verbindungen der Formel I können beispielsweise wie folgt hergestellt werden:

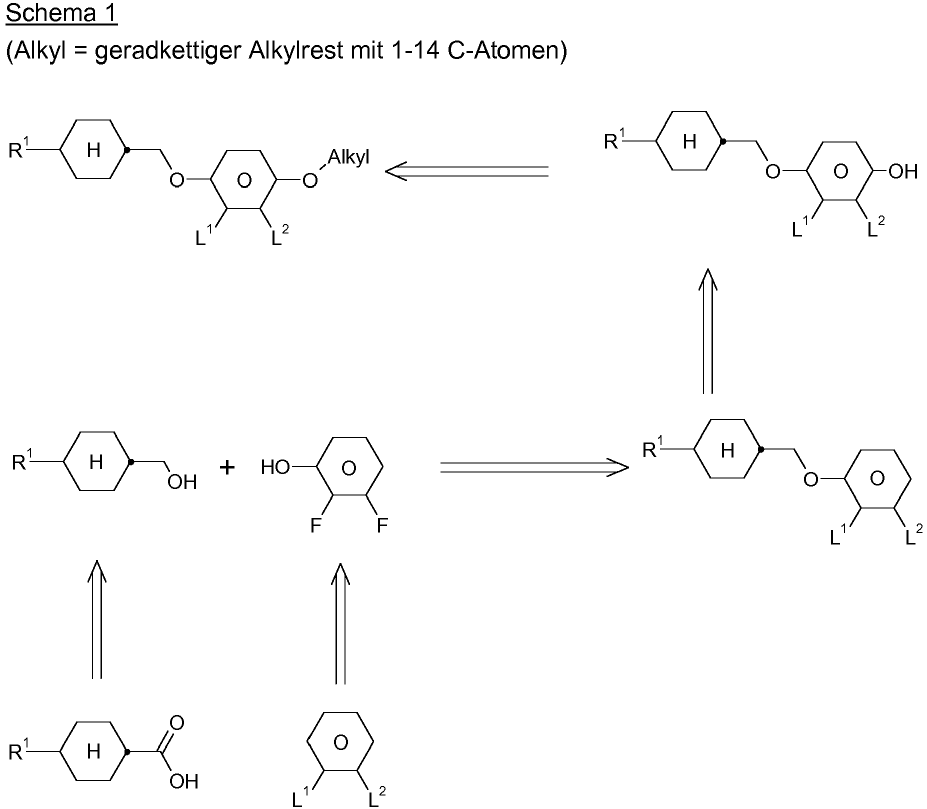

Die erfindungsgemäßen Medien enthalten vorzugsweise ein, zwei, drei, vier oder mehr, vorzugsweise zwei oder drei, Verbindungen der Formel I.

Die Verbindungen der Formel I werden vorzugsweise im flüssigkristallinen Medium in Mengen von ≥ 1, vorzugsweise ≥ 5 Gew.%, bezogen auf das Gesamtgemisch, eingesetzt. Insbesondere bevorzugt sind flüssigkristalline Medien, die 2 - 15 Gew.% einer oder mehrerer Verbindungen der Formel I enthalten.

Im Folgenden werden bevorzugte Ausführungsformen für das erfindungsgemäße flüssigkristalline Medium angeführt:
a) Flüssigkristallines Medium, welches zusätzlich eine oder mehrere Verbindungen ausgewählt aus der Gruppe der Verbindungen der Formeln IIA, IIB und IIC enthält, 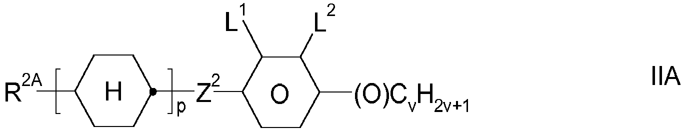 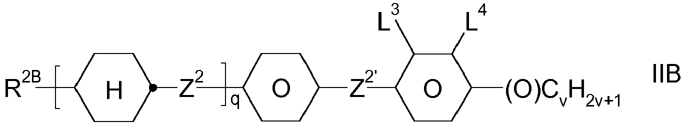 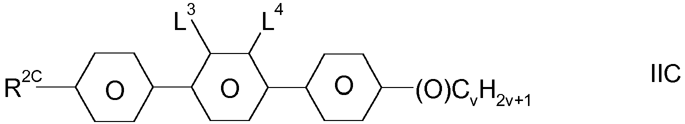 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 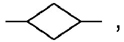 -C≡C-, -CF₂O-, -OCF₂-, -OC-O- oder -O-CO- so ersetzt sein können, dass O-Atome nicht direkt miteinander verknüpft sind,
   - L¹⁻⁴: jeweils unabhängig voneinander F, Cl, CF₃ oder CHF₂,
   - Z² und Z^{2'}: jeweils unabhängig voneinander Einfachbindung, -CH₂CH₂-, -CH=CH-, -CF₂O-, -OCF₂-, -COO-, -OCO-, -C₂F₄-, -CF=CF-, -CH=CHCH₂O-,

   - p: 1 oder 2,
   - q: 0 oder 1, und
   - v: 1 bis 6
bedeuten.

In den Verbindungen der Formeln IIA und IIB können Z² gleiche oder unterschiedliche Bedeutungen haben. In den Verbindungen der Formel IIB können Z² und Z^{2'} gleiche oder verschiedene Bedeutungen aufweisen.

In den Verbindungen der Formeln IIA, IIB und IIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIA und IIB vorzugsweise jeweils unabhängig voneinander eine Einfachbindung, ferner eine -C₂H₄-Brücke.

Sofern in der Formel IIB Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln IIA und IIB bedeutet (O)CᵥH₂ᵥ₊₁ vorzugsweise OCᵥH₂ᵥ₊₁, ferner C_{V}H₂ᵥ₊₁. In den Verbindungen der Formel IIC bedeutet (O)CᵥH₂ᵥ₊₁ vorzugsweise CᵥH₂ᵥ₊₁. In den Verbindungen der Formel IIC bedeuten L³ und L⁴ vorzugsweise jeweils F.

Bevorzugte Verbindungen der Formeln IIA, IIB und IIC werden nachfolgend genannt: 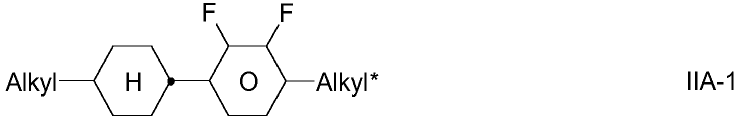 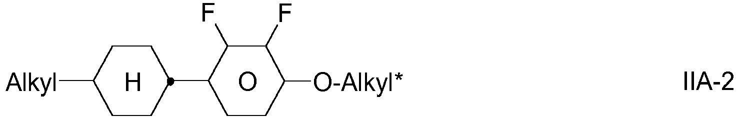 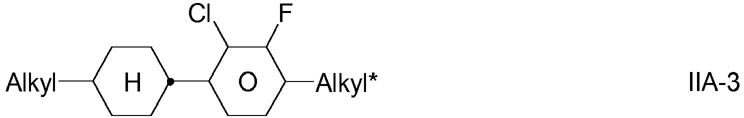 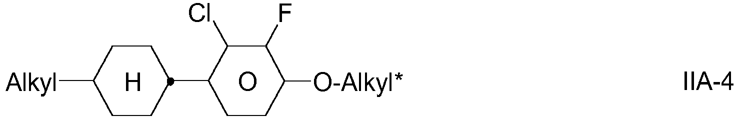 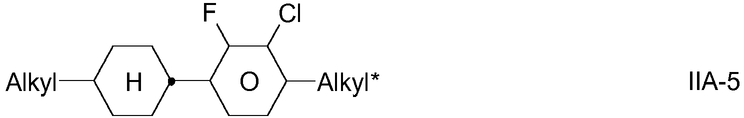 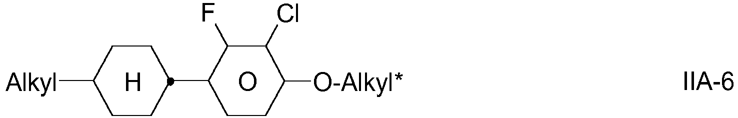 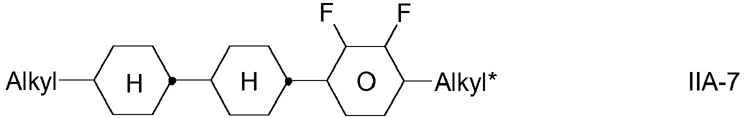 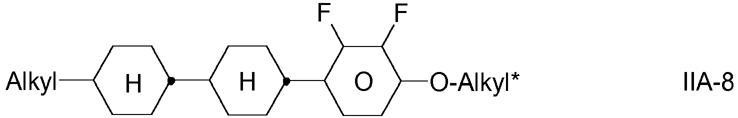 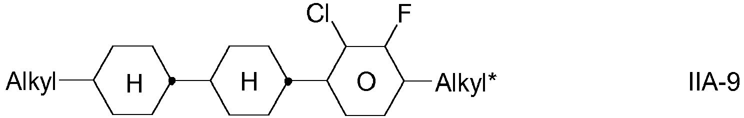 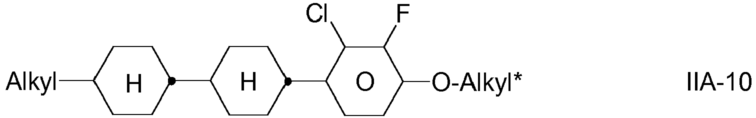 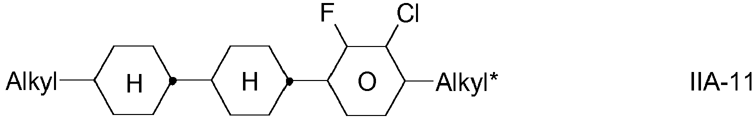 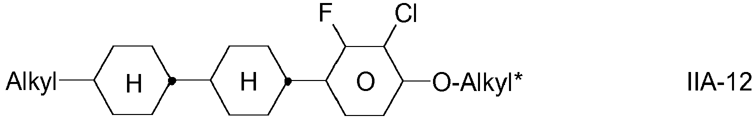 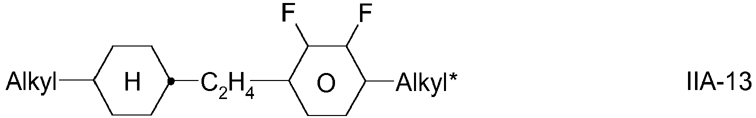 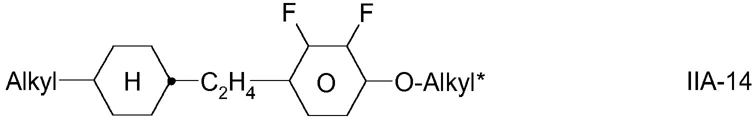 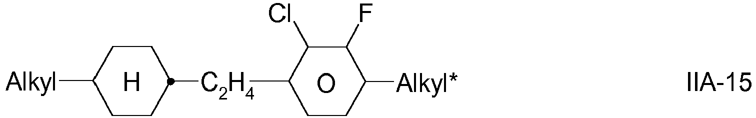 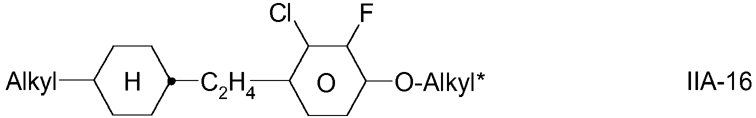 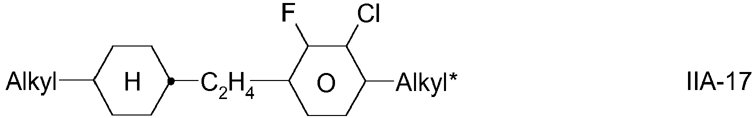 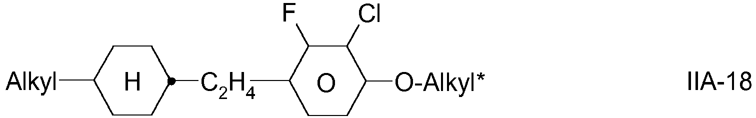 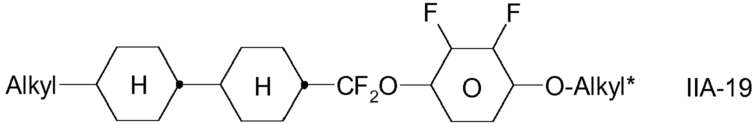 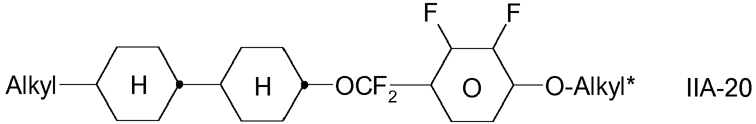 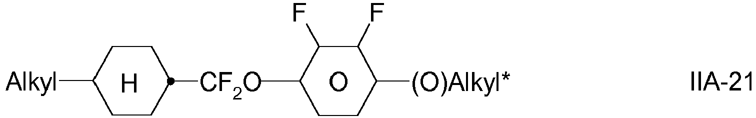 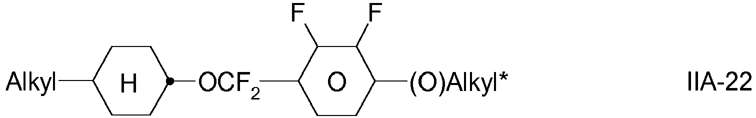 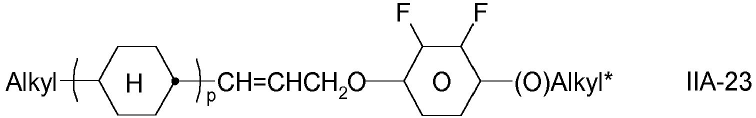 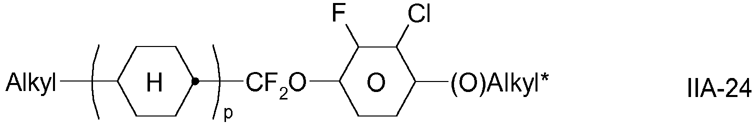 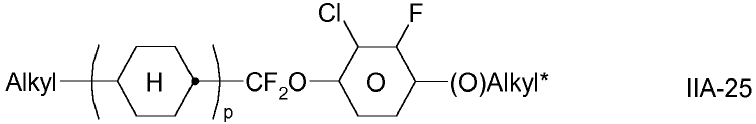 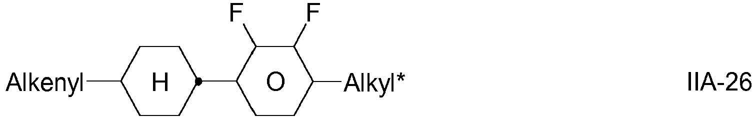 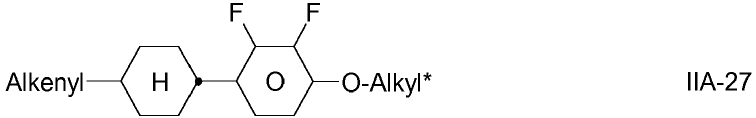 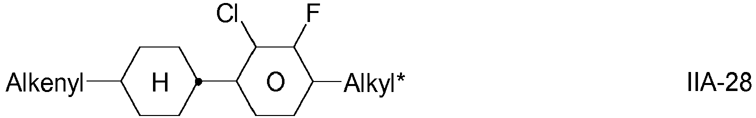 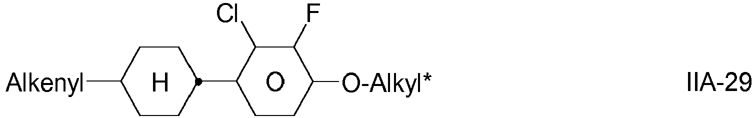 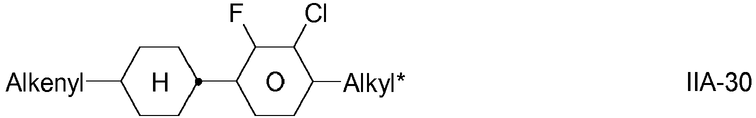 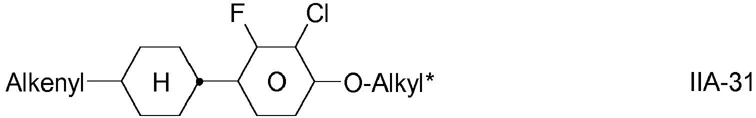 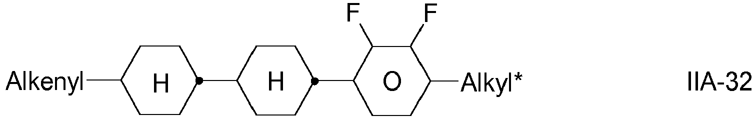 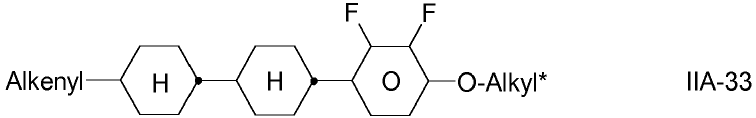 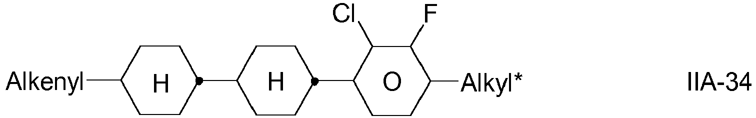 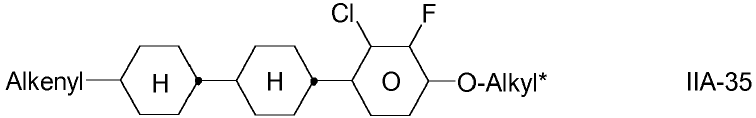 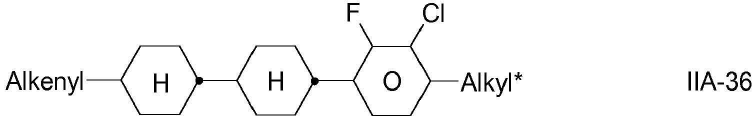 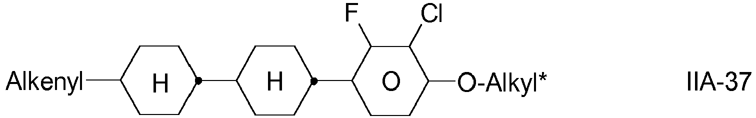 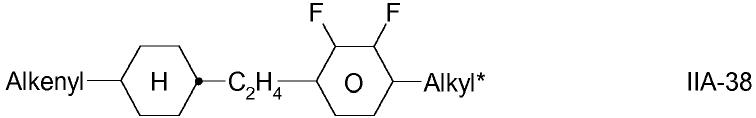 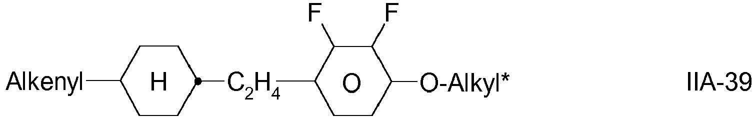 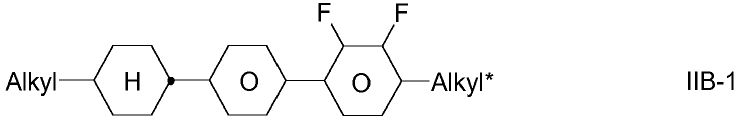 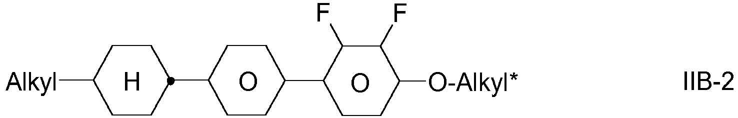 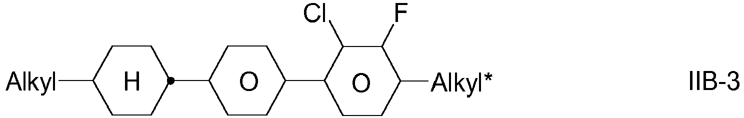 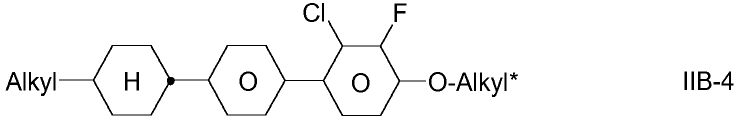 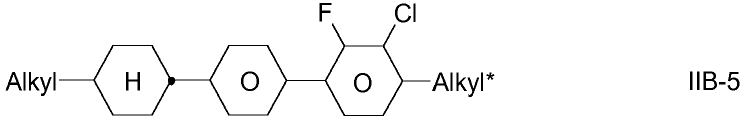 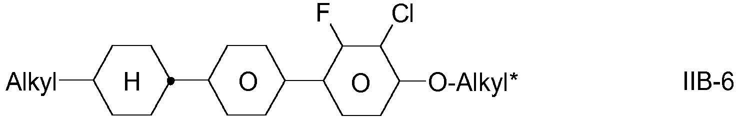 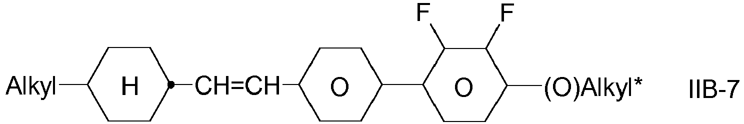 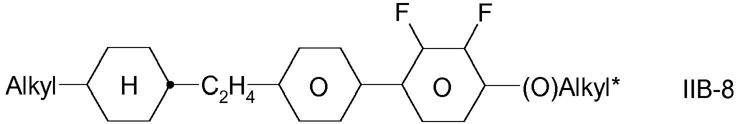 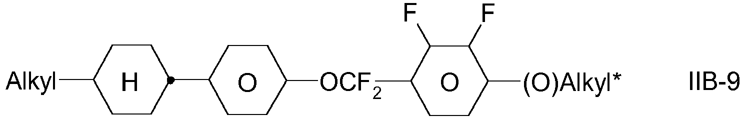 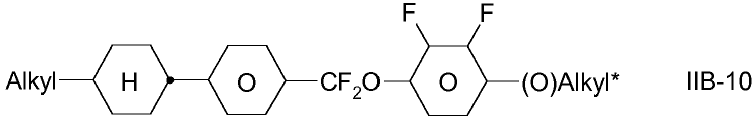 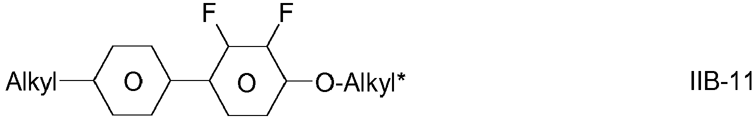 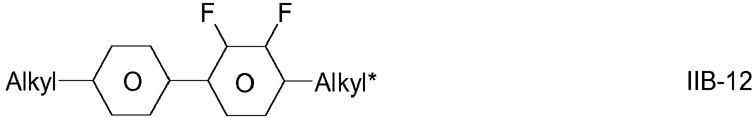 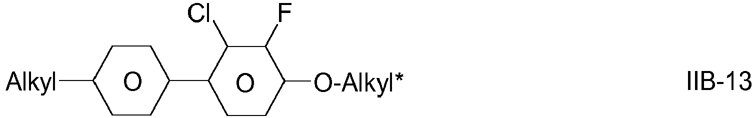 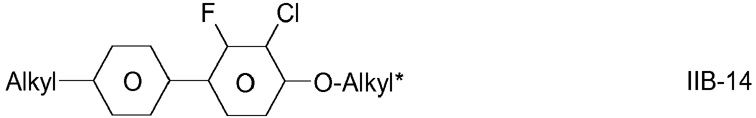 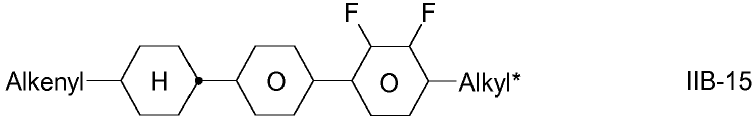 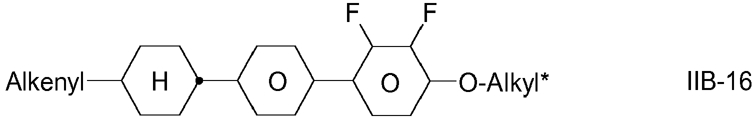 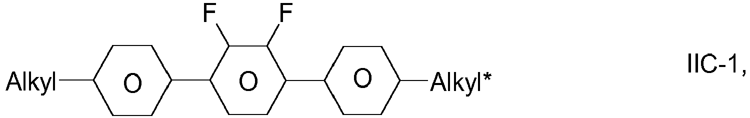 worin Alkyl und Alkyl* jeweils unabhängig voneinander einen geradkettigen Alkylrest mit 1-6 C-Atomen bedeuten.

Besonders bevorzugte erfindungsgemäße Mischungen enthalten eine oder mehrere Verbindungen der Formeln IIA-2, IIA-8, IIA-14, IIA-27, IIA-33, IIB-2, IIB-11, IIB-16 und IIC-1.

Vorzugsweise beträgt der Anteil an Verbindungen der Formeln IIA und/oder IIB im Gesamtgemisch mindestens 20 Gew.%.

Besonders bevorzugte erfindungsgemäße Medien enthalten mindestens eine Verbindung der Formel IIC-1, 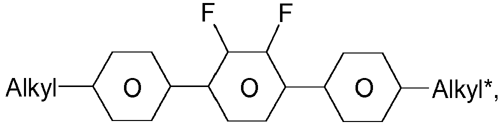 worin Alkyl und Alkyl*' die oben angegebenen Bedeutungen haben, vorzugsweise in Mengen von > 3 Gew.%, insbesondere > 5 Gew.% und besonders bevorzugt von 5-25 Gew.%.
b) Flüssigkristallines Medium, welches zusätzlich eine oder mehrere Verbindungen der Formel III 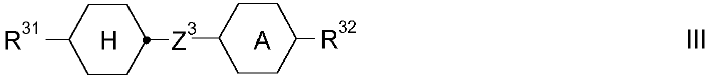 enthält,
   worin
   - R³¹ und R³²: jeweils unabhängig voneinander einen geradkettigen Alkyl-, Alkoxyalkyl- oder Alkoxyrest mit bis zu 12 C-Atomen, und 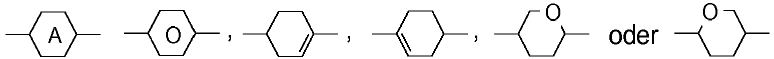
   - Z³: Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF-,
   bedeuten.
   Bevorzugte Verbindungen der Formel III werden nachfolgend genannt, 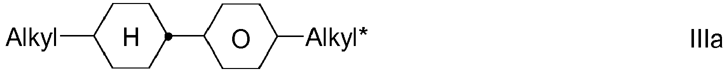 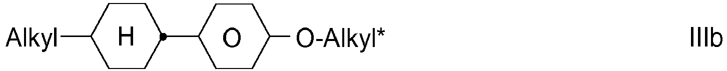 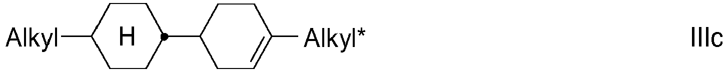 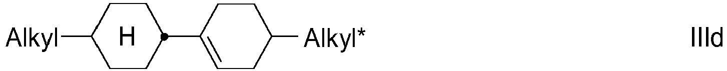 worin
   - Alkyl und Alkyl*: jeweils unabhängig voneinander einen geradkettigen Alkylrest mit 1-6 C-Atomen,
   bedeuten.
   Vorzugsweise enthält das erfindungsgemäße Medium mindestens eine Verbindung der Formel IIIa und/oder Formel IIIb.
   Der Anteil an Verbindungen der Formel III im Gesamtgemisch beträgt vorzugsweise mindestens 5 Gew.%.
c) Flüssigkristallines Medium enthaltend zusätzlich eine Verbindung der Formel 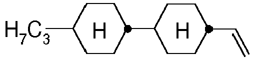 und / oder 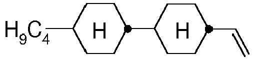 und / oder 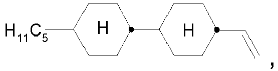 vorzugsweise in Gesamtmengen von ≥ 5 Gew.%, insbesondere von ≥ 10 Gew.%.
   Weiterhin bevorzugt sind erfindungsgemäße Mischungen enthaltend die Verbindung 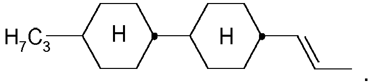
d) Flüssigkristallines Medium, welches zusätzlich eine oder mehrere Vierkernverbindungen der Formeln, 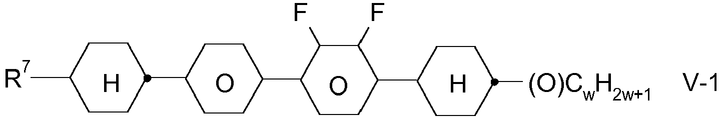 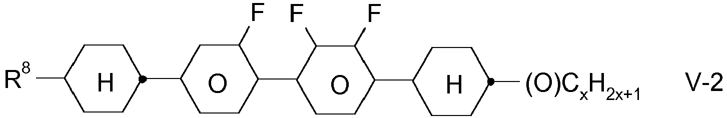 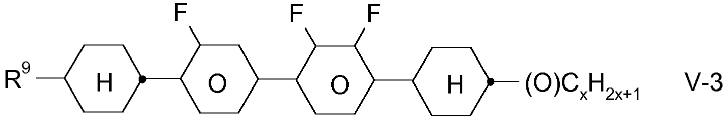 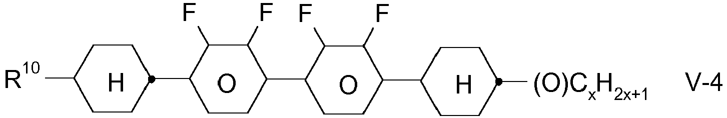 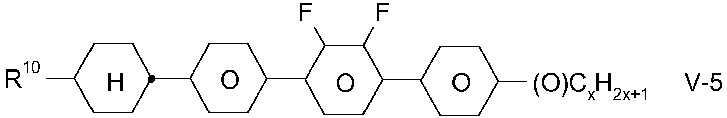 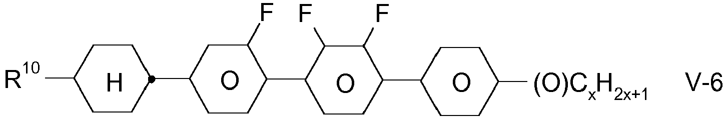 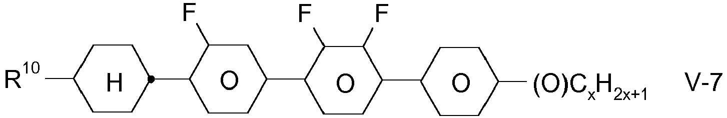 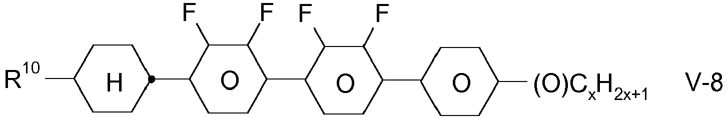 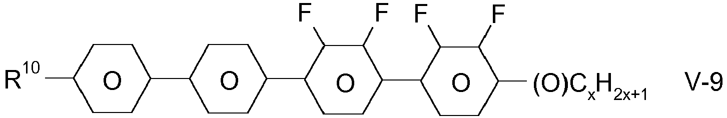 worin
   - R⁷⁻¹⁰: jeweils unabhängig voneinander eine der in Anspruch 2 für R^{2A} angegebenen Bedeutung haben, und
   - w und x: jeweils unabhängig voneinander 1 bis 6,
   bedeuten,
   enthält.
   Insbesondere bevorzugt sind Mischungen enthaltend mindestens eine Verbindung der Formel V-9.
e) Flüssigkristallines Medium, welches zusätzlich eine oder mehrere Verbindungen der Formeln Y-1 bis Y-6, 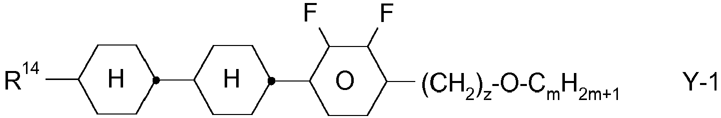 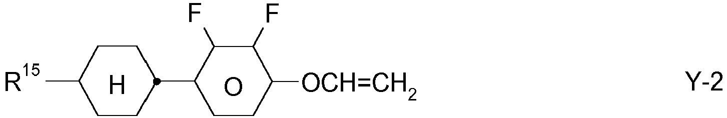 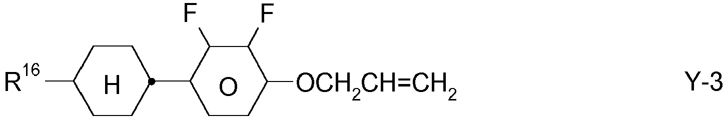 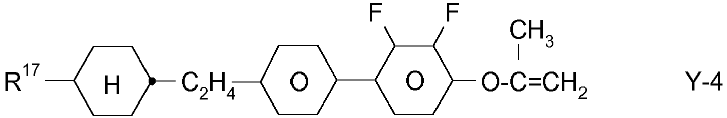 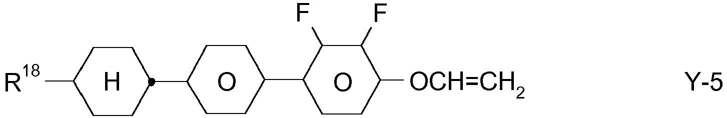 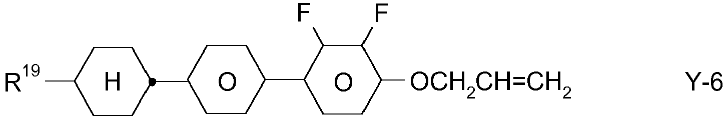 enthält,
   worin R¹⁴-R¹⁹ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formel Y-1 bis Y-6, vorzugsweise in Mengen von ≥ 5 Gew.%.
f) Flüssigkristallines Medium enthaltend zusätzlich ein oder mehrere fluorierte Terphenyle der Formeln T-1 bis T-21, 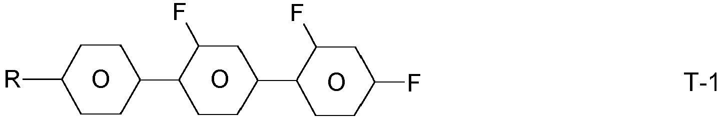 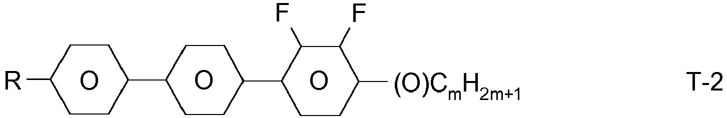 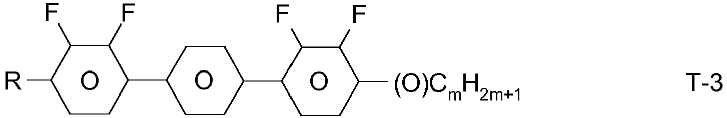 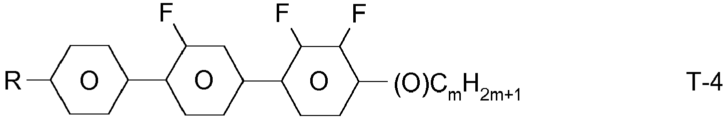 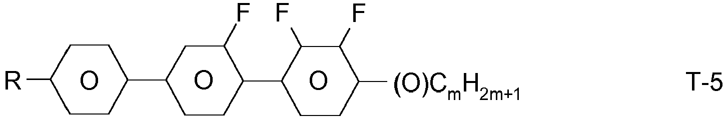 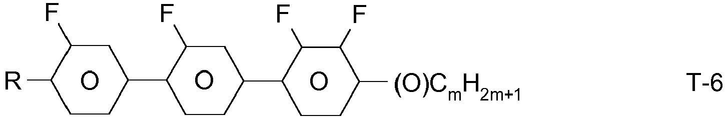 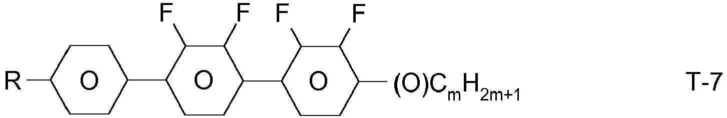 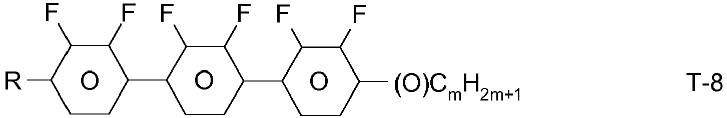 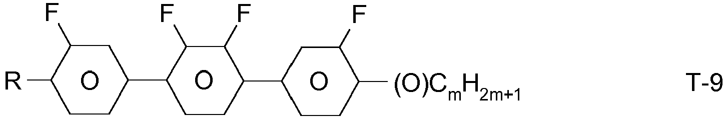 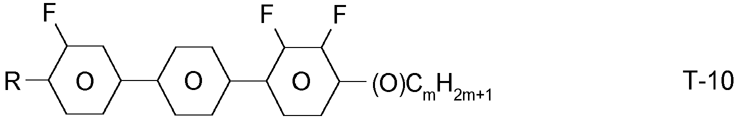 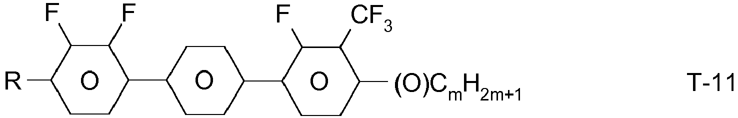 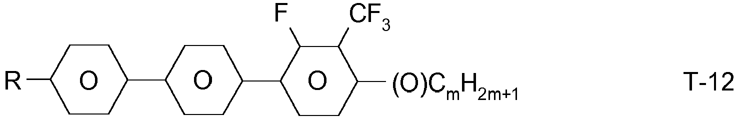 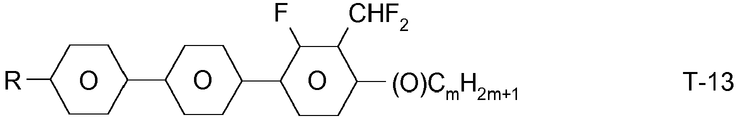 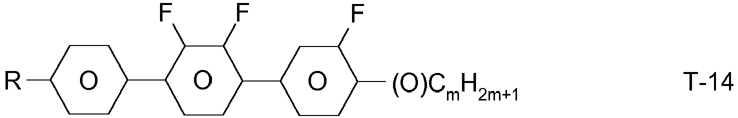 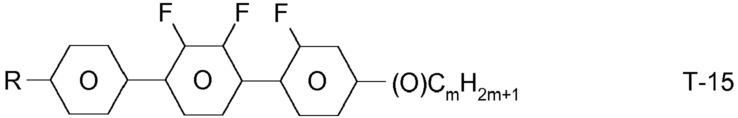 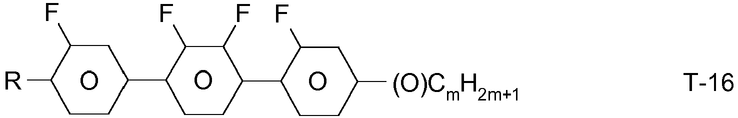 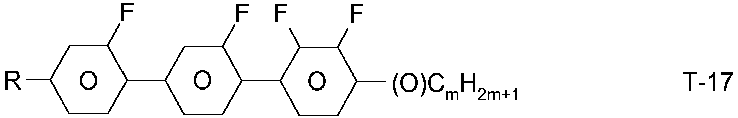 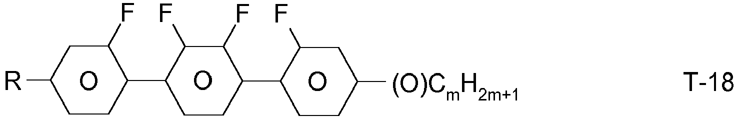 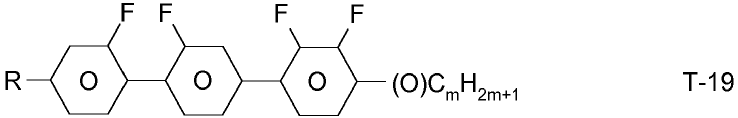 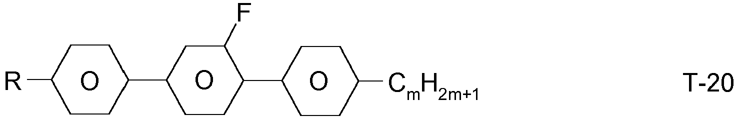 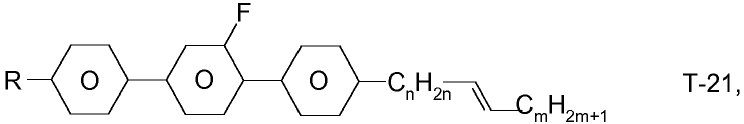 worin
   R geradkettiger Alkyl- oder Alkoxyrest mit 1-7 C-Atomen bedeutet, und m = 0, 1, 2, 3, 4, 5 oder 6 und n 0, 1, 2, 3 oder 4 bedeuten,
   enthält.

Vorzugsweise bedeutet R Methyl, Ethyl, Propyl, Butyl, Pentyl, Hexyl Methoxy, Ethoxy, Propoxy, Butoxy, Pentoxy.

Das erfindungsgemäße Medium enthält die Terphenyle der Formeln T-1 bis T-21 vorzugsweise in Mengen von 2-30 Gew.%, insbesondere von 5-20 Gew.%.

Besonders bevorzugt sind Verbindungen der Formeln T-1, T-2, T-20 und T-21. In diesen Verbindungen bedeutet R vorzugsweise Alkyl, ferner Alkoxy jeweils mit 1-5 C-Atomen. In den Verbindungen der Formel T-20 bedeutet R vorzugsweise Alkyl oder Alkenyl, insbesondere Alkyl. In der Verbindung der Formel T-21 bedeutet R vorzugsweise Alkyl.

Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-21.
g) Flüssigkristallines Medium enthaltend zusätzlich ein oder mehrere Biphenyle der Formeln B-1 bis B-4, 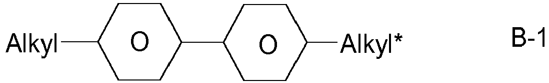 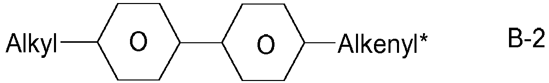 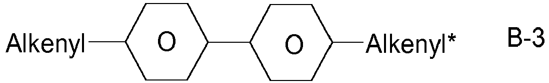 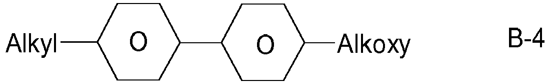 worin
   - Alkyl und Alkyl*: jeweils unabhängig voneinander einen geradkettigen Alkylrest mit 1-6 C-Atomen, und
   - Alkoxy: einen geradkettigen Alkoxyrest mit 1-6 C-Atomen,
   - Alkenyl und Alkenyl*: jeweils unabhängig voneinander einen geradkettigen Alkenylrest mit 2-6 C-Atomen
   bedeuten.
   Der Anteil der Biphenyle der Formeln B-1 bis B-4 in der Gesamtmischung beträgt vorzugsweise mindestens 3 Gew.%, insbesondere ≥ 5 Gew.%.
   Von den Verbindungen der Formeln B-1 bis B-4 sind die Verbindungen der Formel B-2 insbesondere bevorzugt.
   Besonders bevorzugte Biphenyle sind 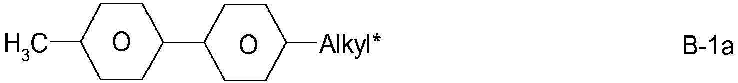 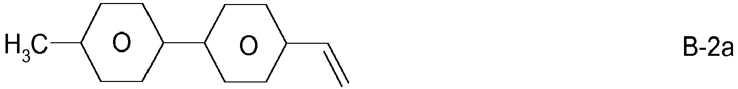 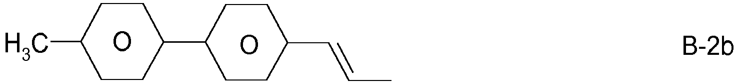 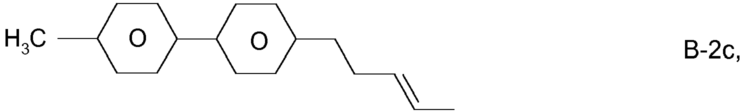 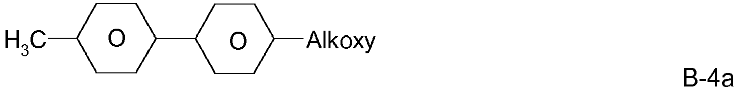 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
h) Flüssigkristallines Medium enthaltend mindestens eine Verbindung der Formeln Z-1 bis Z-7, 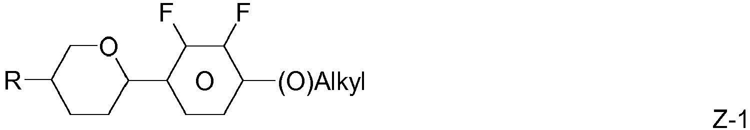 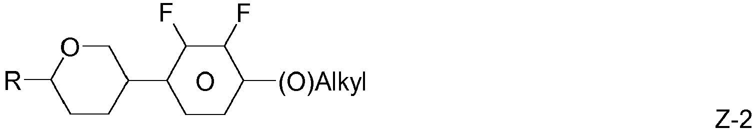 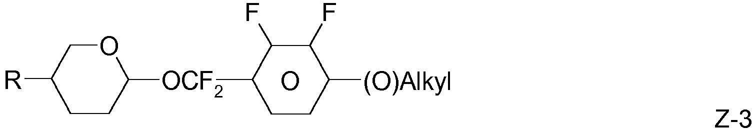 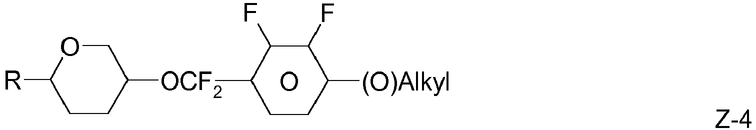 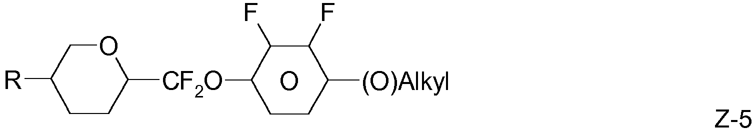 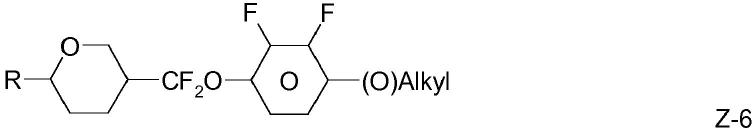 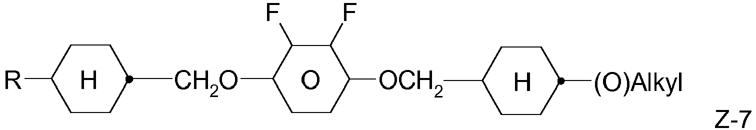 worin R und Alkyl die oben angegebenen Bedeutungen haben.
i) Flüssigkristallines Medium enthaltend mindestens eine Verbindung der Formeln O-1 bis O-16, 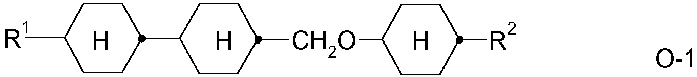 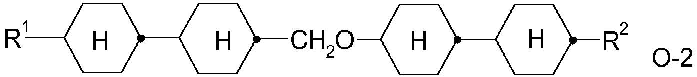 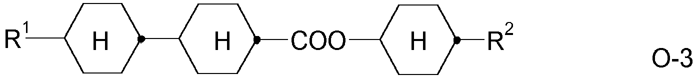 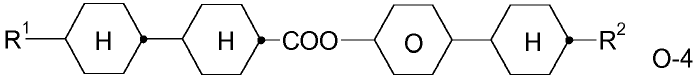 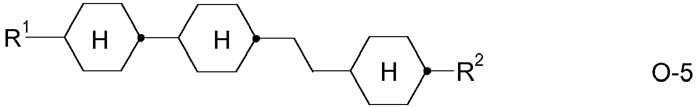 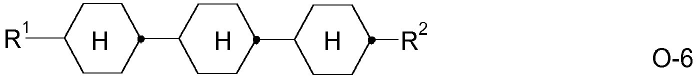 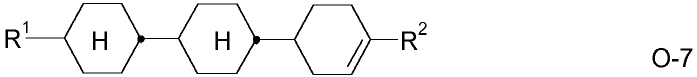 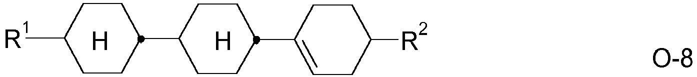 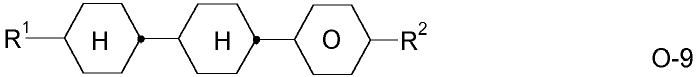 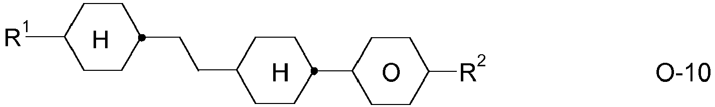 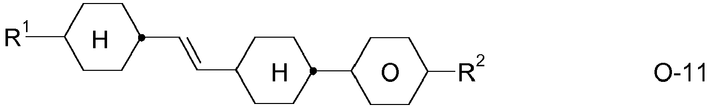 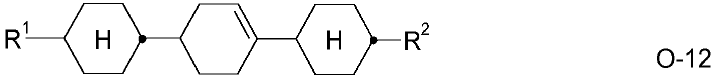 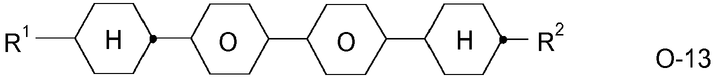 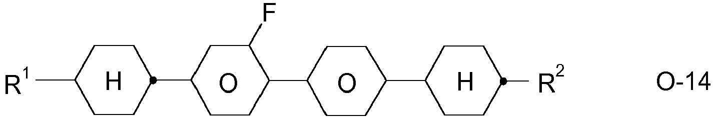 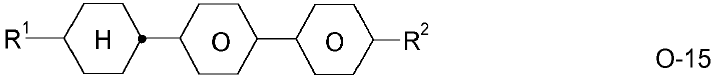 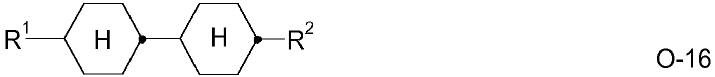 worin R¹ und R² die für R^{2A} angegebenen Bedeutungen haben. Vorzugsweise bedeuten R¹ und R² jeweils unabhängig voneinander geradkettiges Alkyl.

Bevorzugte Medien enthalten eine oder mehrere Verbindungen der Formeln O-1, O-3, O-4, O-5, O-9, O-13, O-14, O-15 und/oder O-16. Erfindungsgemäße Mischungen enthalten ganz besonders bevorzugt die Verbindungen der Formel 0-9, 0-15 und/oder 0-16, inbesondere in Mengen von 5-30 %.

Bevorzugte Verbindungen der Formeln 0-15 und 0-16 werden nachfolgend genannt:

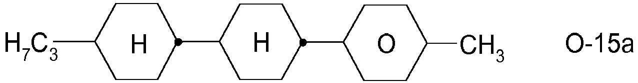

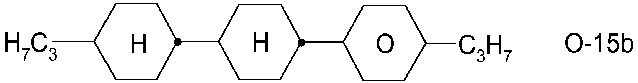

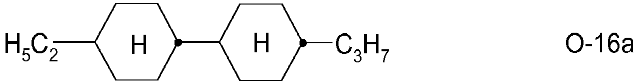

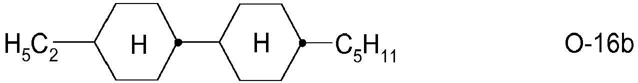

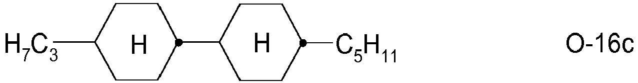

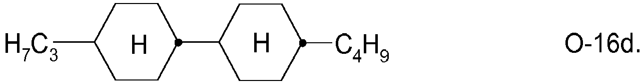

Besonders bevorzugt enthält das erfindungsgemäße Medium die Dreikern-Verbindungen der Formel O-15a und/oder der Formel O-15b in Kombination mit einer oder mehreren Zweikern-Verbindungen der Formeln O-16a bis O-16d. Vorzugsweise beträgt der Gesamtanteil der Verbindungen der Formel O-15a und/oder O-15b in Kombination mit einer oder mehreren Verbindungen ausgewählt aus den Zweikern-verbindungen der Formeln O-16a bis O-16d 5-40 %, ganz besonders bevorzugt in Mengen von 15-35 % bezogen auf die Mischung.

Ganz besonders bevorzugte Mischungen enthalten die Verbindungen O-15a und O-16a:

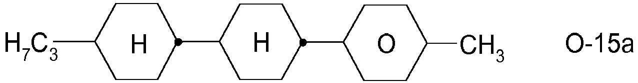

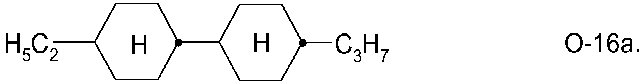

Vorzugsweise sind die Verbindungen O-15a und O-16a in der Mischung in einer Konzentration von 15-35 %, besonders bevorzugt von 15-25 % und insbesondere bevorzugt von 18-22 % bezogen auf die Gesamtmischung, enthalten.

Ganz besonders bevorzugte Mischungen enthalten die Verbindungen O-15b und O-16a:

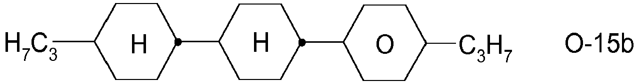

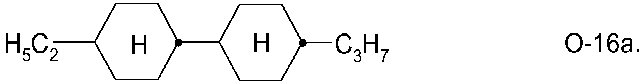

Vorzugsweise sind die Verbindungen O-15b und O-16a in der Mischung in einer Konzentration von 15-35 %, besonders bevorzugt von 15-25 % und insbesondere bevorzugt von 18-22 % bezogen auf die Gesamtmischung, enthalten.

Ganz besonders bevorzugte Mischungen enthalten folgende drei Verbindungen:

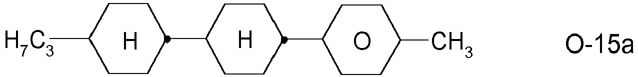

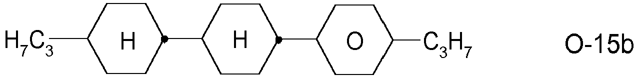

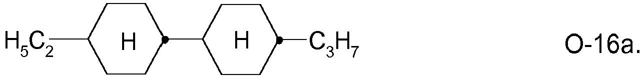

Vorzugsweise sind die Verbindungen O-15a, O-15b und O-16a in der Mischung in einer Konzentration von 15-35 %, besonders bevorzugt von 15-25 % und insbesondere bevorzugt von 18-22 % bezogen auf die Gesamtmischung, enthalten.
j) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 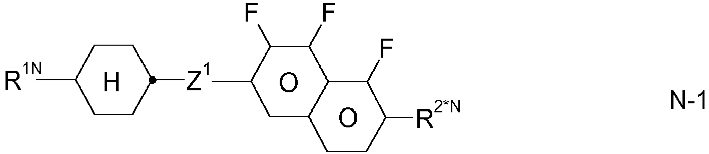 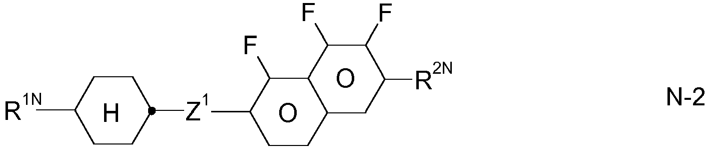 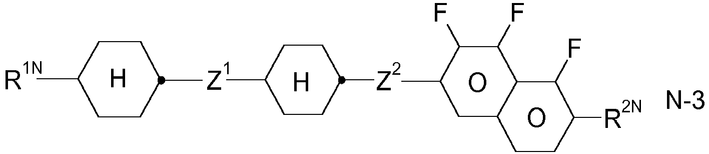 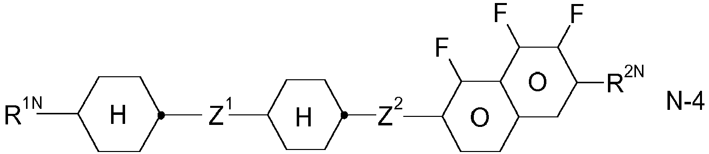 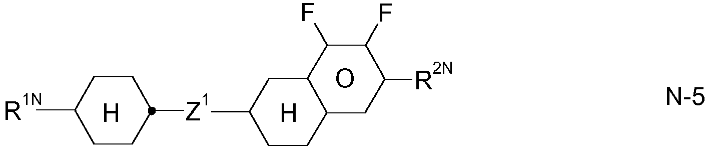
   worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und
   Z¹ und Z² jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
k) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, fluorierte Dibenzofurane der Formeln BF, 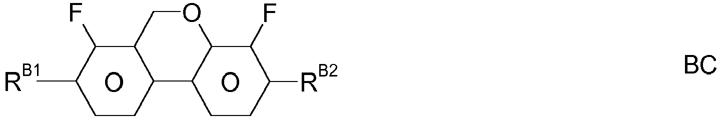 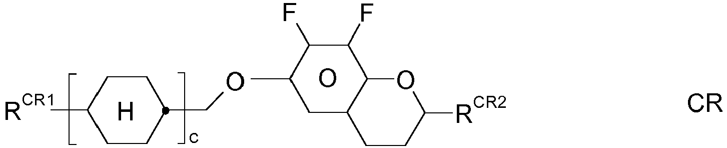 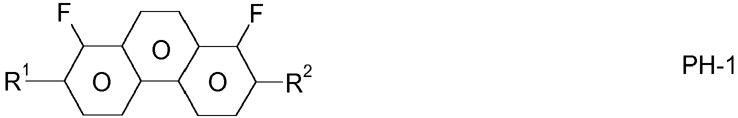 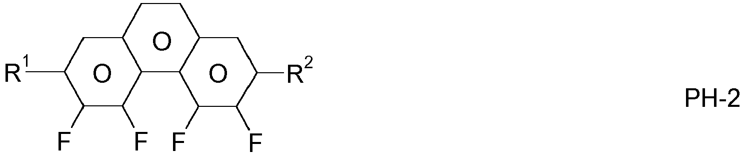 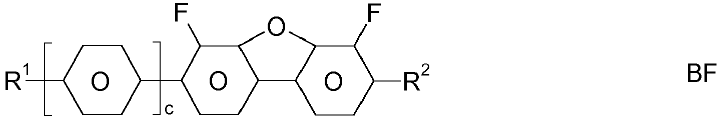 worin
   R^{B1}, R^{B2}, R^{CR1}, R^{CR2} R¹, R² jeweils unabhängig voneinander die Bedeutung von R^{2A} aufweisen. c ist 0, 1 oder 2.
   Die erfindungsgemäßen Mischungen enthalten die Verbindungen der Formeln BC, CR, PH-1, PH-2 und/oder BF vorzugsweise in Mengen von 3 bis 20 Gew.%, insbesondere in Mengen von 3 bis 15 Gew.%.
   Besonders bevorzugte Verbindungen der Formeln BC und CR sind die Verbindungen BC-1 bis BC-7 und CR-1 bis CR-5, 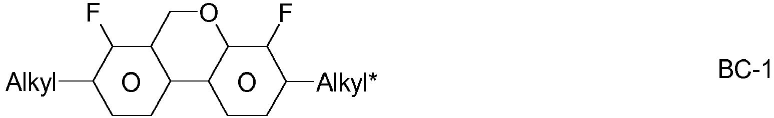 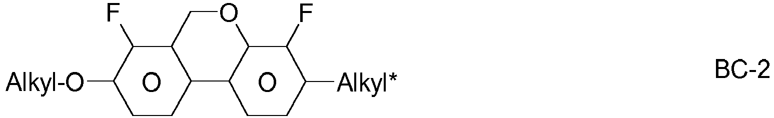 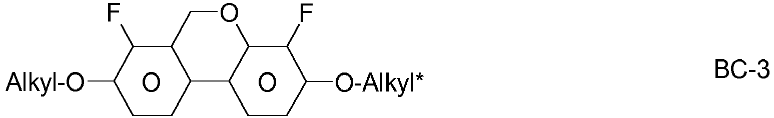 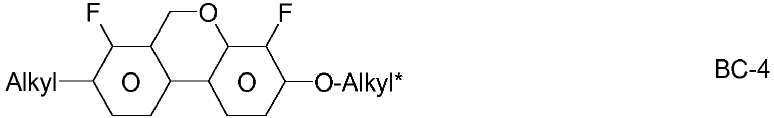 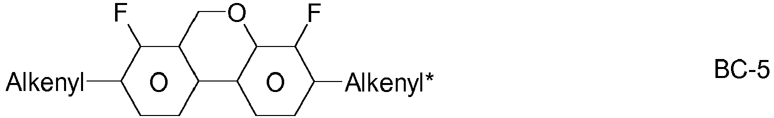 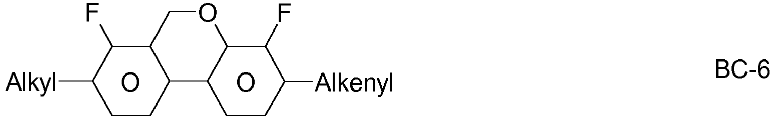 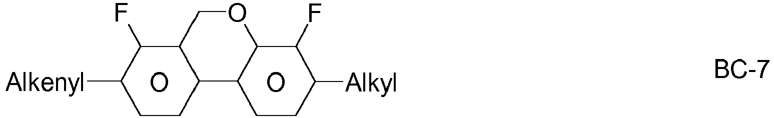 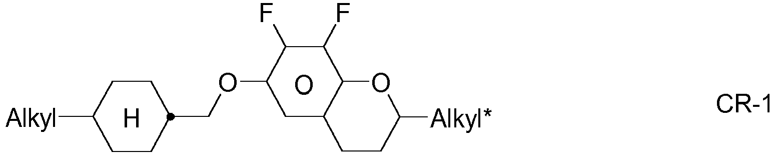 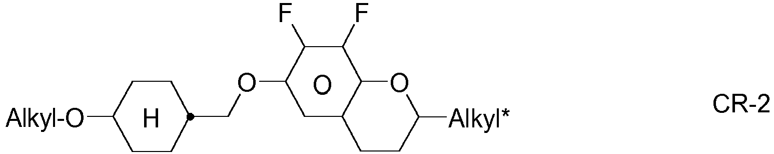 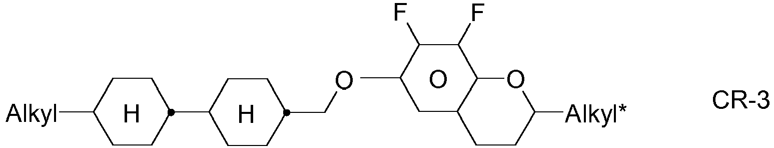 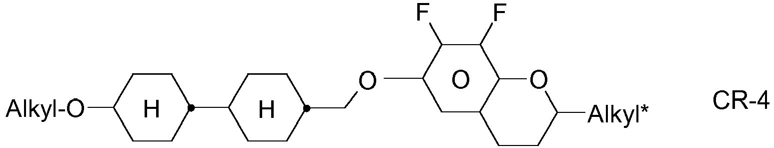 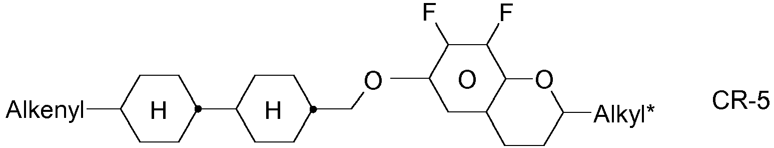 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen,
   bedeuten.
   Ganz besonders bevorzugt sind Mischungen enthaltend eine, zwei oder drei Verbindungen der Formel BC-2.
l) Bevorzugte Mischungen enthalten eine oder mehrere Indan-Verbindungen der Formeln In, 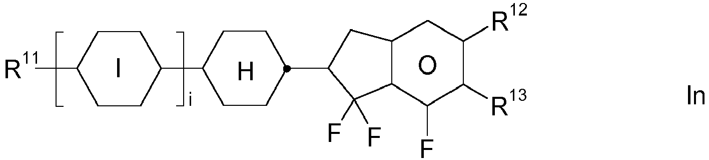 worin
   - R¹¹, R¹², R¹³: jeweils unabhängig voneinander einen geradkettigen Alkyl-, oder Alkoxy-, Alkoxyalkyl-, Alkenylrest mit 1-6 C-Atomen,
   - R¹² und R¹³: zusätzlich Halogen, vorzugsweise F, 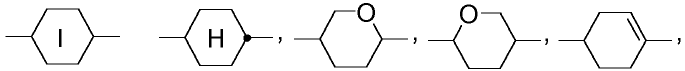 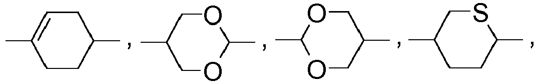 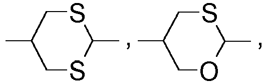
   - i: 0, 1 oder 2
   bedeuten.
   Bevorzugte Verbindungen der Formel In sind die nachfolgend genannten Verbindungen der Formeln In-1 bis In-16, 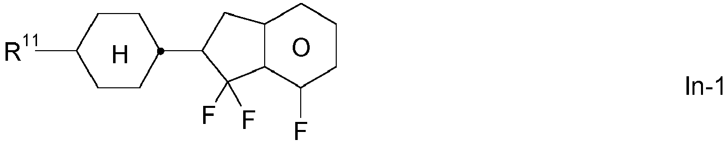 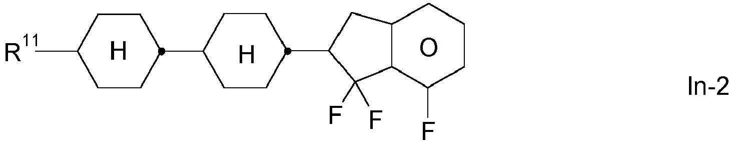 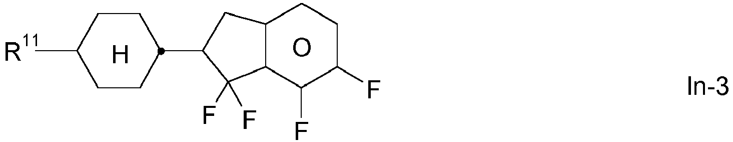 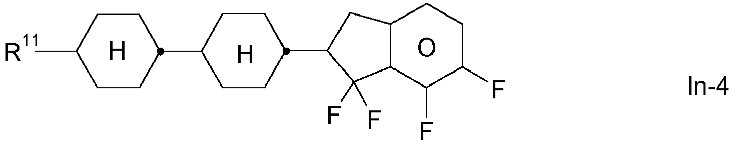 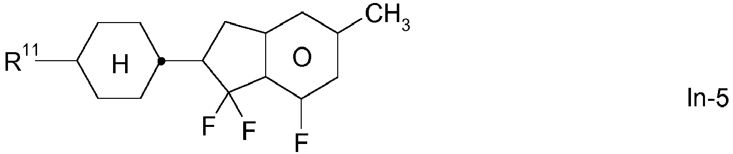 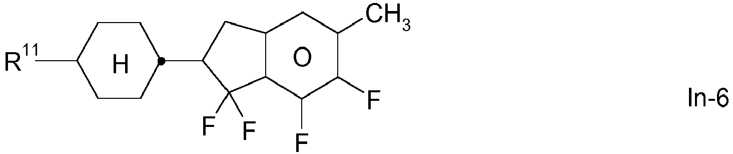 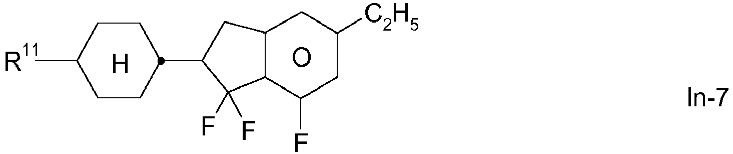 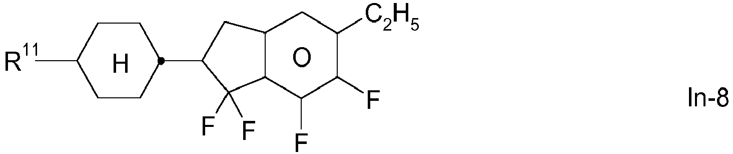 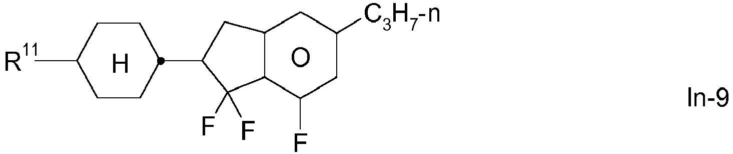 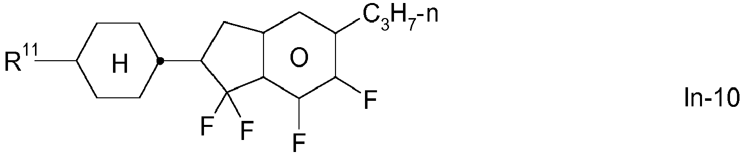 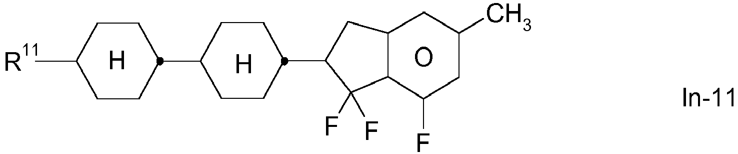 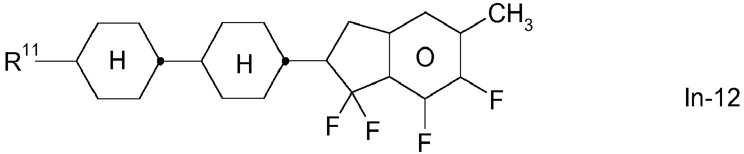 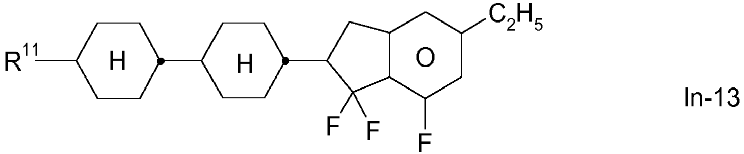 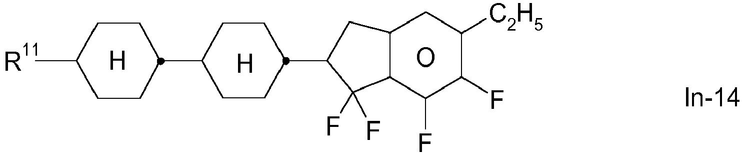 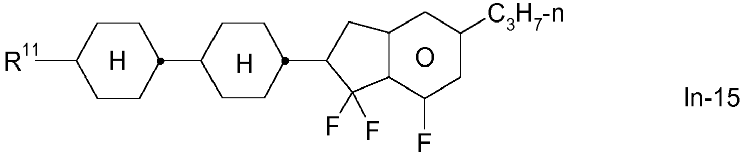 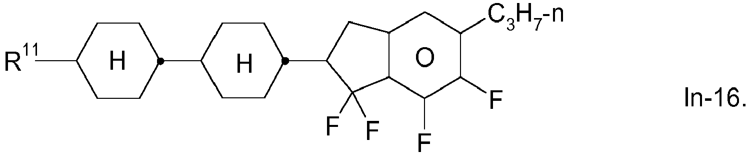
   Besonders bevorzugt sind die Verbindungen der Formeln In-1, In-2, In-3 und In-4.
   Die Verbindungen der Formeln In und der Unterformeln In-1 bis In-16 werden vorzugsweise in Konzentrationen ≥ 5 Gew.%, insbesondere 5 - 30 Gew.% und ganz besonders bevorzugt 5 - 25 Gew.% in den erfindungsgemäßen Mischungen eingesetzt.
m) Bevorzugte Mischungen enthalten zusätzlich eine oder mehrere Verbindungen der Formeln L-1 bis L-11, 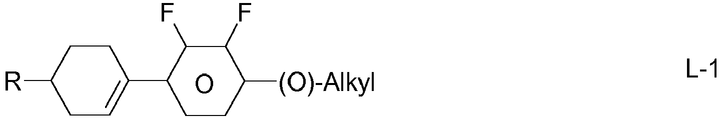 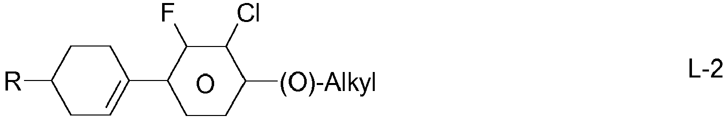 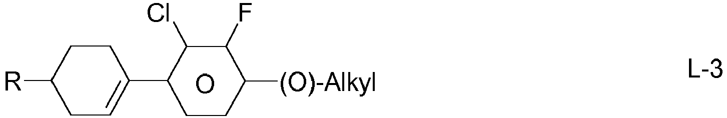 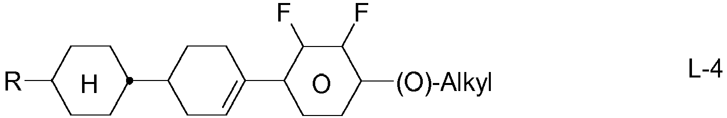 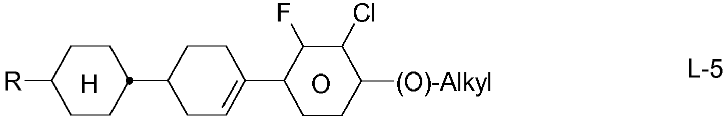 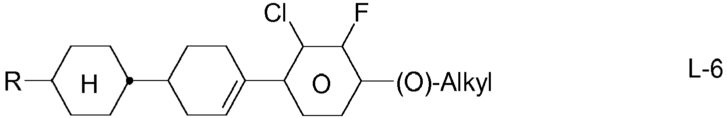 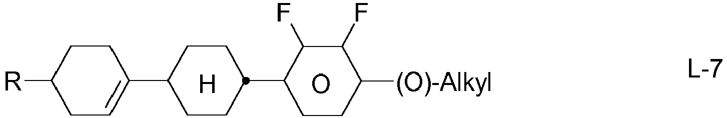 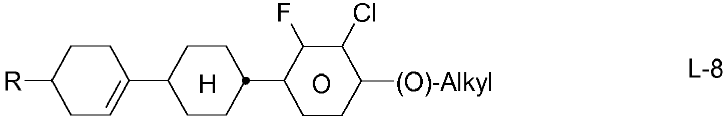 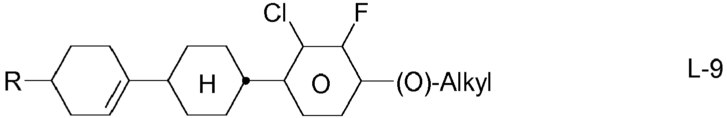 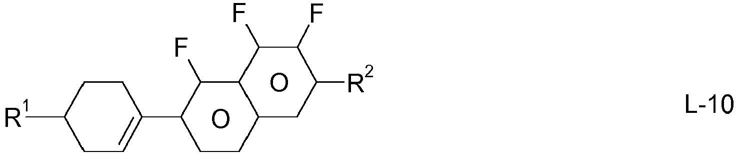 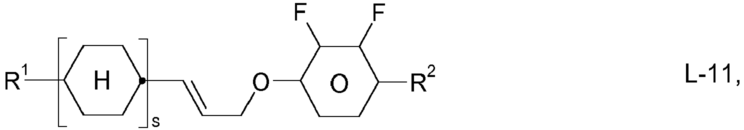 worin
   R, R¹ und R² jeweils unabhängig voneinander die für R^{2A} in Anspruch 2 angegebenen Bedeutungen haben und Alkyl ein Alkylrest mit 1-6 C-Atomen bedeutet. s bedeutet 1 oder 2.
   Besonders bevorzugt sind die Verbindungen der Formeln L-1 und L-4, insbesondere L-4.
   Die Verbindungen der Formeln L-1 bis L-11 werden vorzugsweise in Konzentrationen von 5 - 50 Gew.%, insbesondere 5 - 40 Gew.% und ganz besonders bevorzugt 10 - 40 Gew.% eingesetzt.
n) Das Medium enthält zusätzlich eine oder mehrere Verbindungen der Formel EY, 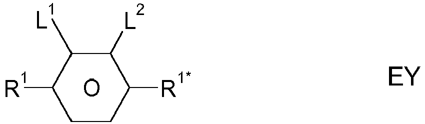 worin R¹, R^{1*}, L¹ und L² die in Formel I angegebenen Bedeutungen haben. In den Verbindungen der Formel EY bedeuten R¹ und R^{1*} vorzugsweise Alkoxy mit ≥ 2 C-Atomen und L¹ = L² = F. Besonders bevorzugt sind die Verbindungen der Formel 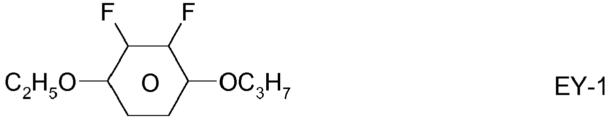 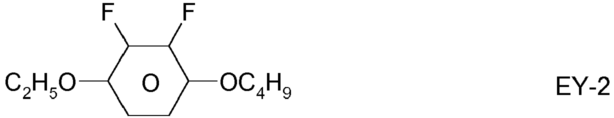 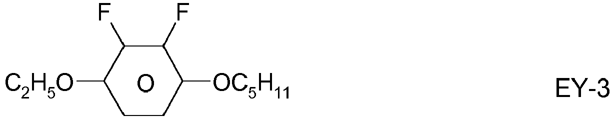 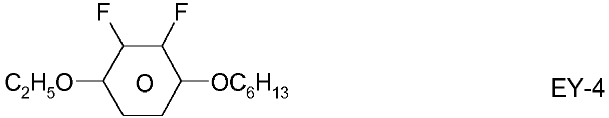 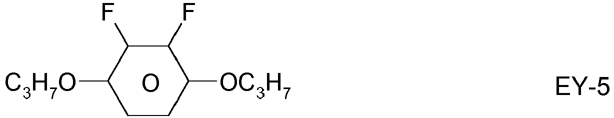 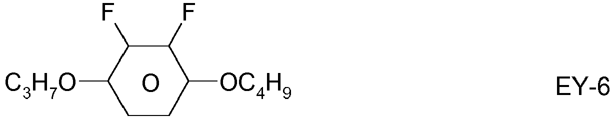 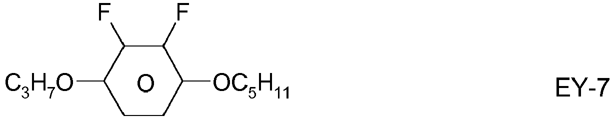 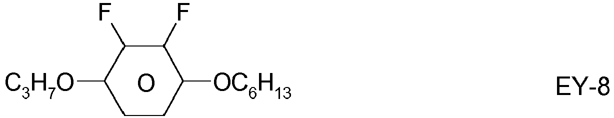 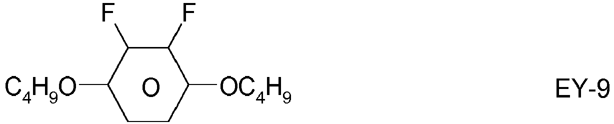 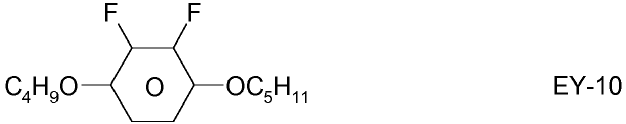 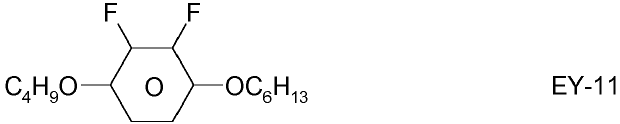 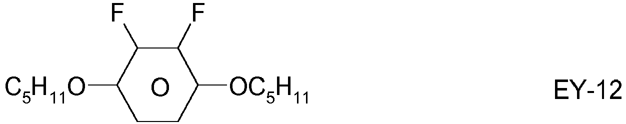 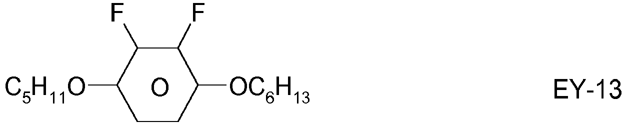 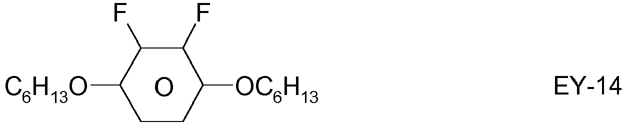 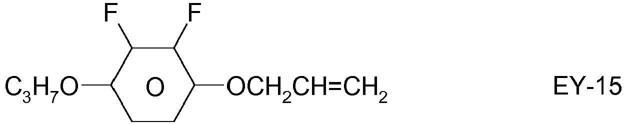 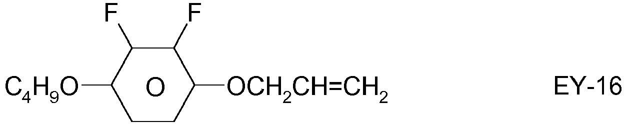 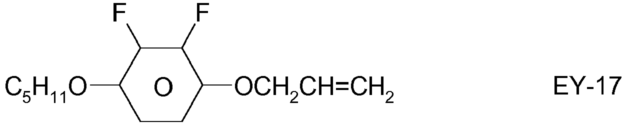 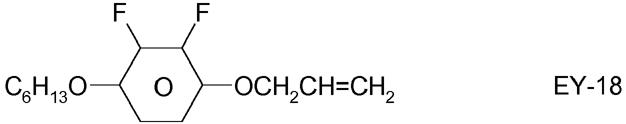 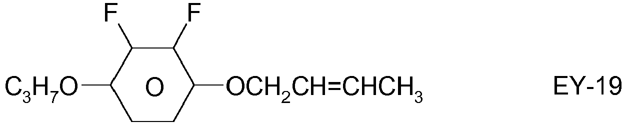 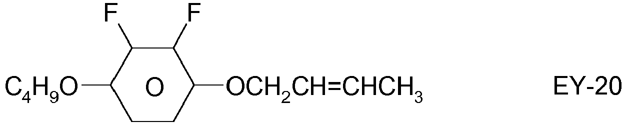 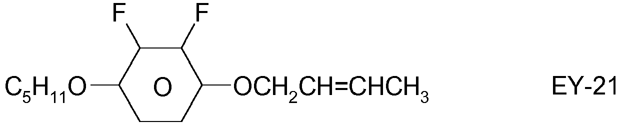 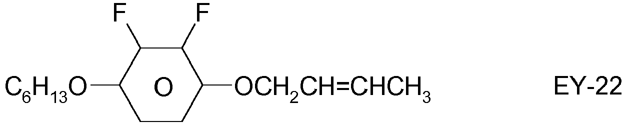 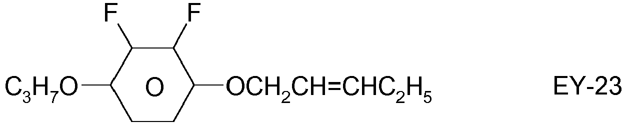 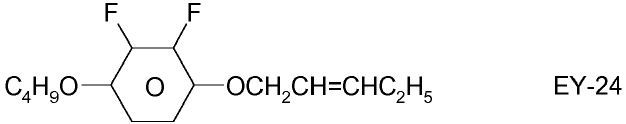 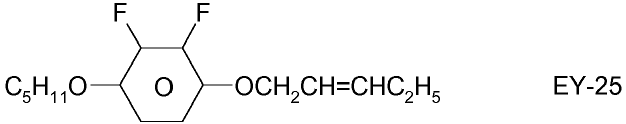 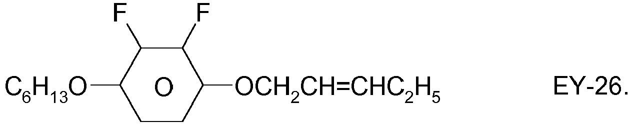 Besonders bevorzugt sind die Verbindungen der Formeln EY-1 bis EY-12, insbesondere EY-2, EY-9, EY-10.
o) Das Medium enthält zusätzlich eine oder mehrere Tolan-Verbindungen der Formeln To-1 bis To-12, 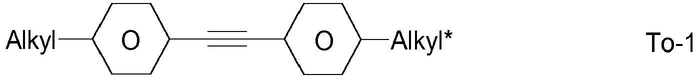 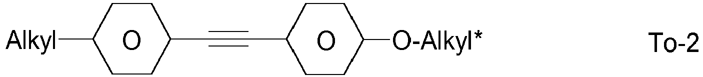 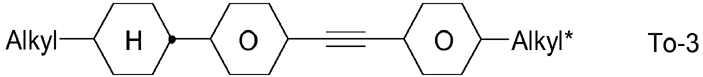 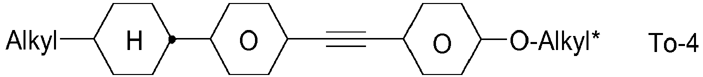 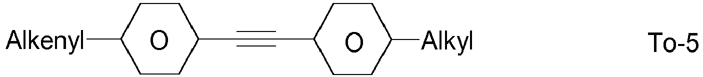 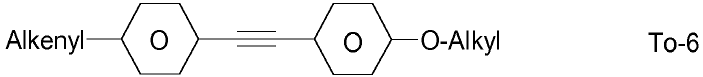 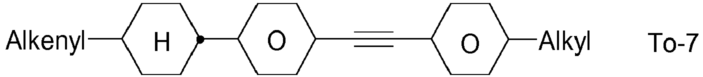 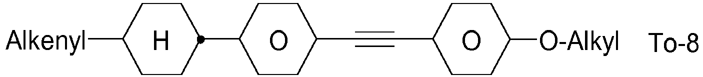 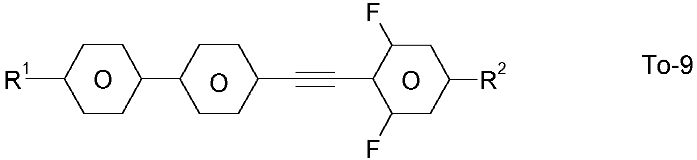 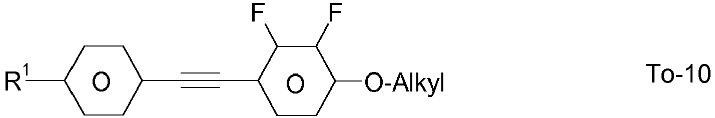 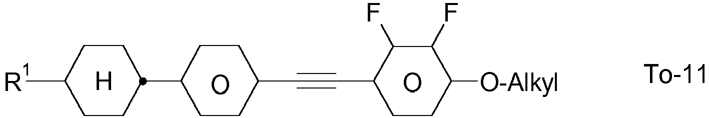 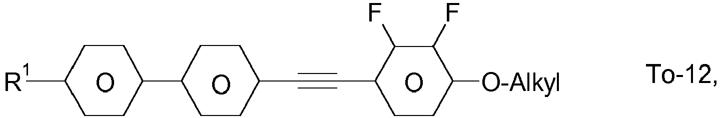 worin
   R¹ und R² jeweils unabhängig voneinander die Bedeutung von R¹ in Anspruch 1 aufweisen, vorzugsweise geradkettiges Alkyl, Alkoxy und Alkenyl bedeuten, insbesondere geradkettiges Alkyl mit 1 bis 6 C-Atomen,
   Alkyl und Alkyl* jeweils unabhängig voneinander einen geradkettigen Alkylrest mit 1-6 C-Atomen, Alkoxy einen geradkettigen Alkoxyrest mit 1-6 C-Atome, und Alkenyl einen geradkettigen Alkenylrest mit 2-6 C-Atomen
   bedeuten.

Besonders bevorzugte Tolane sind die Verbindungen der Formeln, To-1, To-2, To-4, To-9, To-10 und To-11.

Ganz besonders bevorzugte Mischungskonzepte werden nachfolgend genannt: (Die verwendeten Acronyme sind in Tabelle A erklärt. n und m bedeuten hier jeweils unabhängig voneinander 1-6.)

Bevorzugte Mischungskonzepte enthalten vorzugsweise
- die Verbindung(en) der Formel I, worin L¹ = L² = F und R¹ = Alkyl und R^{1*} = Alkoxy bedeuten;
- mindestens eine Verbindung der Formel I-1;
- mindestens eine Verbindung der Formel I-73;
- mindestens eine Verbindung der Formel I-1a (Acronym: COY-n-Om);
- mindestens eine Verbindung der Formel I-73a (Acronym: CCOY-n-Om);
- mindestens eine Verbindung der Formel I-1a (Acronym: COY-n-Om) und mindestens eine Verbindung der Formel I-73a (Acronym: CCOY-n-Om);
- mindestens zwei Verbindungen der Formel I-1a (Acronym: COY-n-Om) und mindestens eine Verbindung der Formel I-73a (Acronym: CCOY-n-Om);
- mindestens 10 Gew.% einer oder mehrerer Verbindungen der Formel I-1a (Acronym: COY-n-Om) und mindestens 10 Gew.% einer oder mehrerer Verbindungen der Formel I-73a (Acronym: CCOY-n-Om), jeweils bezogen auf die Mischung;
- COY-3-O2 und CCOY-3-O2;
- COY-3-O2 und CCOY-2-O2;
- COY-3-O2 und CCOY-3-O2 und CCOY-2-O2;
- mindestens eine Verbindung der Formel I-1a und mindestens eine Verbindung der Formel CY-n-Om; vorzugsweise COY-3-O2 und CY-3-02
- mindestens eine Verbindung der Formel COY-n-Om und mindestens eine Verbindung der Formel CCY-n-Om, vorzugsweise COY-3-O2 in Kombination mit mindestens einer Verbindung ausgewählt aus der Gruppe der Verbindungen der Formeln CCY-3-O2, CCY-3-O1, CCY-3-O3 und CCY-4-O2;
- mindestens eine Verbindung der Formel CCOY-n-Om und mindestens eine Verbindung der Formel CCY-n-Om, vorzugsweise CCOY-3-O2 in Kombination mit mindestens einer Verbindung ausgewählt aus der Gruppe der Verbindungen der Formeln CCY-3-02, CCY-3-O1, CCY-3-O3 und CCY-4-O2;
- mindestens eine Verbindung der Formel COY-n-Om und mindestens eine Verbindung der Formel CPY-n-Om, vorzugsweise COY-3-O2 und mindestens eine Verbindung ausgewählt aus der Gruppe der Verbindungen der Formeln CPY-2-O2, CPY-3-O2, CPY-3-O3, CPY-3-04, CPY-4-O3 und CPY-5-O3;
- mindestens eine Verbindung der Formel CCOY-n-Om und mindestens eine Verbindung der Formel CPY-n-Om, vorzugsweise CCOY-3-O2 und mindestens eine Verbindung ausgewählt aus der Gruppe der Verbindungen der Formeln CPY-2-O2, CPY-3-O2, CPY-3-03, CPY-3-O4, CPY-4-O3 und CPY-5-O3;
- mindestens eine Verbindung der Formel COY-n-Om und mindestens eine Verbindung der Formel CCOY-n-Om und mindestens eine Verbindung der Formel CPY-n-Om, vorzugsweise COY-3-O2 und CCOY-3-O2 und mindestens eine Verbindung ausgewählt aus der Gruppe der Verbindungen CPY-2-O2, CPY-3-O2, CPY-3-O3, CPY-3-04, CPY-4-O3 und CPY-5-O3;
- COY-3-O2 in Kombination mit CPY-2-O2 und/oder CPY-3-O2;
- CCOY-3-O2 in Kombination mit CPY-2-O2 und/oder CPY-3-O2;
- COY-3-O2 und CCOY-3-O2 in Kombination mit CPY-2-O2 und/oder CPY-3-O2;
- mindestens eine Verbindung der Formel COY-n-Om und mindestens eine Verbindung der Formel CCH-nm, vorzugsweise COY-3-O2 in Kombination mit mindestens einer Verbindung ausgewählt aus der Gruppe der Verbindungen der Formeln CCH-23, CCH-25, CCH-34 und CCH-35;
- mindestens eine Verbindung der Formel CCOY-n-Om und mindestens eine Verbindung der Formel CCH-nm, vorzugsweise CCOY-3-O2 in Kombination mit mindestens einer Verbindung ausgewählt aus der Gruppe der Verbindungen der Formeln CCH-23, CCH-25, CCH-34 und CCH-35;
- mindestens eine Verbindung der Formel COY-n-Om und mindestens eine Verbindung der Formel CCOY-n-Om und mindestens eine Verbindung der Formel CCP-nm, vorzugsweise COY-3-O2 und CCOY-3-O2 in Kombination mit CCP-31 und/oder CCP-33;
- mindestens eine Verbindung der Formel COY-n-Om und mindestens eine Verbindung der Formel CCP-nm, vorzugsweise COY-3-O2 in Kombination mit CCP-31 und/oder CCP-33;
- mindestens eine Verbindung der Formel CCOY-n-Om und mindestens eine Verbindung der Formel CCP-nm, vorzugsweise CCOY-3-O2 in Kombination mit CCP-31 und/oder CCP-33;
- mindestens eine Verbindung der Formel COY-n-Om und mindestens eine Verbindung der Formel CCOY-n-Om und mindestens eine Verbindung der Formel CCP-nm, vorzugsweise COY-3-O2 und CCOY-3-O2 in Kombination mit CCP-31 und/oder CCP-33;
- mindestens eine Verbindung der Formel COY-n-Om und mindestens eine Verbindung der Formel PYP-n-m, vorzugsweise COY-3-O2 in Kombination mit PYP-2-3 und/oder PYP-2-4;
- mindestens eine Verbindung der Formel COY-n-Om und mindestens eine Verbindung der Formel CCOY-n-Om und mindestens eine Verbindung der Formel PYP-n-m, vorzugsweise COY-3-O2 und CCOY-3-O2 in Kombination mit PYP-2-3 und/oder PYP-2-4;
- mindestens eine Verbindung der Formel COY-n-Om und mindestens eine Verbindung der Formel Y-nO-Om, vorzugsweise COY-3-O2 in Kombination mit mindestens einer Verbindung ausgewählt aus der Gruppe der Verbindungen der Formeln Y-2O-O3, Y-2O-O4, Y-2O-O5, Y-3O-O4, Y-3O-O5, Y-4O-O4, Y-4O-O5;
- mindestens eine Verbindung der Formel CCOY-n-Om und mindestens eine Verbindung der Formel Y-nO-Om, vorzugsweise CCOY-3-O2 in Kombination mit mindestens einer Verbindung ausgewählt aus der Gruppe der Verbindungen der Formeln Y-2O-03, Y-2O-O4, Y-2O-O5, Y-3O-O4, Y-3O-O5, Y-4O-O4, Y-4O-O5;
- mindestens eine Verbindung der Formel COY-n-Om und mindestens eine Verbindung der Formel CCOY-n-Om und mindestens eine Verbindung der Formel Y-nO-Om, vorzugsweise COY-3-O2 und CCOY-3-O2 in Kombination mit mindestens einer Verbindung ausgewählt aus der Gruppe der Verbindungen der Formeln Y-2O-03, Y-2O-O4, Y-2O-O5, Y-3O-O4, Y-3O-O5, Y-4O-O4, Y-4O-O5;
- jeweils mindestens eine Verbindung der Formeln CPY-n-Om + CCY-n-Om + COY-n-Om + CCOY-n-Om;
- mindestens eine Verbindung der Formel COY-n-Om und mindestens eine Verbindung der Formel CLY-n-Om;
- mindestens eine Verbindung der Formel CCOY-n-Om und mindestens eine Verbindung der Formel CLY-n-Om;
- mindestens eine Verbindung der Formel COY-n-Om und mindestens eine Verbindung der Formel CCOY-n-Om und mindestens eine Verbindung der Formel CLY-n-Om;
- mindestens eine Verbindung der Formel COY-n-Om in Kombination mit PP-1-2V1;
- mindestens eine Verbindung der Formel CCOY-n-Om in Kombination mit PP-1-2V1;
- mindestens eine Verbindung der Formel COY-n-Om und mindestens eine Verbindung der Formel CCOY-n-Om in Kombination mit PP-1-2V1;
- mindestens eine Verbindung der Formel COY-n-Om in Kombination mit CC-n-V1, vorzugsweise CC-3-V1;
- mindestens eine Verbindung der Formel CCOY-n-Om in Kombination mit CC-n-V1, vorzugsweise CC-3-V1;
- mindestens eine Verbindung der Formel COY-n-Om und mindestens eine Verbindung der Formel CCOY-n-Om in Kombination mit CC-n-V1, vorzugsweise CC-3-V1;
- mindestens eine Verbindung der Formel COY-n-Om in Kombination mit PP-n-Om und/oder PP-n-m;
- mindestens eine Verbindung der Formel CCOY-n-Om in Kombination mit PP-n-Om und/oder PP-n-m;
- mindestens eine Verbindung der Formel COY-n-Om und mindestens eine Verbindung der Formel CCOY-n-Om in Kombination mit PP-n-Om und/oder PP-n-m;
- mindestens eine Verbindung der Formel COY-n-Om und mindestens eine Verbindung der Formel CLY-n-Om in Kombination mit PP-n-Om und/oder PP-n-m;
- mindestens eine Verbindung der Formel COY-n-Om und mindestens eine Verbindung der Formel CLY-n-Om in Kombination mit PP-n-Om und PP-n-m;
- mindestens eine Verbindung der Formel COY-n-Om und mindestens eine Verbindung der Formel CEY-n-Om;

Weiterhin bevorzugt sind Mischungen, die folgende Mischungskomponenten enthalten:
- CPY-n-Om, insbesondere CPY-2-O2, CPY-3-O2 und/oder CPY-5-O2, vorzugsweise in Konzentrationen > 5 %, insbesondere 10-30 %, bezogen auf die Gesamtmischung,
- CY-n-Om, vorzugsweise CY-3-O2, CY-3-O4, CY-5-O2 und/oder CY-5-O4, vorzugsweise in Konzentrationen > 5 %, insbesondere 15-50 %, bezogen auf die Gesamtmischung,
   und/oder
- CCY-n-Om, vorzugsweise CCY-4-O2, CCY-3-O2, CCY-3-O3, CCY-3-O1 und/oder CCY-5-O2, vorzugsweise in Konzentrationen > 5 %, insbesondere 10-30 %, bezogen auf die Gesamtmischung,
   und/oder
- CLY-n-Om, vorzugsweise CLY-2-O4, CLY-3-O2 und/oder CLY-3-O3, vorzugsweise in Konzentrationen > 5 %, insbesondere 10-30 %, bezogen auf die Gesamtmischung,
   und/oder
- CK-n-F, vorzugsweise CK-3-F, CK-4-F und/oder CK-5-F, vorzugsweise > 5 %, insbesondere 5-25 %, bezogen auf die Gesamtmischung.

Weiterhin bevorzugt sind erfindungsgemäße Mischungen, die folgende Mischungskonzepte enthalten: (n und m bedeuten jeweils unabhängig voneinander 1-6.)
- CPY-n-Om und CY-n-Om, vorzugsweise in Konzentrationen von 10-80 % bezogen auf die Gesamtmischung,
   und/oder
- CPY-n-Om und CK-n-F, vorzugsweise in Konzentrationen von 10-70 % bezogen auf die Gesamtmischung,
   und/oder
- CPY-n-Om und CLY-n-Om, vorzugsweise in Konzentrationen von 10-80
   % bezogen auf die Gesamtmischung.

Ein weiterer Gegenstand der Erfindung ist eine elektrooptische Anzeige mit einer Aktivmatrix-Adressierung basierend auf dem ECB-, VA-, PS-VA, PALC-, IPS-, PS-IPS-, FFS-, PS-FFS-Effekt, dadurch gekennzeichnet, dass sie als Dielektrikum ein flüssigkristallines Medium nach einem oder mehreren der Ansprüche 1 bis 9 enthält.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität v₂₀ von maximal 30 mm² · s⁻¹ bei 20 °C auf.

Die Werte der Doppelbrechung Δn in der Flüssigkristallmischung liegen in der Regel zwischen 0,07 und 0,16, vorzugsweise zwischen 0,08 und 0,12.

Die erfindungsgemäße Flüssigkristallmischung weist ein Δε von -0,5 bis -8,0, insbesondere von -2,5 bis -6,0 auf, wobei Δε die dielektrische Anisotropie bedeutet. Die Rotationsviskosität γ₁ bei 20 °C ist vorzugsweise ≤ 165 mPa·s, insbesondere ≤ 140 mPa·s.

Die erfindungsgemäßen Flüssigkristallmedien weisen relativ kleine Werte für die Schwellenspannung (V₀) auf. Vorzugsweise sind sie im Bereich von 1,7 V bis 3,0 V, besonders bevorzugt ≤ 2,5 V und ganz besonders bevorzugt ≤ 2,3 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien relativ hohe Werte für die Voltage Holding Ratio in Flüssigkristallzellen auf. In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Meßspannung beträgt typischerweise 0,5 V bis 1,0 V, sie ist jedoch stets niedriger als die kapazitive Schwelle der jeweiligen untersuchten Flüssigkristallmischung.

Alle angegebenen Werte für Temperaturen für die vorliegende Erfindung sind in °C.

Die erfindungsgemäßen Mischungen sind für alle VA-TFT-Anwendungen geeignet, wie z.B. VAN, MVA, (S)-PVA, ASV, PSA (polymer sustained VA) und PS-VA (polymer stabilized VA). Weiterhin sind sie für IPS (In plane switching) und FFS (Fringe field switching) mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formel I, die Verbindungen der Formeln IIA, IIB und/oder IIC, ferner Verbindungen der Formeln III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist. Die Komponente B weist eine ausgeprägte Nematogenität und eine Fließviskosität von nicht mehr als 30 mm²· s⁻¹, vorzugsweise nicht mehr als 25 mm²·s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm²·s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Optional kann die Mischung auch eine Komponente C enthalten, wobei es sich um Verbindungen mit einer dielektrischen Anisotropie von Δε ≥1,5 handelt. Diese sogenannten positiven Verbindungen sind in der Regel in einer Mischung mit negativer dielektrischer Anisotropie in Mengen von ≤ 20 Gew.% bezogen auf die Gesamtmischung enthalten.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen neben einer oder mehreren Verbindungen der Formel I, 4 bis 15, insbesondere 5 bis 12, und besonders bevorzugt < 10, Verbindungen der Formeln IIA, IIB und/oder IIC und optional III.

Neben Verbindungen der Formeln I und den Verbindungen der Formeln IIA, IIB und/oder IIC und optional III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R²⁰-L-G-E-R²¹ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R²⁰ und R²¹ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R²⁰ und R²¹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS- oder FFS- Mischung auch Verbindungen enthalten kann, worin beispielsweise H, N, O, Cl, F durch die entsprechenden Isotope ersetzt sind.

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Die erfindungsgemäßen Mischungen können weiterhin übliche Zusätze oder Additive enthalten, wie z.B. Stabilisatoren, Antioxidantien, UV-Absorber, Nanopartikel, Mikropartikel, etc.

Der Aufbau der erfindungsgemäßen Flüssigkristallanzeigen entspricht der üblichen Geometrie, wie sie z.B. in EP-OS 0 240 379, beschrieben wird. Der Aufbau der erfindungsgemäßen FK-Anzeigen entspricht der für PSA-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Farbfilter-Seite unstrukturiert ist und lediglich die Elektrode auf der TFT-Seite Schlitze aufweist. Besonders geeignete und bevorzugte Elektrodenstrukturen für PS-VA-Anzeigen sind beispielsweise in US 2006/0066793 A1 beschrieben.

Die Kombination erfindungsgemäßen Flüssigkristallmischungen mit den vor- und nachstehend genannten polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die schnelle Einstellung eines besonders niedrigen pretilt-Winkels in PSA-Anzeigen. Insbesondere zeigen die FK-Medien in PSA-Anzeigen im Vergleich zu den Medien aus dem Stand der Technik deutlich verringerte Schaltzeiten, insbesondere auch der Graustufenschaltzeiten.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. Ciba Chemicals, wird vorzugsweise der Mischung enthaltend polymerisierbare Verbindungen in Mengen von 0-1 % zugesetzt. Derartige Mischungen können für sogenannte Polymer Stabilized VA-Modes (PS-VA) oder PSA (Polymer sustained VA), bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten enthält.

Die erfindungsgemäßen Anzeigen für IPS- und PSA-Anzeigen weisen zwei Elektroden, vorzugsweise in Form von transparenten Schichten, auf, wobei diese auf einem oder beiden der Substrate aufgebracht sind, die die FK-Zelle bilden. Dabei ist entweder jeweils eine Elektrode auf je einem der beiden Substrate aufgebracht, wie zum Beispiel in erfindungsgemäßen PSA-VA-, PSA-OCB- oder PSA-TN-Anzeigen, oder beide Elektroden sind auf nur einem der beiden Substrate aufgebracht, während das andere Substrat keine Elektrode aufweist, wie zum Beispiel in erfindungsgemäßen PSA-IPS- oder PSA-FFS-Anzeigen.

Vor- und nachstehend gelten folgende Bedeutungen:
Der Begriff "PSA" wird, falls nicht anders angegeben, stellvertretend für PS-Anzeigen und PSA-Anzeigen verwendet.

Die Begriffe "Tilt" und "Tiltwinkel" beziehen sich auf eine gekippte oder geneigte Orientierung der FK-Moleküle eines flüssigkristallinen Mediums relativ zu den Oberflächen der Zelle in einer FK-Anzeige (hier vorzugsweise einer PS- oder PSA-Anzeige). Der Tiltwinkel bezeichnet dabei den durchschnittlichen Winkel (<90°) zwischen den Moleküllängsachsen der FK-Moleküle (FK-Direktor) und der Oberfläche der planparallelen Trägerplatten, welche die FK-Zelle bilden. Ein niedriger Wert des Tiltwinkels (d.h. eine große Abweichung vom 90°-Winkel) entspricht dabei einem großen Tilt. Eine geeignete Methode zur Messung des Tiltwinkels findet sich in den Beispielen. Soweit nicht anders angegeben, beziehen sich vor- und nachstehend offenbarte Werte des Tiltwinkels auf diese Messmethode.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare(n) Gruppe(n) miteinander verbindet.

Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe P bezeichnet).

Die Begriffe "niedermolekulare Verbindung" und "unpolymerisierbare Verbindung" bezeichnen, üblicherweise monomere, Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist.

Für die Zwecke dieser Erfindung soll der Begriff "flüssigkristallines Medium" ein Medium bezeichnen, welches eine FK-Mischung sowie eine oder mehrere polymerisierbare Verbindungen (wie beispielsweise reaktive Mesogene) enthält. Der Begriff "FK-Mischung" (oder "Host-Mischung") soll eine flüssigkristalline Mischung bezeichnen, welche ausschließlich aus unpolymerisierbaren, niedermolekularen Verbindungen besteht, vorzugsweise aus zwei oder mehr flüssigkristallinen Verbindungen und ggf. weiteren Additiven wie zum Beispiel chiralen Dotierstoffen oder Stabilisatoren. "Unpolymerisierbar" bedeutet, dass die Verbindungen gegenüber einer Polymerisationsreaktion, zumindest unter den zur Polymerisation der polymerisierbaren Verbindungen verwendeten Bedingungen, stabil bzw. unreaktiv sind.

Besonders bevorzugt sind flüssigkristalline Mischungen, die eine nematische Phase, insbesondere eine nematische Phase bei Raumtemperatur, aufweisen.

Bevorzugte PS-Mischungen enthaltend mindestens eine Verbindung der Formel I zeichnen sich insbesondere wie folgt aus:
∘ Die Konzentration der polymerisierbaren Komponente beträgt bezogen auf die Gesamtmischung 0,01 - 5 Gew.%, insbesondere 0,01 - 1 Gew.% und besonders bevorzugt 0.01 - 0.5 Gew.%.
∘ Das flüssigkristalline Medium enthält keine Verbindungen mit einer endständigen Vinyloxygruppe (-O-CH=CH₂).
∘ PS-VA- oder PSA-Anzeige enthaltend eine erfindungsgemäße PS-Mischung besitzt einen pretilt-Winkel vorzugsweise ≤ 85°, besonders bevorzugt ≤ 80° beträgt.

In den erfindungsgemäßen Anzeigen des VA-Typs sind die Moleküle in der Schicht des flüssigkristallinen Mediums im ausgeschalteten Zustand senkrecht zu den Elektrodenflächen (homeotrop) oder gekippt homeotrop (engl. "tilted") orientiert. Bei Anlegen einer elektrischen Spannung an die Elektroden findet eine Umorientierung der FK-Moleküle mit den Moleküllängsachsen parallel zu den Elektrodenflächen statt.

Erfindungsgemäße FK-Mischungen zur Verwendung in Anzeigen des VA-Typs weisen eine negative dielektrische Anisotropie Δε auf, vorzugsweise von -0,5 bis -10, insbesondere von -2,5 bis -7,5 bei 20°C und 1 kHz.

Die Doppelbrechung Δn in erfindungsgemäßen FK-Mischungen zur Verwendung in Anzeigen des VA-Typs liegt vorzugsweise unter 0,16, besonders bevorzugt zwischen 0,06 und 0,14, insbesondere zwischen 0,07 und 0,12.

Die erfindungsgemäßen FK-Mischungen und FK-Medien können auch weitere, dem Fachmann bekannte und in der Literatur beschriebene Zusätze oder Additive enthalten, wie beispielsweise Polymerisationsinitiatoren, Inhibitoren, Stabilisatoren, oberflächenaktive Substanzen oder chirale Dotierstoffe. Diese können polymerisierbar oder unpolymerisierbar sein. Polymerisierbare Additive werden dementsprechend der polymerisierbaren Komponente oder Komponente A) zugerechnet. Unpolymerisierbare Additive werden dementsprechend der FK-Mischung (Hostmischung) bzw. der unpolymerisierbaren Komponente oder Komponente B) zugerechnet.

Die FK-Mischungen und FK-Medien können beispielsweise einen oder mehrere chirale Dotierstoffe enthalten, vorzugsweise ausgewählt aus der Gruppe bestehend aus Verbindungen der nachfolgenden Tabelle B.

Ferner können den FK-Medien 0 bis 15%, vorzugsweise 0 bis 10%, eines oder mehrere Additive ausgewählt aus der Gruppe enthaltend pleochroitische Farbstoffe, Nanopartikel, Leitsalze, Komplexsalze und Substanzen zur Veränderung der dielektrischen Anisotropie, der Viskosität und/oder der Orientierung der nematischen Phasen zugesetzt werden. Geeignete und bevorzugte Leitsalze sind beispielsweise Ethyldimethyldodecyl-ammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258, 1973). Derartige Substanzen sind z.B. in DE-A-22 09 127, DE-A-22 40 864, DE-A-23 21 632, DE-A-23 38 281, DE-A-24 50 088, DE-A-26 37 430 und DE-A-28 53 728 beschrieben.

Zur Herstellung von PSA-Anzeigen werden die polymerisierbaren Verbindungen im flüssigkristallinen Medium zwischen den Substraten der FK-Anzeige unter Anlegen einer Spannung durch in-situ-Polymerisation polymerisiert oder vernetzt (falls eine Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5%, besonders bevorzugt 0,001 bis 1 %. Die Polymerisation kann aber auch ohne Zusatz eines Initiators erfolgen. In einer weiteren bevorzugten Ausführungsform enthält das flüssigkristalline Medium keinen Polymerisationsinitiator.

Die polymerisierbare Komponente A) oder das flüssigkristalline Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente A), vorzugsweise 10 - 10000 ppm, besonders bevorzugt 50 - 500 ppm.

Die polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des flüssigkristallinen Mediums durch mögliche Restmengen des Initiators oder dessen Abbauprodukte.

Die erfindungsgemäßen FK-Medien zur Verwendung in PSA-Anzeigen enthalten vorzugsweise ≤ 5%, besonders bevorzugt ≤ 1%, ganz besonders bevorzugt ≤ 0,5%, und vorzugsweise ≥ 0,01%, besonders bevorzugt ≥ 0,1%, an polymerisierbaren Verbindungen, insbesondere polymerisierbaren Verbindungen der vor- und nachstehend genannten Formeln.

Besonders bevorzugt sind FK-Medien enthaltend eine, zwei oder drei polymerisierbare Verbindungen.

Ferner bevorzugt sind achirale polymerisierbare Verbindungen, sowie FK-Medien worin die Verbindungen der Komponente A) und/oder B) ausschließlich aus der Gruppe bestehend aus achiralen Verbindungen ausgewählt sind.

Ferner bevorzugt sind FK-Medien, worin die polymerisierbare Komponente bzw. Komponente A) eine oder mehrere polymerisierbare Verbindungen mit einer polymerisierbaren Gruppe (monoreaktiv) und eine oder mehrere polymerisierbare Verbindungen mit zwei oder mehr, vorzugsweise zwei polymerisierbaren Gruppen (di- oder multireaktiv) enthält.

Ferner bevorzugt sind PSA-Anzeigen und FK-Medien, worin die polymerisierbare Komponente bzw. Komponente A) ausschließlich polymerisierbare Verbindungen mit zwei polymerisierbaren Gruppen (direaktiv) enthält.

Die polymerisierbaren Verbindungen können einzeln den FK-Medien zugesetzt werden, es können aber auch Mischungen enthaltend zwei oder mehr erfindungsgemäße polymerisierbare Verbindungen verwendet werden. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen können mesogen oder nicht-mesogen sein. Besonders bevorzugt sind polymerisierbare mesogene Verbindungen, auch als reaktive Mesogene (RMs) bezeichnet.

Geeignete und bevorzugte RMs für die Verwendung in erfindungsgemäßen FK-Medien und PSA-Anzeigen sind nachfolgend beschrieben.

In einer bevorzugten Ausführungsform der Erfindung sind die polymerisierbaren Verbindungen ausgewählt aus den Verbindungen der Formel I*

R^{a}-A¹-(Z¹-A²)ₘ-R^{b} I*

worin die einzelnen Reste folgende Bedeutung haben:
- R^{a} und R^{b}: jeweils unabhängig voneinander P, P-Sp-, H, Halogen, SF₅, NO₂, eine Kohlenstoffgruppe oder Kohlenwasserstoffgruppe, wobei mindestens einer der Reste R^{a} und R^{b} eine Gruppe P oder P-Sp- bedeutet oder enthält,
- P: bei jedem Auftreten gleich oder verschieden eine polymerisierbare Gruppe,
- Sp: bei jedem Auftreten gleich oder verschieden eine Abstandsgruppe oder eine Einfachbindung,
- A¹ und A²: jeweils unabhängig voneinander eine aromatische, heteroaromatische, alicyclische oder heterocyclische Gruppe, vorzugsweise mit 4 bis 25 Ringatomen, welche auch anellierte Ringe enthalten kann, und welche auch durch L ein- oder mehrfach substituiert sein kann,
- L: P-Sp-, H, OH, CH₂OH, Halogen, SF₅, NO₂, eine Kohlenstoffgruppe oder Kohlenwasserstoffgruppe,
- Z¹: bei jedem Auftreten gleich oder verschieden -O-, -S-, -CO-,-CO-O-, -OCO-, -O-CO-O-, -OCH₂-, -CH₂O-, -SCH₂-, -CH₂S-,-CF₂O-, -OCF₂-, -CF₂S-, -SCF₂-, -(CH₂)ₙ₁-, -CF₂CH₂-,-CH₂CF₂-, -(CF₂)ₙ₁-, -CH=CH-, -CF=CF-, -C≡C-, -CH=CH-COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- m: 0, 1, 2, 3 oder 4,
- n1: 1, 2, 3 oder 4.

Besonders bevorzugte Verbindungen der Formel I* sind solche, worin
- R^{a} und R^{b}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei mindestens einer der Reste R^{a} und R^{b} eine Gruppe P oder P-Sp- bedeutet oder enthält,
- A¹ und A²: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, 2-Oxo-2H-chromen-3,6-diyl, 2-Oxo-2H-Chromen-3,7-diyl, 4-Oxo-4H-chromen-2,6-diyl, 4-Oxo-4H-chromen-3,6-diyl, 4-Oxo-4H-chromen-3,7-diyl (Trivialname Cumarin bzw. Flavon), wobei in diesen Gruppen auch eine oder mehrere CH-Gruppen durch N ersetzt sein können, Cyclohexan-1,4-diyl, worin auch eine oder mehrere nichtbenachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,L P, P-Sp-, OH, CH₂OH, F, Cl, Br, I, -CN, -NO₂ , -NCO, -NCS, -OCN, -SCN, -C(=O)N(R^{x})₂, -C(=O)Y¹,-C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Weitere bevorzugte Verbindungen der Formel I* sind solche ausgewählt aus einer oder mehreren der folgenden Untergruppen:
- m ist 2 or 3,
- m ist 2,
- R^{a} und R^{b} bedeuten gleiche oder verschiedene Gruppen P-Sp-,
- R^{a} und R^{b} bedeuten gleiche oder verschiedene Gruppen P-Sp-, worin ein oder mehrere Gruppen Sp eine Einfachbindung bedeuten,
- m ist 2 oder 3 und R^{a} und R^{b} bedeuten gleiche Gruppen P-Sp-,
- einer der Reste R^{a} und R^{b} bedeutet P-Sp- und der andere bedeutet eine unpolymerisierbare Gruppe, vorzugsweise geradkettiges oder verzweigtes Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-, -O-CO- oder -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können,
- eine oder mehrere Gruppen Sp bedeuten eine Einfachbindung,
- eine oder mehrere Gruppen Sp bedeuten -(CH₂)ₚ₁-, -(CH₂)ₚ₁-O-, -(CH₂)ₚ₁-OCO- oder -(CH₂)ₚ₁-OCOO-, worin p1 eine ganze Zahl von 1 bis 12 und r1 eine ganze Zahl von 1 bis 8 bedeuten,
- L bedeutet und/oder enthält keine polymerisierbare Gruppe,
- A¹ und A² bedeuten unabhängig voneinander 1,4-Phenylen oder Naphthalin-2,6-diyl, wobei in diesen Gruppen auch eine oder mehrere CH-Gruppen durch N ersetzt sein können, und welche auch ein-oder mehrfach fluoriert sein können,
- Z¹ ist ausgewählt aus der Gruppe bestehend aus -O-, -CO-O-, -OCO-, -OCH₂-, -CH₂O-, -CF₂O-, -OCF₂-, -CH₂CH₂-, -CH=CH-, -CF=CF-, -CH=CF-, -CF=CH-, -C≡C- und einer Einfachbindung,
- L ist eine unpolymerisierbare Gruppe, vorzugsweise ausgewählt aus der Gruppe bestehend aus F, Cl, -CN, geradkettigem und verzweigtem Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-, -O-CO- oder -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können.

Besonders bevorzugte Verbindungen der Formel I* sind aus folgenden Unterformeln ausgewählt: 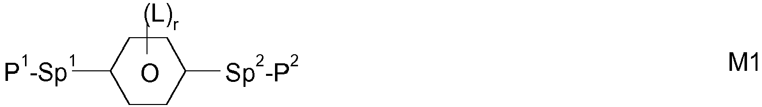 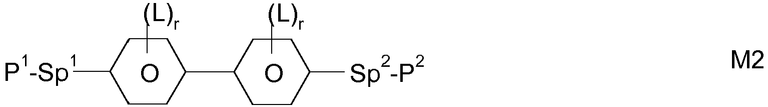 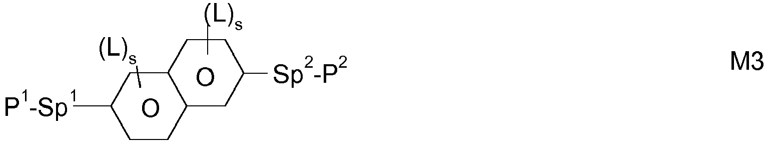 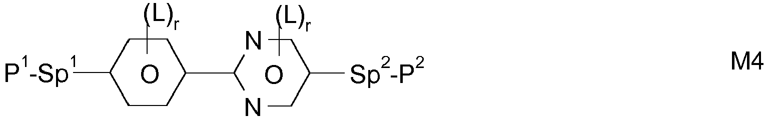 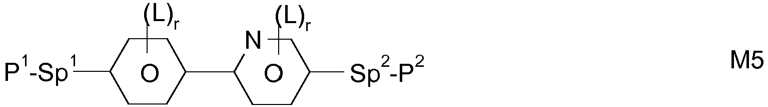 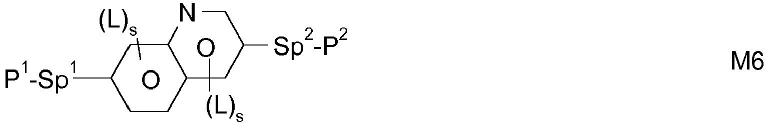 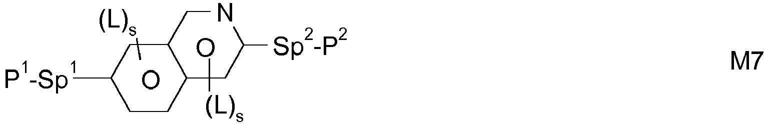 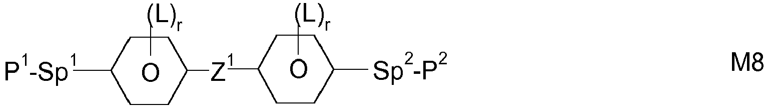 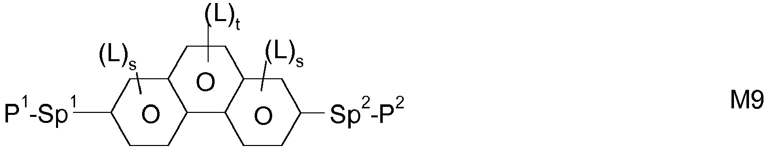 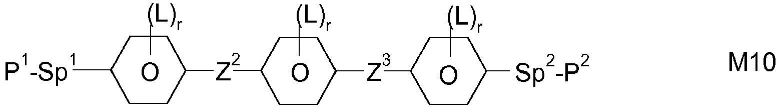 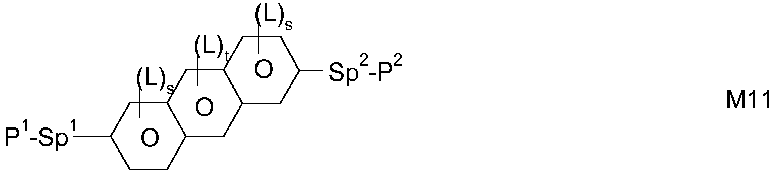 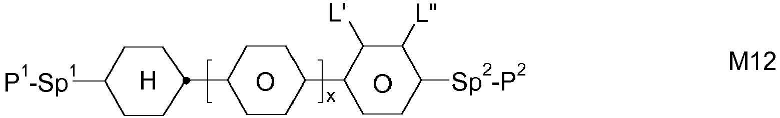 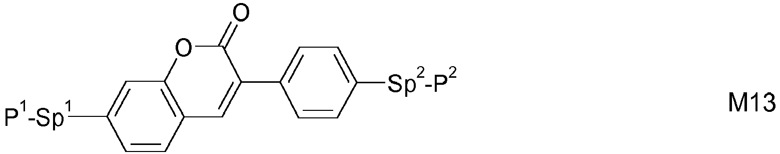 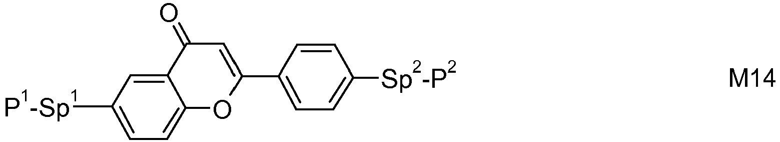 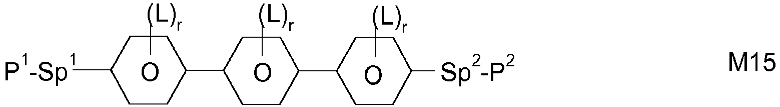 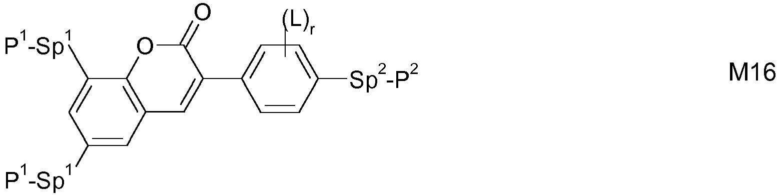 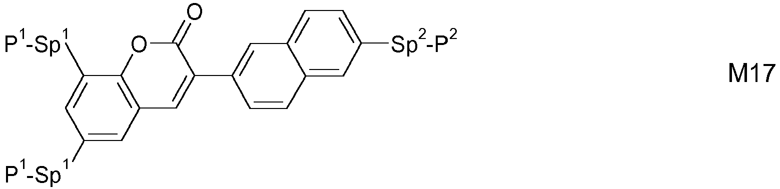 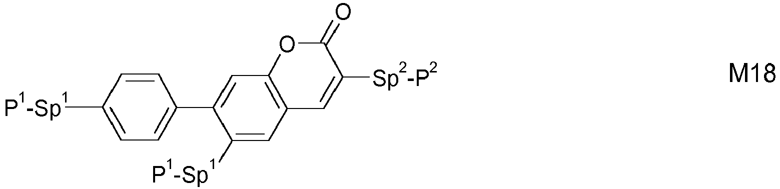 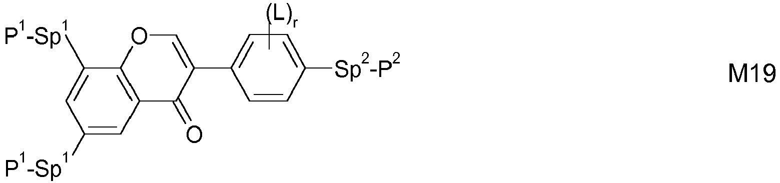 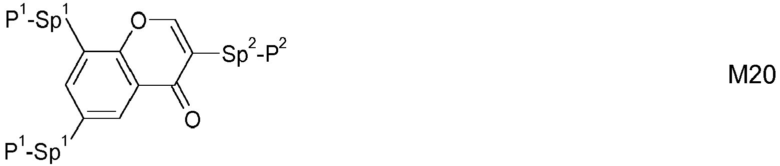 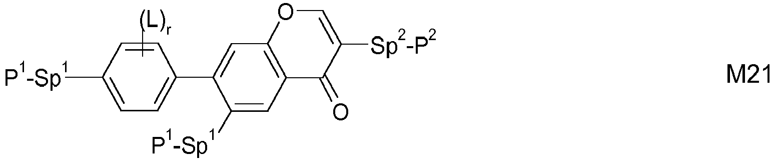 worin
- P¹ und P²: eine der für P angegebenen Bedeutungen besitzen und vorzugsweise Acrylat, Methacrylat, Fluoacrylat, Oxetan, Vinyloxy oder Epoxy bedeuten,
- Sp¹ und Sp²: jeweils unabhängig voneinander eine der für Sp angegebenen Bedeutungen besitzen oder eine Einfachbindung bedeuten, wobei einer oder mehrere der Reste P¹-Sp¹- und P²-Sp² auch R^{aa} bedeuten können, wobei mindestens einer der Reste P¹-Sp¹- und P²-Sp² von R^{aa} verschieden ist,
- R^{aa}: F, Cl, -CN, geradkettiges oder verzweigtes Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-, -O-CO- oder -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können, bedeutet,
- R⁰, R⁰⁰: die in Formel I* angegebene Bedeutung besitzen,
- Z¹: -O-, -CO-, -C(R^{y}R^{z})- oder -CF₂CF₂- bedeutet,
- Z² und Z³: jeweils unabhängig voneinander -CO-O-, -O-CO-, -CH₂O-, -OCH₂-, -CF₂O-, -OCF₂- oder -(CH₂)ₙ- bedeuten, worin n 2, 3 oder 4 ist,
- L: die oben für Formel I angegebene Bedeutung besitzt,
- L' und L": jeweils unabhängig voneinander H, F oder Cl bedeuten,
- r: 0, 1, 2, 3 oder 4 bedeutet,
- s: 0, 1, 2 oder 3 bedeutet,
- t: 0, 1 oder 2 bedeutet,
- x: 0 oder 1, und
- R^{y} und R^{z}: jeweils unabhängig voneinander H, CH₃ oder CF₃ bedeuten.

Weitere bevorzugte Verbindungen der Formel 1* sind aus folgenden Unterformeln ausgewählt 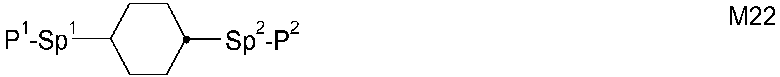 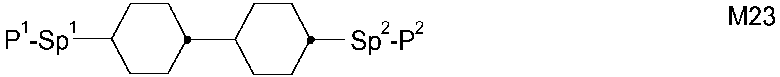 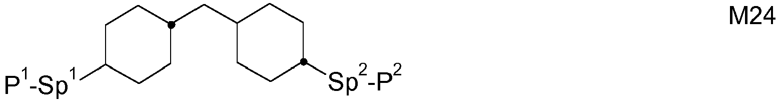 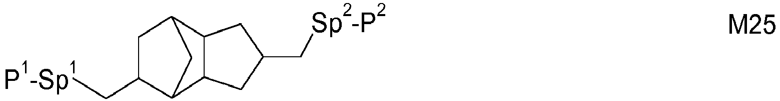 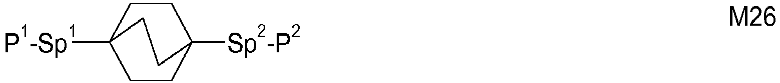 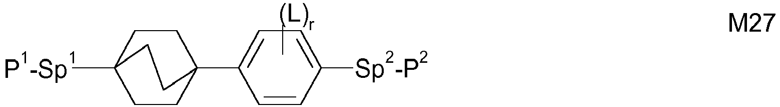 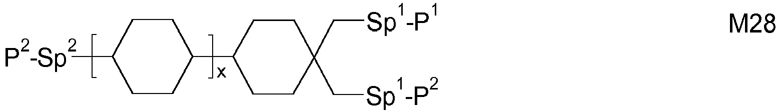 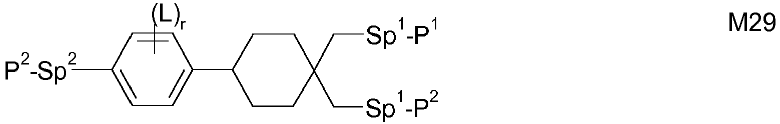 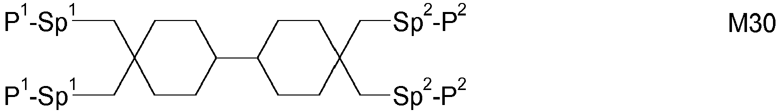 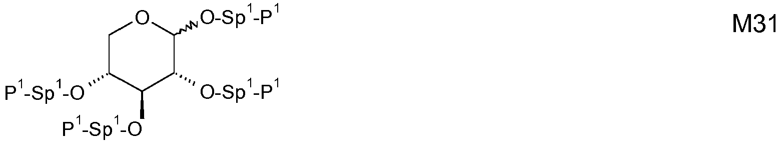 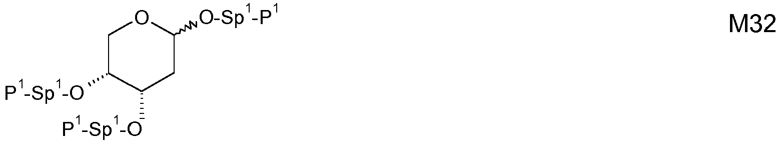 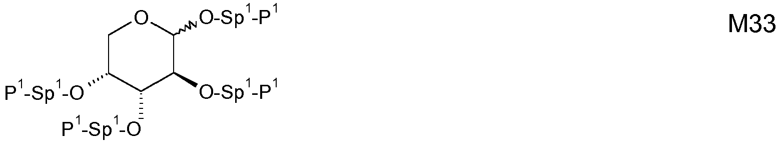 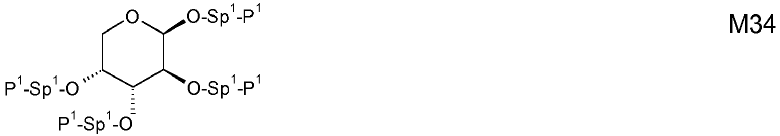 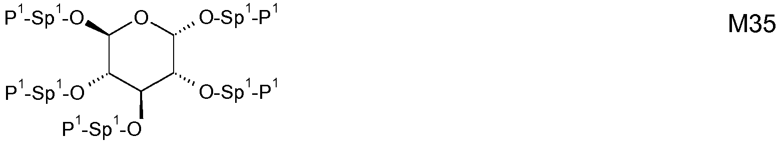 worin die einzelnen Reste die in Formel M1-M21 angegebene Bedeutung besitzen.

In einer weiteren bevorzugten Ausführungsform der Erfindung sind die polymerisierbaren Verbindungen chirale oder optisch aktive Verbindungen ausgewählt aus Formel II* (chirale RMs):

(R*-(A¹-Z¹)ₘ)ₖ-Q II*

worin A¹, Z¹ und m bei jedem Auftreten gleich oder verschieden eine der in Formel I* angegebenen Bedeutungen besitzen,
- R*: bei jedem Auftreten gleich oder verschieden eine der für R^{a} in Formel I* angegebenen Bedeutungen besitzt, wobei R* chiral oder achiral sein kann,
- Q: eine k-valente chirale Gruppe bedeutet, welche optional ein- oder mehrfach mit L wie in Formel I* definiert substituiert ist,
- k: 1, 2, 3, 4, 5 oder 6 ist,
wobei die Verbindungen mindestens einen Rest R* oder L enthalten, der eine Gruppe P oder P-Sp- wie oben definiert bedeutet oder enthält. Besonders bevorzugte Verbindungen der Formel II* enthalten eine monovalente Gruppe Q der Formel III* 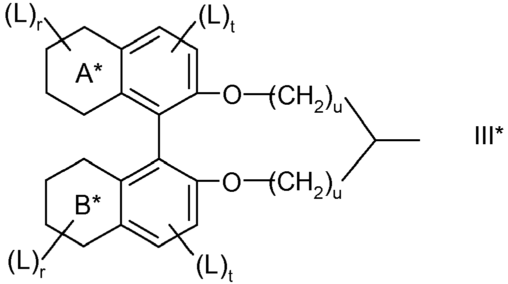 worin L und r bei jedem Auftreten gleich oder verschieden die oben angegebene Bedeutung besitzen,
- A* und B*: jeweils unabhängig voneinander anelliertes Benzol, Cyclohexan oder Cyclohexen,
- t: bei jedem Auftreten gleich oder verschieden 0, 1 oder 2, und
- u: bei jedem Auftreten gleich oder verschieden 0, 1 oder 2
bedeutet. Besonders bevorzugt sind Gruppen der Formel III*, worin u 1 bedeutet.

Weitere bevorzugte Verbindungen der Formel II* enthalten eine monovalente Gruppe Q oder eine oder mehrere Gruppen R* der Formel IV* 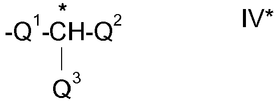 worin
- Q¹: Alkylen oder Alkylenoxy mit 1 bis 9 C-Atomen oder eine Einfachbindung,
- Q²: optional fluoriertes Alkyl oder Alkoxy mit 1 bis 10 C-Atomen, worin auch eine oder zwei nicht benachbarte CH₂-Gruppen durch -O-, -S-, -CH=CH-, -CO-, -OCO-, -COO-, -O-COO-, -S-CO-, -CO-S- oder-C≡C- so ersetzt sein können, dass O- und/oder S-Atome nicht direkt miteinander verknüpft sind,
- Q³: F, Cl, CN oder Alkyl oder Alkoxy wie für Q² definiert, aber von Q² verschieden
bedeuten.

Bevorzugte Gruppen der Formel IV* sind beispielsweise 2-butyl (=1-methylpropyl), 2-methylbutyl, 2-methylpentyl, 3-methylpentyl, 2-ethylhexyl, 2-propylpentyl, insbesondere 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy.

Weitere bevorzugte Verbindungen der Formel II* enthalten eine bivalente Gruppe Q der Formel V* 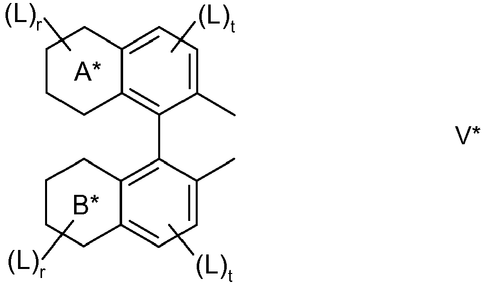 worin L, r, t, A* und B* die oben angegebene Bedeutung besitzen.

Weitere bevorzugte Verbindungen der Formel II* enthalten eine bivalente Gruppe Q ausgewählt aus folgenden Formeln 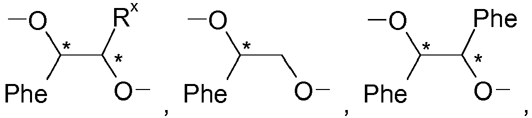 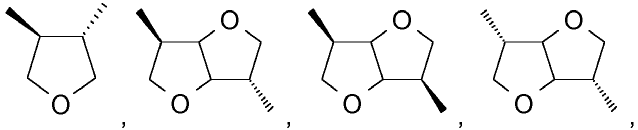 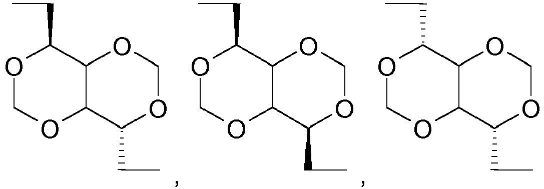 worin Phe Phenyl bedeutet, welches optional durch L ein- oder mehrfach substituiert ist, und R^{x} F oder optional fluoriertes Alkyl mit 1 bis 4 C-Atomen bedeutet.

Geeignete chirale RMs sind beispielsweise in GB 2 314 839 A, US 6,511,719, US 7,223,450, WO 02/34739 A1, US 7,041,345, US 7,060,331 oder US 7,318,950 beschrieben. Geeignete RMs mit Binaphthylgruppen sind beispielsweise in US 6,818,261, US 6,916,940, US 7,318,950 und US 7,223,450 beschrieben.

Die vor- und nachstehend gezeigten chiralen Strukturelemente, sowie polymerisierbare und polymerisierte Verbindungen enthaltend solche chiralen Strukturelemente, können in optisch aktiver Form, also als reine Enantiomere oder als beliebige Mischung beider Enantiomere, oder auch als Racemat eingesetzt werden. Bevorzugt ist die Verwendung von Racematen. Die Verwendung der Racemate besitzt gegenüber der Verwendung von reinen Enantiomeren einige Vorteile, wie beispielsweise ein deutlich geringerer Syntheseaufwand und geringere Materialkosten.

Vorzugsweise sind die Verbindungen der Formel II* im FK-Medium als Racemat enthalten.

Besonders bevorzugte Verbindungen der Formel II* sind aus folgenden Unterformeln ausgewählt 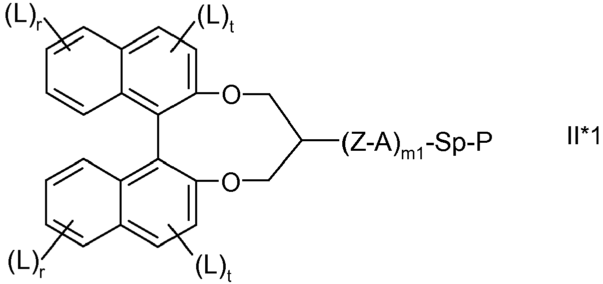 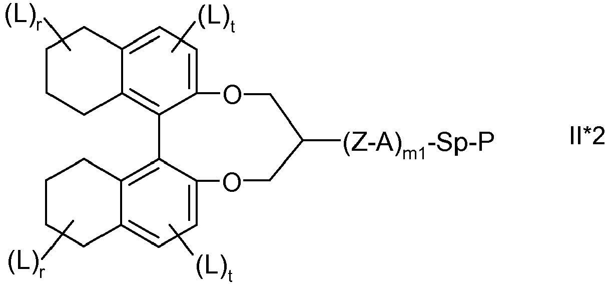 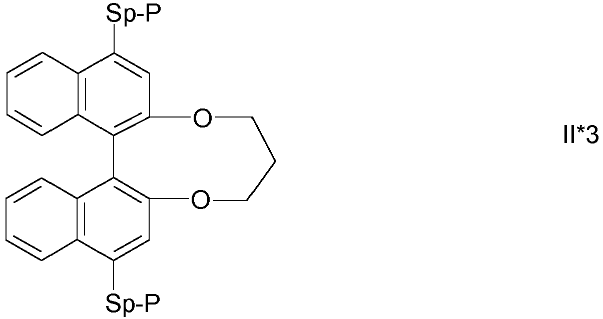 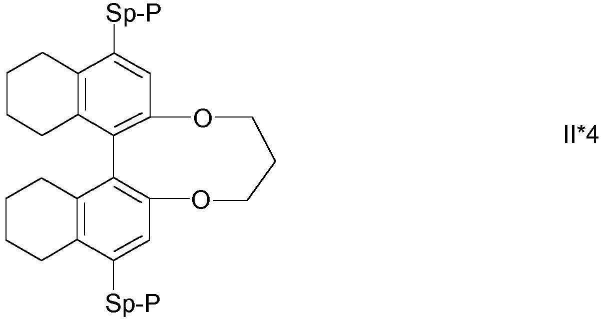 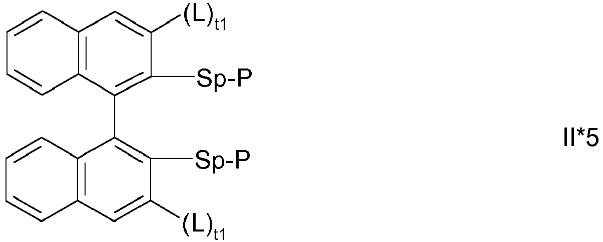 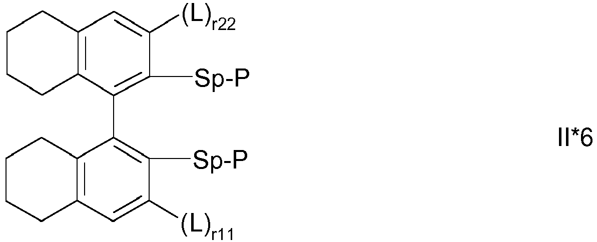 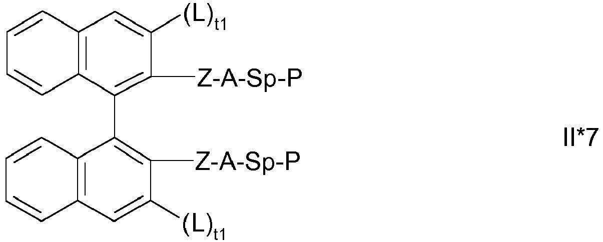 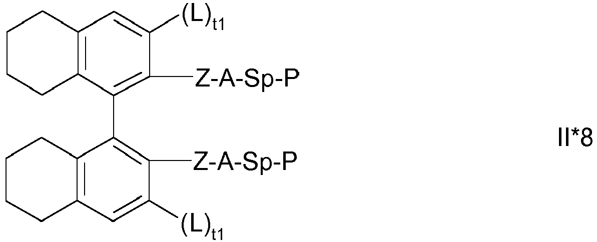 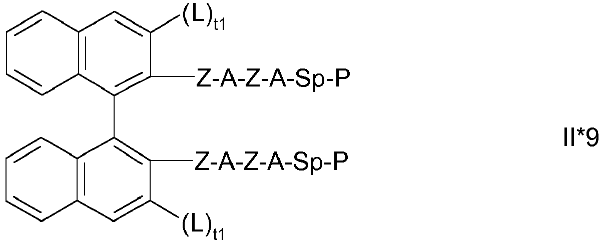 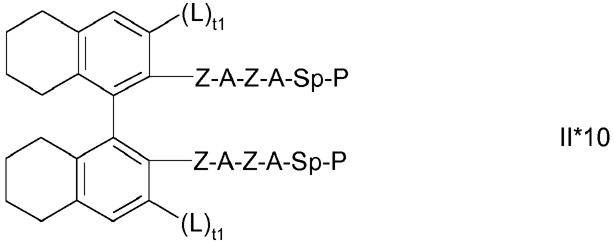 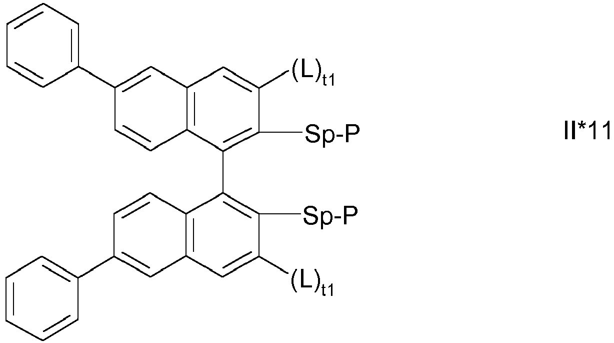 worin L, P, Sp, m, r und t die oben angegebene Bedeutung haben, Z bzw. A bei jedem Auftreten gleich oder verschieden eine der für Z¹ bzw. A¹ angegebenen Bedeutungen haben, und t1 bei jedem Auftreten gleich oder verschieden 0 oder 1 bedeutet.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂-C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch - C(R^{x})=C(R^{x})-, -C≡C-, -N(R^{x})-, -O-, -S-, -CO-, -CO-O-, -O-CO-, -O-CO-O- so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Aminogruppen sind beispielsweise Dimethylamino, Methylamino, Methylphenylamino, Phenylamino, etc.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1,1':3',1"]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nichtbenachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, vor- und nachstehend auch als "L" bezeichnet, sind beispielsweise F, Cl, Br, I, -CN, -NO₂, -NCO, -NCS, -OCN, -SCN,-C(=O)N(R^{x})2, -C(=O)Y¹, -C(=O)R^{x}, -N(R^{x})₂, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, -CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 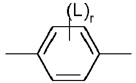 ist vorzugsweise 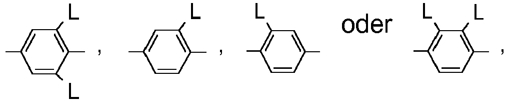 worin L eine der oben angegebenen Bedeutungen hat.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P sind ausgewählt aus CH₂=CW¹-COO-, CH₂=CW¹-CO-, 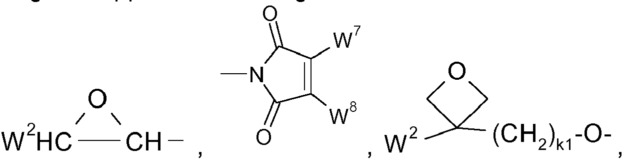 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einen oder mehreren, von P-Sp- verschiedenen, Resten L wie oben definiert substiuiert ist, k₁, k₂ und k₃ jeweils unabhängig voneinander 0 oder 1 bedeuten, k₃ vorzugsweise 1 bedeutet.

Besonders bevorzugte Gruppen P sind CH₂=CW¹-COO-, insbesondere CH₂=CH-COO-, CH₂=C(CH₃)-COO- und CH₂=CF-COO-, ferner CH₂=CH-O-, (CH₂=CH)₂CH-OCO-, (CH₂=CH)₂CH-O-, 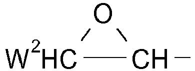 und

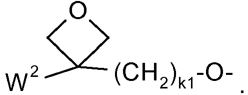

Ganz besonders bevorzugte Gruppen P sind Vinyloxy, Acrylat, Methacrylat, Fluoracrylat, Chloracrylat, Oxetan und Epoxy, insbesondere Acrylat und Methacrylat.

Bevorzugte Abstandsgruppen Sp sind ausgewählt aus der Formel Sp'-X', so dass der Rest P-Sp- der Formel P-Sp'-X'- entspricht, wobei
Sp' Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-,-NH-, -NR⁰-, -SiR⁰⁰R⁰⁰⁰-, -CO-, -COO-, -OCO-, -OCO-O-, -S-CO-,-CO-S-, -NR⁰⁰-CO-O-, -O-CO-NR⁰⁰-, -NR⁰⁰-CO-NR⁰⁰-, -CH=CH- oder-C≡C- ersetzt sein können, dass O- und/oder S-Atome nicht direkt miteinander verknüpft sind,
X' -O-, -S-, -CO-, -COO-, -OCO-, -O-COO-, -CO-NR⁰⁰-, -NR⁰⁰-CO-,-NR⁰⁰-CO-NR⁰⁰-, -OCH₂-, -CH₂O-, -SCH₂-, -CH₂S-, -CF₂O-, -OCF₂-,-CF₂S-, -SCF₂-, -CF₂CH₂-, -CH₂CF₂-, -CF₂CF₂-, -CH=N-, -N=CH-,-N=N-, -CH=CR⁰-, -CY²=CY³-, -C≡C-, -CH=CH-COO-, -OCO-CH=CH- oder eine Einfachbindung bedeutet,
R⁰⁰ und R⁰⁰⁰ jeweils unabhängig voneinander H oder Alkyl mit 1 bis 12 C-Atomen bedeuten, und
Y² und Y³ jeweils unabhängig voneinander H, F, Cl oder CN bedeuten.
X' ist vorzugsweise -O-, -S -CO-, -COO-, -OCO-, -O-COO-, -CO-NR⁰-,-NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -X'-Sp'- sind -(CH₂)ₚ₁-, -O-(CH₂)ₚ₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

In einer weiteren bevorzugten Ausführungsform der Erfindung bedeutet P-Sp- einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste P-Sp- ausgewählt aus folgenden Formeln

-X-alkyl-CHP¹-CH₂-CH₂P² I*a

-X-alkyl-C(CH₂P¹)(CH₂P²)-CH₂P³ I*b

-X-alkyl-CHP¹CHP²-CH₂P³ I*c

-X-alkyl-C(CH₂P¹)(CH₂P²)-CₐₐH₂ₐₐ₊₁ I*d

-X-alkyl-CHP¹-CH₂P² I*e

-X-alkyl-CHP¹P² I*f

-X-alkyl-CP¹P²-CₐₐH₂ₐₐ₊₁ I*g

-X-alkyl-C(CH₂P¹)(CH₂P²)-CH₂OCH₂-C(CH₂P³)(CH₂P⁴)CH₂P⁵ I*h

-X-alkyl-CH((CH₂)ₐₐP¹)((CH₂)_{bb}P²) I*i

-X-alkyl-CHP¹CHP²-CₐₐH₂ₐₐ₊₁ I*k

-X'-alkyl-C(CH₃)(CH₂P¹)(CH₂P²) I*m

worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-,-O-CO-, -O-CO-O- so ersetzt sein können, dass O- und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
- aa und bb: jeweils unabhängig voneinander 0, 1, 2, 3, 4, 5 oder 6 bedeuten,
- X: eine der für X' angegebenen Bedeutungen besitzt, und

- P¹⁻⁵: jeweils unabhängig voneinander eine der für P angegebenen Bedeutungen besitzen.

Die polymerisierbaren Verbindungen und RMs können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Weitere Syntheseverfahren finden sich in den vor- und nachstehend zitierten Dokumenten. Im einfachsten Fall erfolgt die Synthese solcher RMs zum Beispiel durch Veresterung oder Veretherung von 2,6-Dihydroxynaphthalin oder 4,4'-Dihydroxybiphenyl mit entsprechenden Säuren, Säurederivaten, oder halogenierten Verbindungen enthaltend eine Gruppe P, wie zum Beispiel (Meth)acrylsäurechlorid oder (Meth)acrylsäure, in Gegenwart von einem wasserentziehenden Reagens wie zum Beispiel DCC (Dicyclohexylcarbodiimid).

Die erfindungsgemäßen FK-Mischungen und FK-Medien eignen sich prinzipiell für jede Art von PS- oder PSA-Anzeige, insbesondere solche beruhend auf FK-Medien mit negativer dielektrischer Anisotropie, besonders bevorzugt für PSA-VA-, PSA-IPS- oder PS-FFS-Anzeigen. Der Fachmann kann jedoch, ohne erfinderisches Zutun, geeignete erfindungsgemäße FK-Mischungen und FK-Medien auch in anderen Anzeigen des PS- oder PSA-Typs einsetzen, die sich von den oben genannten Anzeigen beispielsweise durch ihren prinzipiellen Aufbau oder durch die Art, Anordnung oder Struktur der einzelnen verwendeten Komponenten, wie beispielsweise der Substrate, Orientierungsschichten, Elektroden, Ansteuerelemente, Hintergrundbeleuchtung, Polarisatoren, Farbfilter, ggf. vorhandenen Kompensationsfolien etc., unterscheiden.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

In der gesamten Patentanmeldung werden 1,4-Cyclohexylenringe und 1,4-Phenylenringe wie folgt dargestellt:

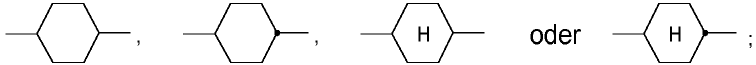

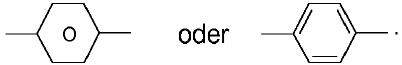

Vorzugsweise enthalten die erfindungsgemäßen Mischungen neben den Verbindungen der Formeln IIA und/oder IIB und/oder IIC, einer oder mehrerer Verbindungen der Formel I eine oder mehrere Verbindungen der nachfolgend genannten Verbindungen aus der Tabelle A.

**Tabelle A**

| |
|---|
| Folgende Abkürzungen werden verwendet: |
| (n, m, m', z: jeweils unabhängig voneinander 1, 2, 3, 4, 5 oder 6; (O)CₘH₂ₘ₊₁ bedeutet OCₘH₂ₘ₊₁ oder CₘH₂ₘ₊₁) |
| 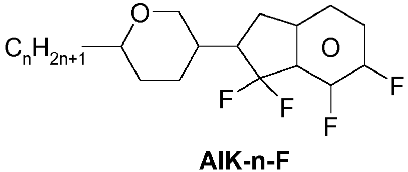 |
| 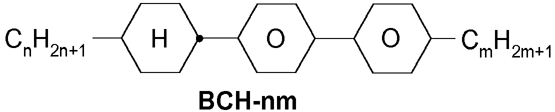 |
| 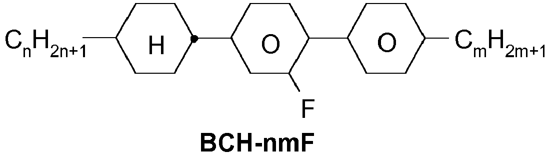 |
| 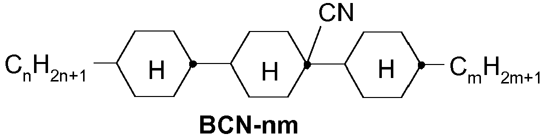 |
| 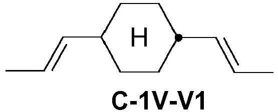 |
| 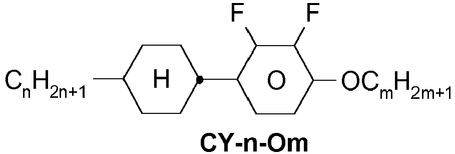 |
| 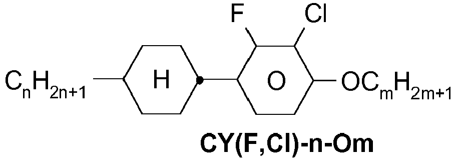 |
| 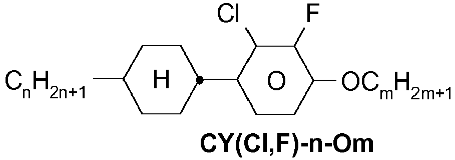 |
| 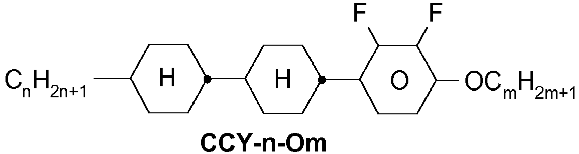 |
| 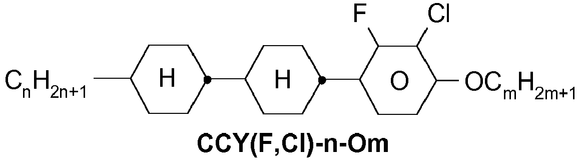 |
| 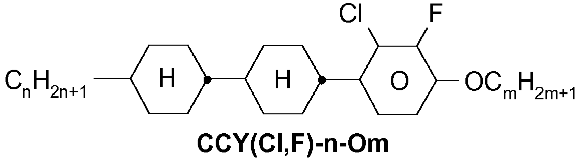 |
| 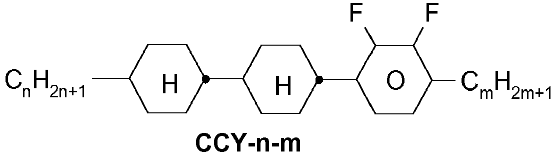 |
| 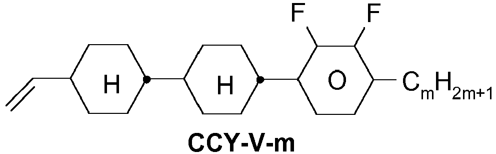 |
| 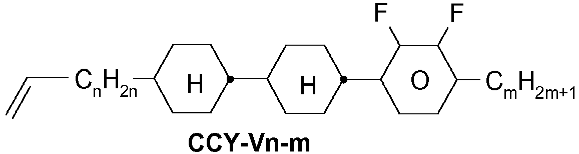 |
| 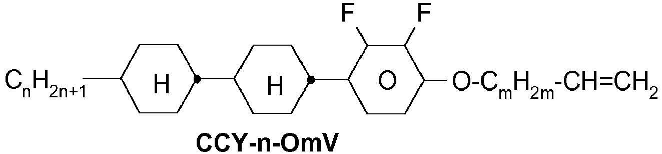 |
| 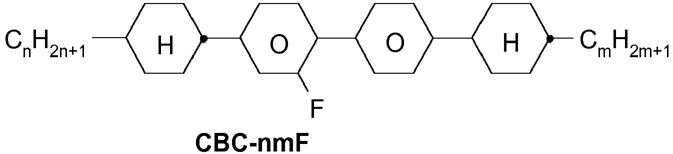 |
| 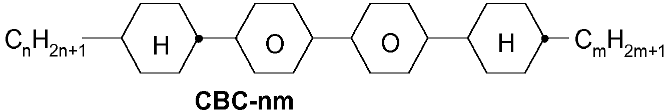 |
| 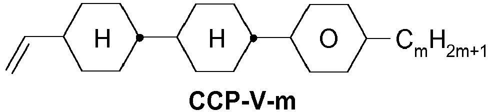 |
| 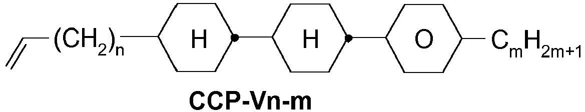 |
| 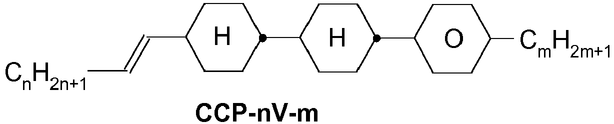 |
| 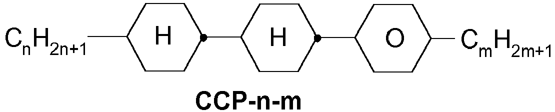 |
| 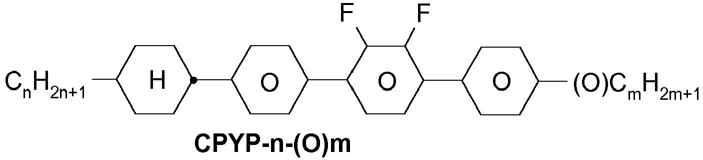 |
| 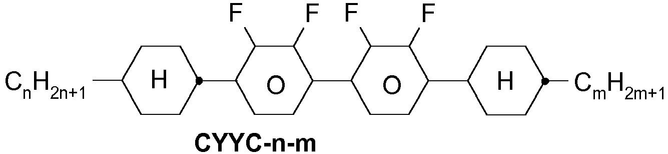 |
| 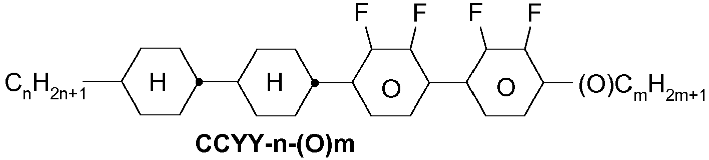 |
| 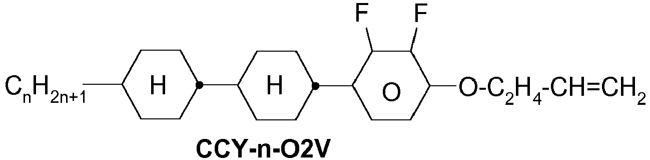 |
| 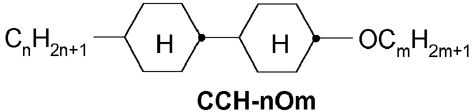 |
| 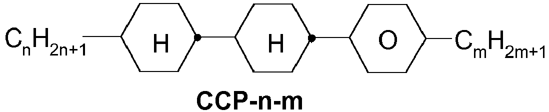 |
| 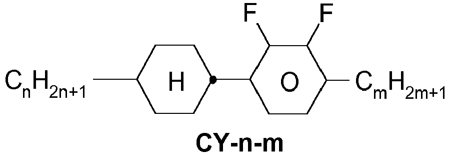 |
| 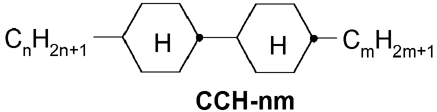 |
| 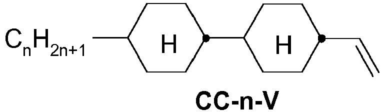 |
| 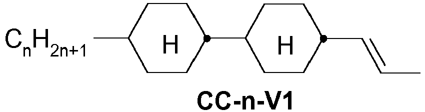 |
| 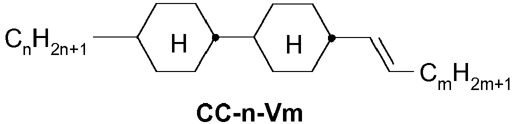 |
| 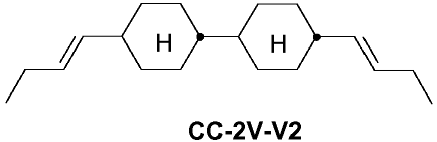 |
| 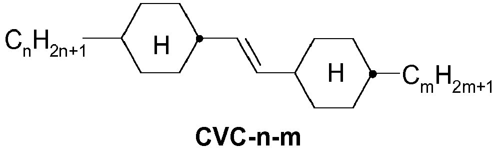 |
| 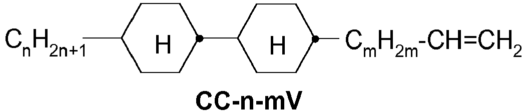 |
| 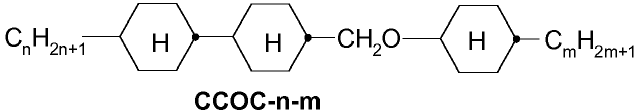 |
| 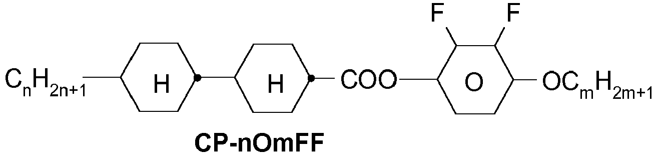 |
| 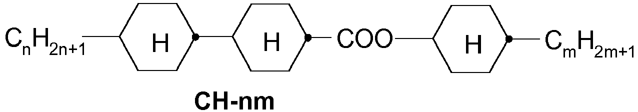 |
| 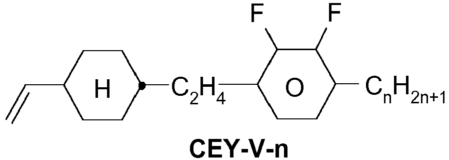 |
| 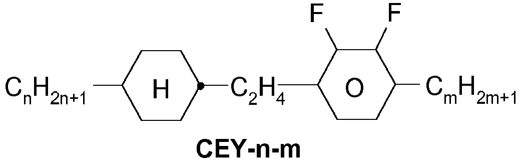 |
| 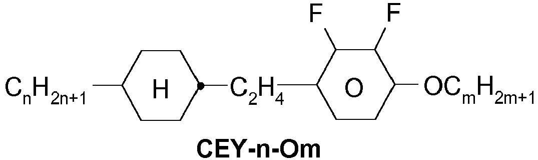 |
| 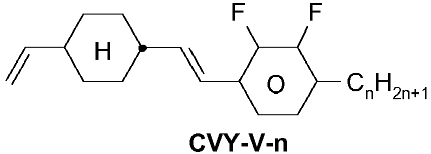 |
| 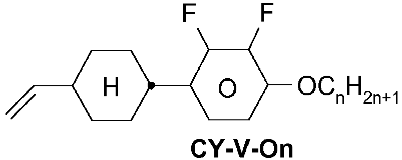 |
| 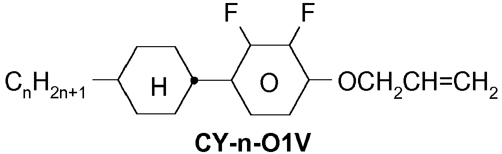 |
| 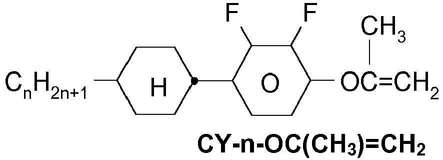 |
| 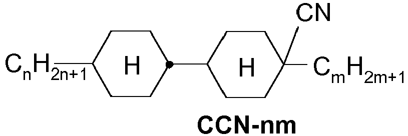 |
| 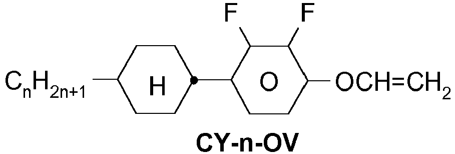 |
| 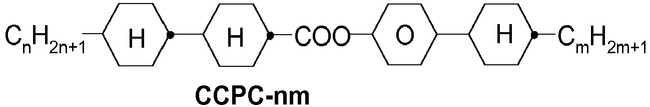 |
| 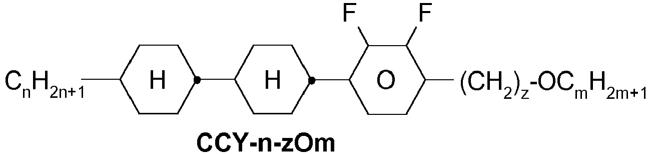 |
| 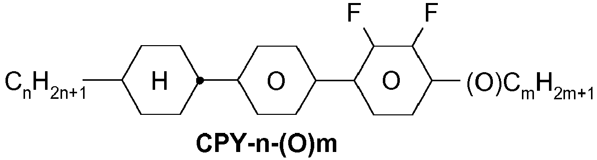 |
| 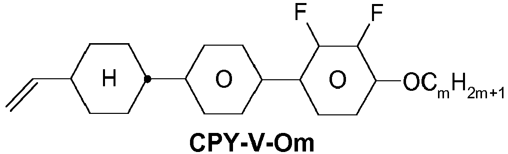 |
| 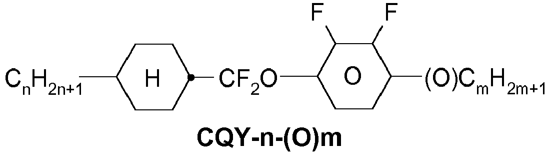 |
| 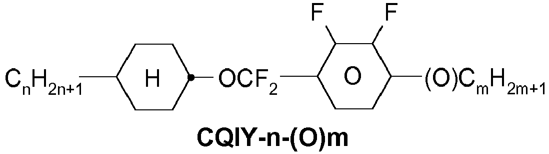 |
| 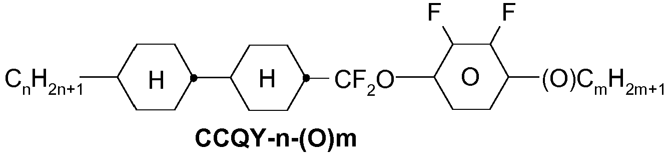 |
| 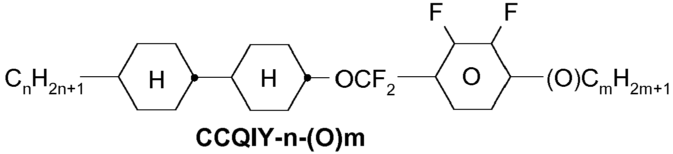 |
| 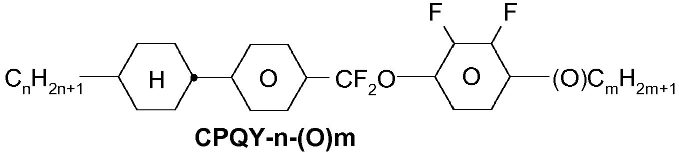 |
| 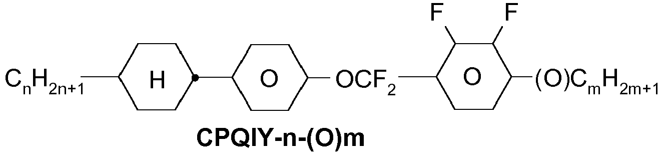 |
| 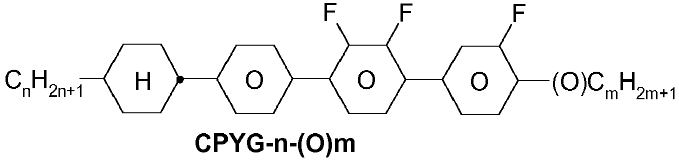 |
| 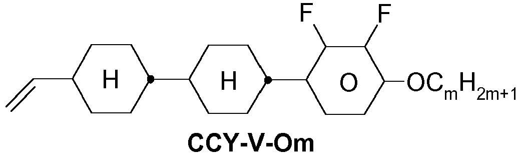 |
| 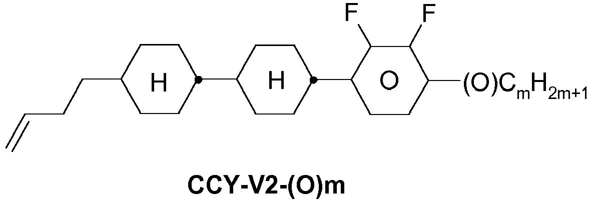 |
| 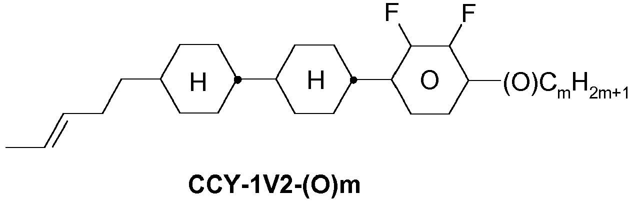 |
| 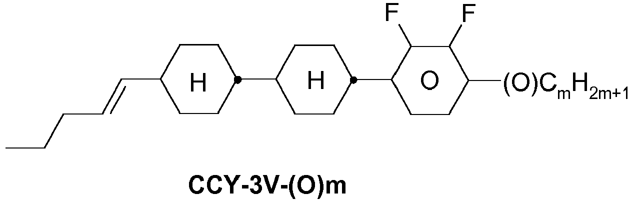 |
| 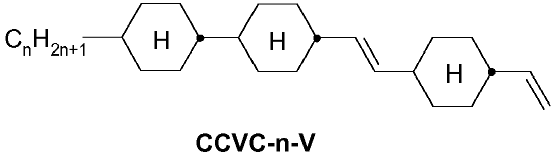 |
| 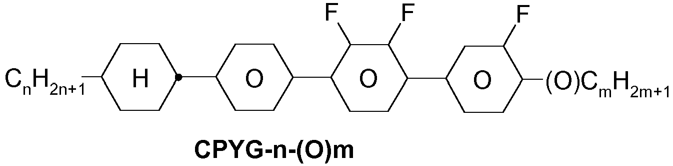 |
| 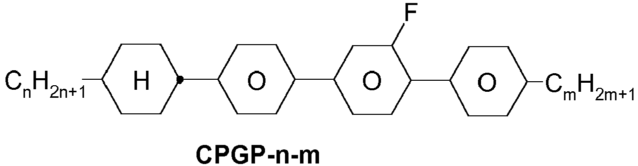 |
| 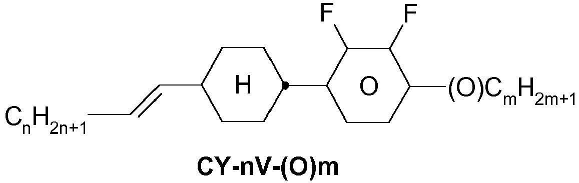 |
| 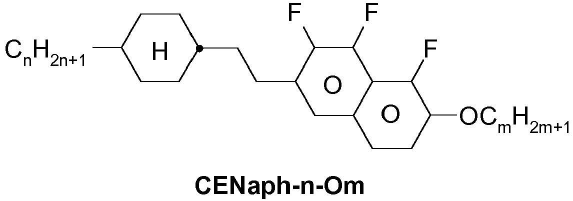 |
| 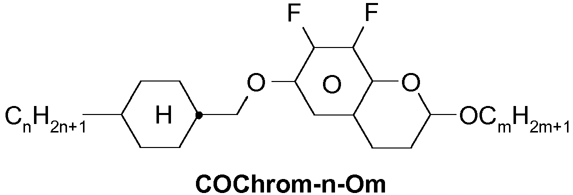 |
| 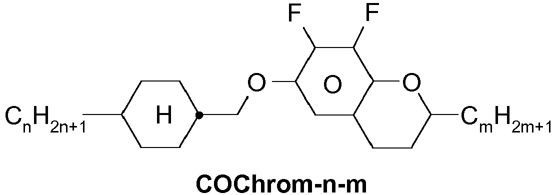 |
| 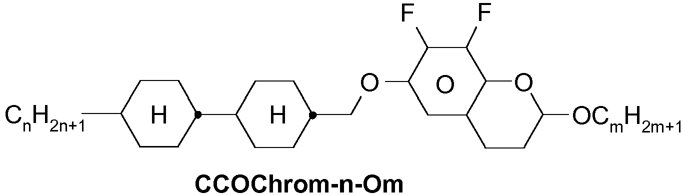 |
| 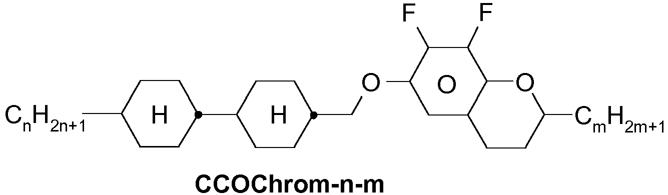 |
| 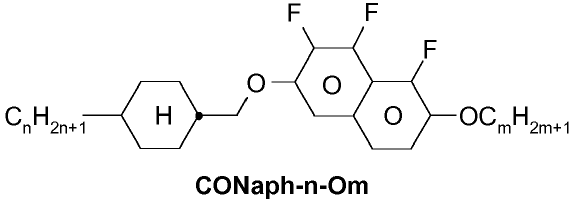 |
| 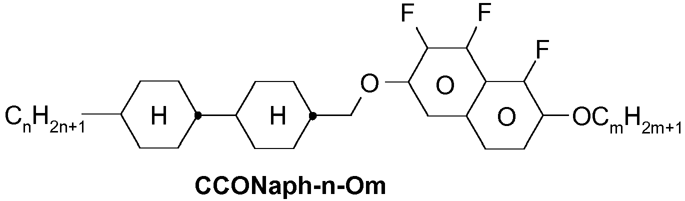 |
| 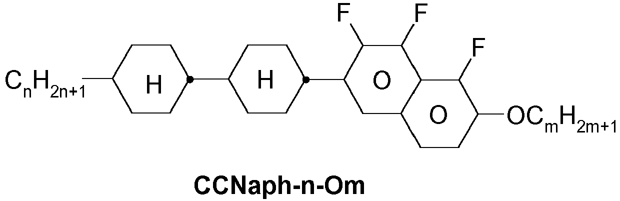 |
| 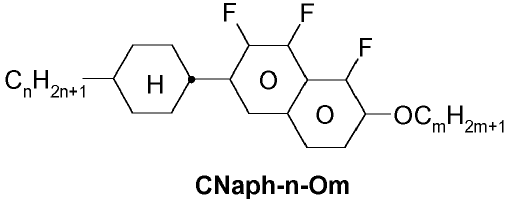 |
| 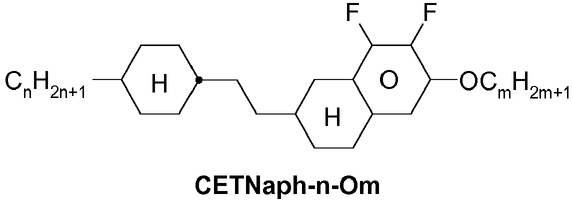 |
| 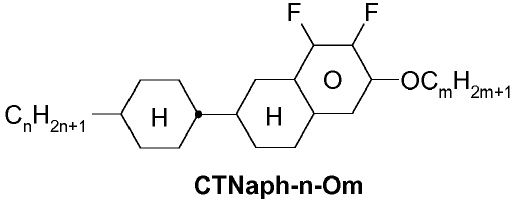 |
| 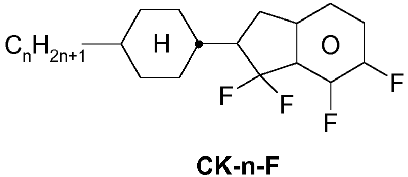 |
| 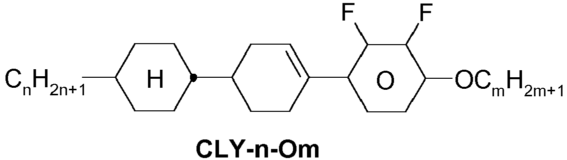 |
| 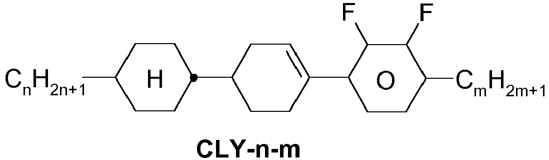 |
| 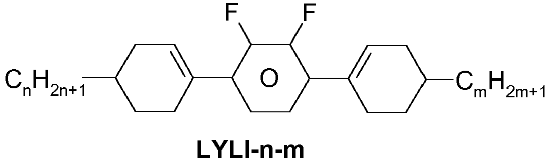 |
| 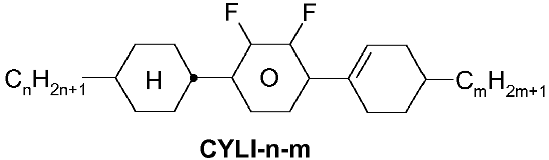 |
| 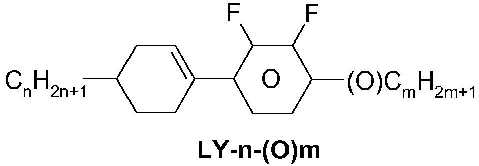 |
| 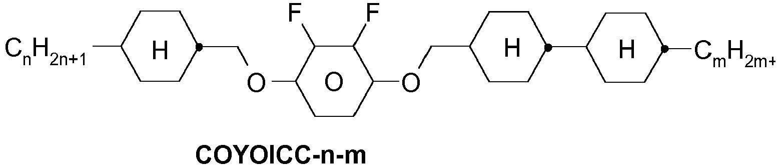 |
| 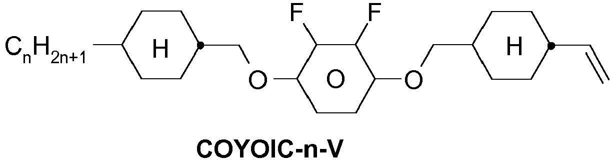 |
| 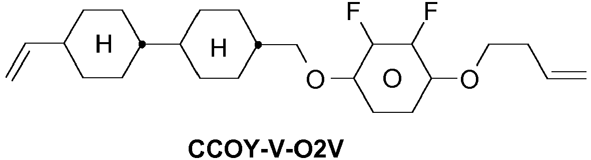 |
| 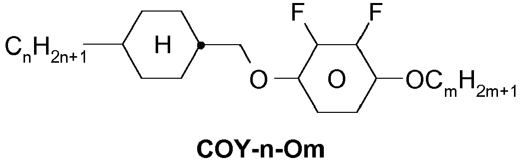 |
| 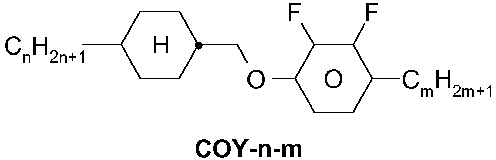 |
| 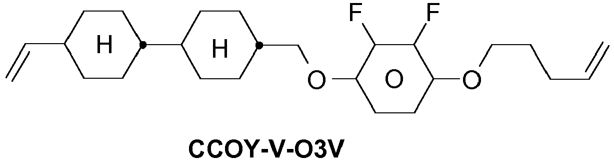 |
| 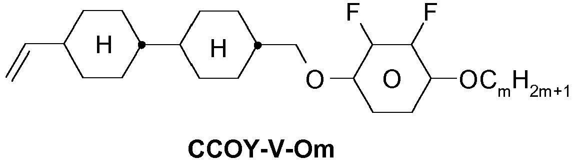 |
| 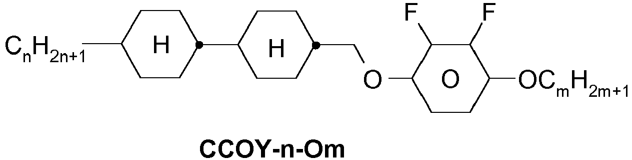 |
| 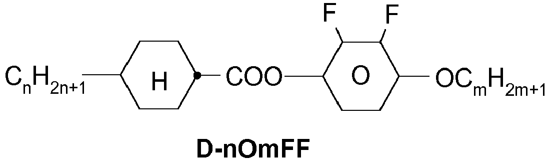 |
| 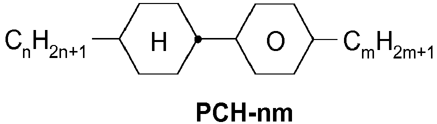 |
| 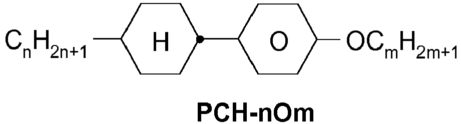 |
| 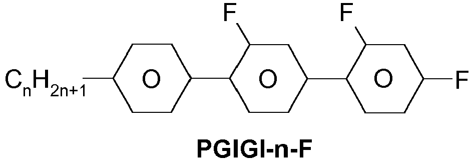 |
| 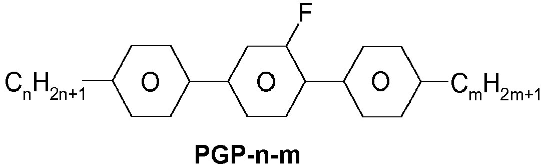 |
| 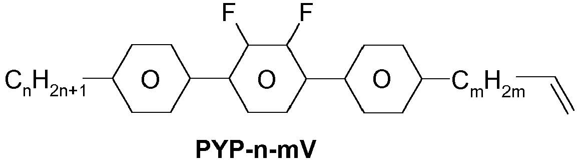 |
| 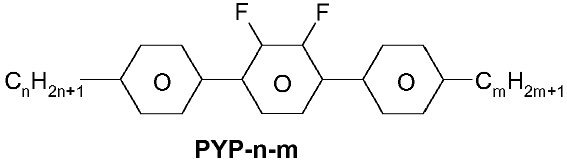 |
| 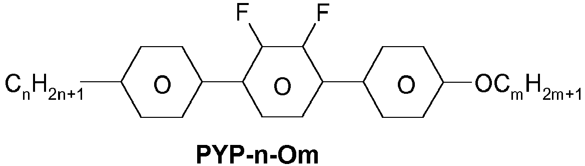 |
| 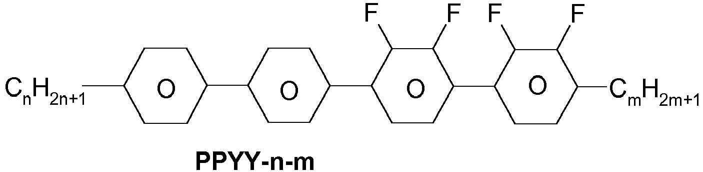 |
| 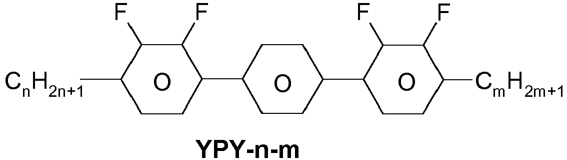 |
| 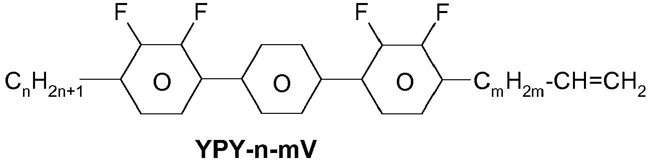 |
| 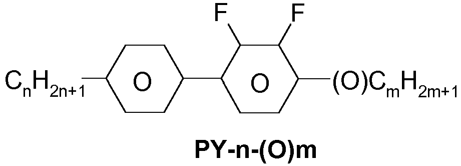 |
| 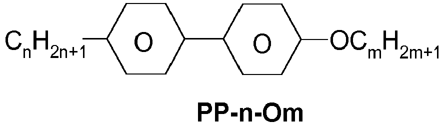 |
| 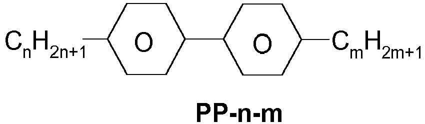 |
| 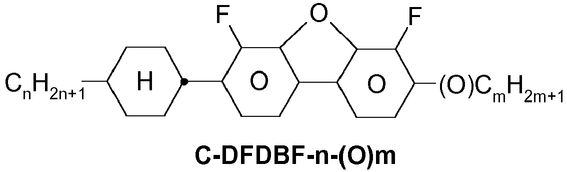 |
| 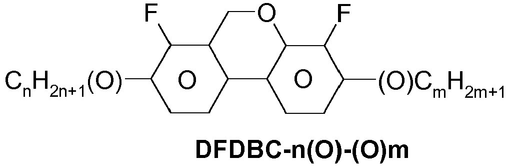 |
| 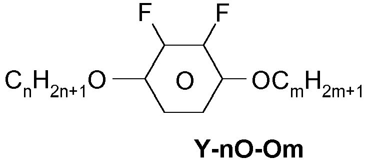 |
| 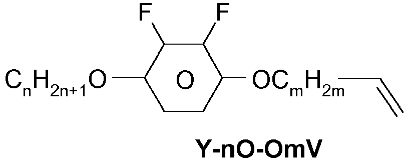 |
| 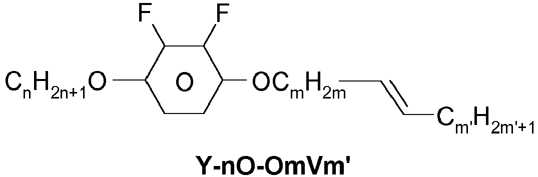 |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden. Geeignete Stabilisatoren für die erfindungsgemäßen Mischungen sind insbesondere solche die in Tabelle B gelistet sind. Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle B werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

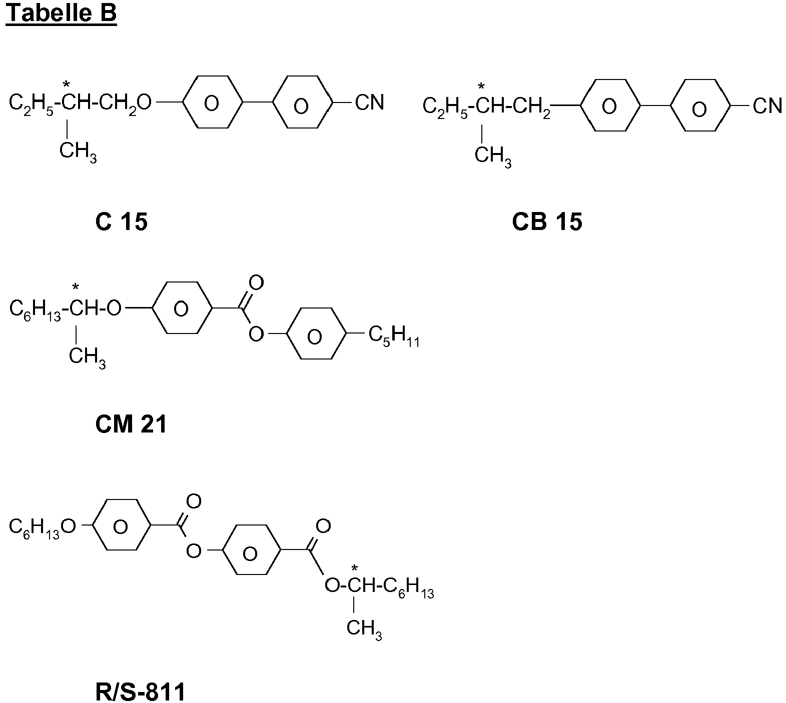

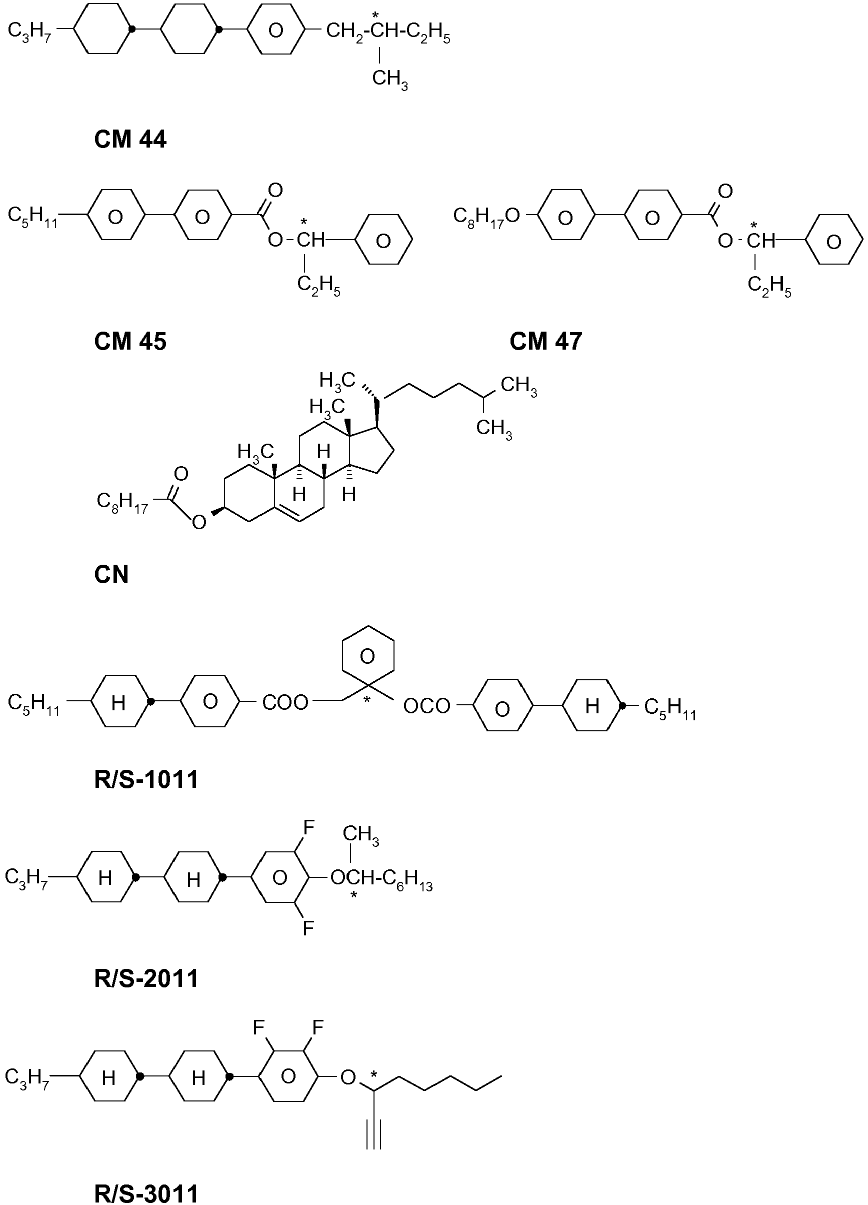

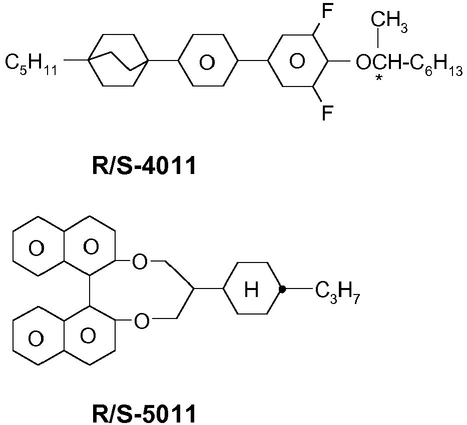

Stabilisatoren, die beispielsweise den erfindungsgemäßen Mischungen in Mengen von bis zu 10 Gew.%, bezogen auf die gesamte Menge der Mischung, bevorzugt 0,01 bis 6 Gew.%, insbesondere 0,1 bis 3 Gew.%, zugesetzt werden können, werden nachfolgend in Tabelle C genannt. Bevorzugte Stabilisatoren sind insbesondere BHT-Derivate, z.B. 2,6-Di-tert-butyl-4-alkylphenole) und Tinuvin 770 sowie Tunivin P und Tempol.

**Tabelle C**

| | | |
|---|---|---|
| (n = 1-12) | | |
| 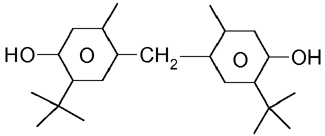 | 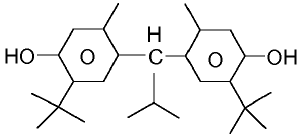 | |
| 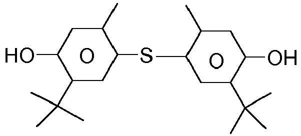 | 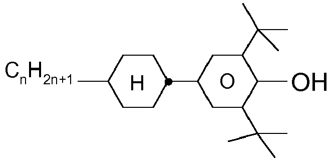 | |
| 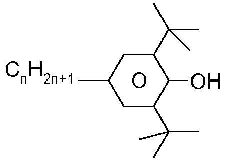 | 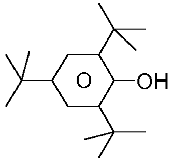 | |
| n = 1, 2, 3, 4, 5, 6 oder 7 | | |
| 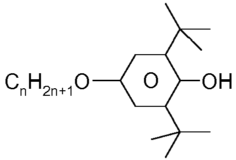 | 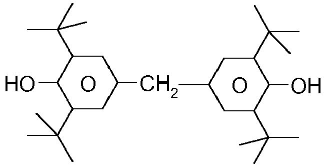 | |
| 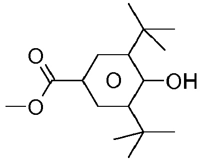 | 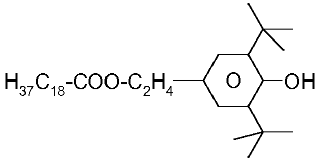 | |
| 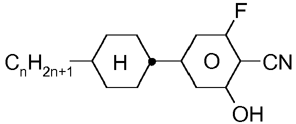 | 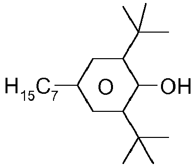 | |
| 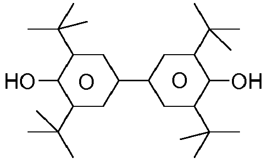 | 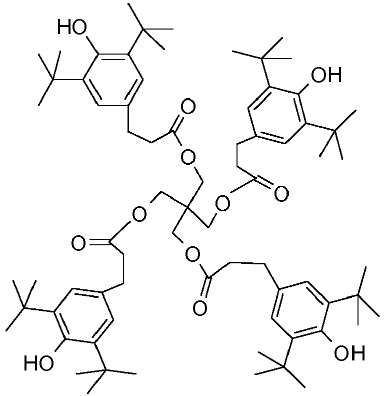 | |
| 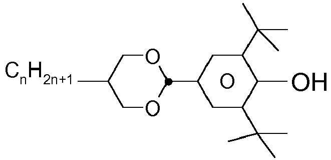 | | |
| n = 1, 2, 3, 4, 5, 6 oder 7 | | |
| 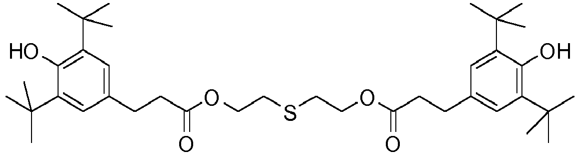 | | |
| 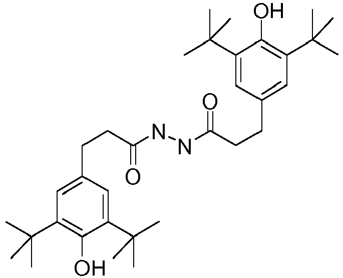 | 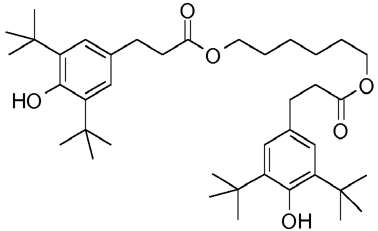 | |
| 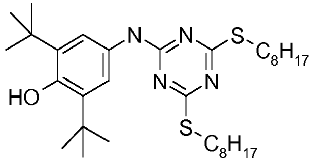 | 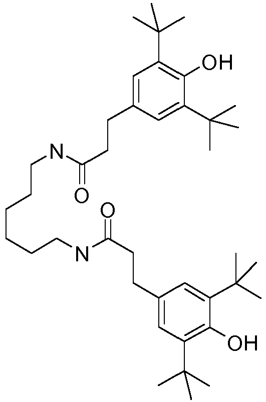 | |
| 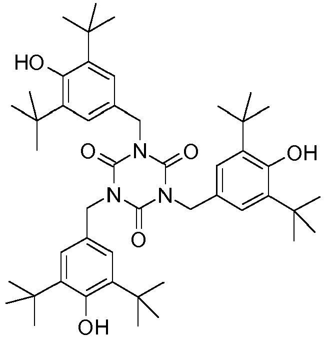 | 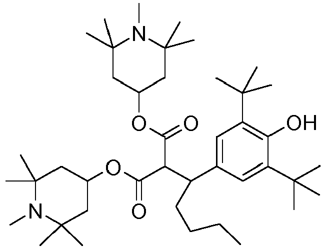 | |
| 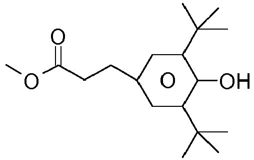 | 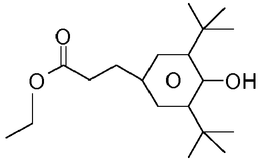 | |
| 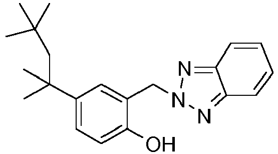 | 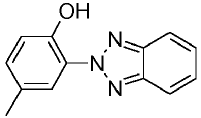 | |
| 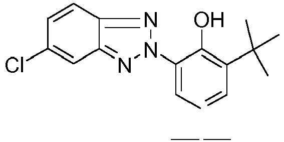 | 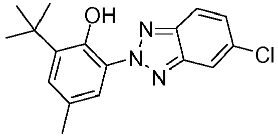 | |
| 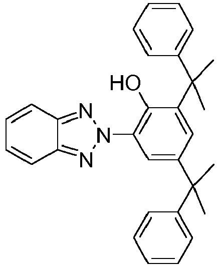 | 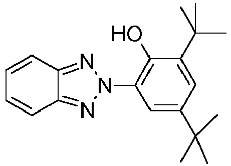 | |
| 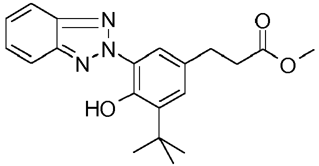 | 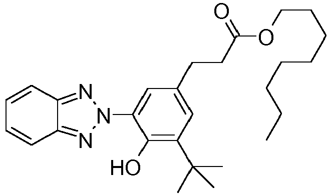 | |
| 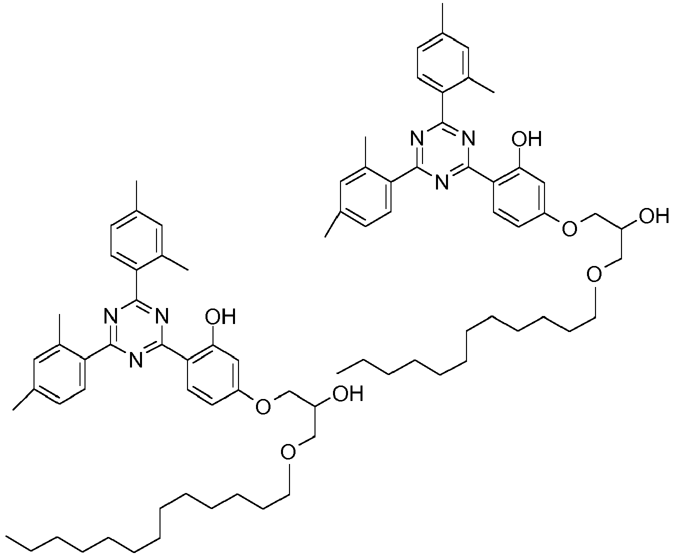 | | 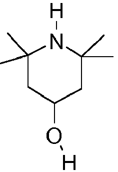 |
| 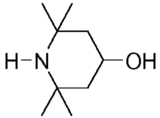 | 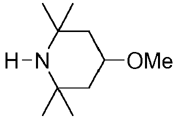 | 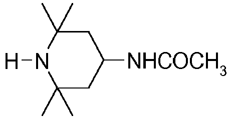 |
| 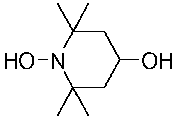 | 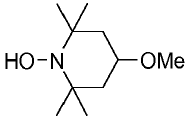 | 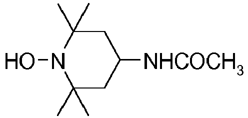 |
| 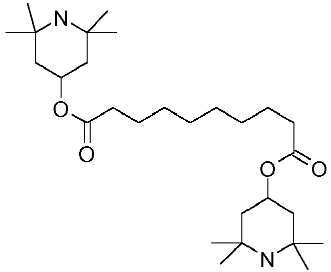 | 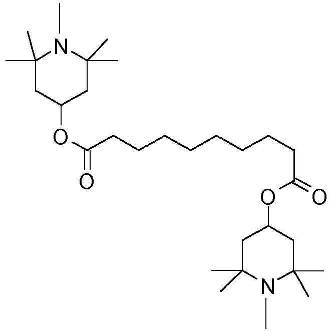 | |

Geeignete reaktive Mesogene (polymerisierbare Verbindungen) für den Einsatz in den erfindungsgemäßen Mischungen, vorzugsweise in PSA- und PS-VA-Anwendungen, werden nachfolgend in Tabelle D genannt:

**Tabelle D**

| | |
|---|---|
| 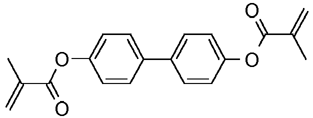 | RM-1 |
| 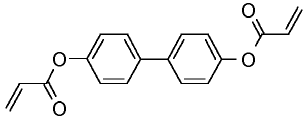 | RM-2 |
| 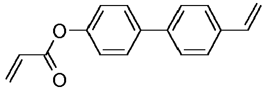 | RM-3 |
| 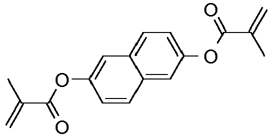 | RM-4 |
| 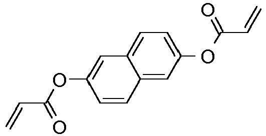 | RM-5 |
| 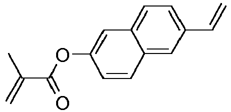 | RM-6 |
| 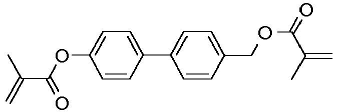 | RM-7 |
| 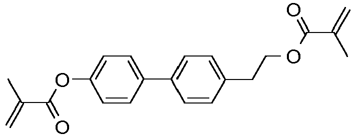 | RM-8 |
| 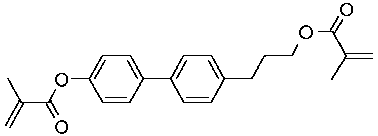 | RM-9 |
| 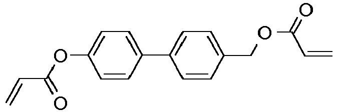 | RM-10 |
| 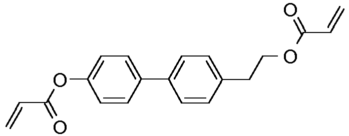 | RM-11 |
| 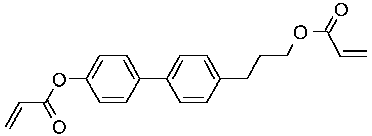 | RM-12 |
| 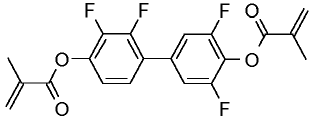 | RM-13 |
| 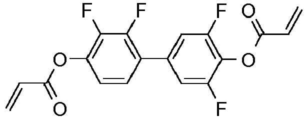 | RM-14 |
| 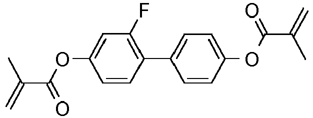 | RM-15 |
| 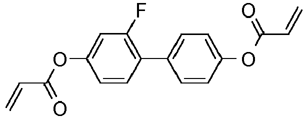 | RM-16 |
| 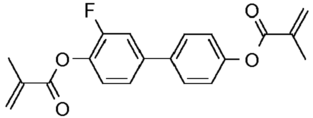 | RM-17 |
| 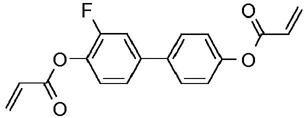 | RM-18 |
| 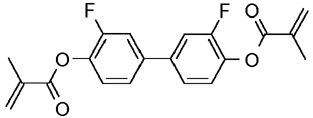 | RM-19 |
| 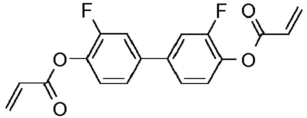 | RM-20 |
| 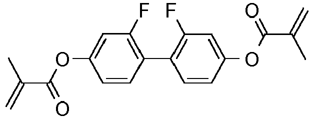 | RM-21 |
| 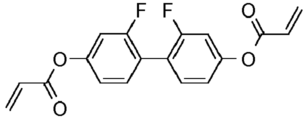 | RM-22 |
| 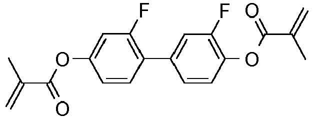 | RM-23 |
| 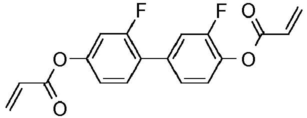 | RM-24 |
| 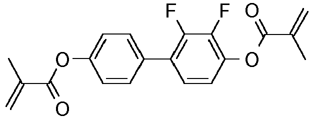 | RM-25 |
| 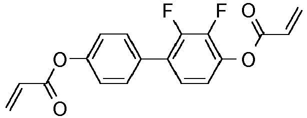 | RM-26 |
| 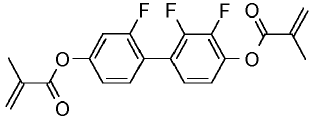 | RM-27 |
| 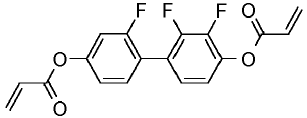 | RM-28 |
| 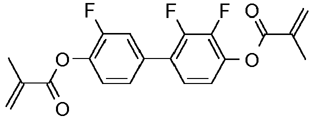 | RM-29 |
| 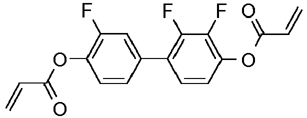 | RM-30 |
| 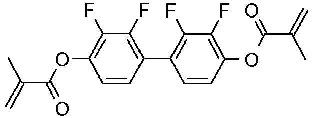 | RM-31 |
| 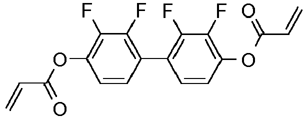 | RM-32 |
| 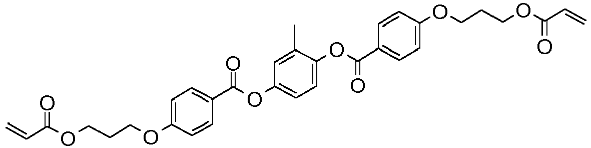 | RM-33 |
| 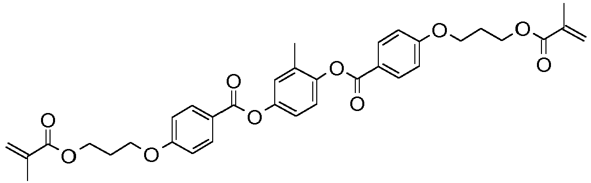 | RM-34 |
| 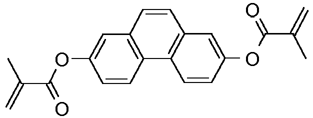 | RM-35 |
| 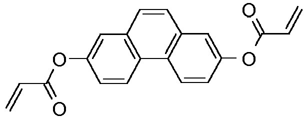 | RM-36 |
| 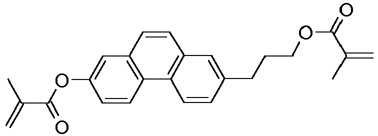 | RM-37 |
| 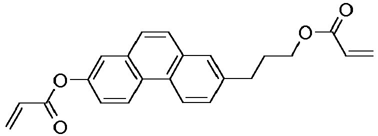 | RM-38 |
| 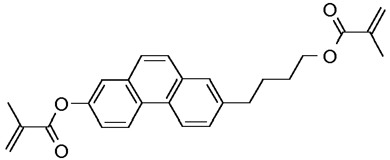 | RM-39 |
| 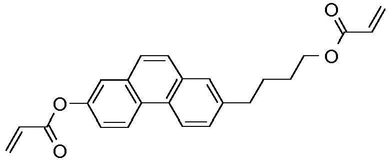 | RM-40 |
| 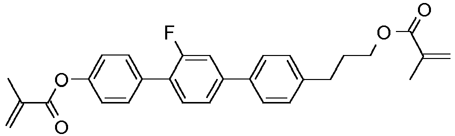 | RM-41 |
| 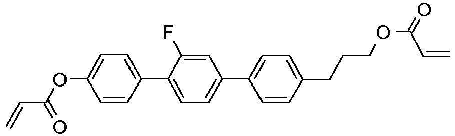 | RM-42 |
| 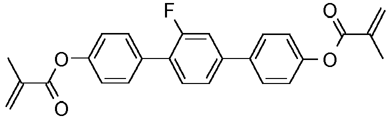 | RM-43 |
| 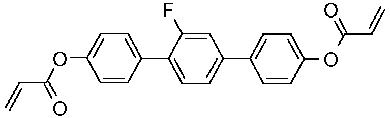 | RM-44 |
| 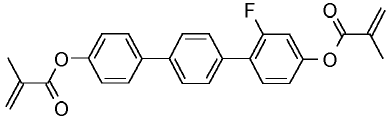 | RM-45 |
| 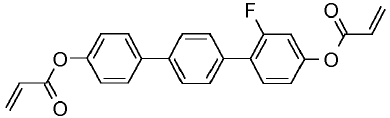 | RM-46 |
| 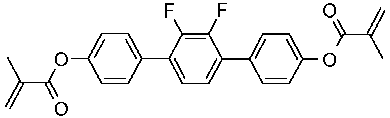 | RM-47 |
| 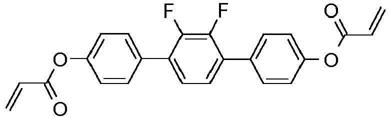 | RM-48 |
| 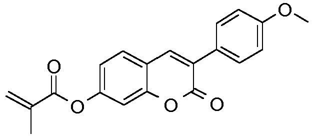 | RM-49 |
| 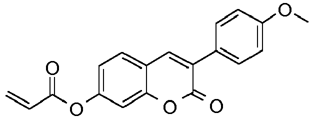 | RM-50 |
| 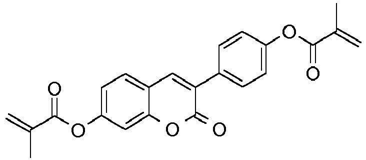 | RM-51 |
| 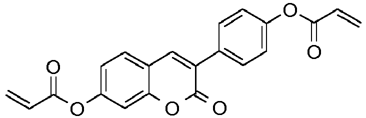 | RM-52 |
| 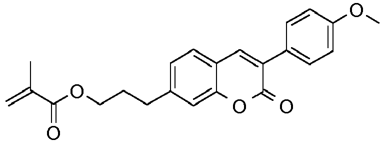 | RM-53 |
| 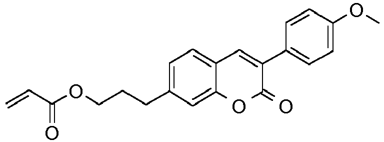 | RM-54 |
| 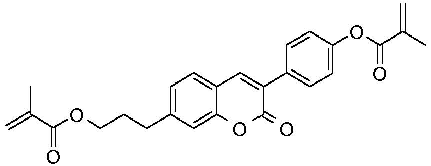 | RM-55 |
| 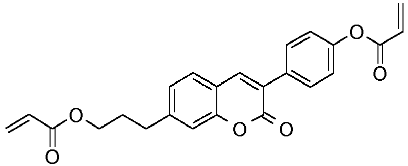 | RM-56 |
| 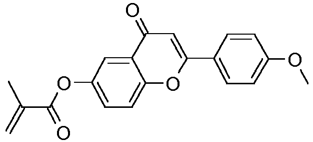 | RM-57 |
| 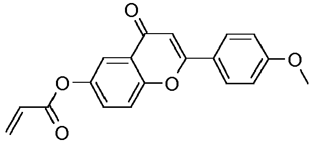 | RM-58 |
| 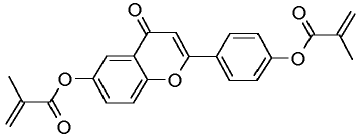 | RM-59 |
| 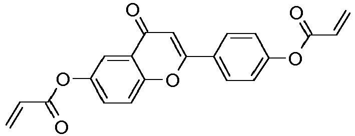 | RM-60 |
| 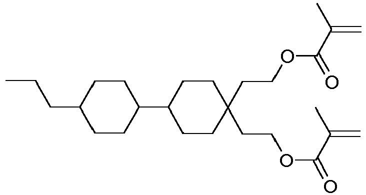 | RM-61 |
| 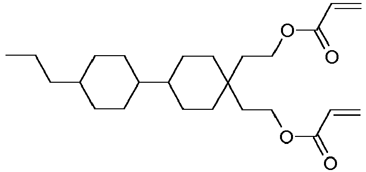 | RM-62 |
| 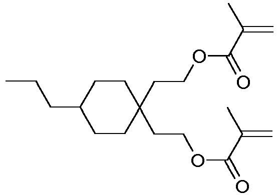 | RM-63 |
| 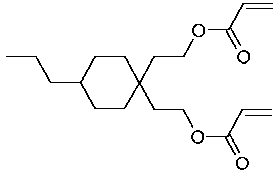 | RM-64 |
| 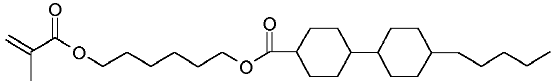 | RM-65 |
| 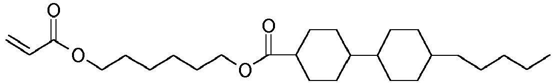 | RM-66 |
| 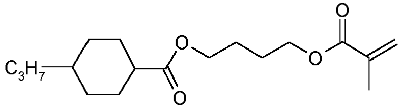 | RM-67 |
| 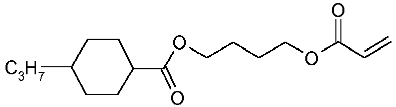 | RM-68 |
| 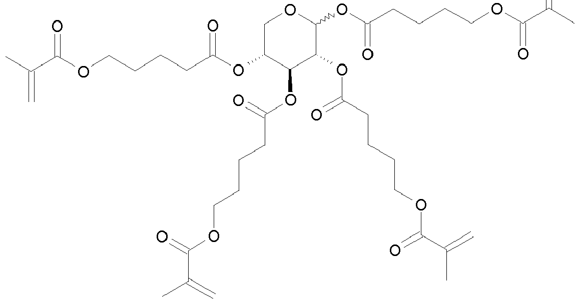 | RM-69 |
| 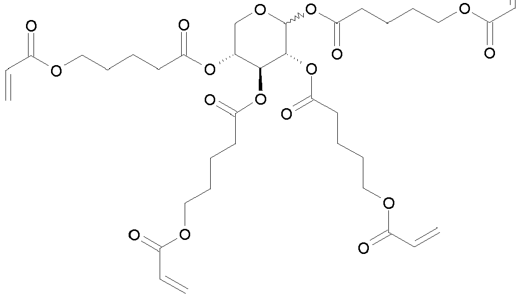 | RM-70 |
| 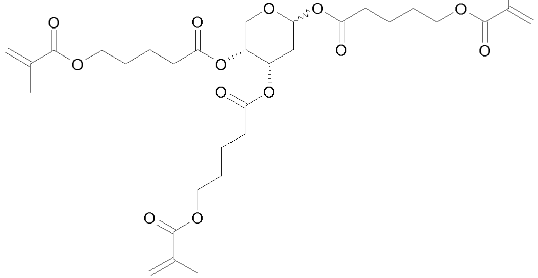 | RM-71 |
| 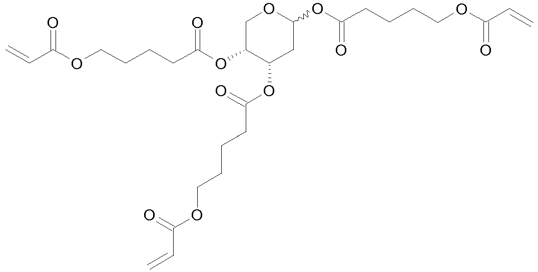 | RM-72 |
| 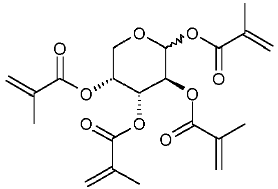 | RM-73 |
| 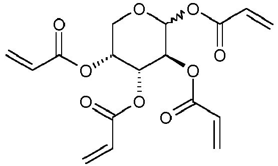 | RM-74 |

### Ausführungsbeispiele:

Die folgenden Beispiele sollen die Erfindung erläutern, ohne sie zu begrenzen.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Als Hostmischung zur Bestimmung der optischen Anisotropie Δn der Verbindungen der Formel I wird die Verkaufsmischung ZLI-4792 (Fa. Merck KGaA) verwendet. Für die Bestimmung der dielektrischen Anisotropie Δε wird die Verkaufsmischung ZLI-2857 verwendet. Aus der Änderung der Dielektrizitätskonstanten der Hostmischung nach Zugabe der zu untersuchenden Verbindung und Extrapolation auf 100 % der eingesetzten Verbindung werden die physikalischen Daten der zu untersuchenden Verbindung erhalten. Die zu untersuchende Verbindung wird in Abhängigkeit der Löslichkeit in der Regel zu 10 % in der Hostmischung gelöst.

Sofern nichts anderes angegeben ist, bedeuten Angaben von Teilen oder Prozent Gewichtsteile bzw. Gewichtsprozent.

### Vor- und nachstehend bedeuten

- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε⊥: dielektrische Suszeptibilität senkrecht zum Direktor bei 20°C und 1 kHz,
- ε∥: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ1: Rotationsviskosität gemessen bei 20 °C [mPa·s], bestimmt nach dem Rotationsverfahren in einem magnetischen Feld,
- K₁: elastische Konstante, "Splay"-Deformation bei 20 °C, [pN],
- K₃: elastische Konstante, "Bend"-Deformation bei 20 °C, [pN],
- K₃: elastische Konstante, "bend"-Deformation bei 20°C [pN],
- LTS: Tieftemperaturstabilität [Low temperature stability (nematische Phase)], bestimmt in Testzellen,
- HR₂₀: "voltage holding ratio" bei 20°C [%] und
- HR₁₀₀: "voltage holding ratio" bei 100°C [%].

Die zur Messung der Schwellenspannung verwendete Anzeige weist zwei planparallele Trägerplatten im Abstand von 20 µm und Elektrodenschichten mit darüber liegenden Orientierungsschichten aus SE-1211 (Nissan Chemicals) auf den Innenseiten der Trägerplatten auf, welche eine homöotrope Orientierung der Flüssigkristalle bewirken.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

Soweit nicht explizit anders vermerkt, sind in der vorliegenden Anmeldung alle Konzentrationen und %-Werte (mit Ausnahme der Werte für HR, Kontrast und Transmission) in Gewichtsprozent angegeben und beziehen sich auf die jeweilige Gesamtmischung, enthaltend alle festen oder flüssigkristallinen Komponenten, ohne Lösungsmittel.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10% relativen Kontrast (V₁₀) angegeben werden.

Die zur Messung der kapazitiven Schwellenspannung verwendete Anzeige besteht aus zwei planparallelen Glasträgerplatten im Abstand von 20 µm, welche auf den Innenseiten jeweils ein Elektrodenschicht sowie eine darüber liegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 µm, welche auf den Innenseiten jeweils ein Elektrodenschicht sowie eine darüber liegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht bei vorgegebener Zeit polymerisiert, wobei gleichzeitig eine Spannung an die Anzeige angelegt wird (üblicherweise 10 V bis 30 V Wechselstrom, 1 kHz). In den Beispielen wird, falls nicht anders angegeben, eine Metall-Halogenidlampe und eine Intensität von 100 mW/cm² zur Polymerisierung verwendet, die Intensität wird mit einem Standard-UVA-Meter (Fabrikat Hoenle UV-meter high end with UVA sensor) gemessen.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0,3 % einer polymerisierbaren monomeren Verbindung zugesetzt, und die dadurch entstandene Mischung in VA-VHR-Testzellen gefüllt (90° ungerieben, Orientierungsschicht VA-Polyimid, Schichtdicke d≈6 µm). Der HR-Wert wird nach 5 min bei 100 °C vor und nach UV-Belastung bei 1V, 60 Hz, 64 µs pulse bestimmt (Messgerät: Autronic-Melchers VHRM-105).

### Mischungsbeispiele

Die im Folgenden gegebenen Mischungsbeispiele sind die Basis- bzw. Host-Mischungen, denen gemäß der vorliegenden Anmeldung ein oder mehrere Stabilisatoren zugegeben werden.

### Beispiel M1

| | | | |
|---|---|---|---|
| CY-3-O2 | 22,00 % | Klärpunkt [°C]: | 79,5 |
| CY-5-O2 | 2,00 % | Δn [589 nm, 20 °C]: | 0,0942 |
| CCOY-3-O2 | 8,00 % | Δε [1 kHz, 20 °C]: | -3,0 |
| CPY-2-O2 | 7,00 % | ε_{∥} [1 kHz, 20 °C]: | 3,4 |
| CPY-3-O2 | 10,00 % | K₃ [pN, 20 °C]: | 15,5 |
| CCH-34 | 6,00 % | K₃/K₁ [20 °C]: | 1,08 |
| CCH-23 | 22,00 % | γ₁ [mPa·s, 20 °C]: | 112 |
| CCP-3-3 | 7,50 % | V₀ [20 °C, V]: | 2,41 |
| CCP-3-1 | 7,00 % | VHR (initial): | 98,6 % |
| BCH-32 | 6,00 % | VHR (15 min UVA): | 94,5 % |
| PCH-301 | 2,50 % | VHR (2 min UVA + 2h suntest): | 91,6% |

### Beispiel M2

| | | | |
|---|---|---|---|
| CY-3-O2 | 12,00 % | Klärpunkt [°C]: | 79,5 |
| COY-3-O2 | 12,00 % | Δn [589 nm, 20 °C]: | 0,0955 |
| CCY-3-O2 | 4,00 % | Δε [1 kHz, 20 °C]: | -3,0 |
| CPY-2-O2 | 9,00 % | ε_{∥} [1 kHz, 20 °C]: | 3,4 |
| CPY-3-O2 | 10,00 % | K₃ [pN, 20 °C]: | 15,3 |
| CCH-34 | 6,00 % | K₃/K₁ [20 °C]: | 1,03 |
| CCH-23 | 22,00 % | γ₁ [mPa·s, 20 °C]: | 108 |
| CCP-3-3 | 8,00 % | V₀ [20 °C, V]: | 2,39 |
| CCP-3-1 | 8,00 % | VHR (initial): | 98,4 % |
| BCH-32 | 6,00 % | VHR (15 min UVA): | 93,5 % |
| PCH-301 | 3,00 % | VHR (2 min UVA + 2h suntest): | 89,0% |

### Beispiel M3

| | | | |
|---|---|---|---|
| COY-3-O2 | 21,00 % | Klärpunkt [°C]: | 79,5 |
| CCY-3-O2 | 3,00 % | Δn [589 nm, 20 °C]: | 0,0959 |
| CPY-2-O2 | 10,00 % | Δε [1 kHz, 20 °C]: | -3,0 |
| CPY-3-O2 | 10,00 % | ε_{∥} [1 kHz, 20 °C]: | 3,5 |
| CCH-34 | 6,00 % | K₃ [pN, 20 °C]: | 14,9 |
| CCH-23 | 22,00 % | K₃/K₁ [20 °C]: | 1,03 |
| CCP-3-3 | 8,00 % | γ₁ [mPa·s, 20 °C]: | 108 |
| CCP-3-1 | 8,00 % | VHR (initial): | 98,4 % |
| BCH-32 | 6,00 % | VHR (15 min UVA): | 91,0 % |
| PCH-301 | 6,00 % | VHR (2 min UVA + 2h suntest): | 86,4% |

### Beispiel M4

Zur Herstellung einer PS-VA-Mischung werden der Flüssigkristallmischung gemäß Beispiel M1 0,3 % des RM1 (Biphenyl-4,4'-dimethacrylat) 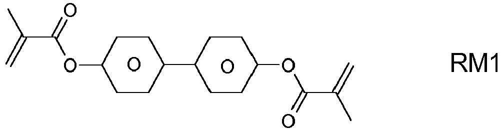 zugesetzt.

Die PS-VA-Mischung wird in eine Zelle mit homeotroper Orientierung gefüllt. Nach Anlegen einer Spannung von 24 V wird mit einer Leistung von 100 mW/cm² mit UV-Licht bestrahlt. Danach sind folgende Tiltwinkel eingestellt:

| Bestrahlungsdauer / min | Tiltwinkel / ° |
|---|---|
| 0 | 89,4 |
| 0,5 | 89,1 |
| 1 | 87,0 |
| 2 | 83,4 |
| 4 | 79,6 |
| 6 | 77,1 |

Die gemessenen Werte für die Holding Ratio betragen

| | |
|---|---|
| VHR (initial): | 98,4 % |
| VHR (15 min UVA): | 97,8 % |
| VHR (2 min UVA + 2h suntest): | 97,8 % |

### Beispiel M5

Zur Herstellung einer PS-VA-Mischung werden der Flüssigkristallmischung gemäß Beispiel M2 0,3 % des RM1 (Biphenyl-4,4'-dimethacrylat) 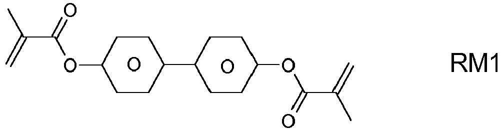 zugesetzt.

Die PS-VA-Mischung wird in eine Zelle mit homeotroper Orientierung gefüllt. Nach Anlegen einer Spannung von 24 V wird mit einer Leistung von 100 mW/cm² mit UV-Licht bestrahlt. Danach sind folgende Tiltwinkel eingestellt:

| Bestrahlungsdauer / min | Tiltwinkel / ° |
|---|---|
| 0 | 89,4 |
| 0,5 | 89,0 |
| 1 | 86,8 |
| 2 | 83,5 |
| 4 | 79,3 |
| 6 | 76,9 |

Die gemessenen Werte für die Holding Ratio betragen

| | |
|---|---|
| VHR (initial): | 98,1 % |
| VHR (15 min UVA): | 97,7 % |
| VHR (2 min UVA + 2h suntest): | 97,5 % |

### Beispiel M6

Zur Herstellung einer PS-VA-Mischung werden der Flüssigkristallmischung gemäß Beispiel M3 0,3 % des RM1 (Biphenyl-4,4'-dimethacrylat) 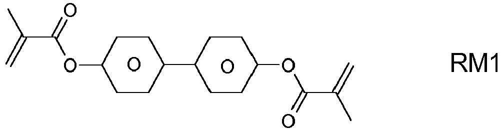 zugesetzt.

Die PS-VA-Mischung wird in eine Zelle mit homeotroper Orientierung gefüllt. Nach Anlegen einer Spannung von 24 V wird mit einer Leistung von 100 mW/cm² mit UV-Licht bestrahlt. Danach sind folgende Tiltwinkel eingestellt:

| Bestrahlungsdauer / min | Tiltwinkel / ° |
|---|---|
| 0 | 89,3 |
| 0,5 | 89,0 |
| 1 | 86,8 |
| 2 | 83,2 |
| 4 | 78,7 |
| 6 | 76,5 |

Die gemessenen Werte für die Holding Ratio betragen

| | |
|---|---|
| VHR (initial): | 98,2 % |
| VHR (15 min UVA): | 97,6 % |
| VHR (2 min UVA + 2h suntest): | 97,1 % |

### Beispiel M7

| | | | |
|---|---|---|---|
| COY-3-O2 | 12,00 % | Klärpunkt [°C]: | 85,5 |
| COY-3-O4 | 12,00 % | Δn [589 nm, 20 °C]: | 0,0963 |
| CCY-3-O2 | 9,00 % | Δε [1 kHz, 20 °C]: | -4,2 |
| CCY-3-O3 | 8,00 % | K₁[pN, 20 °C]: | 13,6 |
| CCY-4-O2 | 9,00 % | K₃[pN, 20 °C]: | 15,5 |
| CPY-2-O2 | 7,00 % | γ₁ [mPa·s, 20 °C]: | 164 |
| CPY-3-O2 | 7,00 % | V₀ [20 °C, V]: | 2,04 |
| BCH-32 | 6,00 % | | |
| CCH-34 | 14,00 % | | |
| CCH-35 | 6,00 % | | |
| PCH-301 | 10,00 % | | |

### Beispiel M8

| | | | |
|---|---|---|---|
| COY-3-O2 | 11,00 % | Klärpunkt [°C]: | 85,5 |
| COY-3-O4 | 11,00 % | Δn [589 nm, 20 °C]: | 0,0961 |
| CCOY-3-O2 | 8,00 % | Δε [1 kHz, 20 °C]: | -4,2 |
| CCY-3-O2 | 10,00 % | K₁[pN, 20 °C]: | 14,1 |
| CCY-4-O2 | 10,00 % | K₃[pN, 20 °C]: | 16,5 |
| CPY-2-O2 | 5,00 % | γ₁ [mPa·s, 20 °C]: | 164 |
| CPY-3-O2 | 7,00 % | V₀ [20 °C, V]: | 2,13 |
| BCH-32 | 6,00 % | | |
| CCH-34 | 14,00 % | | |
| CCH-35 | 6,00 % | | |
| PCH-301 | 12,00 % | | |

### Beispiel M9

| | | | |
|---|---|---|---|
| CC-3-V | 38,50 % | Klärpunkt [°C]: | 74,5 |
| CCY-4-O2 | 10,50 % | Δn [589 nm, 20 °C]: | 0,1056 |
| CPY-2-O2 | 11,00 % | Δε [1 kHz, 20 °C]: | -3,1 |
| CPY-3-O2 | 11,00 % | K₁[pN, 20 °C]: | 12,4 |
| COY-3-O2 | 13,00 % | K₃[pN, 20 °C]: | 13,7 |
| COY-3-O4 | 4,00 % | γ₁ [mPa·s, 20 °C]: | 98 |
| PYP-2-4 | 9,00 % | V₀ [20 °C, V]: | 2,19 |
| PYP-2-3 | 3,00 % | | |

### Beispiel M10

| | | | |
|---|---|---|---|
| BCH-32 | 11,00 % | Klärpunkt [°C]: | 75,5 |
| CCH-23 | 20,00 % | Δn [589 nm, 20 °C]: | 0,1037 |
| CCH-301 | 1,50 % | Δε [1 kHz, 20 °C]: | -3,2 |
| CCH-34 | 6,00 % | K₁[pN, 20 °C]: | 14,7 |
| CCH-35 | 7,00 % | K₃[pN, 20 °C]: | 14,6 |
| CCY-3-O2 | 12,00 % | γ₁ [mPa·s, 20 °C]: | 116 |
| CPY-2-O2 | 5,00 % | V₀ [20 °C, V]: | 2,24 |
| CPY-3-O2 | 12,00 % | | |
| PY-3-O2 | 12,00 % | | |
| COY-3-O2 | 13,50 % | | |

### Beispiel M11

Zur Herstellung einer PS-VA-Mischung werden der Flüssigkristallmischung gemäß Beispiel M10 0,3 % des RM1 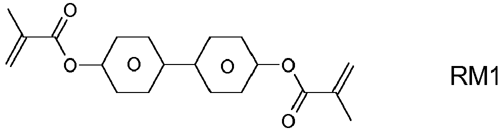 zugesetzt.

Die PS-VA-Mischung wird in eine Zelle mit homöotroper Orientierung gefüllt. Nach Anlegen einer Spannung von 24 V wird mit einer Leistung von 100 mW/cm² mit UV-Licht bestrahlt. Danach sind die Tiltwinkel eingestellt:

### Beispiel M12

| | | | |
|---|---|---|---|
| BCH-32 | 7,50 % | Klärpunkt [°C]: | 75,0 |
| CC-3-V1 | 10,00 % | Δn [589 nm, 20 °C]: | 0,1040 |
| CCH-23 | 10,00 % | Δε [1 kHz, 20 °C]: | -3,1 |
| CCH-301 | 3,00 % | K₁[pN, 20 °C]: | 14,8 |
| CCH-34 | 5,00 % | K₃[pN, 20 °C]: | 15,5 |
| CCH-35 | 9,00 % | γ₁ [mPa·s, 20 °C]: | 111 |
| CCY-3-O2 | 10,50 % | V₀ [20 °C, V]: | 2,35 |
| CPY-2-O2 | 7,00 % | | |
| CPY-3-O2 | 11,00 % | | |
| PCH-301 | 3,00 % | | |
| PY-3-O2 | 13,00 % | | |
| COY-3-O2 | 11,00 % | | |

### Beispiel M13

Zur Herstellung einer PS-VA-Mischung werden der Flüssigkristallmischung gemäß Beispiel M12 0,3 % des RM25 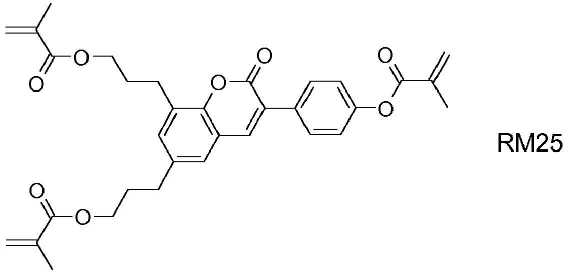 zugesetzt.

Die PS-VA-Mischung wird in eine Zelle mit homöotroper Orientierung gefüllt. Nach Anlegen einer Spannung von 24 V wird mit einer Leistung von 100 mW/cm² mit UV-Licht bestrahlt. Danach sind die Tiltwinkel eingestellt:

### Beispiel M14

| | | | |
|---|---|---|---|
| CC-3-V | 39,00 % | Klärpunkt [°C]: | 76,0 |
| CCY-3-O2 | 13,00 % | Δn [589 nm, 20 °C]: | 0,1092 |
| CCY-3-O3 | 2,00 % | Δε [1 kHz, 20 °C]: | -3,4 |
| CPY-2-O2 | 11,00 % | K₁[pN, 20 °C]: | 13,7 |
| CPY-3-O2 | 12,00 % | K₃[pN, 20 °C]: | 15,0 |
| PY-3-O2 | 13,50 % | γ₁ [mPa·s, 20 °C]: | 100 |
| PYP-2-4 | 4,50 % | V₀ [20 °C, V]: | 2,24 |
| COY-3-O2 | 5,00 % | | |

### Beispiel M15

| | | | |
|---|---|---|---|
| COY-3-O2 | 16,00 % | Klärpunkt [°C]: | 81,0 |
| CCY-3-O2 | 9,00 % | Δn [589 nm, 20 °C]: | 0,0931 |
| CPY-2-O2 | 5,00 % | Δε [1 kHz, 20 °C]: | -2,9 |
| CPY-3-O2 | 10,00 % | K₁[pN, 20 °C]: | 15,0 |
| CCH-34 | 7,00 % | K₃[pN, 20 °C]: | 15,6 |
| CCH-23 | 21,00 % | γ₁ [mPa·s, 20 °C]: | 108 |
| CCP-3-3 | 6,00 % | V₀ [20 °C, V]: | 2,42 |
| CCP-3-1 | 10,00 % | | |
| BCH-32 | 6,00 % | | |
| Y-4O-O4 | 7,00 % | | |
| CBC-33 | 3,00 % | | |

### Beispiel M16

| | | | |
|---|---|---|---|
| COY-3-O2 | 5,00 % | Klärpunkt [°C]: | 75,0 |
| CCY-3-O2 | 8,00 % | Δn [589 nm, 20 °C]: | 0,1061 |
| CLY-3-O2 | 8,00 % | Δε [1 kHz, 20 °C]: | -3,0 |
| CPY-2-O2 | 7,00 % | K₁[pN, 20 °C]: | 13,1 |
| CPY-3-O2 | 10,00 % | K₃[pN, 20 °C]: | 14,6 |
| PYP-2-3 | 10,00 % | γ₁ [mPa·s, 20 °C]: | 83 |
| PYP-2-4 | 2,00 % | V₀ [20 °C, V]: | 2,33 |
| CC-3-V | 36,00 % | | |
| CC-3-V1 | 4,00 % | | |
| CCP-V-1 | 3,00 % | | |
| Y-4O-O4 | 7,00 % | | |

### Beispiel M17

| | | | |
|---|---|---|---|
| COY-3-O2 | 5,00 % | Klärpunkt [°C]: | 75,0 |
| CCOY-3-O2 | 4,00 % | Δn [589 nm, 20 °C]: | 0,1071 |
| CCY-3-O2 | 4,00 % | Δε [1 kHz, 20 °C]: | -3,0 |
| CLY-3-O2 | 8,00 % | K₁[pN, 20 °C]: | 13,3 |
| CPY-2-O2 | 6,00 % | K₃[pN, 20 °C]: | 14,8 |
| CPY-3-O2 | 10,00 % | γ₁ [mPa·s, 20 °C]: | 85 |
| PYP-2-3 | 10,00 % | V₀ [20 °C, V]: | 2,36 |
| PYP-2-4 | 3,00 % | | |
| CC-3-V | 34,00 % | | |
| CC-3-V1 | 6,00 % | | |
| CCP-V-1 | 3,00 % | | |
| Y-4O-O4 | 7,00 % | | |

### Beispiel M18

| | | | |
|---|---|---|---|
| COY-3-O2 | 18,00 % | Klärpunkt [°C]: | 74,0 |
| CCY-3-O3 | 4,00 % | Δn [589 nm, 20 °C]: | 0,1280 |
| CPY-2-O2 | 10,00 % | Δε [1 kHz, 20 °C]: | -3,2 |
| CPY-3-O2 | 12,00 % | K₁[pN, 20 °C]: | 13,0 |
| CCH-34 | 10,00 % | K₃[pN, 20 °C]: | 12,9 |
| CCH-23 | 19,00 % | γ₁ [mPa·s, 20 °C]: | 128 |
| PYP-2-3 | 14,00 % | V₀ [20 °C, V]: | 2,06 |
| PYP-2-4 | 13,00 % | | |

### Beispiel M19

| | | | |
|---|---|---|---|
| COY-3-O2 | 17,00 % | Klärpunkt [°C]: | 74,0 |
| CCOY-3-O2 | 4,00 % | Δn [589 nm, 20 °C]: | 0,1280 |
| CPY-2-O2 | 10,00 % | Δε [1 kHz, 20 °C]: | -3,2 |
| CPY-3-O2 | 12,00 % | K₁[pN, 20 °C]: | 13,3 |
| CCH-34 | 10,00 % | K₃[pN, 20 °C]: | 13,1 |
| CCH-23 | 20,00 % | γ₁ [mPa·s, 20 °C]: | 127 |
| PYP-2-3 | 14,00 % | V₀ [20 °C, V]: | 2,10 |
| PYP-2-4 | 13,00 % | | |

### Beispiel M20

Zur Herstellung einer PS-VA-Mischung werden der Flüssigkristallmischung gemäß Beispiel M19 0,3 % des RM10 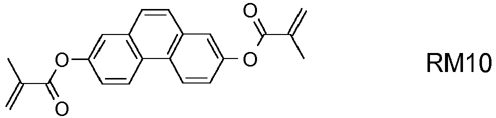 zugesetzt.

Die PS-VA-Mischung wird in eine Zelle mit homöotroper Orientierung gefüllt. Nach Anlegen einer Spannung von 24 V wird mit einer Leistung von 100 mW/cm² mit UV-Licht bestrahlt. Danach sind die Tiltwinkel eingestellt:

### Beispiel M21

| | | | |
|---|---|---|---|
| CY-3-O2 | 10,00 % | Klärpunkt [°C]: | 74,5 |
| COY-3-O2 | 7,00 % | Δn [589 nm, 20 °C]: | 0,1069 |
| CCY-3-O2 | 11,00 % | Δε [1 kHz, 20 °C]: | -3,1 |
| CPY-2-O2 | 9,00 % | K₁[pN, 20 °C]: | 13,6 |
| CPY-3-O2 | 10,00 % | K₃[pN, 20 °C]: | 14,3 |
| CCH-23 | 24,00 % | γ₁ [mPa·s, 20 °C]: | 105 |
| CCH-34 | 5,00 % | V₀ [20 °C, V]: | 2,26 |
| PYP-2-3 | 7,00 % | | |
| PYP-2-4 | 7,00 % | | |
| CC-3-V1 | 8,00 % | | |
| PCH-301 | 2,00 % | | |

### Beispiel M22

| | | | |
|---|---|---|---|
| COY-3-O2 | 16,00 % | Klärpunkt [°C]: | 74,5 |
| CCY-3-O2 | 11,00 % | Δn [589 nm, 20 °C]: | 0,1068 |
| CPY-2-O2 | 8,00 % | Δε [1 kHz, 20 °C]: | -3,0 |
| CPY-3-O2 | 10,00 % | K₁[pN, 20 °C]: | 13,8 |
| CCH-23 | 24,00 % | K₃[pN, 20 °C]: | 14,5 |
| CCH-34 | 6,00 % | γ₁ [mPa·s, 20 °C]: | 105 |
| PYP-2-3 | 10,00 % | V₀ [20 °C, V]: | 2,29 |
| PYP-2-4 | 5,00 % | | |
| CC-3-V1 | 8,00 % | | |
| PCH-301 | 2,00 % | | |

### Beispiel M23

| | | | |
|---|---|---|---|
| COY-3-O2 | 15,00 % | Klärpunkt [°C]: | 74,5 |
| CCOY-3-O2 | 5,00 % | Δn [589 nm, 20 °C]: | 0,1069 |
| CCY-3-O2 | 6,00 % | Δε [1 kHz, 20 °C]: | -3,0 |
| CPY-2-O2 | 8,00 % | K₁[pN, 20 °C]: | 14,0 |
| CPY-3-O2 | 10,00 % | K₃[pN, 20 °C]: | 14,7 |
| CCH-23 | 24,00 % | γ₁ [mPa·s, 20 °C]: | 104 |
| CCH-34 | 5,00 % | V₀ [20 °C, V]: | 2,34 |
| PYP-2-3 | 10,00 % | | |
| PYP-2-4 | 5,00 % | | |
| CC-3-V1 | 10,00 % | | |
| PCH-301 | 2,00 % | | |

### Beispiel M24

| | | | |
|---|---|---|---|
| COY-3-O2 | 19,00 % | Klärpunkt [°C]: | 70,0 |
| CPY-2-O2 | 9,00 % | Δn [589 nm, 20 °C]: | 0,1186 |
| CPY-3-O2 | 11,00 % | Δε [1 kHz, 20 °C]: | -3,1 |
| CLY-3-O2 | 5,00 % | K₁[pN, 20 °C]: | 12,1 |
| PYP-2-3 | 11,00 % | K₃[pN, 20 °C]: | 13,5 |
| PYP-2-4 | 5,50 % | γ₁ [mPa·s, 20 °C]: | 115 |
| CCH-35 | 6,00 % | V₀ [20 °C, V]: | 2,17 |
| CCH-23 | 19,00 % | | |
| PCH-301 | 11,50 % | | |
| CPGP-4-3 | 3,00 % | | |

### Beispiel M25

| | | | |
|---|---|---|---|
| COY-3-O2 | 24,00 % | Klärpunkt [°C]: | 70,0 |
| CPY-2-O2 | 11,00 % | Δn [589 nm, 20 °C]: | 0,1183 |
| CPY-3-O2 | 11,00 % | Δε [1 kHz, 20 °C]: | -3,0 |
| CLY-3-O2 | 3,00 % | K₁[pN, 20 °C]: | 13,0 |
| PGP-2-3 | 5,00 % | K₃[pN, 20 °C]: | 14,1 |
| PGP-2-4 | 6,00 % | γ₁ [mPa·s, 20 °C]: | 114 |
| PGP-2-5 | 6,00 % | V₀ [20 °C, V]: | 2,17 |
| CCH-35 | 6,00 % | | |
| CCH-23 | 19,00 % | | |
| PCH-301 | 6,50 % | | |
| CPGP-4-3 | 2,50 % | | |

### Beispiel M26

| | | | |
|---|---|---|---|
| CCH-23 | 15,50 % | Klärpunkt [°C]: | 74,5 |
| PCH-301 | 7,00 % | Δn [589 nm, 20 °C]: | 0,1416 |
| PGP-2-3 | 4,00 % | Δε [1 kHz, 20 °C]: | -2,9 |
| PGP-2-4 | 7,00 % | K₁[pN, 20 °C]: | 12,4 |
| PGP-2-5 | 7,00 % | K₃[pN, 20 °C]: | 14,1 |
| COY-3-O2 | 10,50 % | γ₁ [mPa·s, 20 °C]: | 147 |
| CY-3-O2 | 10,00 % | V₀ [20 °C, V]: | 2,24 |
| CCY-3-O2 | 9,00 % | | |
| CPY-2-O2 | 7,00 % | | |
| CPY-3-O2 | 8,00 % | | |
| PYP-2-3 | 7,00 % | | |
| PYP-2-4 | 8,00 % | | |

## Patentansprüche

1. Flüssigkristallines Medium auf der Basis eines Gemisches von polaren Verbindungen, **dadurch gekennzeichnet, dass** es mindestens eine Verbindung der Formel I, 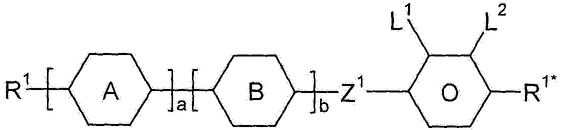 worin
R¹ und R^{1*} jeweils unabhängig voneinander einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 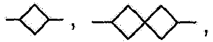 -O-, -CO-O-, -O-CO- so ersetzt sein können, dass O-Atome nicht direkt miteinander verknüpft sind, und worin auch ein oder mehrere H-Atome durch Halogen ersetzt sein können,
Z¹ -CH₂O- oder -OCH₂-
a 0, 1 oder 2
b 1 oder 2, 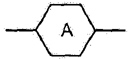
und 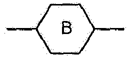 jeweils unabhängig voneinander 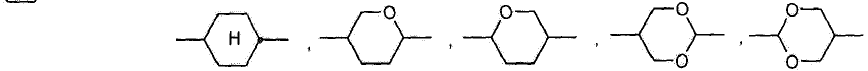 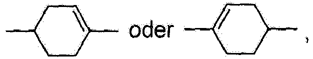
L¹ und L² jeweils unabhängig voneinander F, Cl, CF₃, OCF₃ oder CHF2,
bedeuten, und zusätzlich
ein oder mehrere Stabilisatoren
enthält.

2. Flüssigkristallines Medium nach Anspruch 1, **dadurch gekennzeichnet, dass** es eine oder mehrere Verbindungen ausgewählt aus der Gruppe der Verbindungen
(n = 1-12) 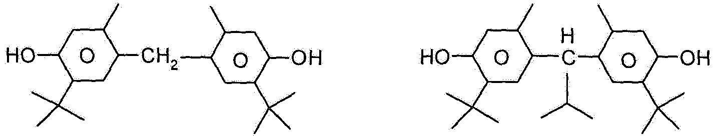 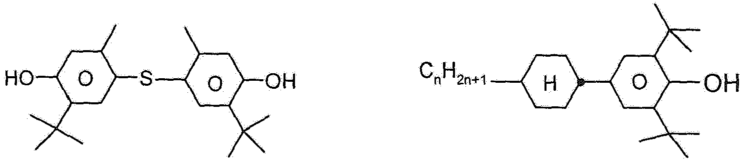 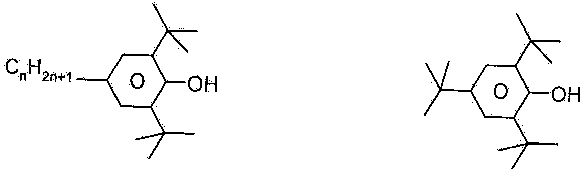 n = 1, 2, 3, 4, 5, 6 oder 7 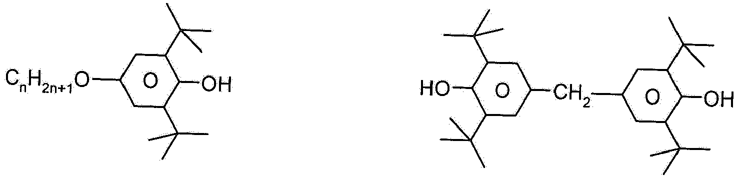 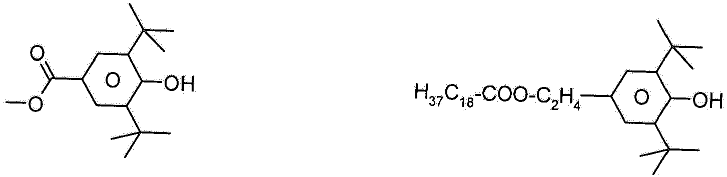 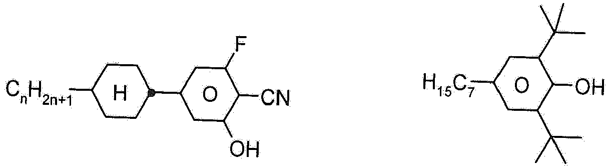 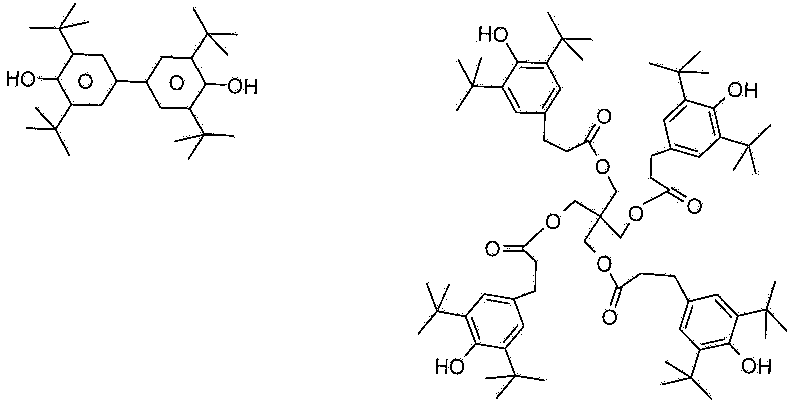 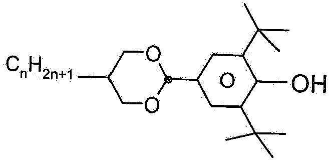 n = 1, 2, 3, 4, 5, 6 oder 7 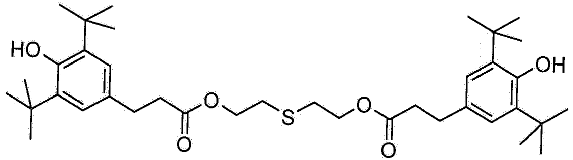 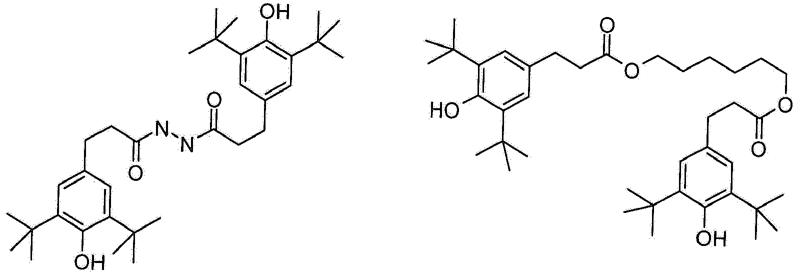 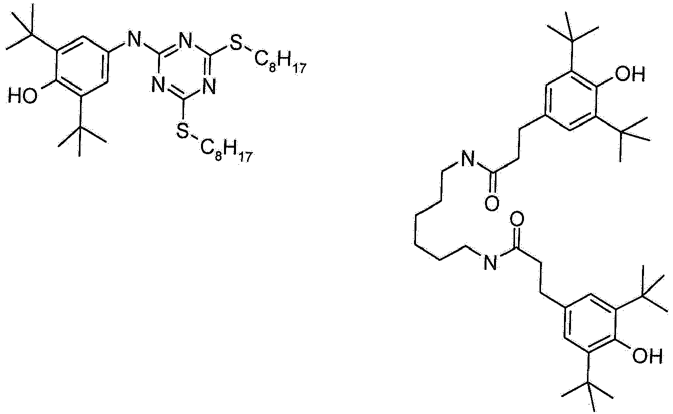 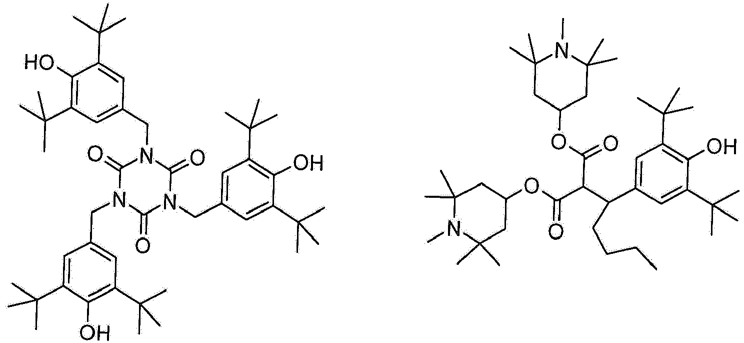 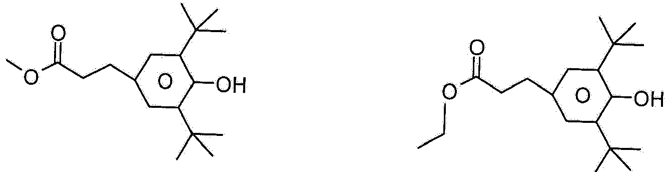 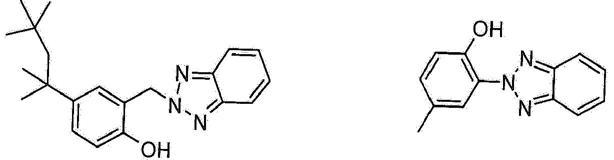 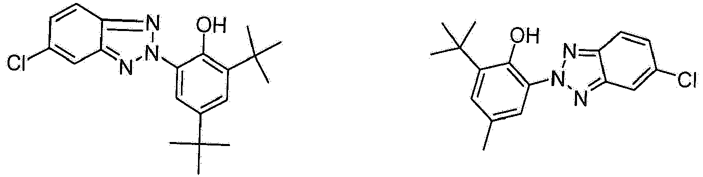 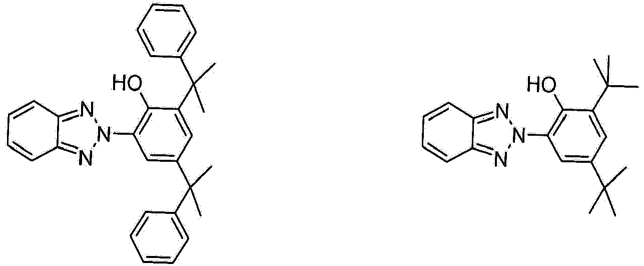 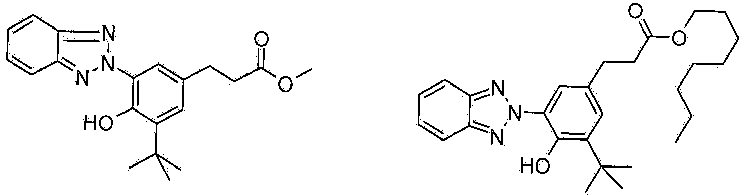 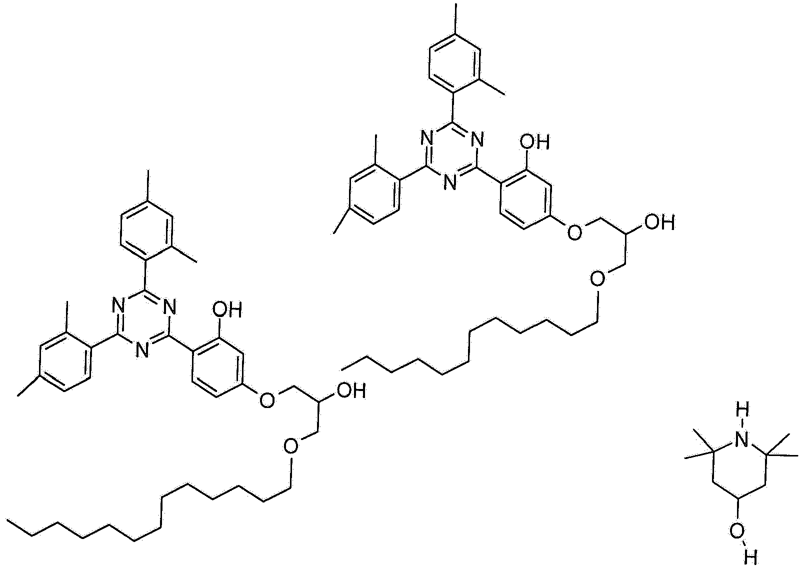 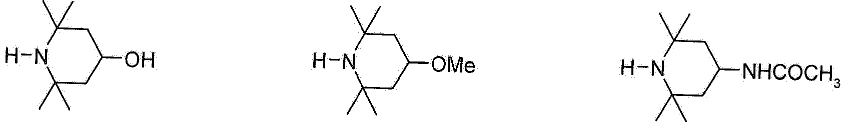 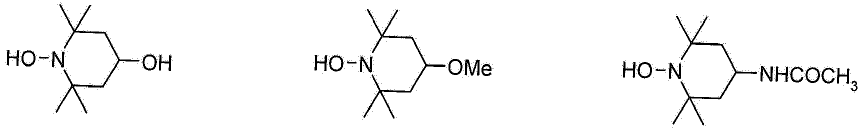 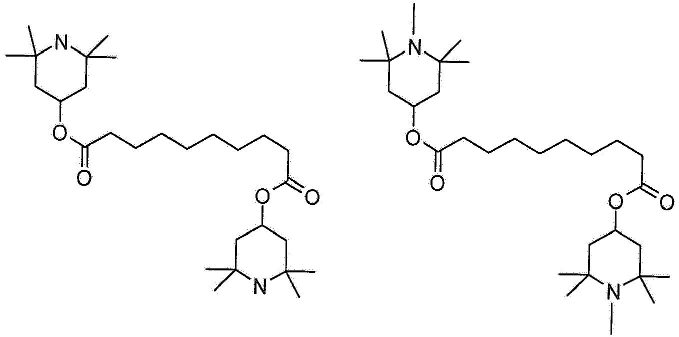 enthält.

3. Flüssigkristallines Medium nach Anspruch 1 oder 2, **dadurch gekennzeichnet, dass** es zusätzlich eine oder mehrere Verbindungen ausgewählt aus der Gruppe der Verbindungen der Formeln IIA, IIB und IIC, 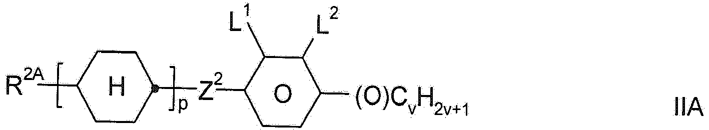 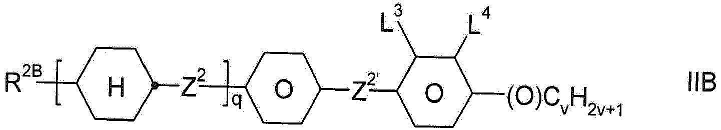 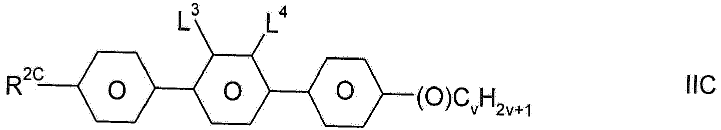 worin
R^{2A}, R^{2B} und R^{2C} jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 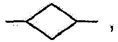 -C≡C-, -CF₂O-, -OCF₂-, -OC-O- oder-O-CO- so ersetzt sein können, dass O-Atome nicht direkt miteinander verknüpft sind,
L¹⁻⁴ jeweils unabhängig voneinander F oder Cl,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p 1 oder 2,
q 0 oder 1, und
v 1 bis 6
bedeuten,
enthält.

4. Flüssigkristallines Medium nach einem oder mehreren der Ansprüche 1 bis 3, **dadurch gekennzeichnet, dass** es zusätzlich eine oder mehrere Verbindungen der Formel III, 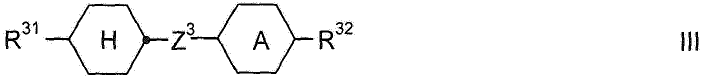 worin
R³¹ und R³² jeweils unabhängig voneinander einen geradkettigen Alkyl-, Alkoxyalkyl- oder Alkoxyrest mit bis zu 12 C-Atomen, und 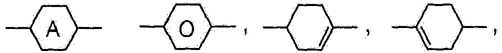 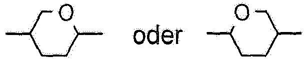
Z³ Einfachbindung, -CH₂CH₂-, -CH=CH-, -CF₂O-, -OCF₂-,-CH₂O-, -OCH₂-, -COO-, -OCO-, -C₂F₄-, -C₄H₉-, -CF=CF-
bedeuten,
enthält.

5. Flüssigkristallines Medium nach einem oder mehreren der Ansprüche 1 bis 4, **dadurch gekennzeichnet, dass** das Medium mindestens eine Verbindung der Formeln I-1 bis I-192, 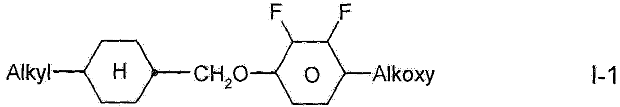 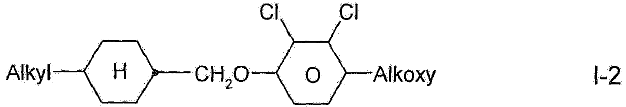 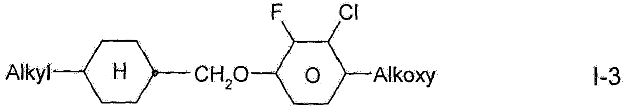 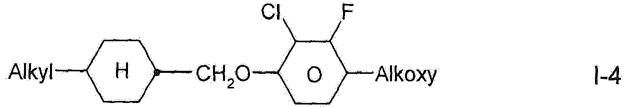 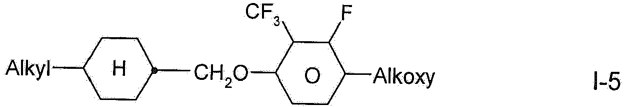 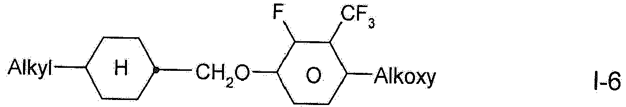 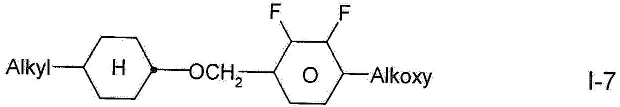 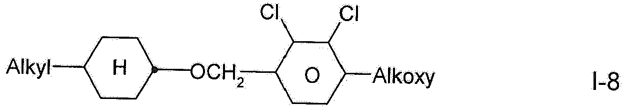 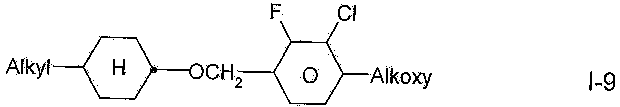 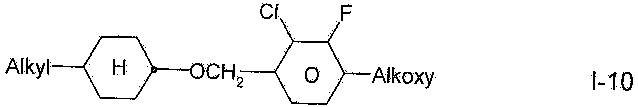 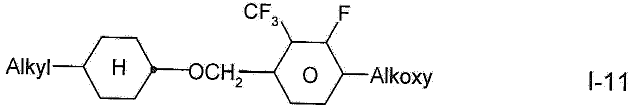 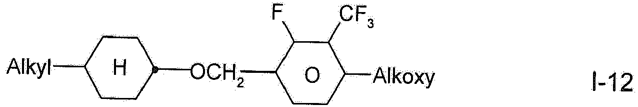 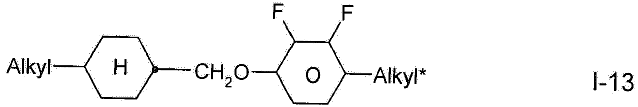 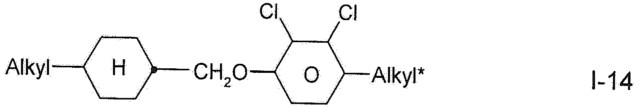 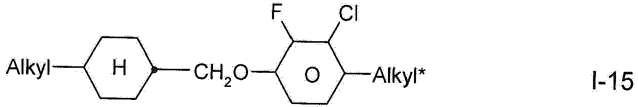 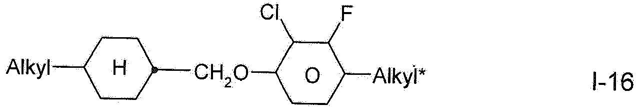 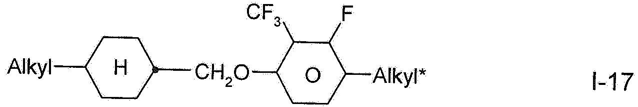 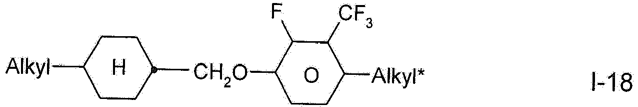 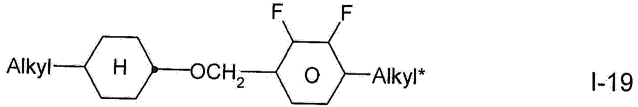 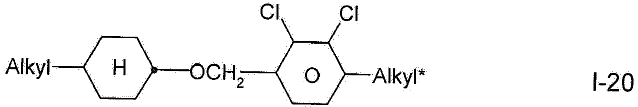 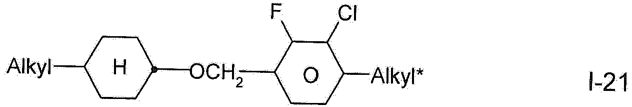 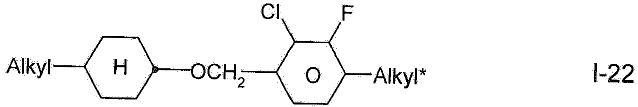 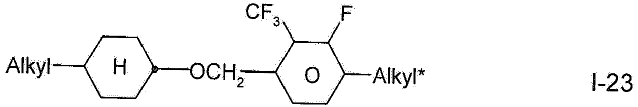 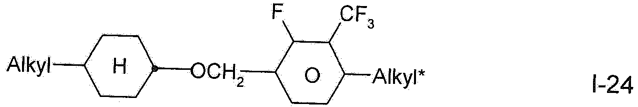 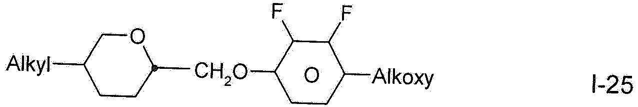 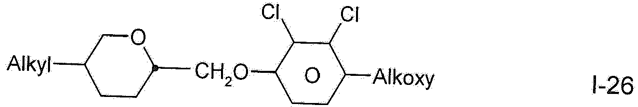 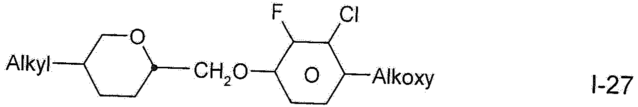 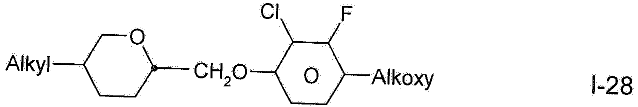 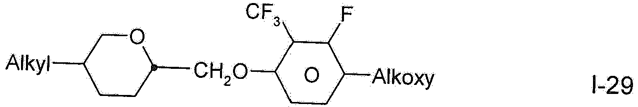 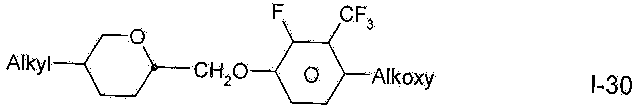 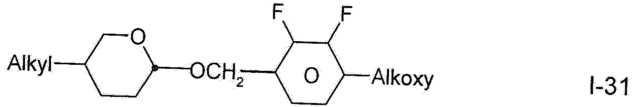 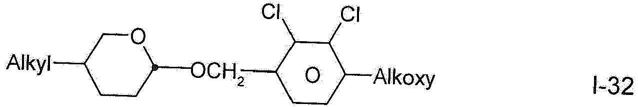 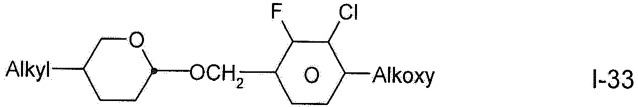 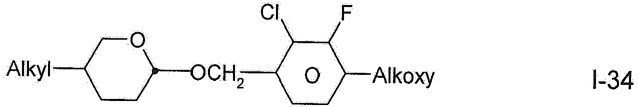 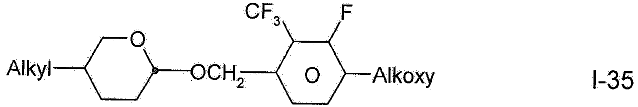 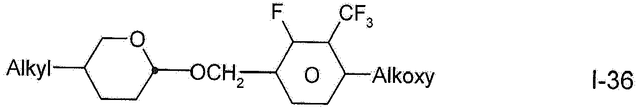 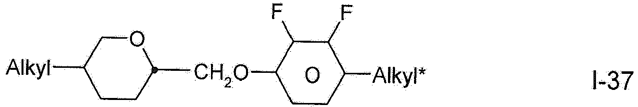 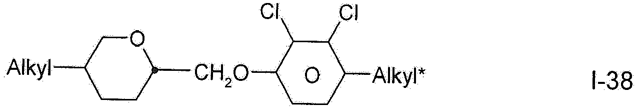 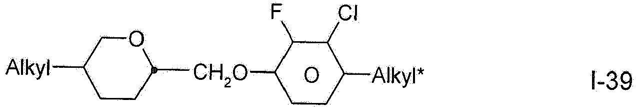 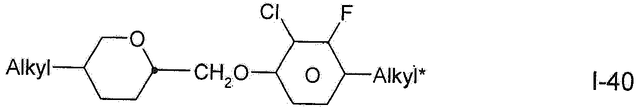 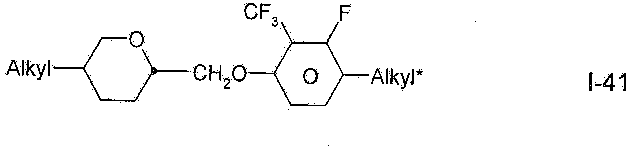 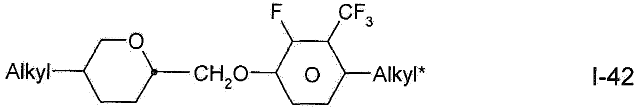 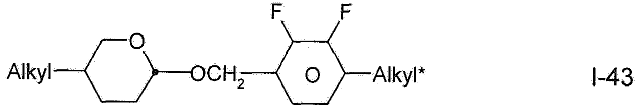 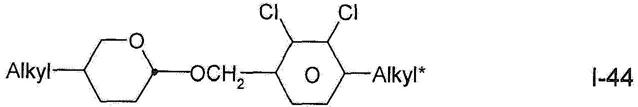 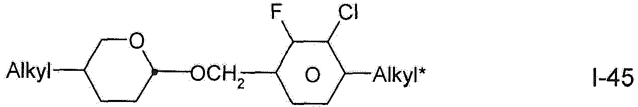 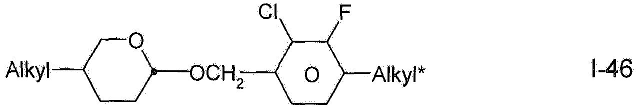 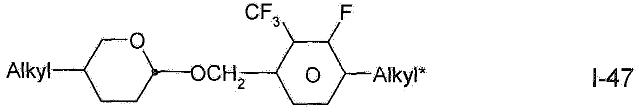 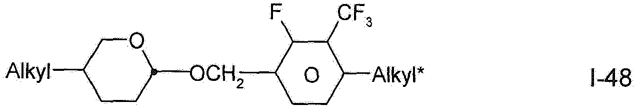 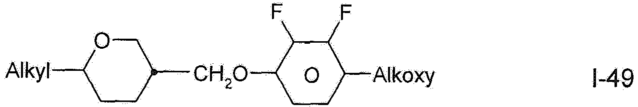 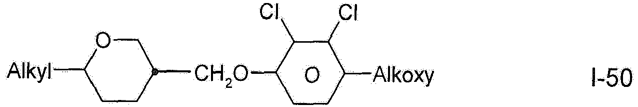 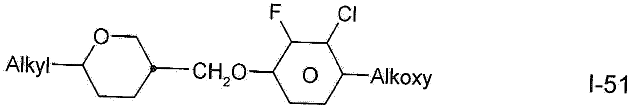 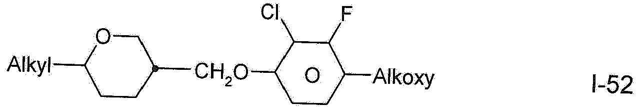 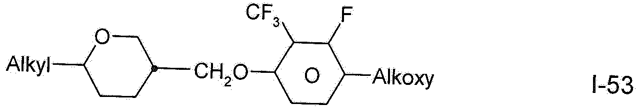 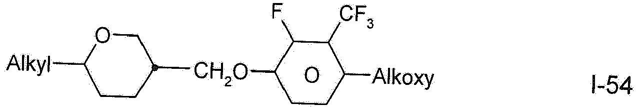 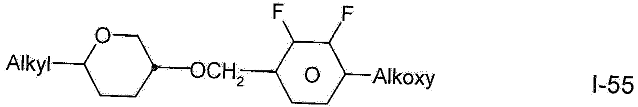 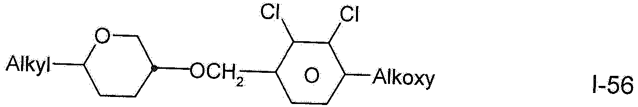 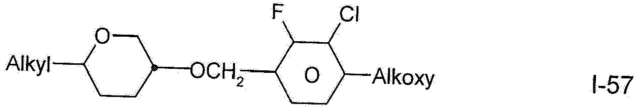 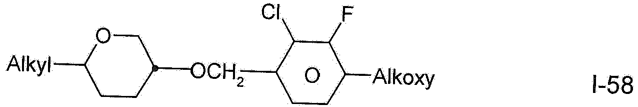 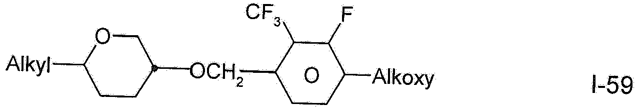 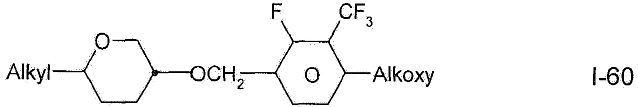 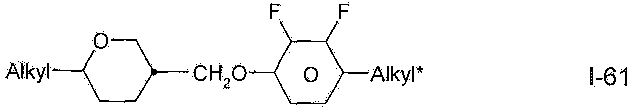 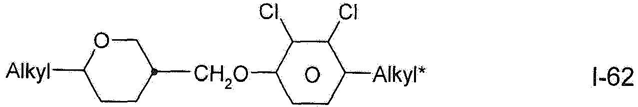 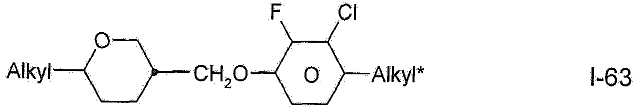 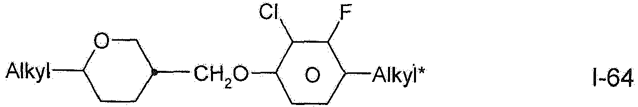 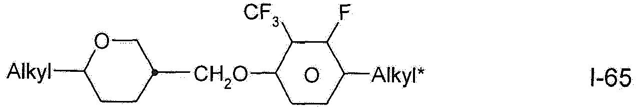 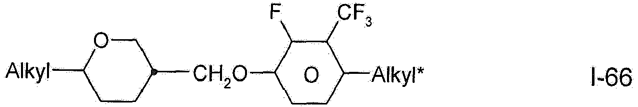 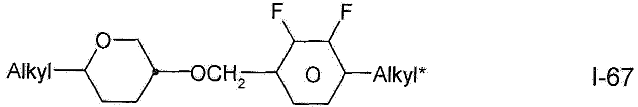 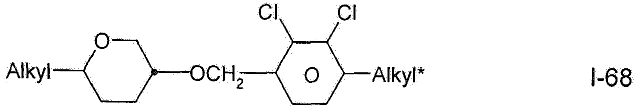 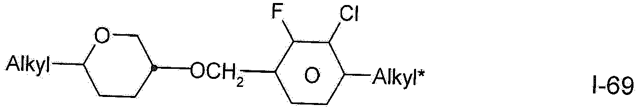 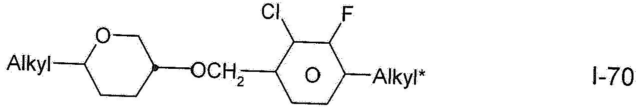 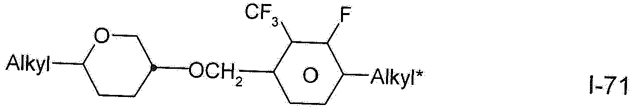 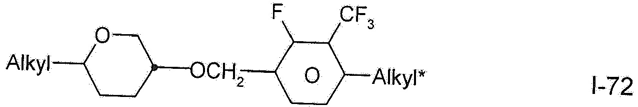 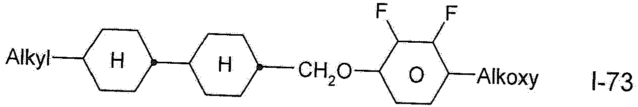 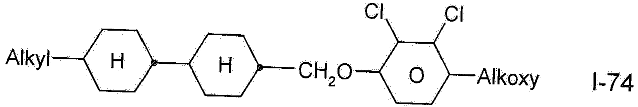 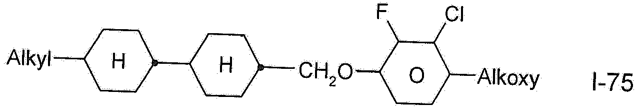 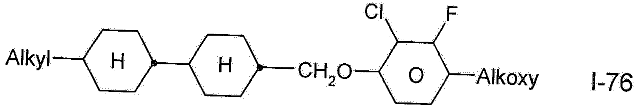 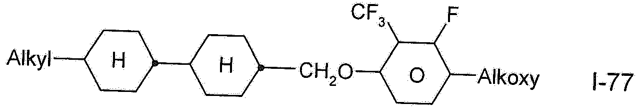 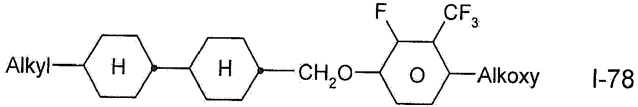 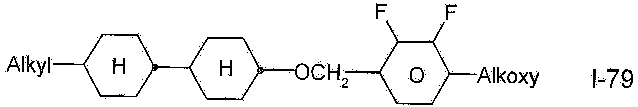 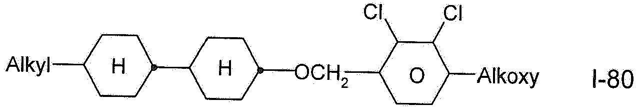 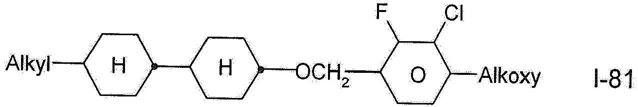 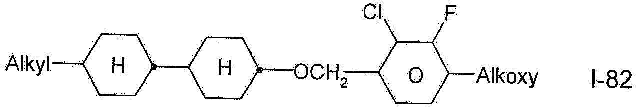 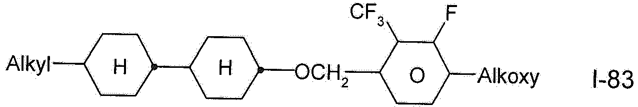 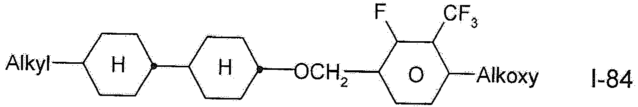 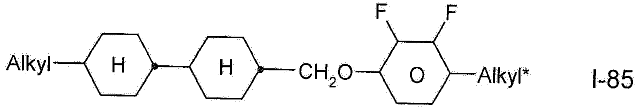 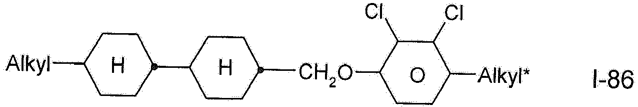 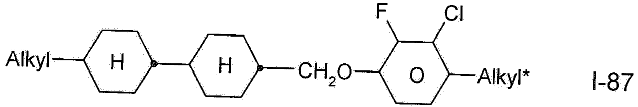 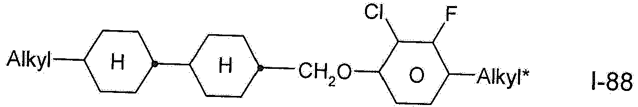 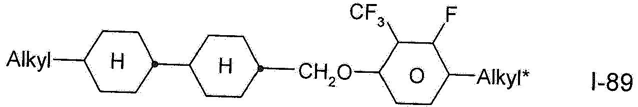 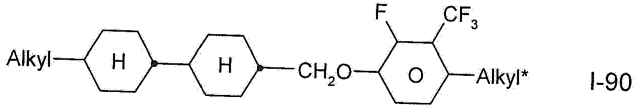 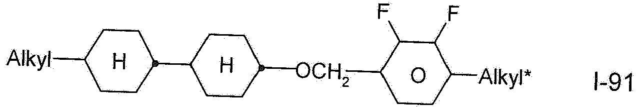 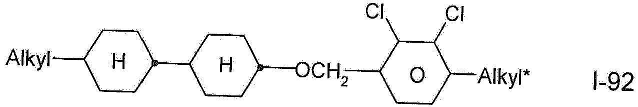 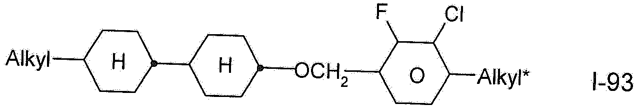 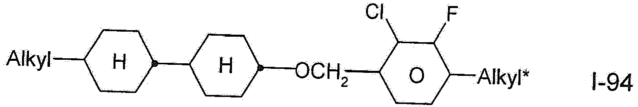 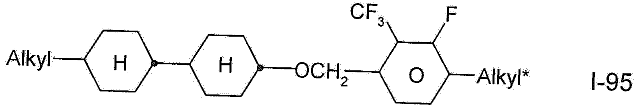 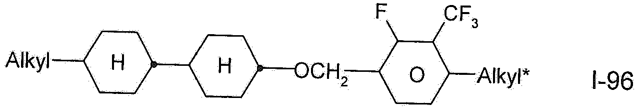 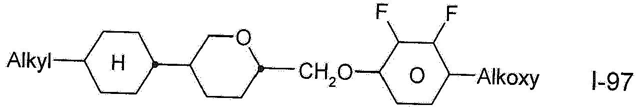 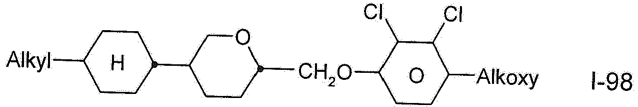 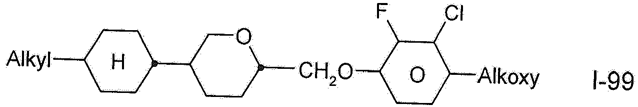 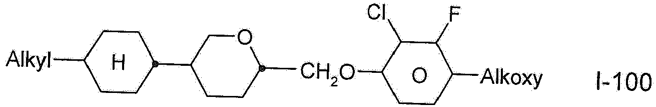 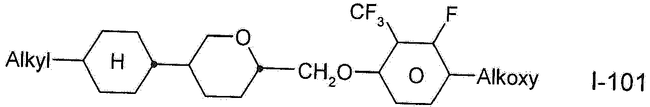 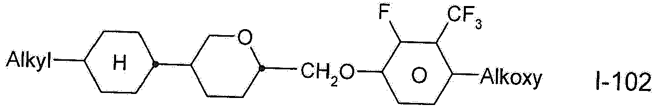 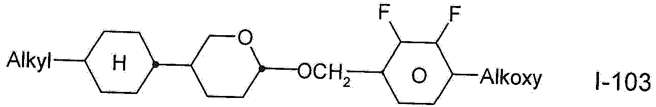 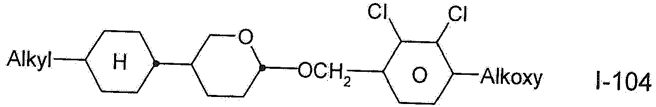 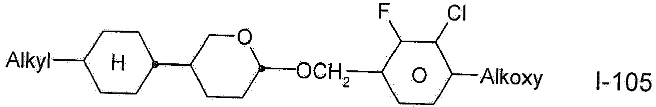 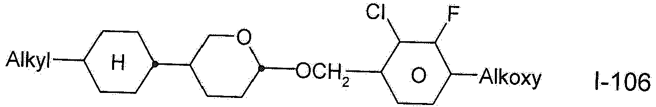 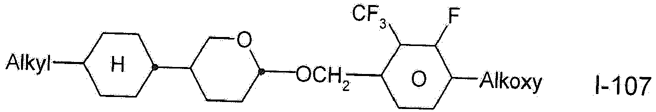 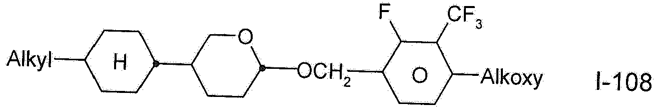 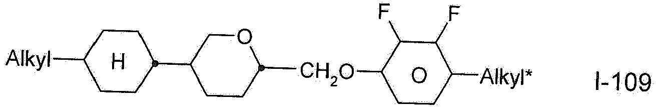 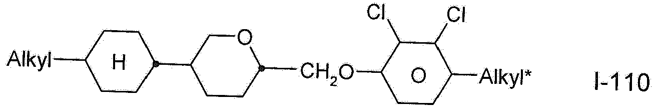 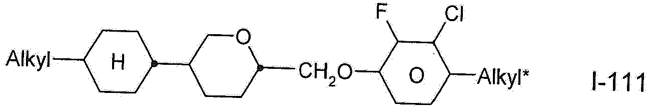 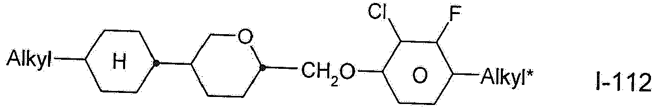 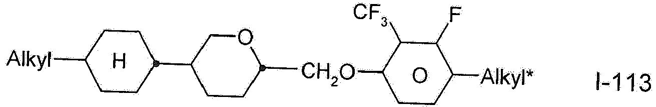 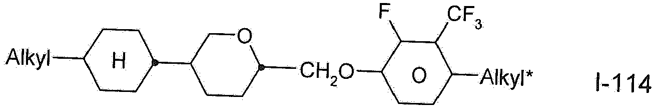 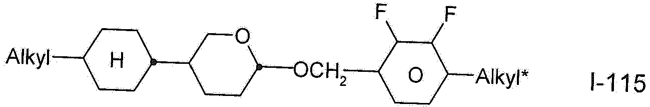 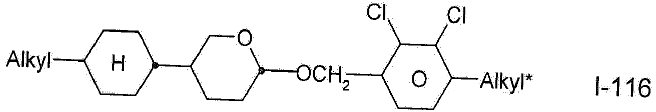 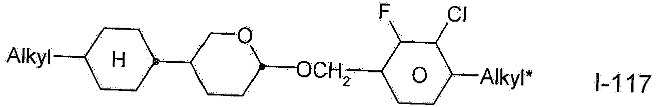 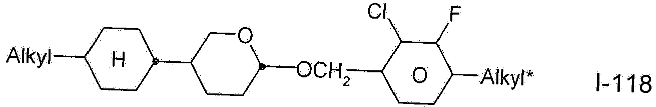 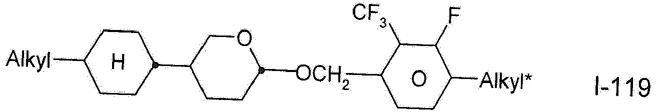 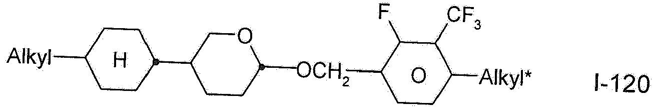 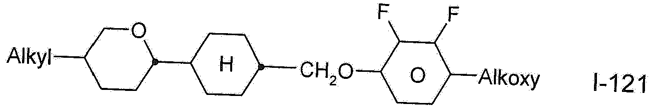 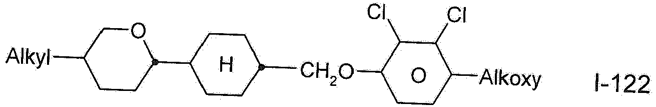 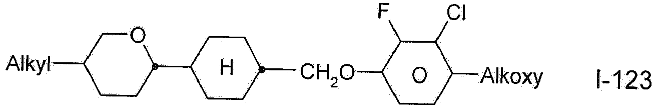 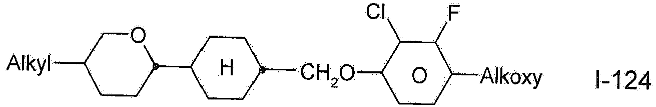 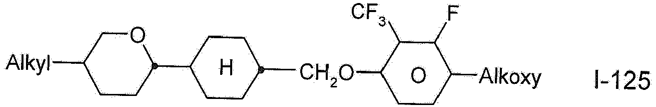 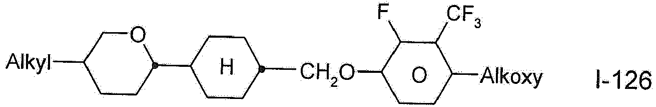 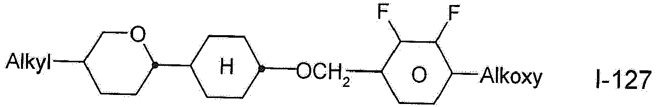 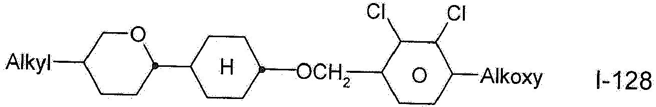 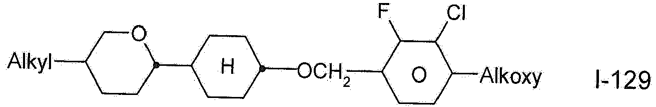 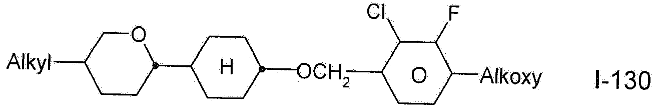 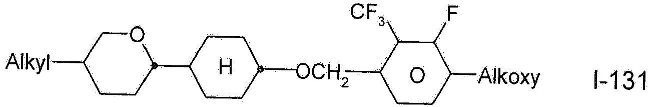 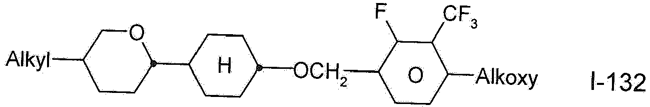 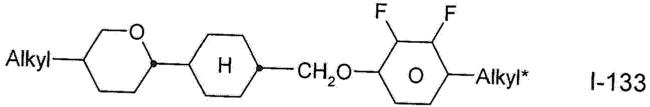 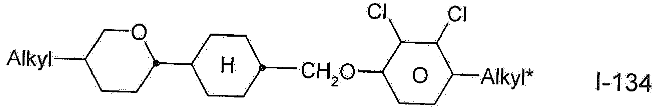 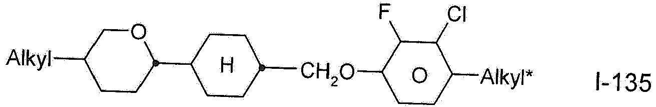 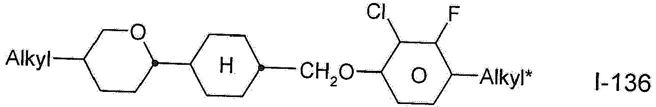 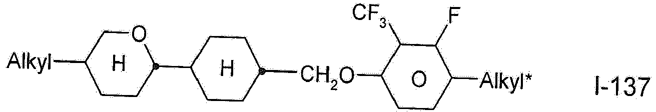 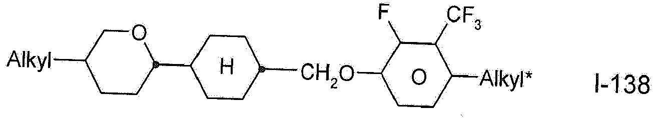 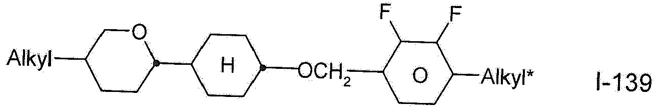 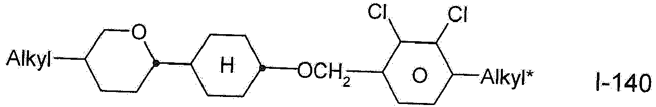 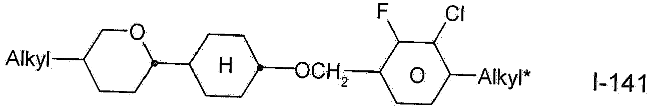 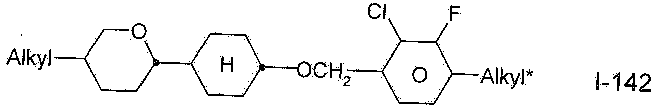 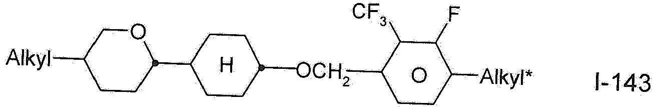 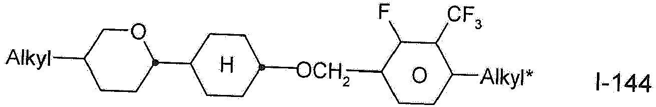 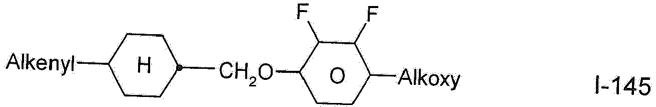 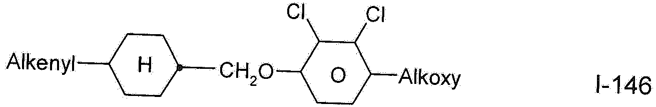 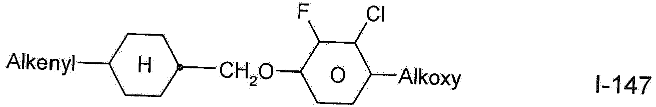 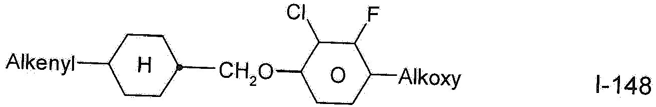 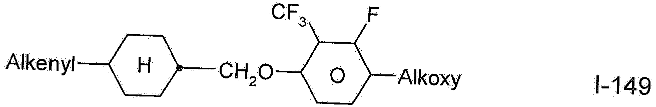 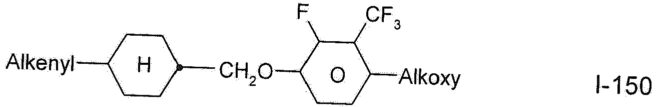 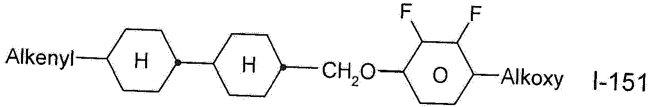 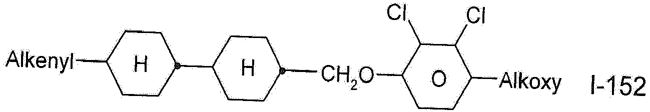 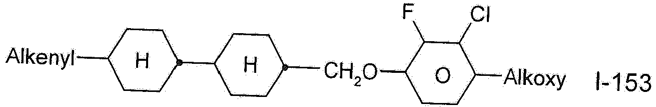 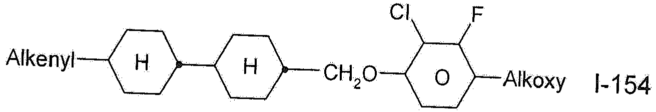 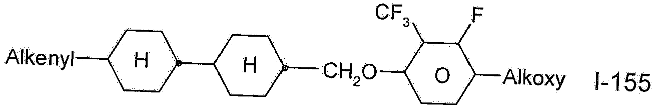 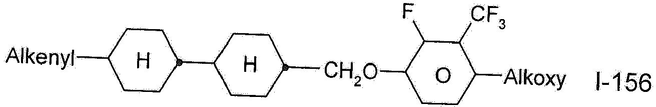 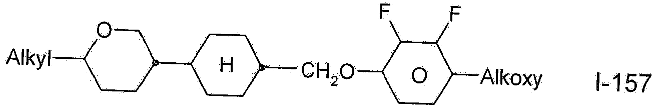 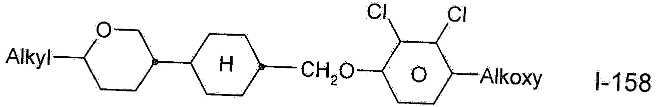 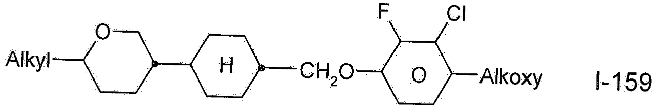 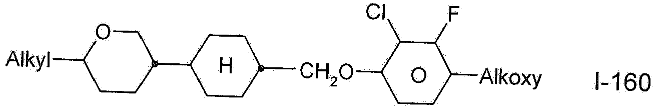 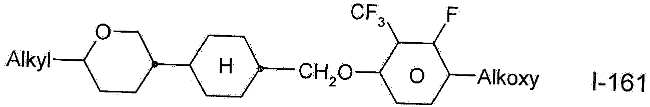 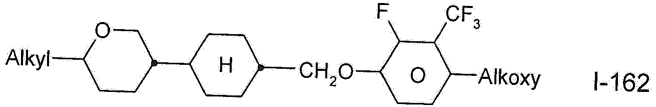 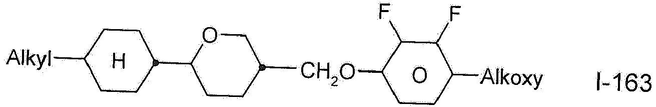 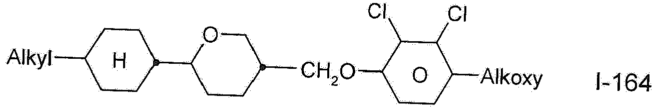 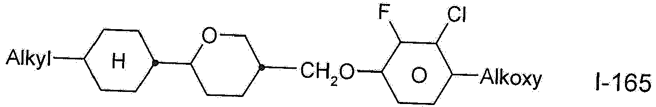 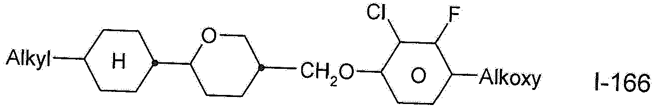 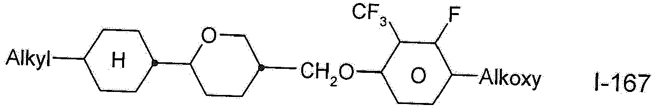 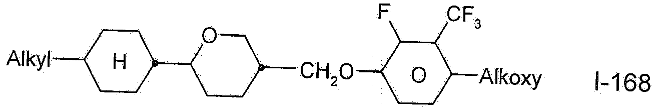 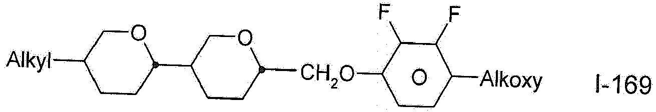 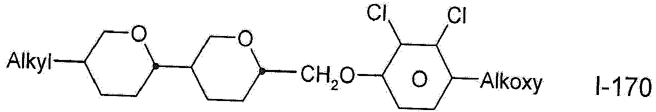 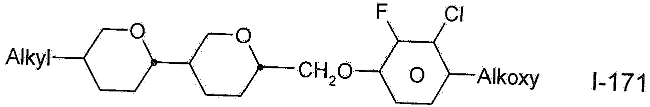 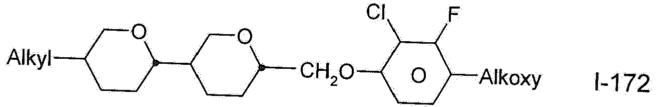 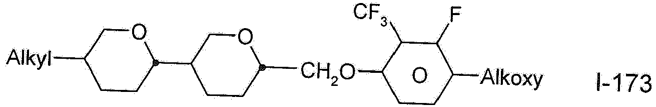 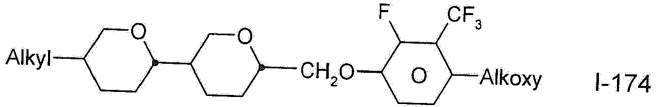 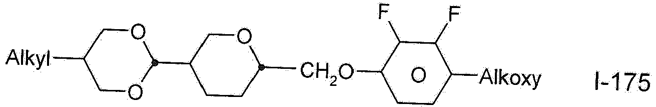 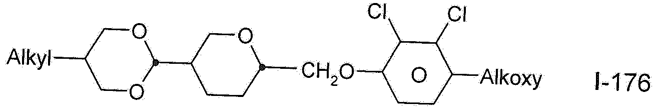 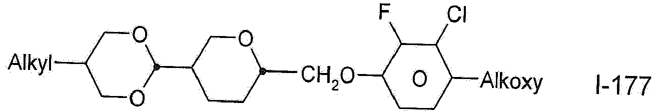 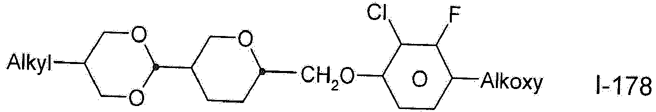 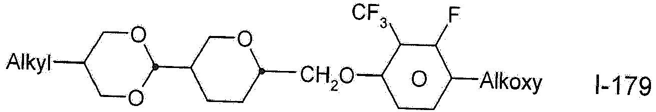 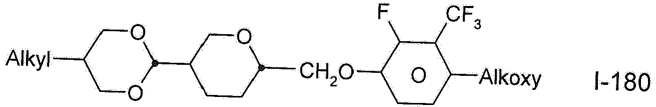 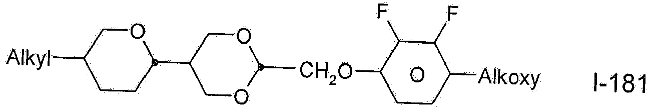 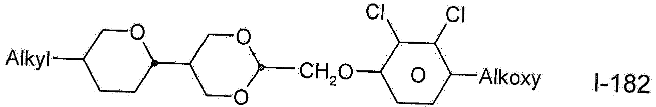 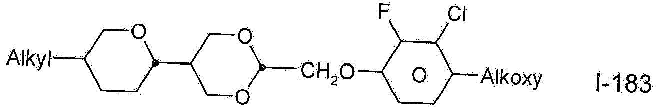 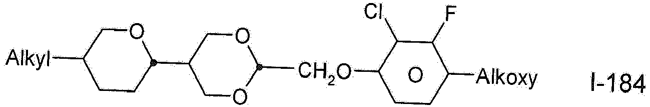 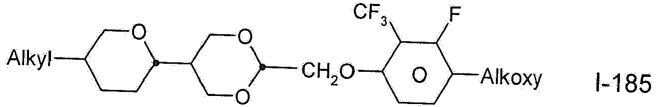 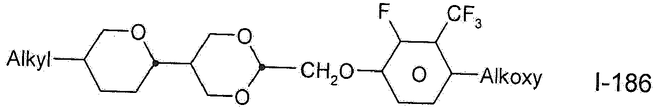 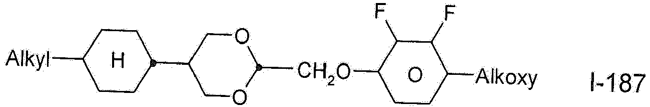 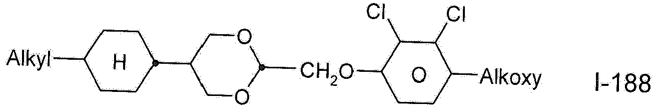 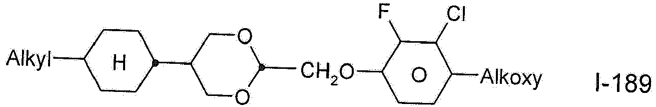 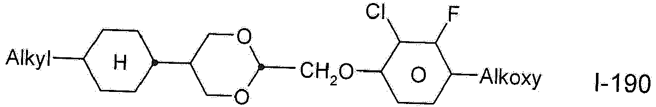 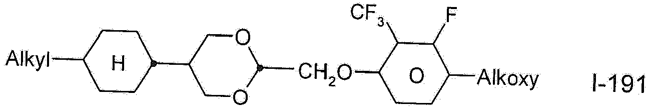 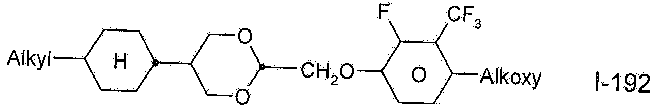 worin
Alkyl und Alkyl* jeweils unabhängig voneinander einen geradkettigen Alkylrest mit 1-6 C-Atomen,
Alkenyl einen geradkettigen Alkenylrest mit 2-6 C-Atomen, und
Alkoxy einen geradkettigen Alkoxyrest mit 1-6 C-Atomen,
bedeuten,
enthält.

6. Flüssigkristallines Medium nach einem oder mehreren der Ansprüche 1 bis 5, **dadurch gekennzeichnet, dass** das Medium zusätzlich eine oder mehrere Verbindungen der L-1 bis L-11, 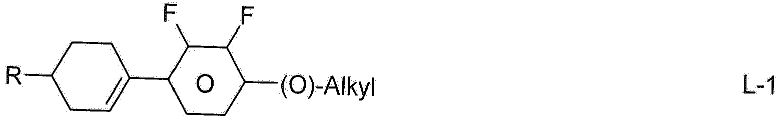 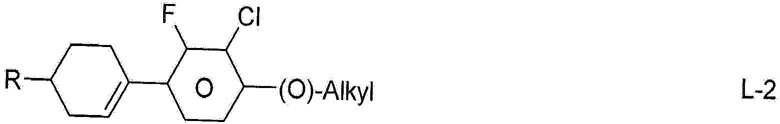 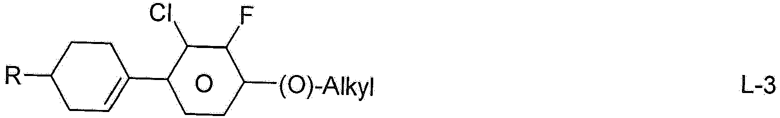 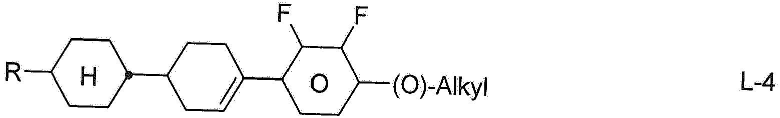 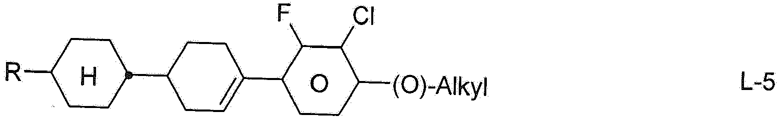 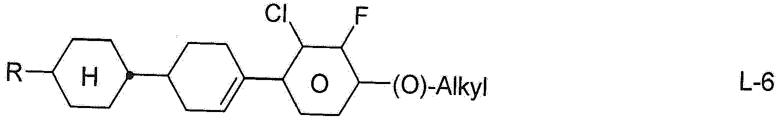 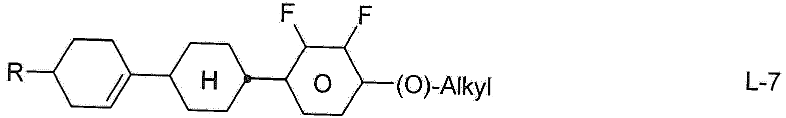 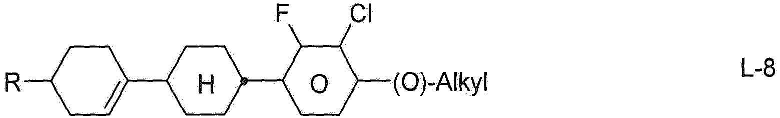 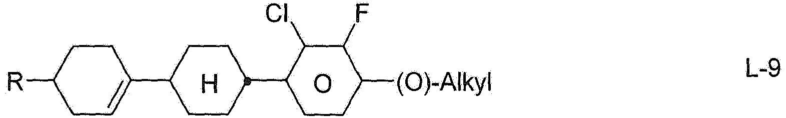 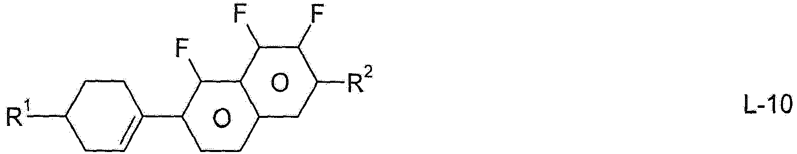 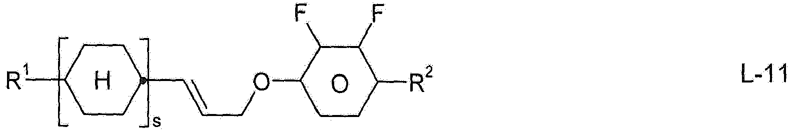 worin
R, R¹ und R² jeweils unabhängig voneinander die für R^{2A} in Anspruch 2 angegebenen Bedeutungen haben und Alkyl ein Alkylrest mit 1-6 C-Atomen, und
s 1 oder 2
bedeuten,
enthält.

7. Flüssigkristallines Medium nach einem oder mehreren der Ansprüche 1 bis 6, **dadurch kennzeichnet, dass** das Medium zusätzlich eine oder mehrere Terphenyle der Formeln T-1 bis T-21, 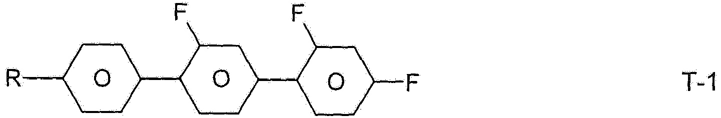 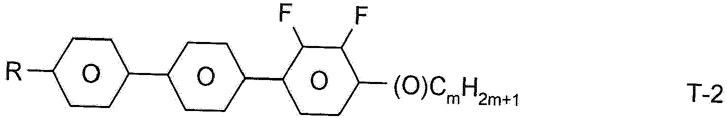 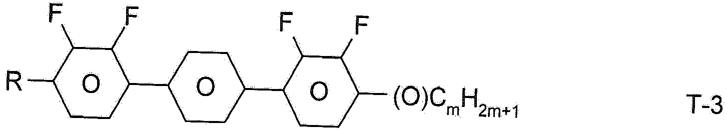 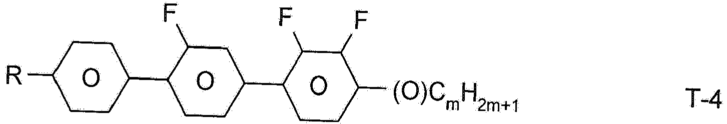 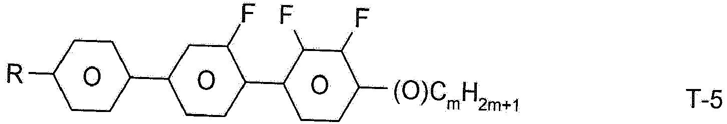 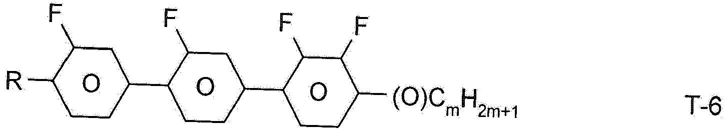 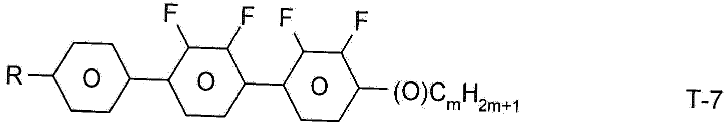 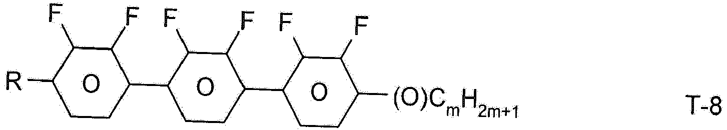 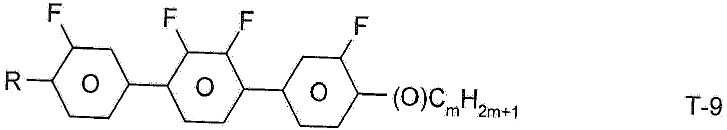 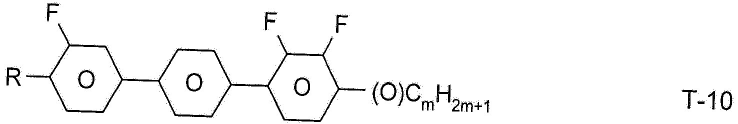 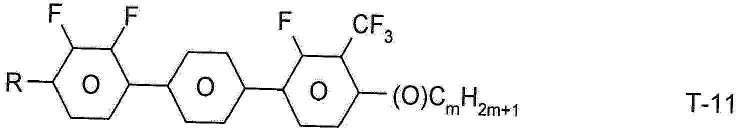 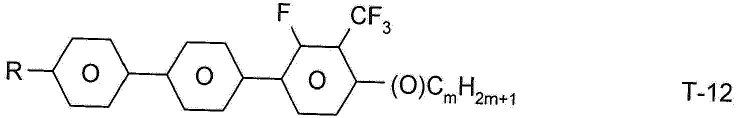 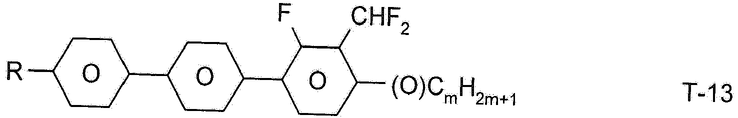 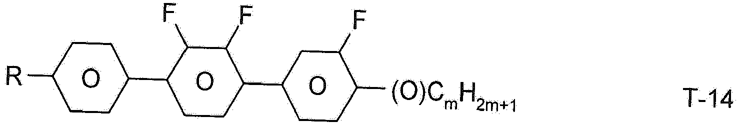 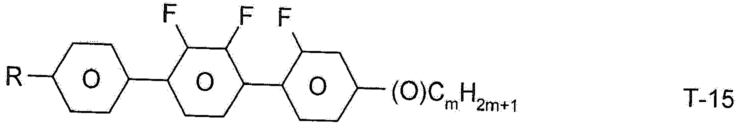 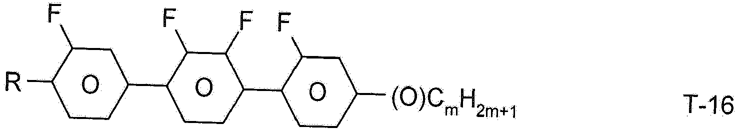 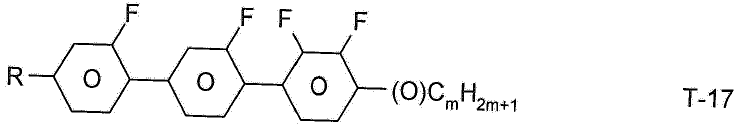 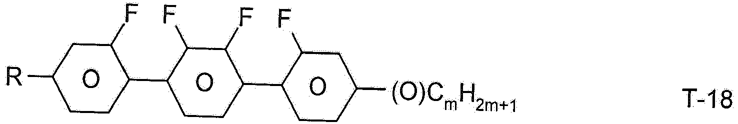 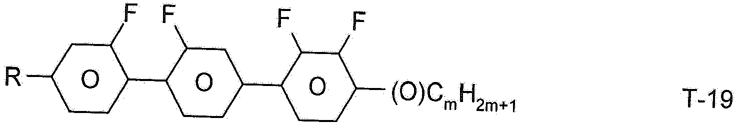 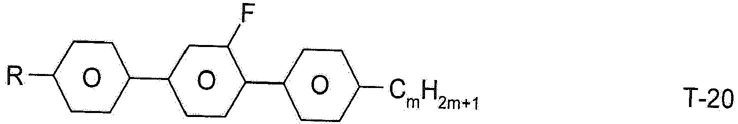 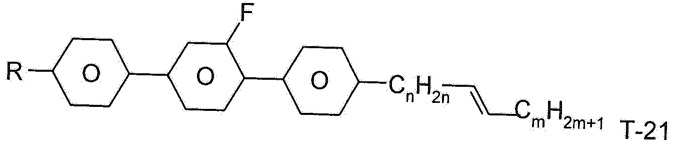 worin
R geradkettiger Alkyl- oder Alkoxyrest mit 1-7 C-Atomen bedeutet, und
m 1-6
bedeuten,
enthält.

8. Flüssigkristallines Medium nach einem oder mehreren der Ansprüche 1 bis 7, **dadurch gekennzeichnet, dass** das Medium zusätzlich eine oder mehrere Verbindungen der Formeln O-1 bis O-16, 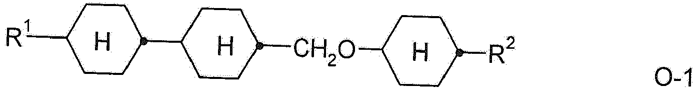 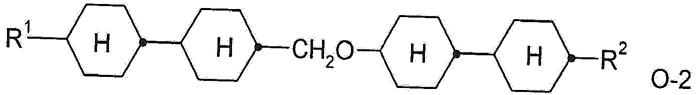 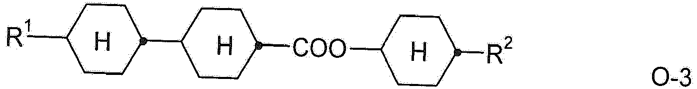 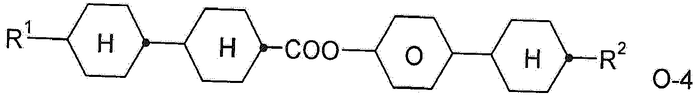 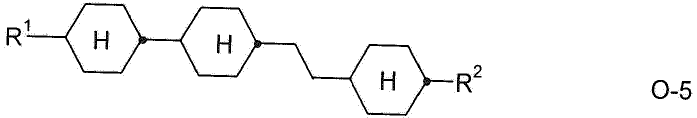 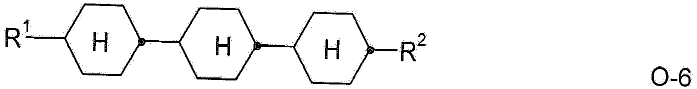 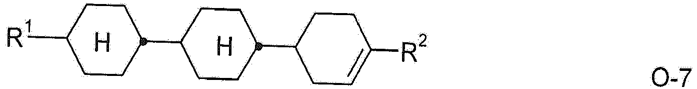 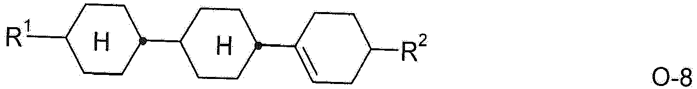 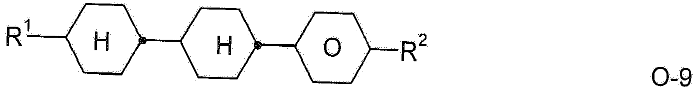 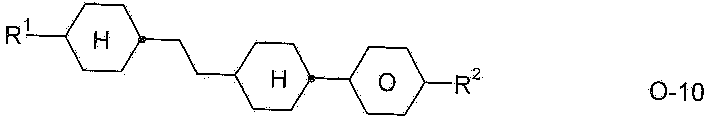 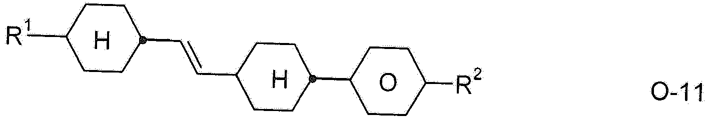 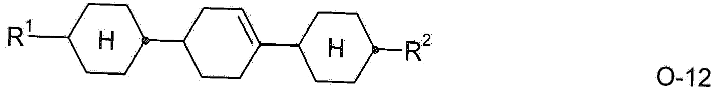 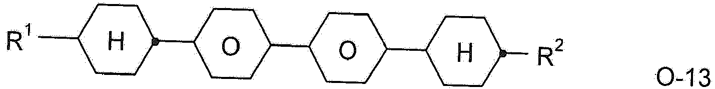 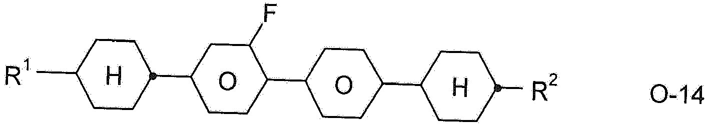 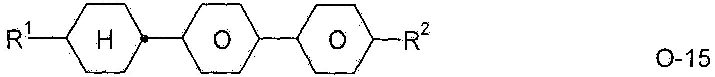 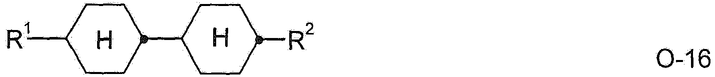 worin
R¹ und R² jeweils unabhängig voneinander die für R^{2A} in Anspruch 2 angegebenen Bedeutungen haben,
enthält.

9. Flüssigkristallines Medium nach einem oder mehreren der Ansprüche 1 bis 8, **dadurch gekennzeichnet, dass** das Medium zusätzlich eine oder mehrere Indan-Verbindungen der Formel In, 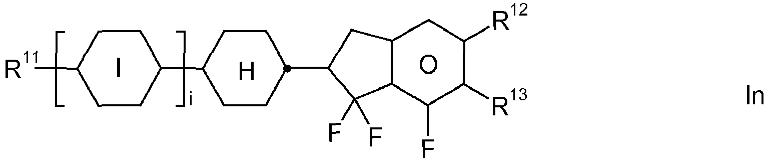 worin
R¹¹, R¹², R¹³ ein geradkettiger Alkyl-, Alkoxy-, Alkoxyalkyl- oder Alkenylrest mit 1-5 C-Atomen,
R¹² und R¹³ zusätzlich auch Halogen, 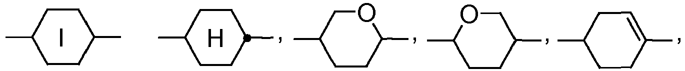 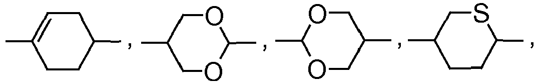 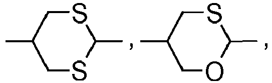
i 0, 1 oder 2
bedeuten,
enthält.

10. Flüssigkristallines Medium nach einem oder mehreren der Ansprüche 1 bis 9, **dadurch gekennzeichnet, dass** der Anteil an Verbindungen der Formel I im Gesamtgemisch ≥ 1 Gew.% beträgt.

11. Flüssigkristallines Medium nach einem oder mehreren der Ansprüche 1 bis 10, **dadurch gekennzeichnet, dass** es zusätzlich eine oder mehrere polymerisierbare Verbindungen enthält und
die Konzentration der polymerisierbaren Verbindung(en) bezogen auf das Medium 0,01 - 5 Gew.% beträgt.

12. Flüssigkristallines Medium nach einem oder mehreren der Ansprüche 1 bis 11, **dadurch gekennzeichnet, dass** die polymerisierbare Verbindung(en) ausgewählt ist aus Verbindungen der Formel I*
R^{a}-A¹-(Z¹-A²)ₘ-R^{b} I*
worin die einzelnen Reste folgende Bedeutung haben
R^{a} und R^{b} jeweils unabhängig voneinander P, P-Sp-, H, Halogen, SF₅, NO₂, eine Kohlenstoffgruppe oder Kohlenwasserstoffgruppe, wobei mindestens einer der Reste R^{a} und R^{b} eine Gruppe P oder P-Sp- bedeutet oder enthält,
P bei jedem Auftreten gleich oder verschieden eine polymerisierbare Gruppe,
Sp bei jedem Auftreten gleich oder verschieden eine Abstandsgruppe oder eine Einfachbindung,
A¹ und A² jeweils unabhängig voneinander eine aromatische, heteroaromatische, alicyclische oder heterocyclische Gruppe, vorzugsweise mit 4 bis 25 Ringatomen, welche auch annellierte Ringe enthalten kann, und welche auch durch L ein- oder mehrfach substituiert sein kann,
L P-Sp-, H, OH, CH₂OH, Halogen, SF₅, NO₂, eine Kohlenstoffgruppe oder Kohlenwasserstoffgruppe,
Z¹ bei jedem Auftreten gleich oder verschieden -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ oder eine Einfachbindung,
R⁰ und R⁰⁰ jeweils unabhängig voneinander H oder Alkyl mit 1 bis 12 C-Atomen,
m 0, 1, 2, 3 oder 4,
n1 1, 2, 3 oder 4.

13. Verfahren zur Herstellung eines flüssigkristallinen Mediums nach einem oder mehreren der Ansprüche 1 bis 12, **dadurch gekennzeichnet, dass** man mindestens eine Verbindung der Formel I mit mindestens einer weiteren mesogenen Verbindung mischt und gegebenenfalls ein oder mehrere Additive und/oder ein oder mehrere polymerisierbare Verbindungen zusetzt.

14. Verwendung des flüssigkristallinen Mediums nach einem oder mehreren der Ansprüche 1 bis 13 in elektrooptischen Anzeigen.

15. Verwendung des flüssigkristallinen Mediums nach einem oder mehreren der Ansprüche 1 bis 14 in VA-, PVA und PS-VA-, IPS-, PS-IPS-, FFS-, PS-FFS- oder PALC-Anzeigen.

16. Verwendung des flüssigkristallines Mediums nach einem oder mehreren der Ansprüche 10 bis 12 in PS- und PSA-Anzeigen zur Erzeugung eines Tiltwinkels im flüssigkristallinen Medium durch in situ-Polymerisation der polymerisierbare(n) Verbindung(en) in der PSA-Anzeige unter Anlegen eines elektrischen oder magnetischen Feldes.

17. Elektrooptische Anzeige mit einer Aktivmatrix-Addressierung, **dadurch gekennzeichnet, dass** sie als Dielektrikum ein flüssigkristallines Medium nach einem oder mehreren der Ansprüche 1 bis 12 enthält.

18. Elektrooptische Anzeige nach Anspruch 17, **dadurch gekennzeichnet, dass** es sich um eine VA-, PSA-, PS-VA-, PALC-, FFS-, PS-FFS-, PS-IPS-Anzeige handelt.

19. Elektrooptische Anzeige nach Anspruch 17 oder 18, enthaltend eine FK-Zelle bestehend aus zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines Flüssigkristallines Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im Flüssigkristallines Medium, vorzugsweise unter Anlegen einer elektrischen Spannung an die Elektroden, und wobei die niedermolekulare Komponente ein flüssigkristallines Medium nach einem oder mehreren der Ansprüche 1 bis 12 ist.

## Claims

1. Liquid-crystalline medium based on a mixture of polar compounds, **characterised in that** it comprises at least one compound of the formula I, 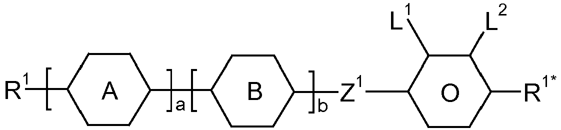 in which
R¹ and R^{1*} in each case, independently of one another, denote an alkyl or alkoxy radical having 1 to 15 C atoms, where, in addition, one or more CH₂ groups in these radicals may each be replaced, independently of one another, by -C≡C-, -CF₂O-, -CH=CH-, 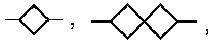 -O-, -CO-O-, -O-CO- in such a way that O atoms are not linked directly to one another, and in which, in addition, one or more H atoms may be replaced by halogen,
Z¹ denotes -CH₂O- or -OCH₂-
a denotes 0, 1 or 2
b denotes 1 or 2, 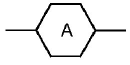
and 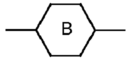 in each case, independently of one another, denote 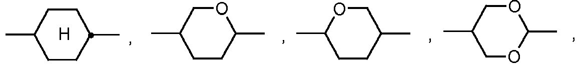 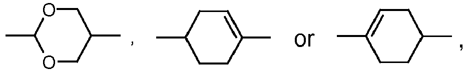
L¹ and L² in each case, independently of one another, denote F, CI, CF₃, OCF₃ or CHF₂,
and additionally
one or more stabilisers.

2. Liquid-crystalline medium according to Claim 1, **characterised in that** it comprises one or more compounds selected from the group of the compounds
(n = 1-12) 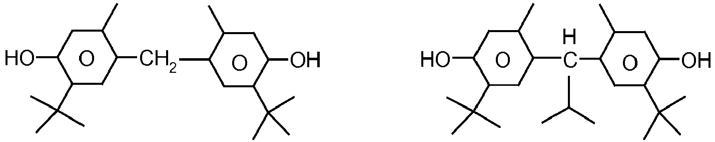 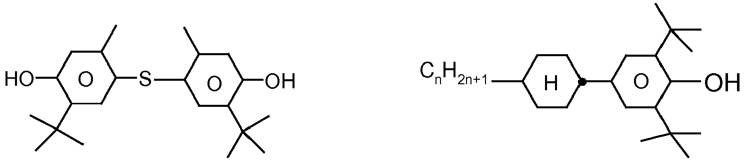 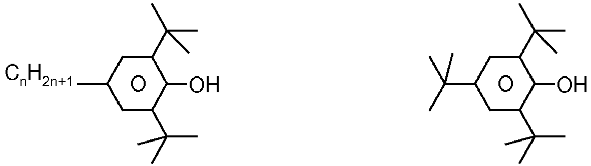 n = 1, 2, 3, 4, 5, 6 or 7 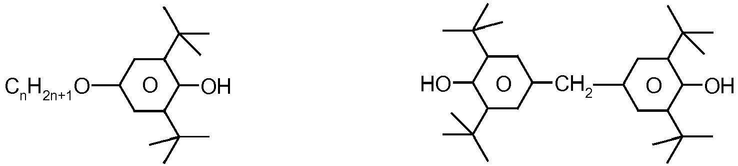 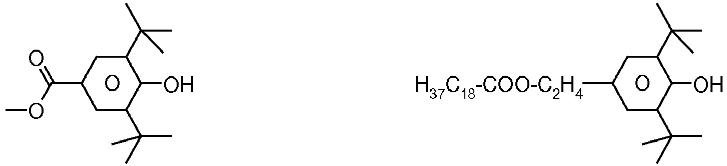 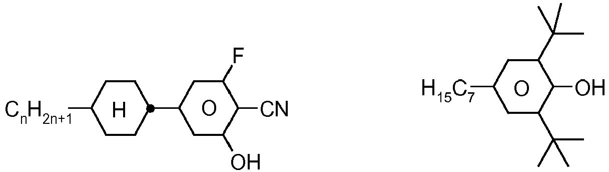 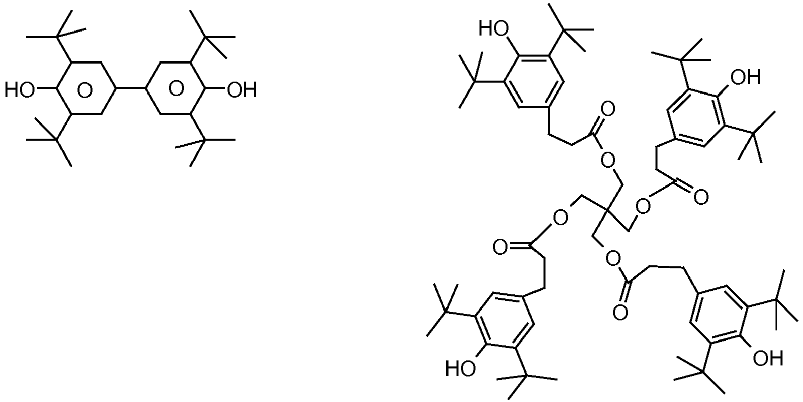 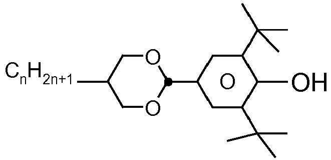 n = 1, 2, 3, 4, 5, 6 or 7

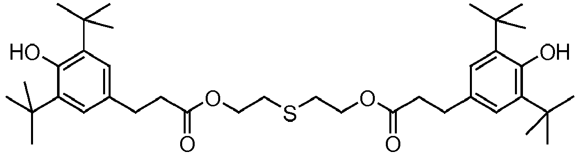

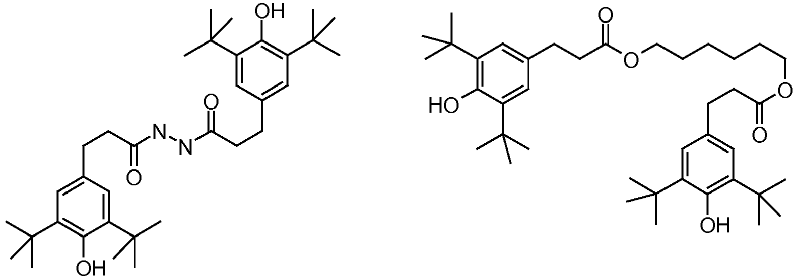

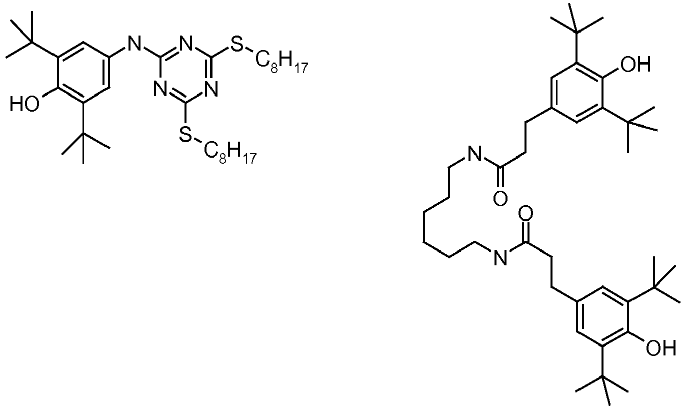

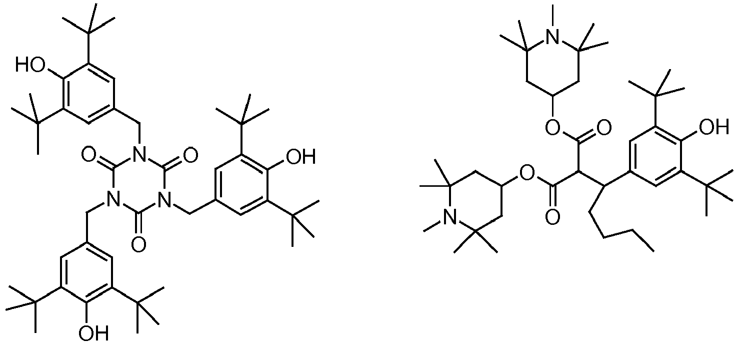

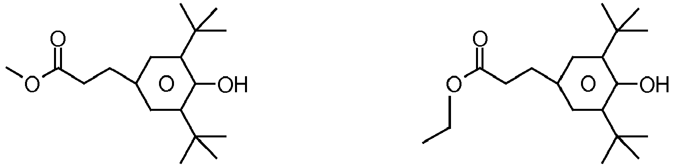

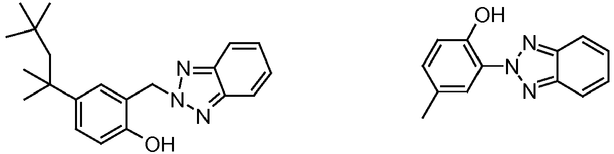

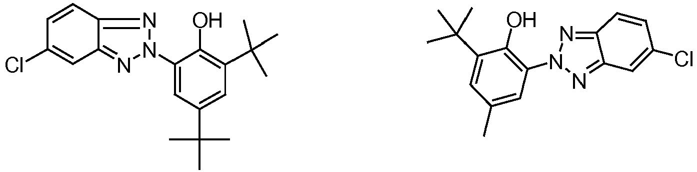

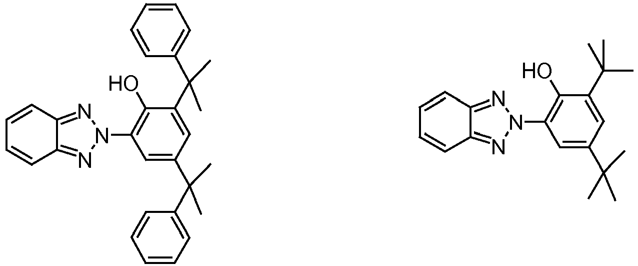

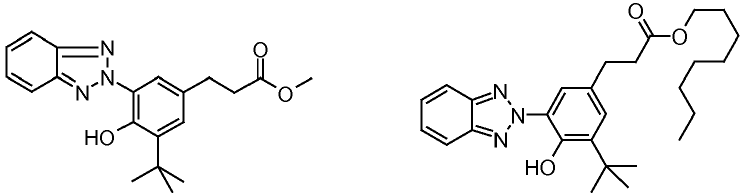

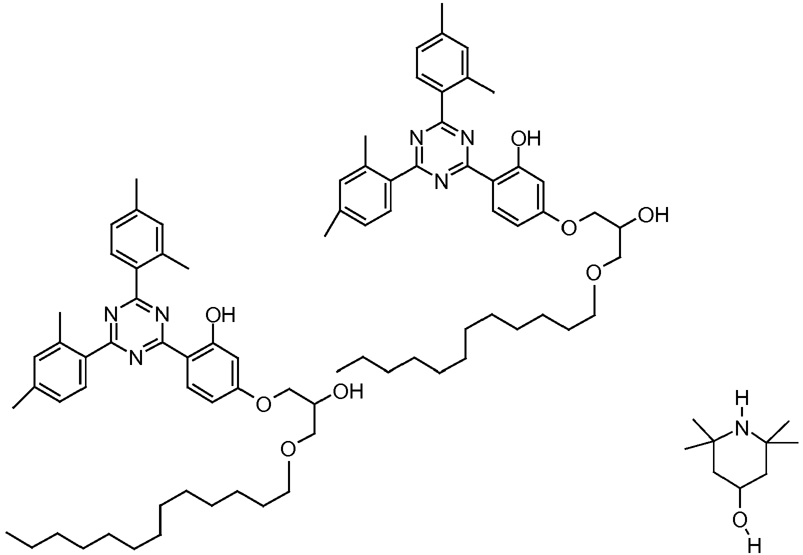

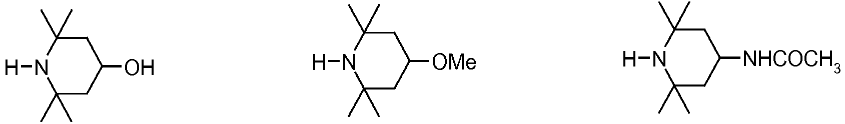

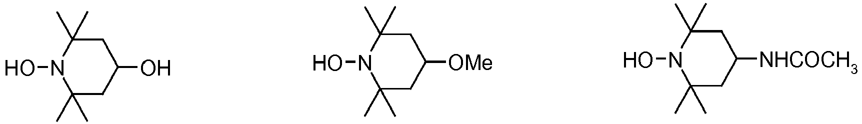

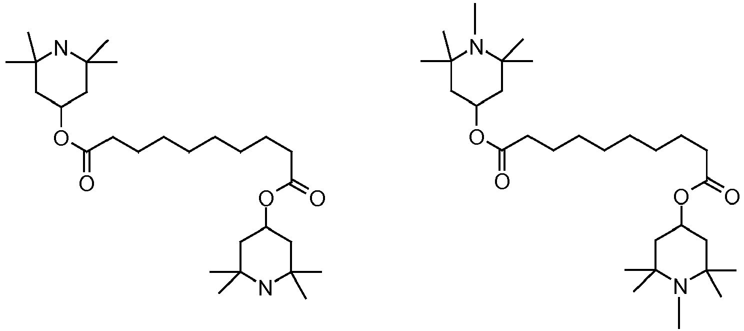

3. Liquid-crystalline medium according to Claim 1 or 2, **characterised in that** it additionally comprises one or more compounds selected from the group of the compounds of the formulae IIA, IIB and IIC, 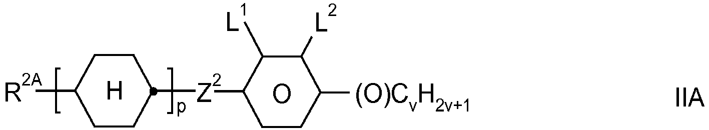 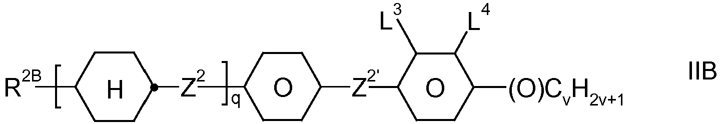 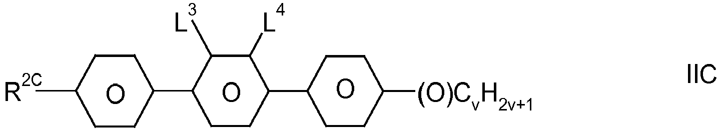 in which
R^{2A}, R^{2B} and R^{2C} in each case, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 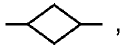 -C≡C-, -CF₂O-, -OCF₂-, -OC-O- or -O-CO- in such a way that O atoms are not linked directly to one another,
L¹⁻⁴ in each case, independently of one another, denote F or CI,
Z² and Z^{2'} in each case, independently of one another, denote a single bond, -CH₂CH₂-, -CH=CH-, -CF₂O-, -OCF₂-, -CH₂O-,-OCH₂-, -COO-, -OCO-, -C₂F₄-, -CF=CF-, -CH=CHCH₂O-,
p denotes 1 or 2,
q denotes 0 or 1, and
v denotes 1 to 6.

4. Liquid-crystalline medium according to one or more of Claims 1 to 3, **characterised in that** it additionally comprises one or more compounds of the formula III, 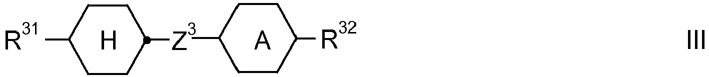 in which
R³¹ and R³² in each case, independently of one another, denote a straight-chain alkyl, alkoxyalkyl or alkoxy radical having up to 12 C atoms, and 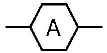 denotes 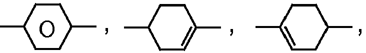 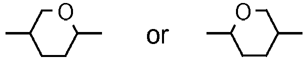
Z³ denotes a single bond, -CH₂CH₂-, -CH=CH-, -CF₂O-, -OCF₂-, -CH₂O-,-OCH₂-, -COO-, -OCO-, -C₂F₄-, -C₄H₈-, -CF=CF-.

5. Liquid-crystalline medium according to one or more of Claims 1 to 4, **characterised in that** the medium comprises at least one compound of the formulae I-1 to 1-192, 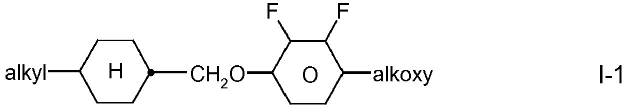 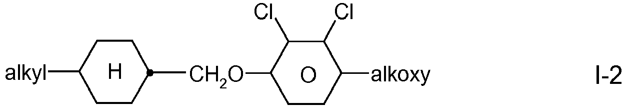 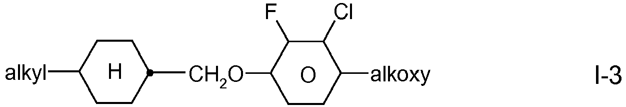 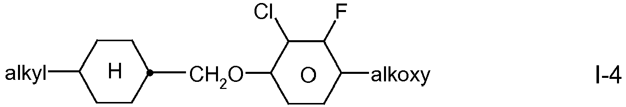 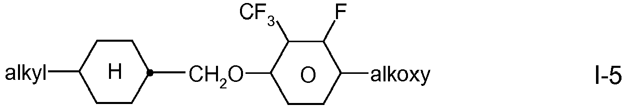 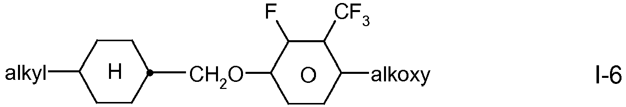 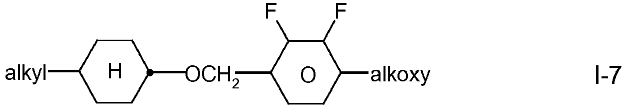 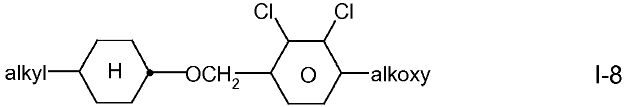 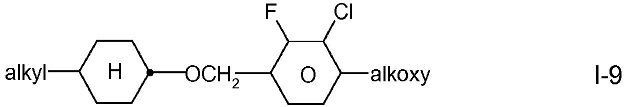 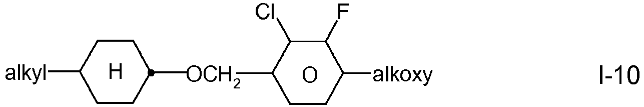 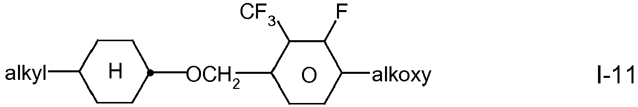 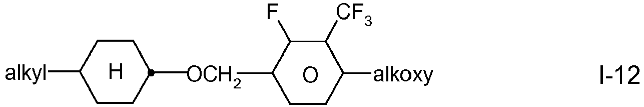 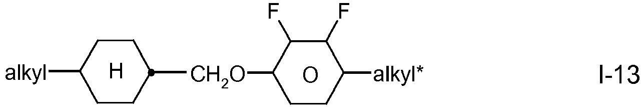 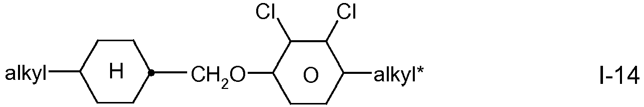 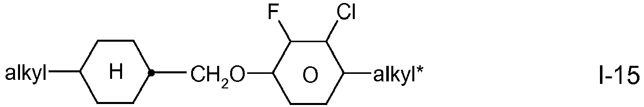 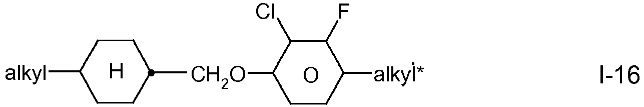 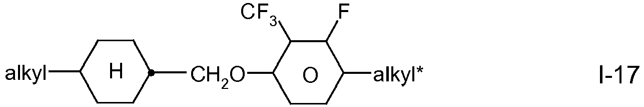 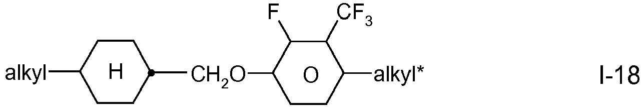 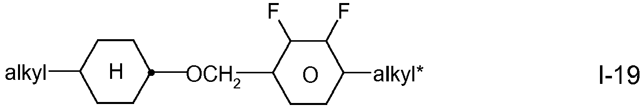 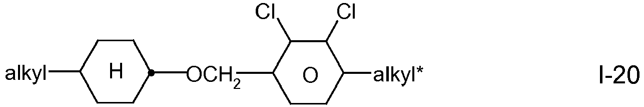 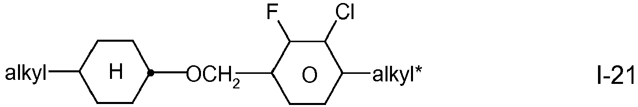 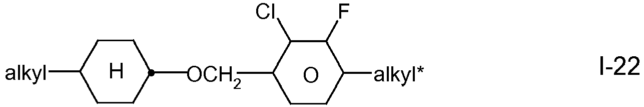 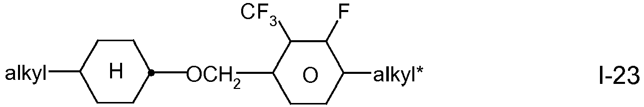 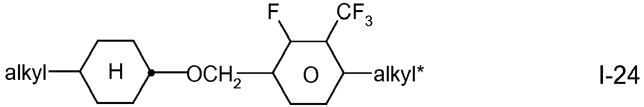 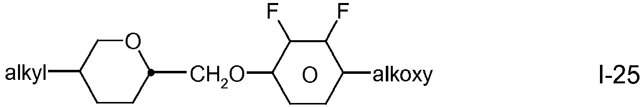 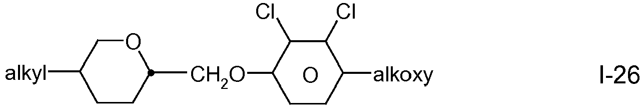 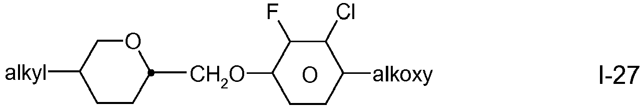 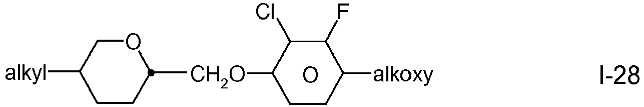 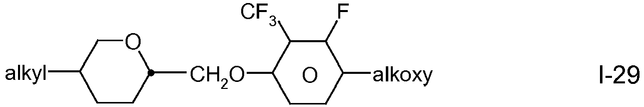 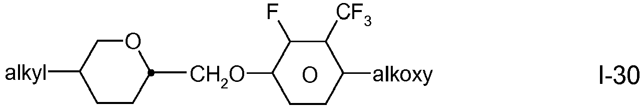 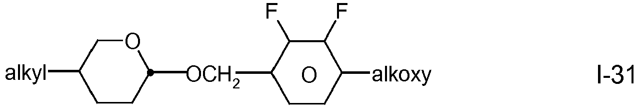 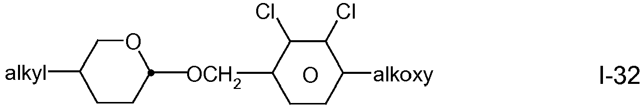 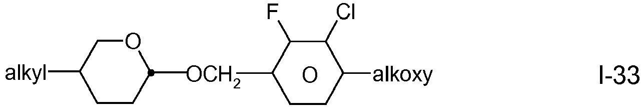 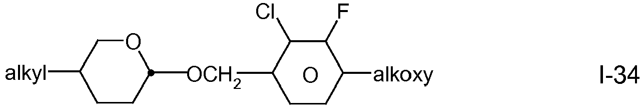 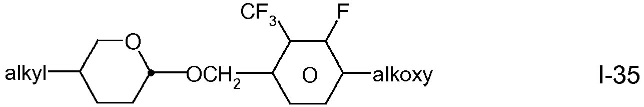 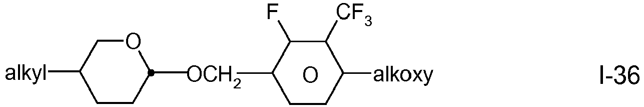 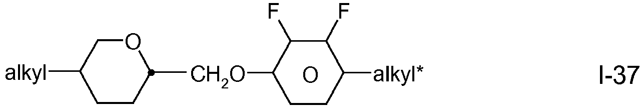 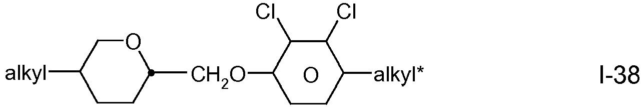 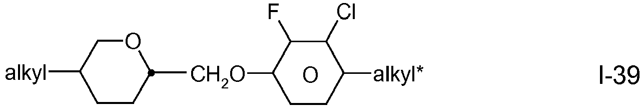 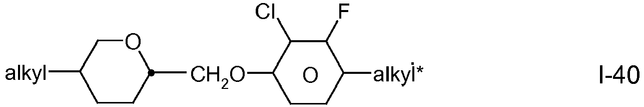 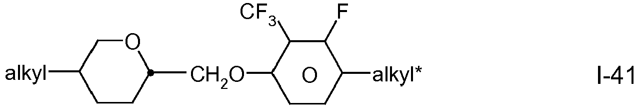 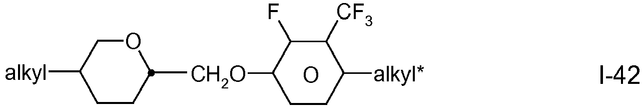 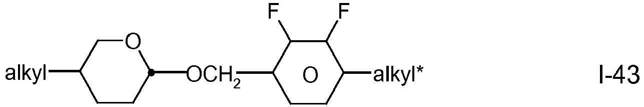 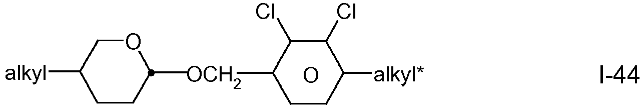 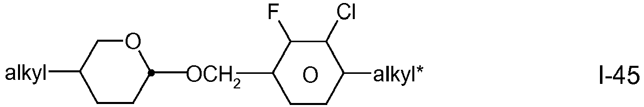 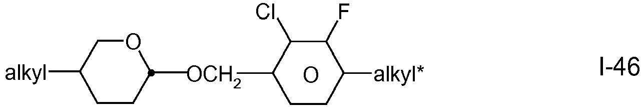 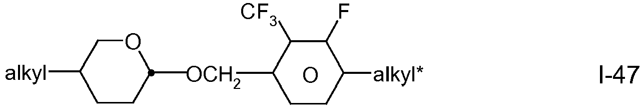 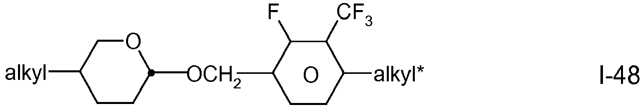 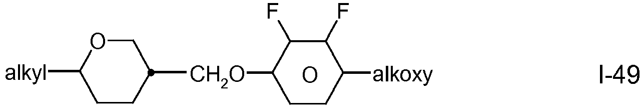 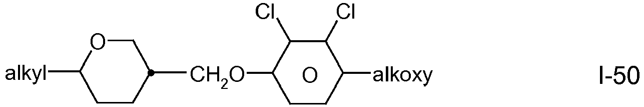 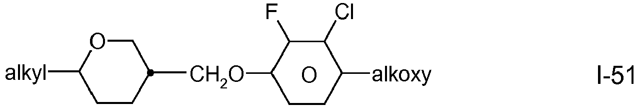 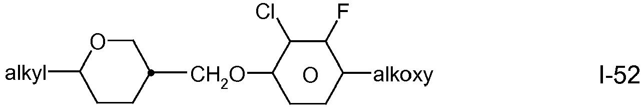 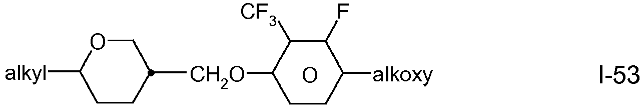 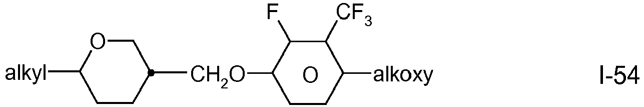 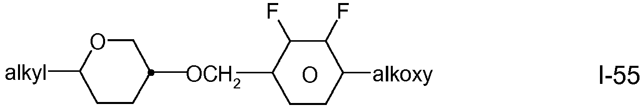 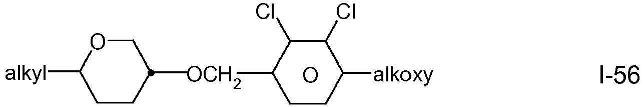 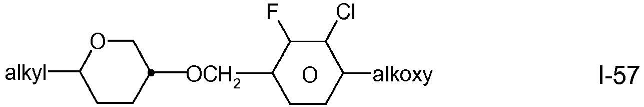 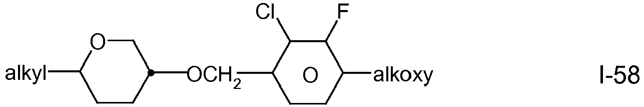 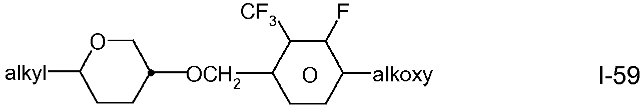 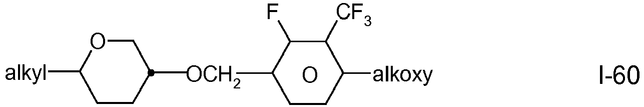 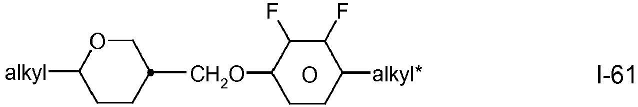 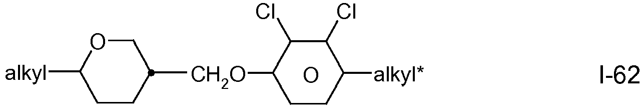 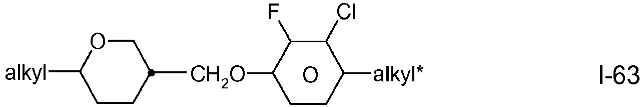 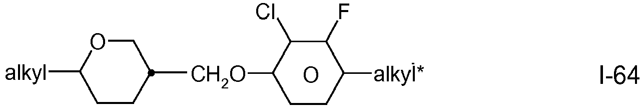 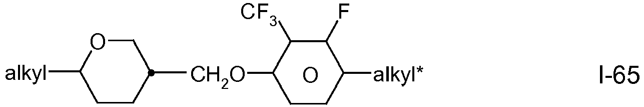 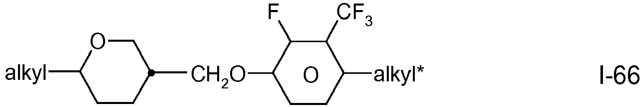 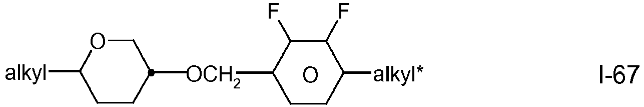 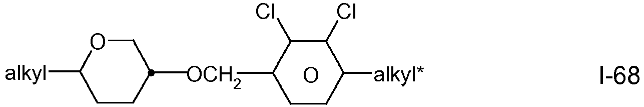 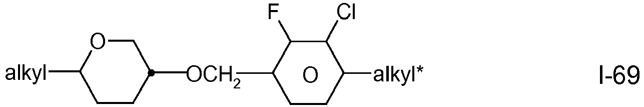 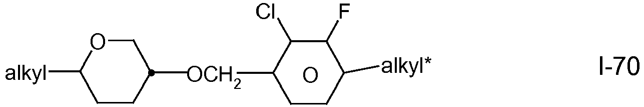 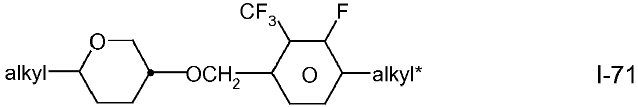 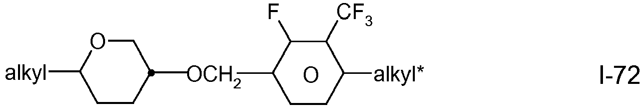 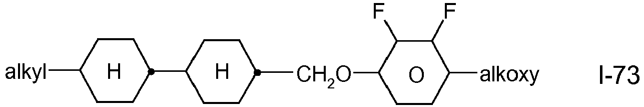 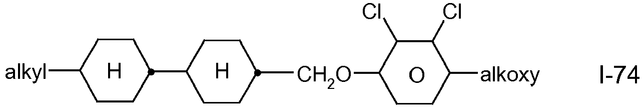 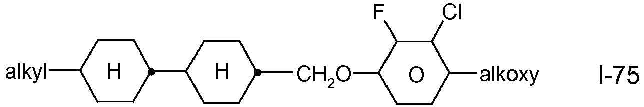 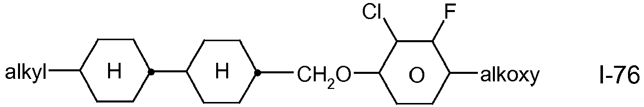 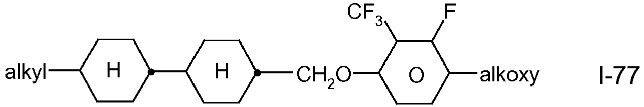 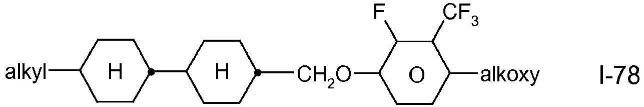 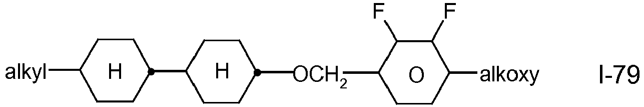 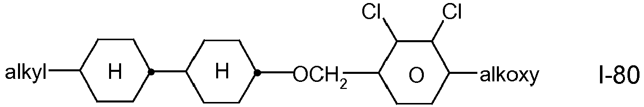 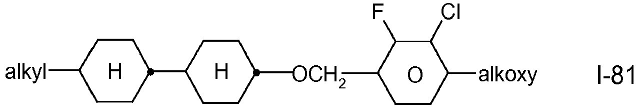 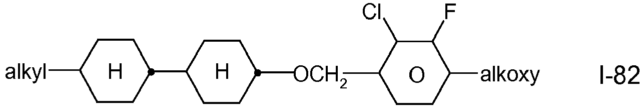 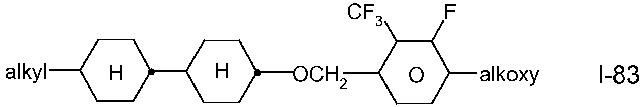 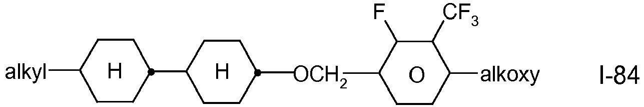 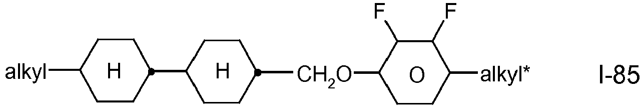 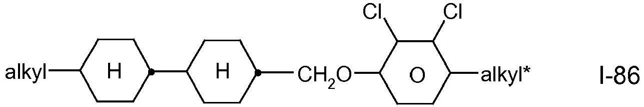 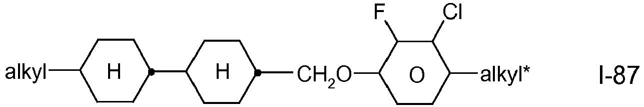 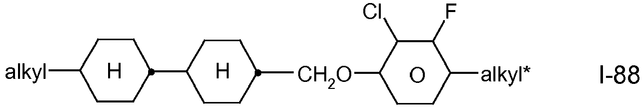 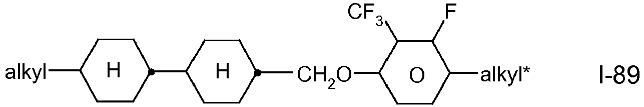 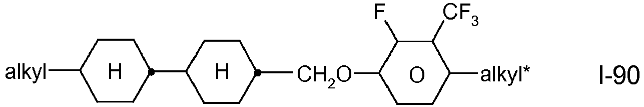 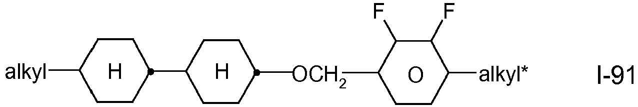 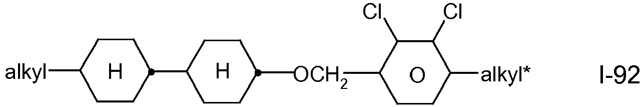 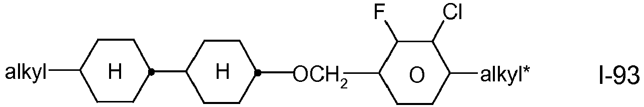 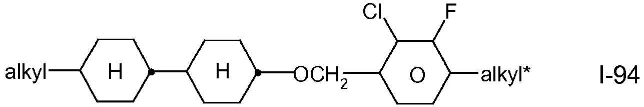 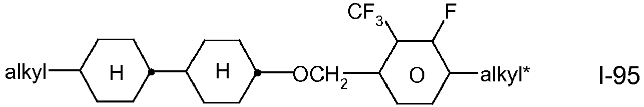 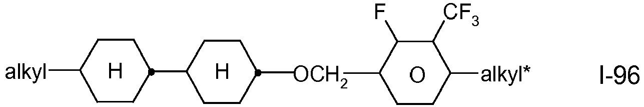 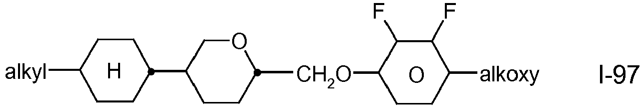 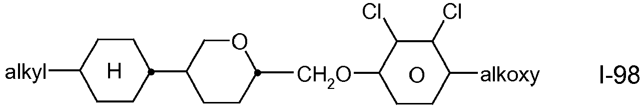 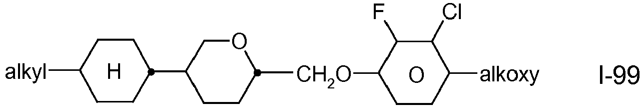 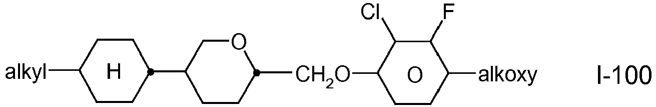 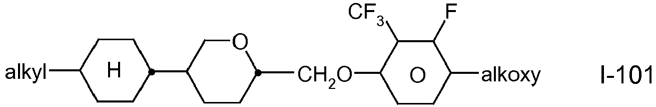 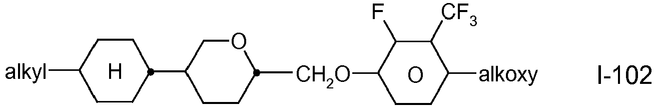 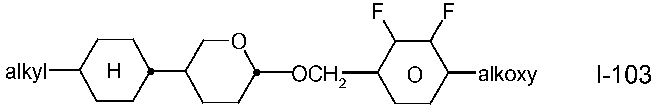 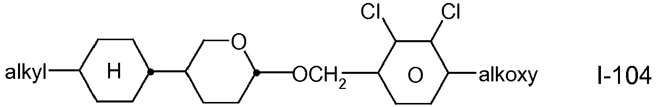 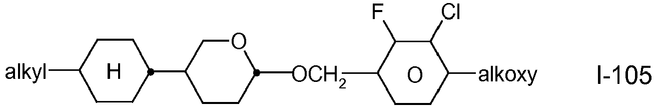 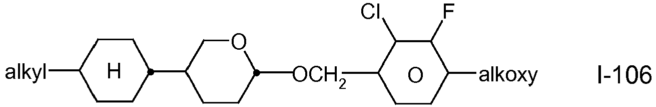 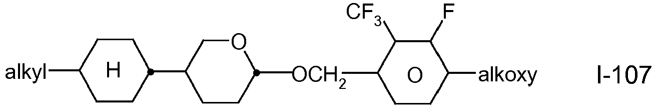 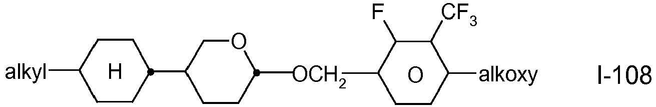 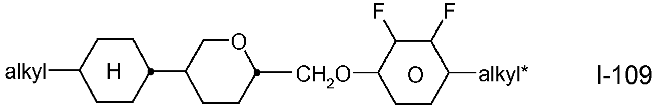 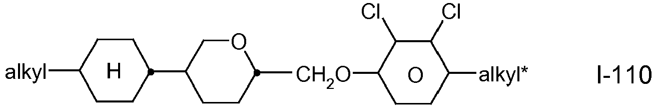 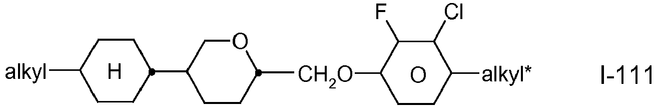 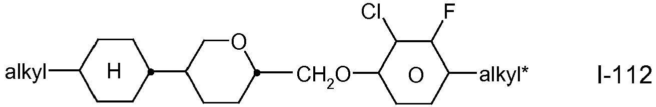 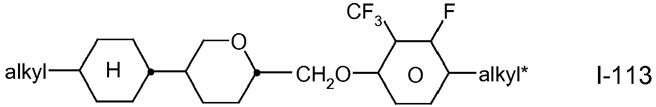 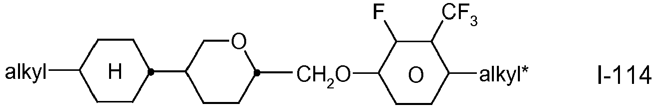 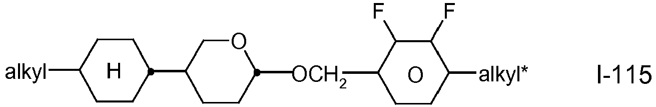 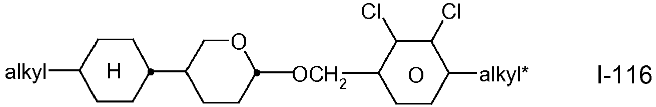 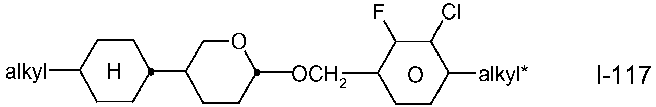 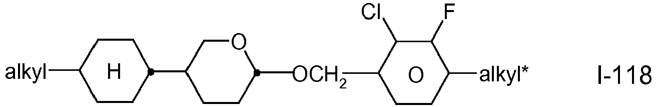 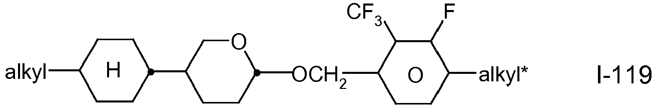 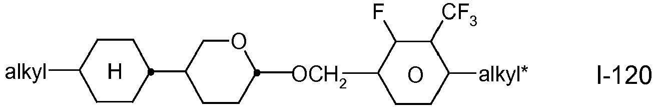 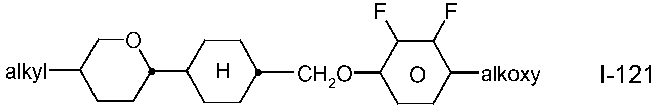 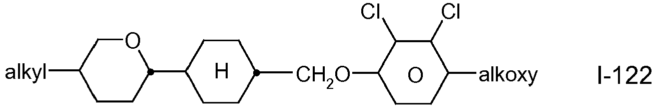 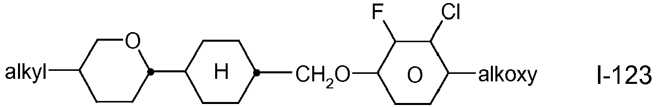 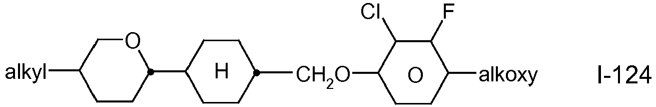 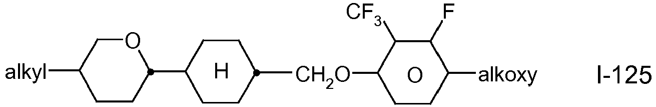 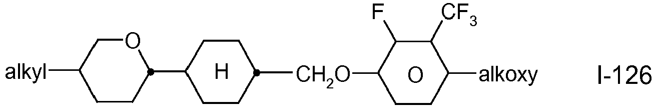 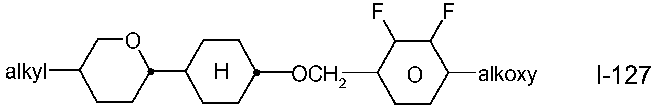 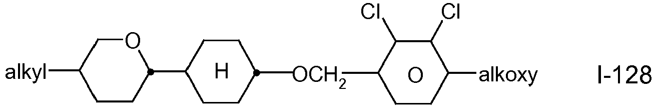 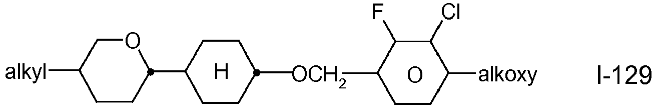 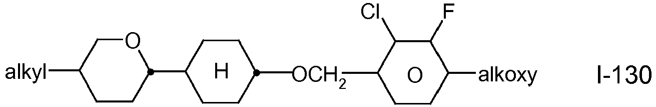 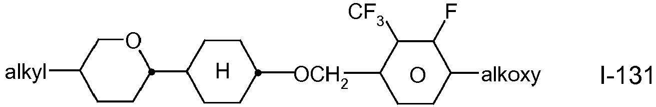 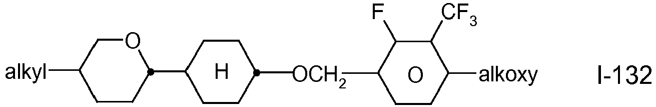 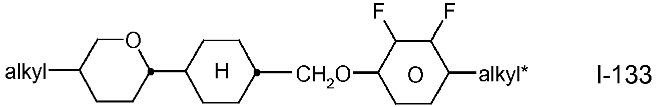 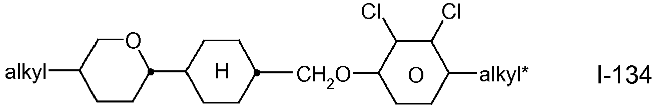 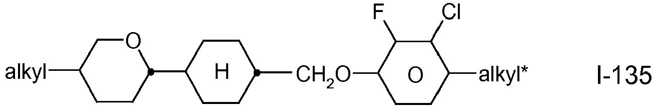 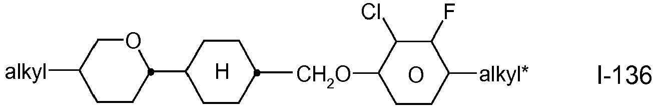 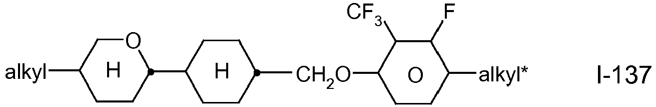 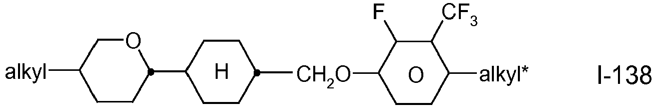 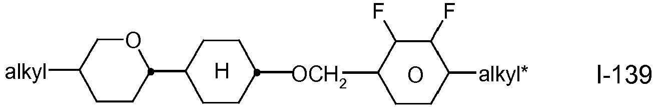 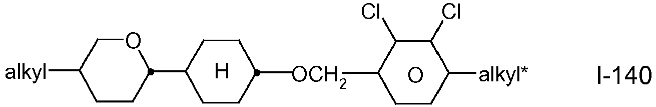 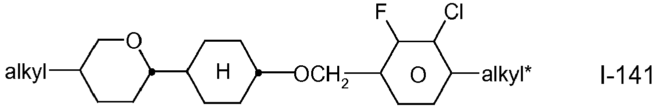 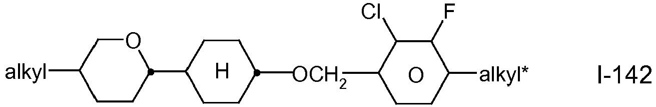 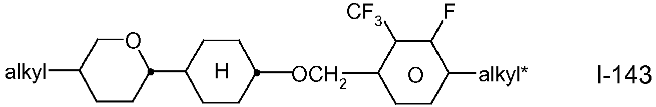 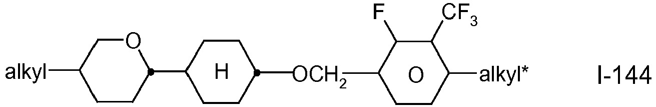 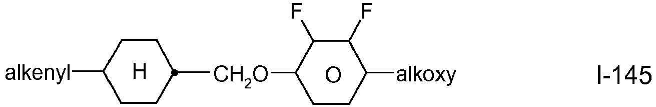 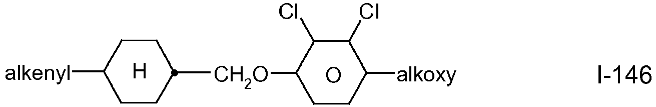 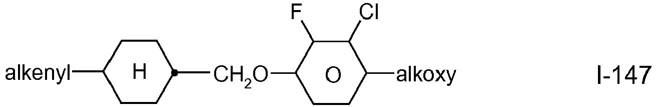 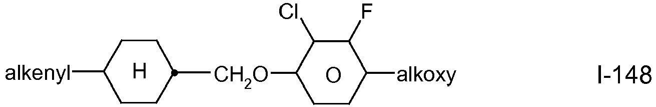 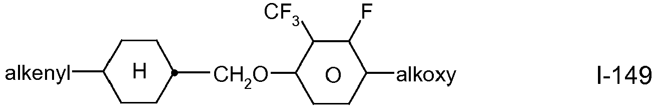 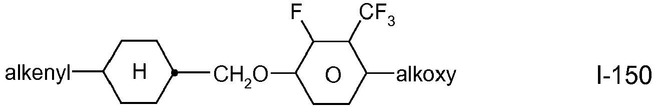 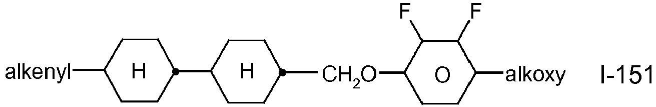 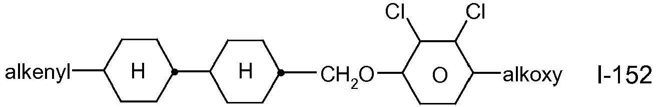 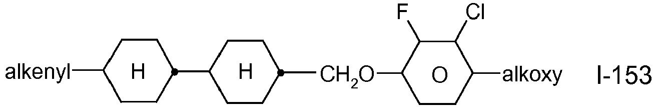 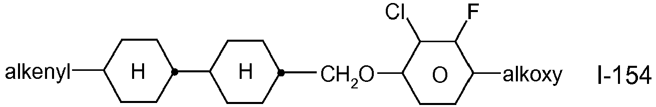 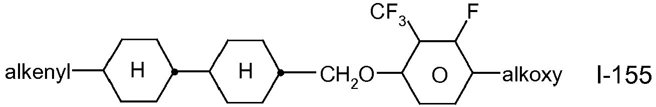 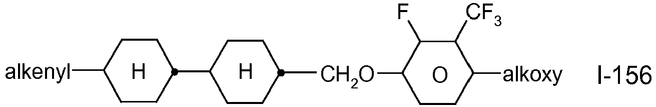 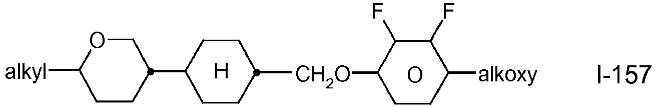 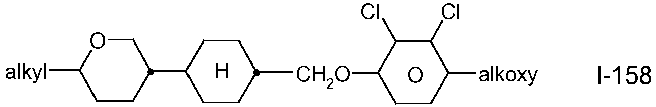 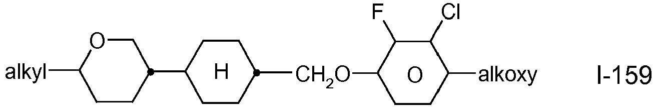 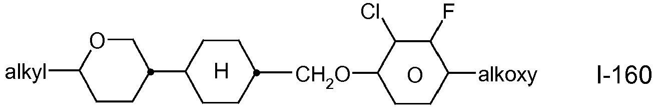 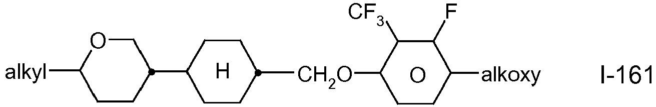 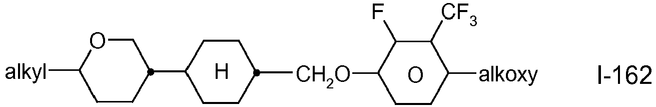 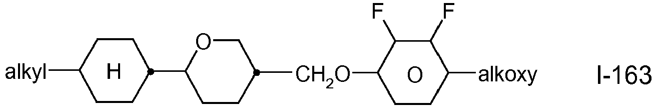 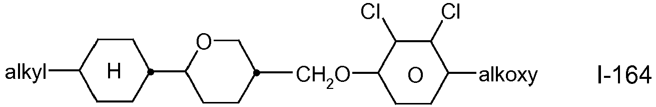 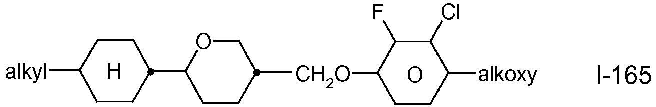 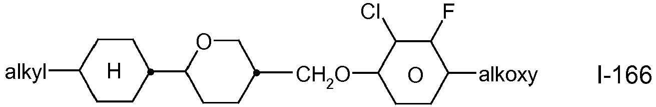 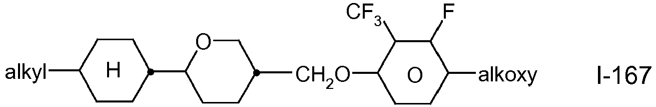 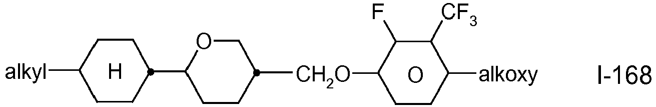 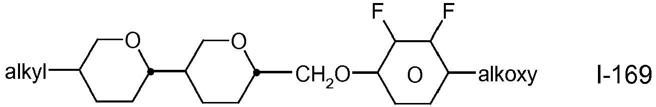 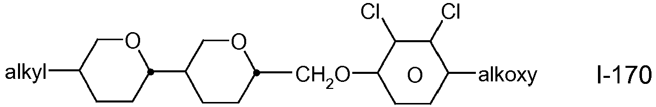 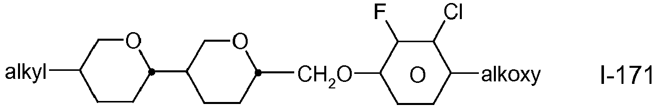 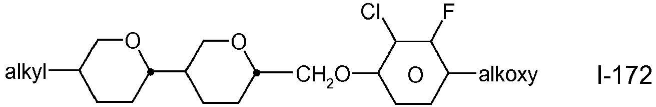 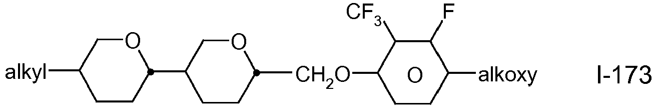 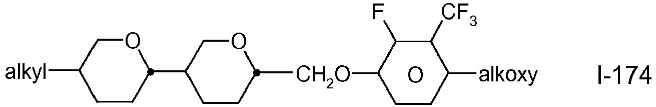 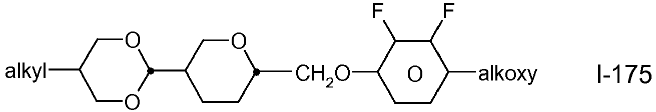 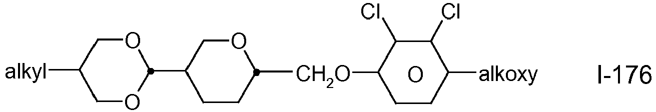 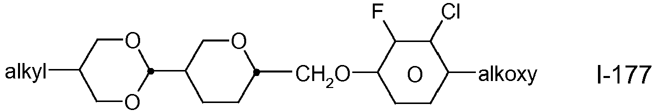 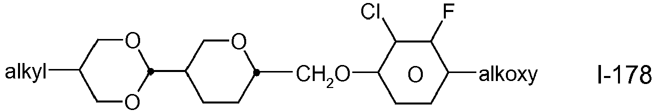 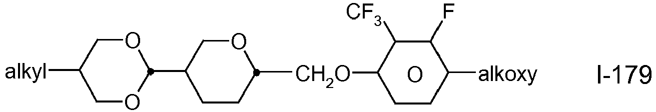 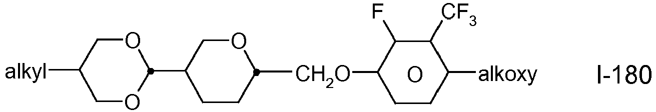 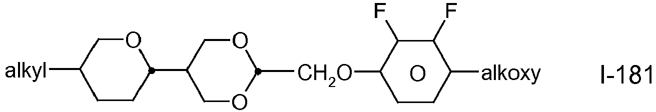 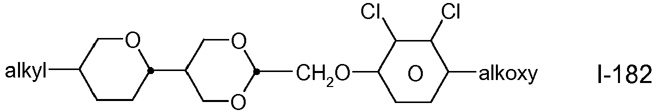 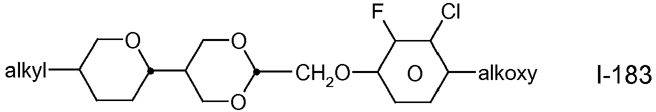 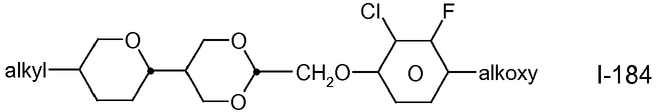 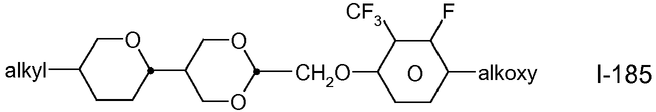 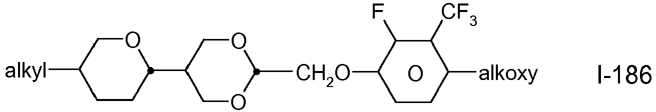 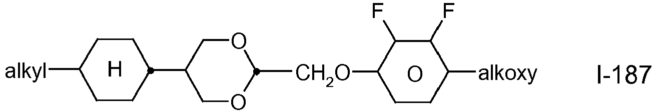 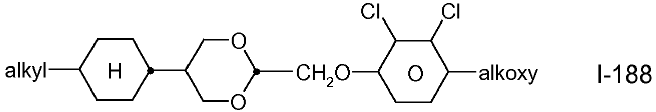 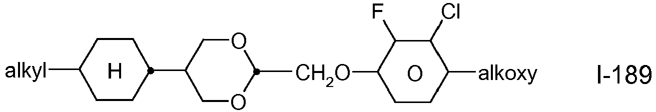 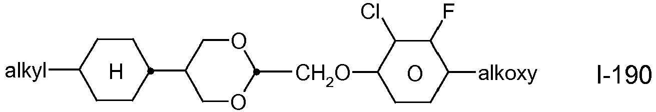 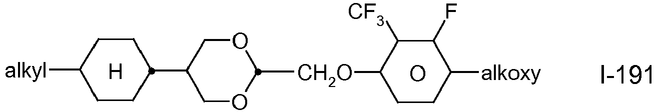 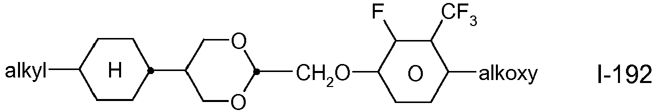 in which
alkyl and alkyl* in each case, independently of one another, denote a straight-chain alkyl radical having 1-6 C atoms,
alkenyl denotes a straight-chain alkenyl radical having 2-6 C atoms, and
alkoxy denotes a straight-chain alkoxy radical having 1-6 C atoms.

6. Liquid-crystalline medium according to one or more of Claims 1 to 5, **characterised in that** the medium additionally comprises one or more compounds of the formulae L-1 to L-11, 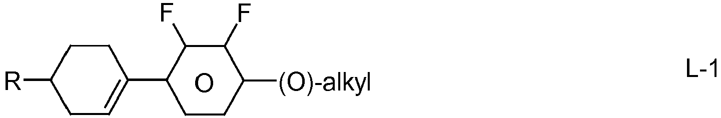 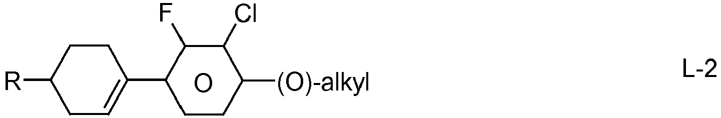 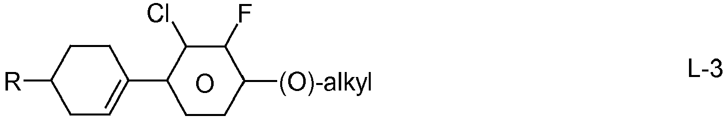 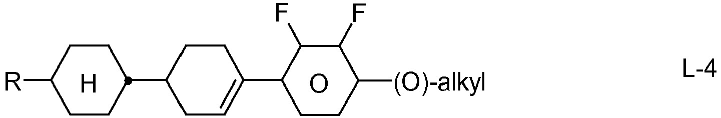 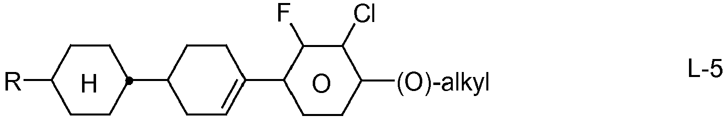 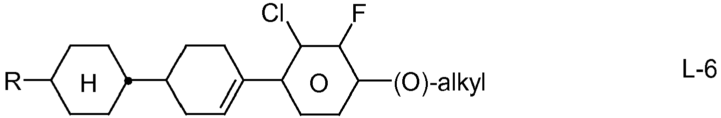 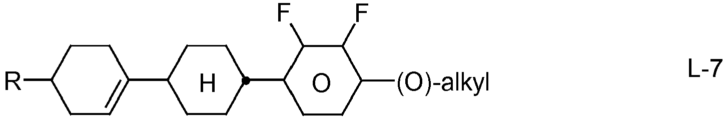 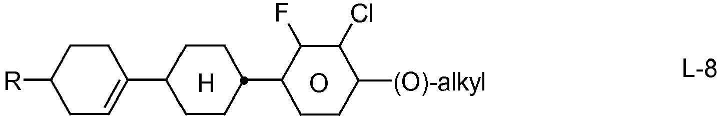 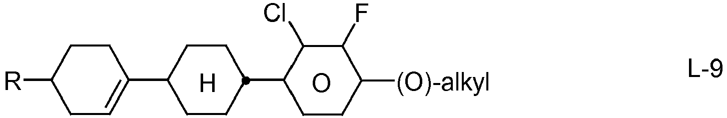 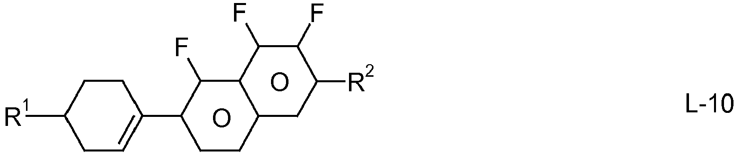 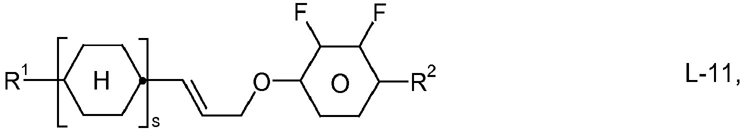 in which
R, R¹ and R² in each case, independently of one another, have the meanings indicated for R^{2A} in Claim 2 and alkyl denotes an alkyl radical having 1-6 C atoms, and
s denotes 1 or 2.

7. Liquid-crystalline medium according to one or more of Claims 1 to 6, **characterised in that** the medium additionally comprises one or more terphenyls of the formulae T-1 to T-21, 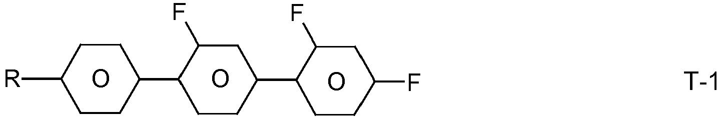 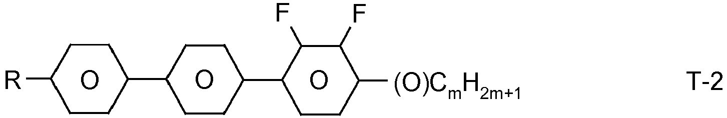 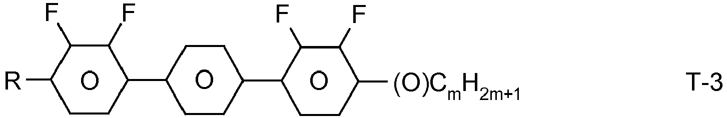 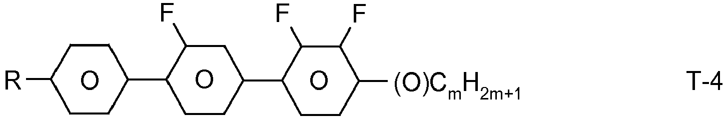 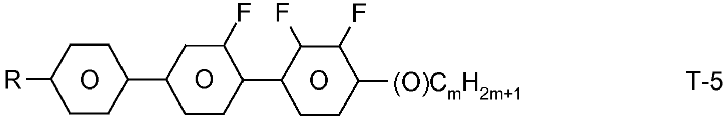 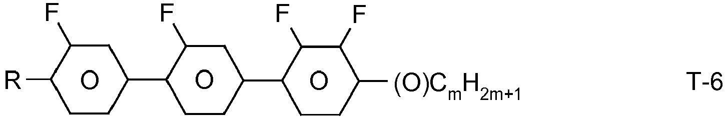 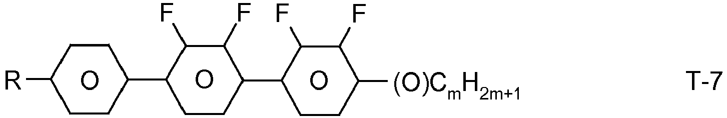 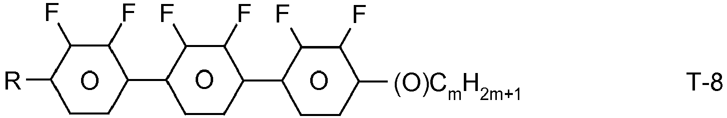 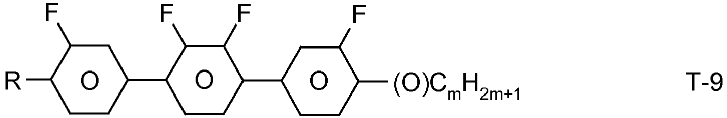 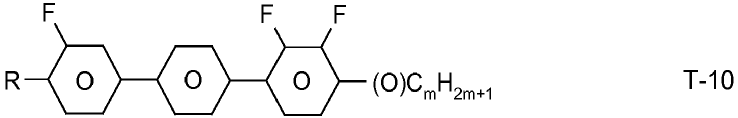 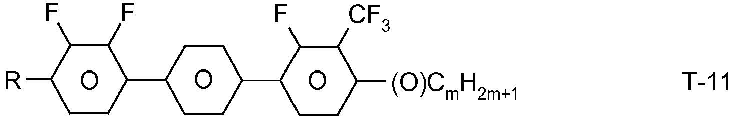 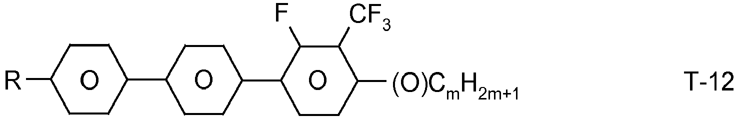 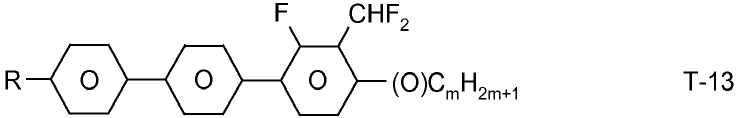 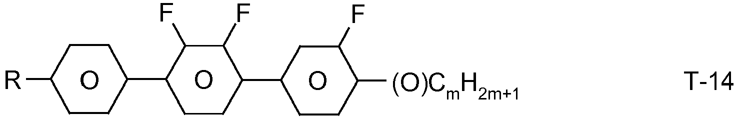 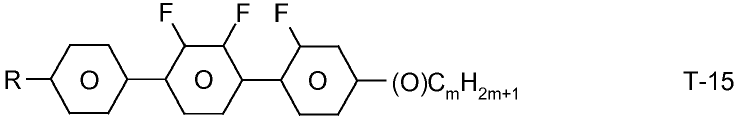 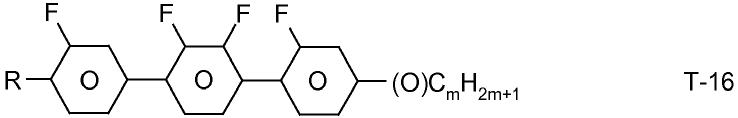 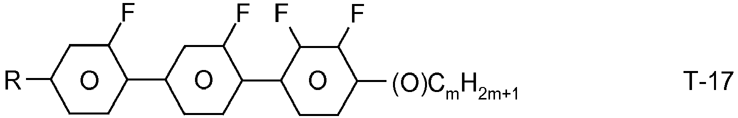 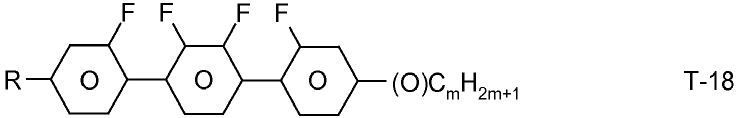 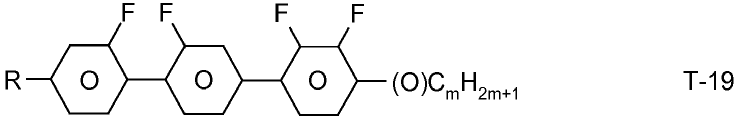 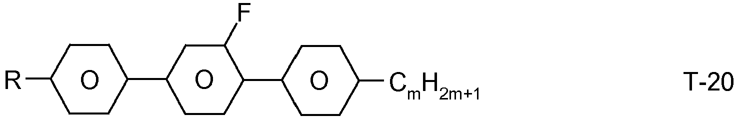 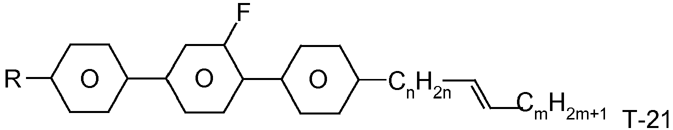 in which
R denotes a straight-chain alkyl or alkoxy radical having 1-7 C atoms, and
m denotes 1-6.

8. Liquid-crystalline medium according to one or more of Claims 1 to 7, **characterised in that** the medium additionally comprises one or more compounds of the formulae O-1 to 0-16, 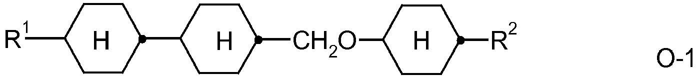 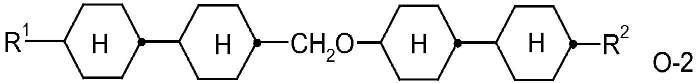 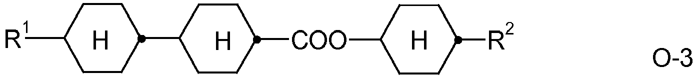 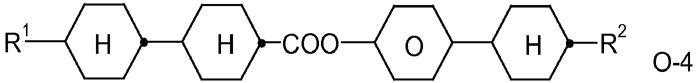 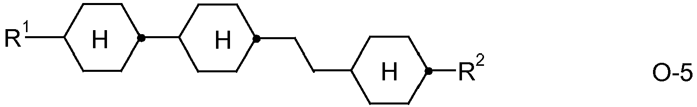 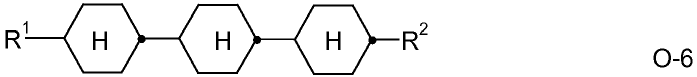 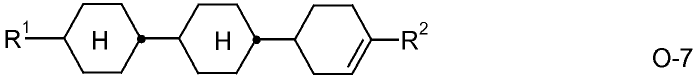 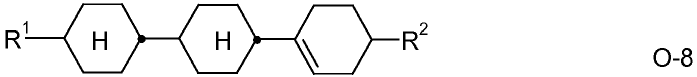 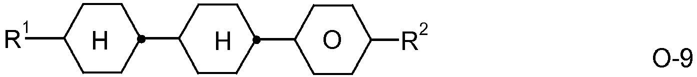 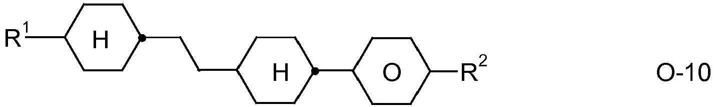 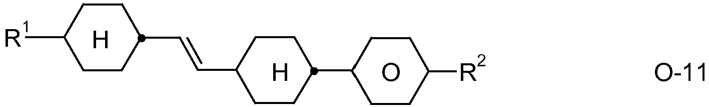 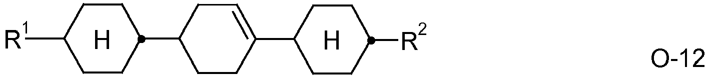 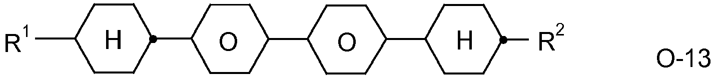 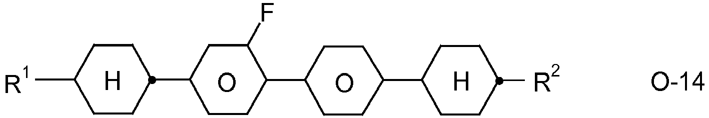 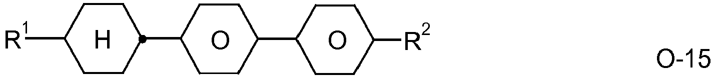 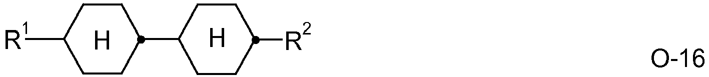 in which
R¹ and R² in each case, independently of one another, have the meanings indicated for R^{2A} in Claim 2.

9. Liquid-crystalline medium according to one or more of Claims 1 to 8, **characterised in that** the medium additionally comprises one or more indane compounds of the formula In, 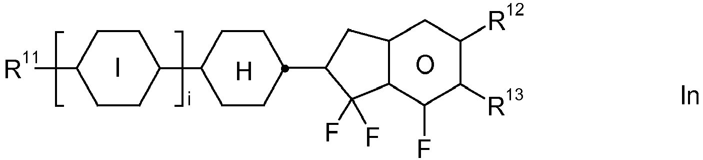 in which
R¹¹, R¹², R¹³ denote a straight-chain alkyl, alkoxy, alkoxyalkyl or alkenyl radical having 1-5 C atoms,
R¹² and R¹³ additionally also denote halogen, 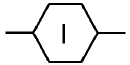 denotes 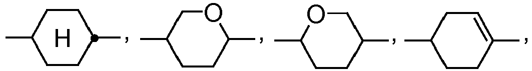 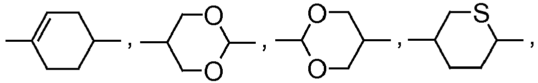 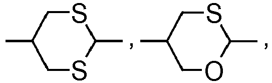
i denotes 0, 1 or 2.

10. Liquid-crystalline medium according to one or more of Claims 1 to 9, **characterised in that** the proportion of compounds of the formula I in the mixture as a whole is ≥ 1% by weight.

11. Liquid-crystalline medium according to one or more of Claims 1 to 10, **characterised in that** it additionally comprises one or more polymerisable compounds and
the concentration of the polymerisable compound(s), based on the medium, is 0.01 - 5% by weight.

12. Liquid-crystalline medium according to one or more of Claims 1 to 11, **characterised in that** the polymerisable compound(s) is (are) selected from compounds of the formula I*
R^{a}-A¹-(Z¹-A²)ₘ-R^{b} I*
in which the individual radicals have the following meanings:
R^{a} and R^{b} in each case, independently of one another, denote P, P-Sp-, H, halogen, SFs, NO₂, a carbon group or hydrocarbon group, where at least one of the radicals R^{a} and R^{b} denotes or contains a group P or P-Sp-,
P on each occurrence, identically or differently, denotes a polymerisable group,
Sp on each occurrence, identically or differently, denotes a spacer group or a single bond,
A¹ and A² in each case, independently of one another, denote an aromatic, heteroaromatic, alicyclic or heterocyclic group, preferably having 4 to 25 ring atoms, which may also contain fused rings, and which may also be mono- or polysubstituted by L,
L denotes P-Sp-, H, OH, CH₂OH, halogen, SFs, NO₂, a carbon group or hydrocarbon group,
Z¹ on each occurrence, identically or differently, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF2-, -(CH₂)ₙ₁-, -CF2CH2-, -CH2CF2-, -(CF₂)ₙ₁-, -CH=CH-, -CF=CF-, -C≡C-, -CH=CH-COO-, -OCO-CH=CH-, CR⁰R⁰⁰ or a single bond,
R⁰ and R⁰⁰ in each case, independently of one another, denote H or alkyl having 1 to 12 C atoms,
m denotes 0, 1, 2, 3 or 4,
n1 denotes 1, 2, 3 or 4.

13. Process for the preparation of a liquid-crystalline medium according to one or more of Claims 1 to 12, **characterised in that** at least one compound of the formula I is mixed with at least one further mesogenic compound, and one or more additives and/or one or more stabilisers and/or one or more polymerisable compounds are optionally added.

14. Use of the liquid-crystalline medium according to one or more of Claims 1 to 13 in electro-optical displays.

15. Use of the liquid-crystalline medium according to one or more of Claims 1 to 14 in VA, PVA and PS-VA, IPS, PS-IPS, FFS, PS-FFS or PALC displays.

16. Use of the liquid-crystalline medium according to one or more of Claims 10 to 12 in PS and PSA displays for generating of a tilt angle in the liquid-crystalline medium by in-situ polymerisation of the polymerisable compound(s) in the PSA display with application of an electric or magnetic field.

17. Electro-optical display having active-matrix addressing, **characterised in that** it contains, as dielectric, a liquid-crystalline medium according to one or more of Claims 1 to 12.

18. Electro-optical display according to Claim 17, **characterised in that** it is a VA, PSA, PS-VA, PALC, FFS, PS-FFS or PS-IPS display.

19. Electro-optical display according to Claim 17 or 18, containing an LC cell consisting of two substrates and two electrodes, where at least one substrate is transparent to light and at least one substrate has one or two electrodes, and a layer, located between the substrates, of a liquid-crystalline medium comprising a polymerised component and a low-molecular-weight component, where the polymerised component is obtainable by polymerisation of one or more polymerisable compounds in the liquid-crystalline medium between the substrates of the LC cell, preferably with application of an electrical voltage to the electrodes, and where the low-molecular-weight component is a liquid-crystalline medium according to one or more of Claims 1 to 12.

## Revendications

1. Milieu cristallin liquide basé sur un mélange de composés polaires, **caractérisé en ce qu'**il comprend au moins un composé de la formule I, 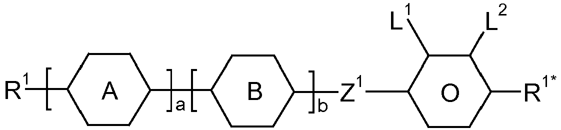 dans laquelle
R¹ et R^{1*} représentent dans chaque cas, de manière indépendante l'un de l'autre, un radical alkyle ou alcoxy qui comporte de 1 à 15 atome(s) de C, où, en outre, un ou plusieurs groupe(s) CH₂ dans ces radicaux peut/peuvent chacun être remplacé(s), de manière indépendante les uns des autres, par -C≡C-, -CF₂O-, -CH=CH-, 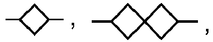 -O-, -CO-O-, -O-CO- de telle sorte que des atomes de O ne soient pas liés directement les uns aux autres, et où, en outre, un ou plusieurs atome(s) de H peut/peuvent être remplacé(s) par halogène,
Z¹ représente -CH₂O- ou -OCH₂-,
a représente 0, 1 ou 2,
b représente 1 ou 2, 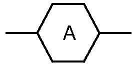 et 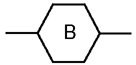 représentent dans chaque cas, de manière indépendante l'un de l'autre, 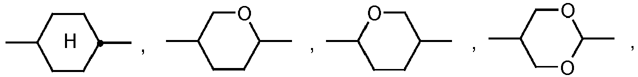 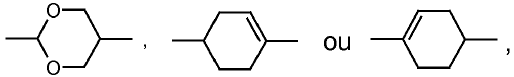
L¹ et L² représentent dans chaque cas, de manière indépendante l'un de l'autre, F, Cl, CF₃, OCF₃ ou CHF₂,
et de façon additionnelle
un ou plusieurs stabiliseurs.

2. Milieu cristallin liquide selon la revendication 1, **caractérisé en ce qu'**il comprend un ou plusieurs composé(s) qui est/sont sélectionné(s) parmi le groupe des composés
(n = 1-12) 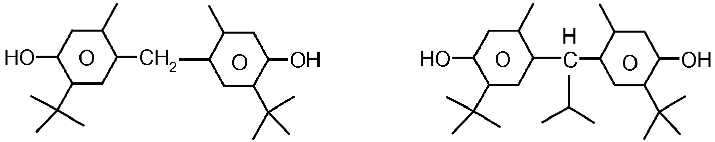 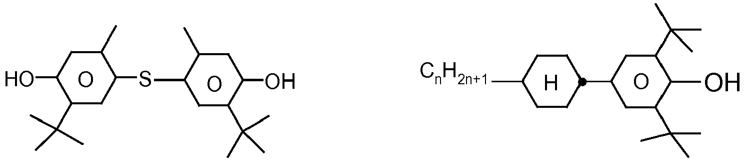 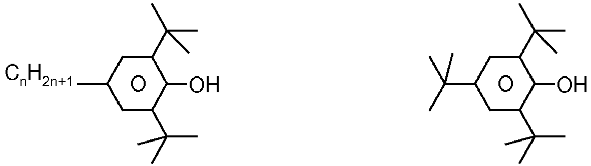 n = 1, 2, 3, 4, 5, 6 ou 7 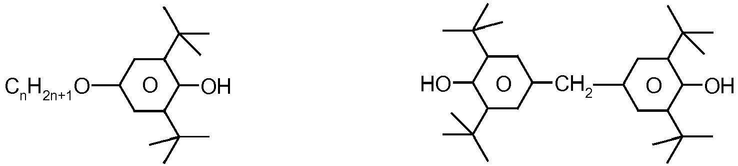 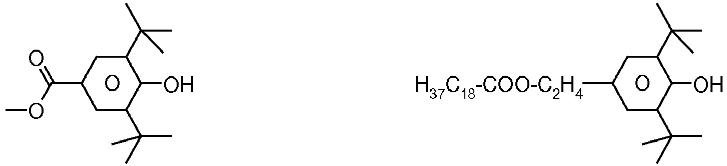 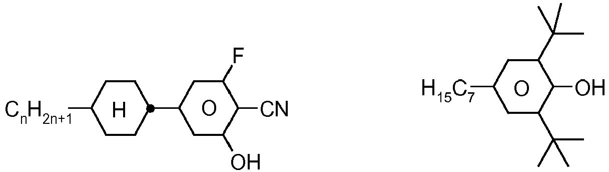 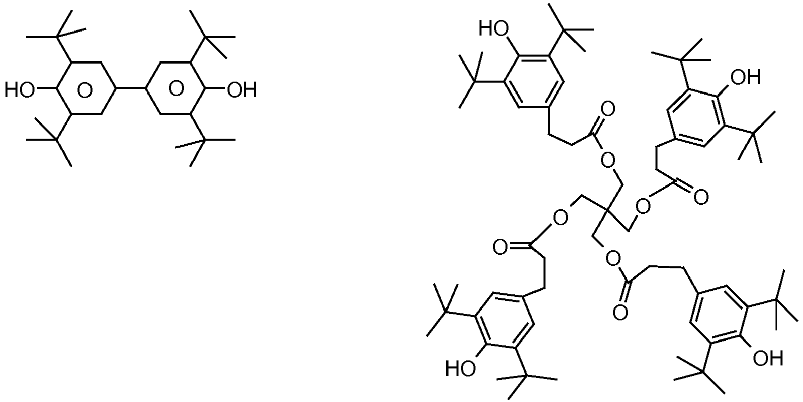 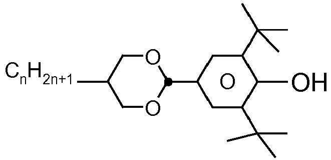 n = 1, 2, 3, 4, 5, 6 ou 7

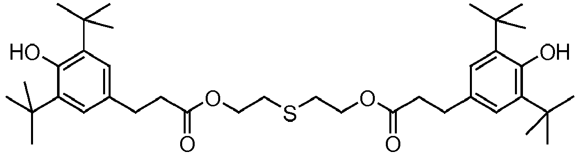

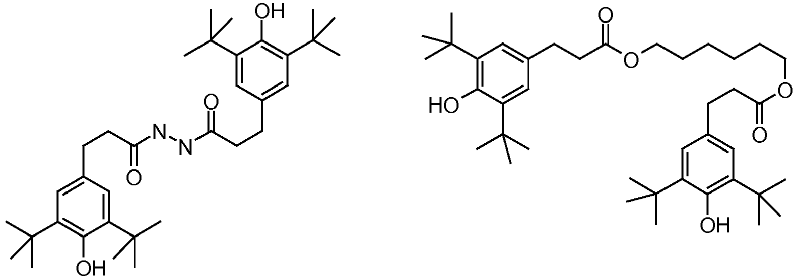

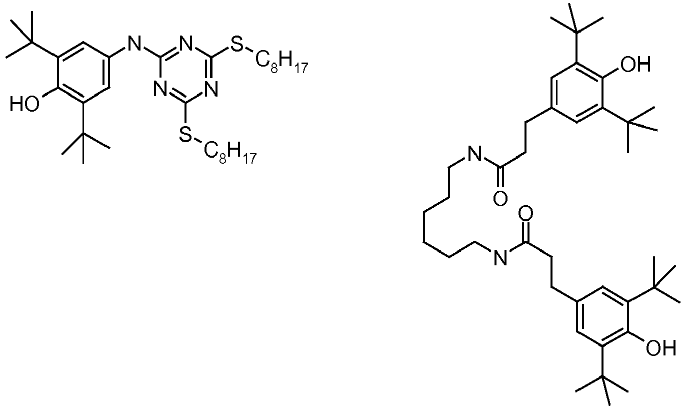

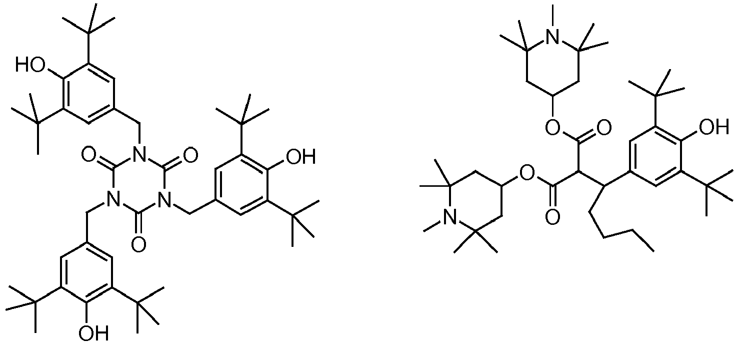

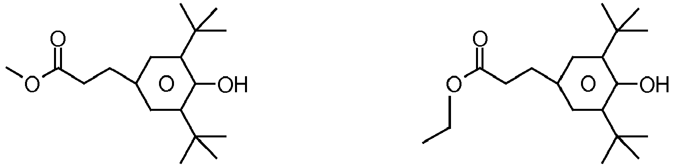

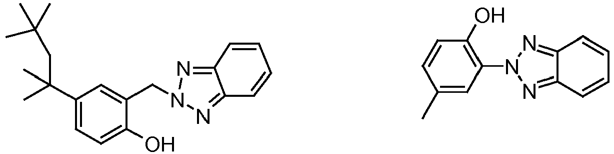

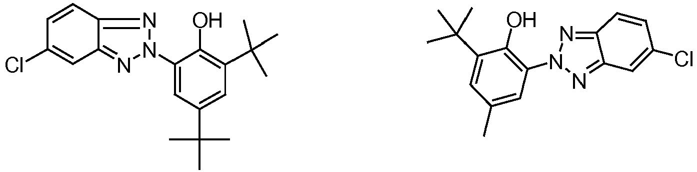

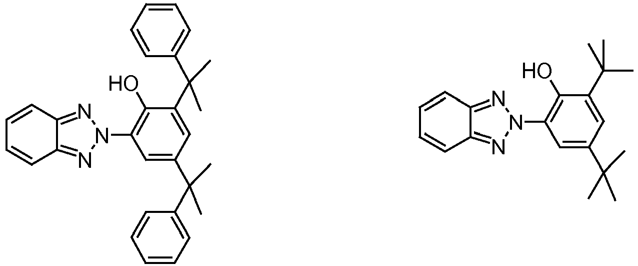

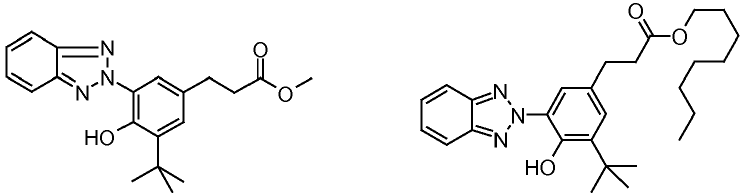

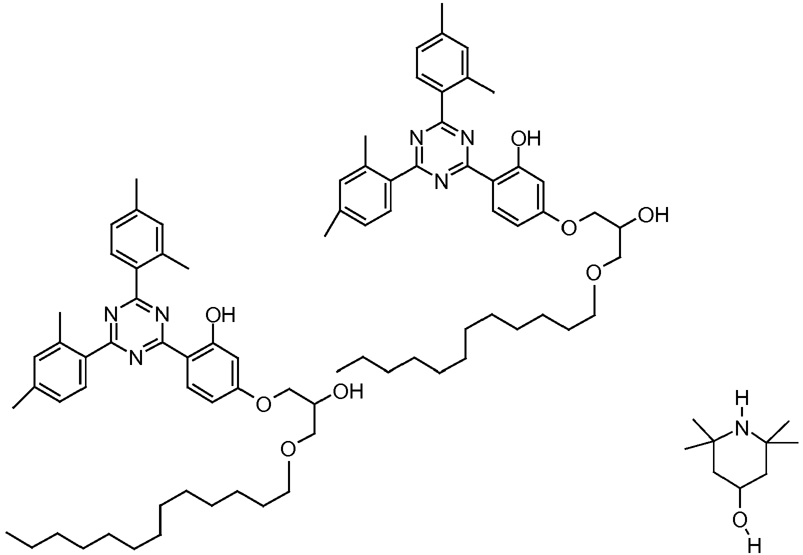

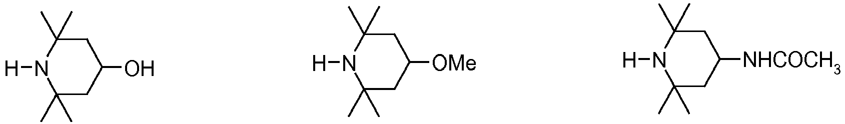

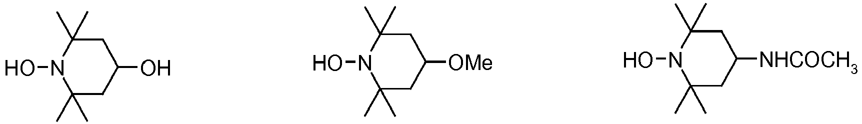

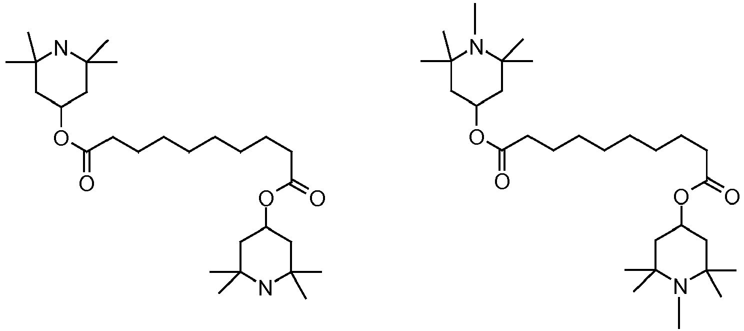

3. Milieu cristallin liquide selon la revendication 1 ou 2, **caractérisé en ce qu'**il comprend de façon additionnelle un ou plusieurs composé(s) qui est/sont sélectionné(s) parmi le groupe des composés des formules IIA, IIB et IIC, 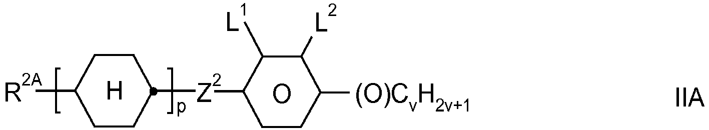 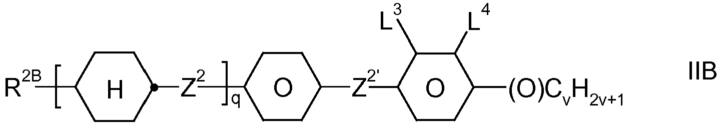 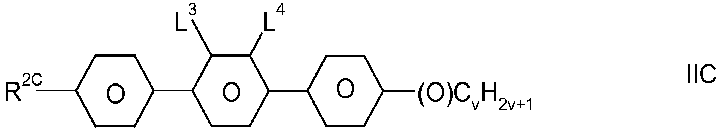 dans lesquelles
R^{2A}, R^{2B} et R^{2C} représentent dans chaque cas, de manière indépendante les uns des autres, H, un radical alkyle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 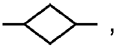 -C≡C-, -CF₂O-, -OCF₂-, -OC-O- ou -O-CO- de telle sorte que des atomes de O ne soient pas liés directement les uns aux autres,
L¹⁻⁴ représentent dans chaque cas, de manière indépendante les uns des autres, F ou Cl,
Z² et Z^{2'} représentent dans chaque cas, de manière indépendante l'un de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p représente 1 ou 2,
q représente 0 ou 1, et
v représente 1 à 6.

4. Milieu cristallin liquide selon une ou plusieurs des revendications 1 à 3, **caractérisé en ce qu'**il comprend de façon additionnelle un ou plusieurs composé(s) de la formule III, 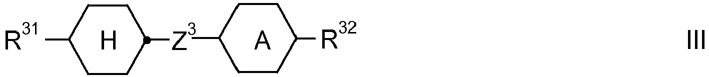 dans laquelle
R³¹ et R³² représentent dans chaque cas, de manière indépendante l'un de l'autre, un radical alkyle, alcoxyalkyle ou alcoxy en chaîne droite qui comporte jusqu'à 12 atomes de C, et 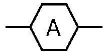 représente 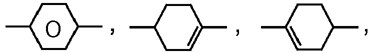 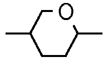 ou 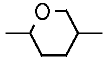
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₈-, -CF=CF-.

5. Milieu cristallin liquide selon une ou plusieurs des revendications 1 à 4, **caractérisé en ce que** le milieu comprend au moins un composé des formules I-1 à I-192, 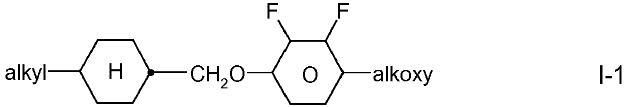 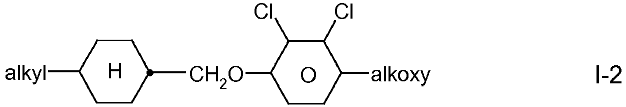 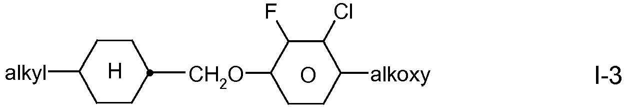 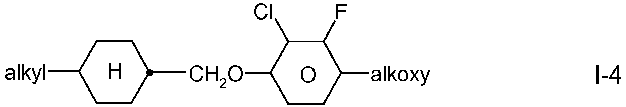 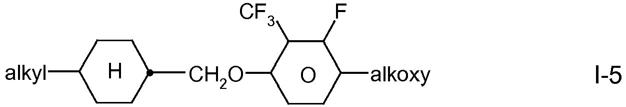 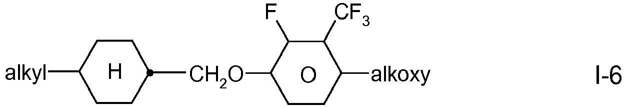 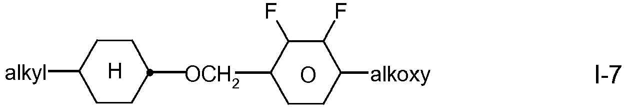 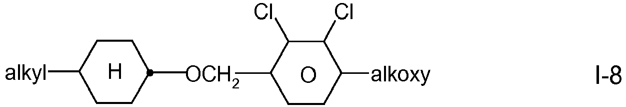 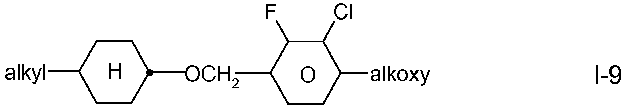 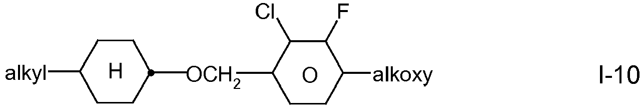 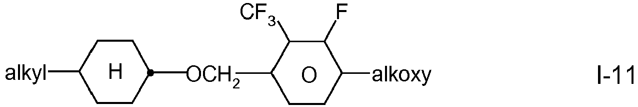 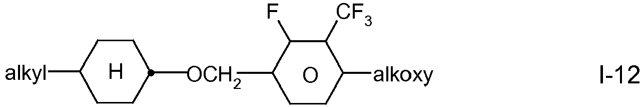 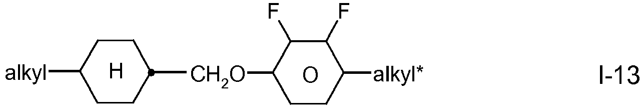 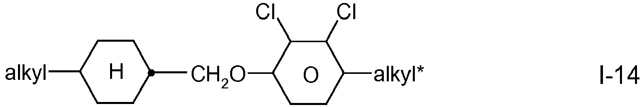 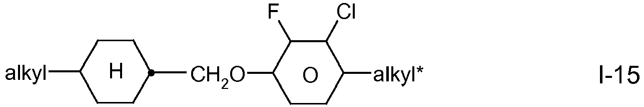 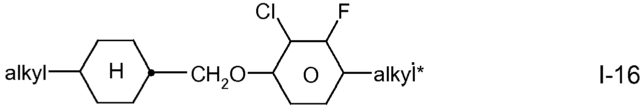 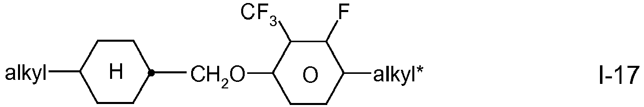 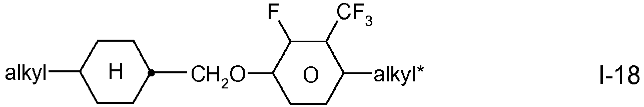 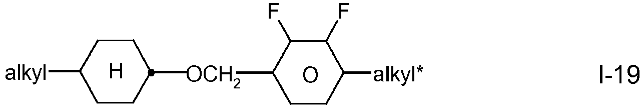 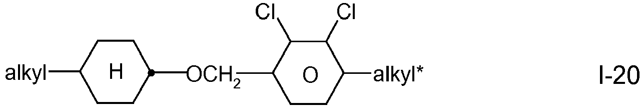 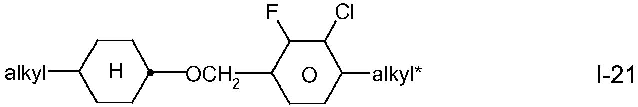 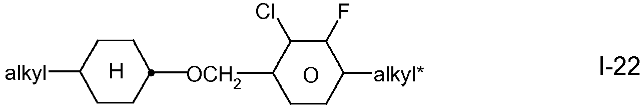 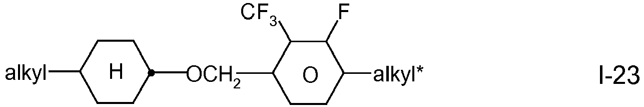 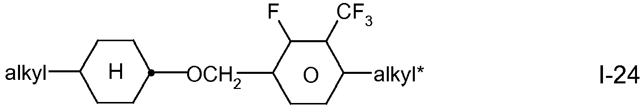 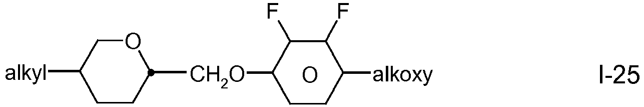 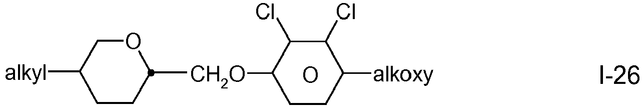 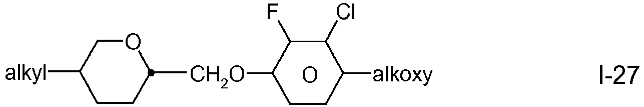 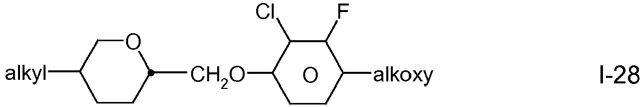 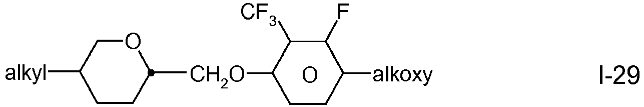 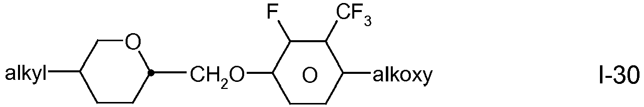 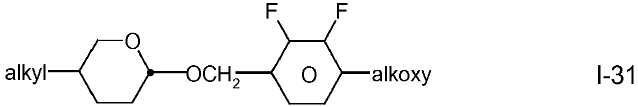 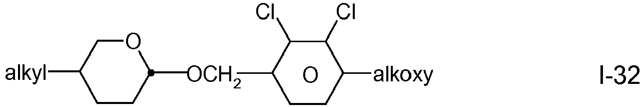 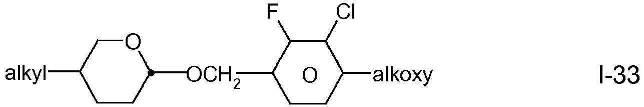 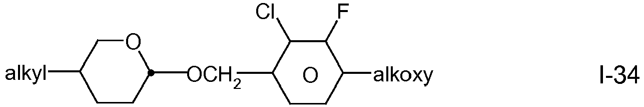 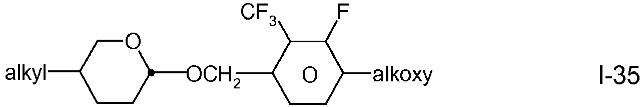 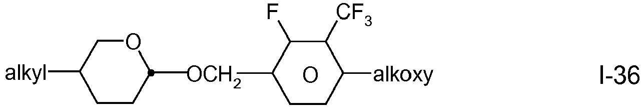 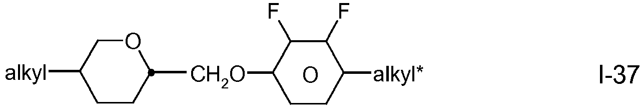 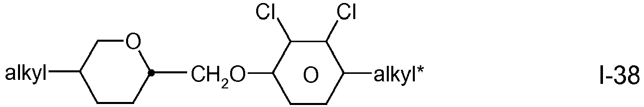 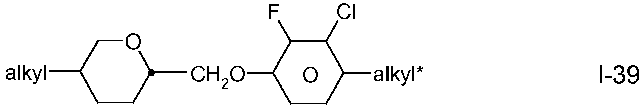 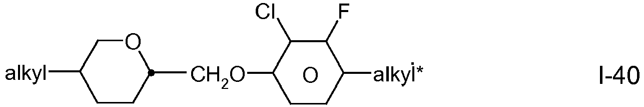 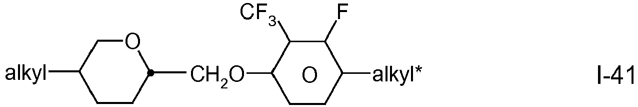 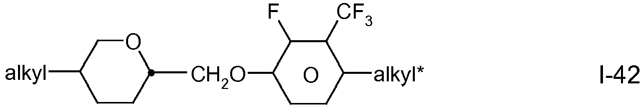 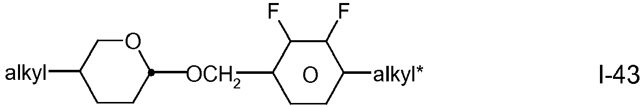 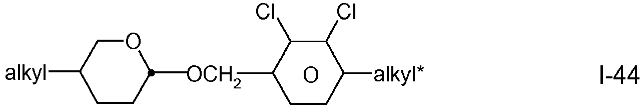 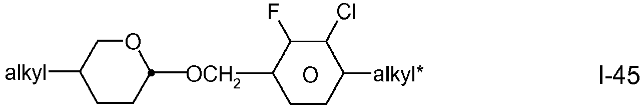 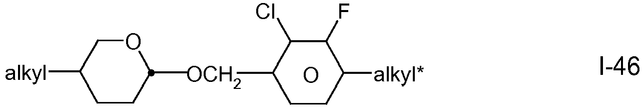 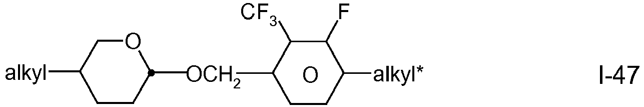 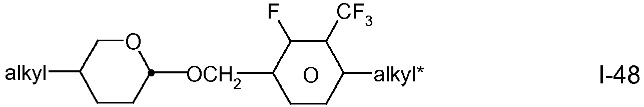 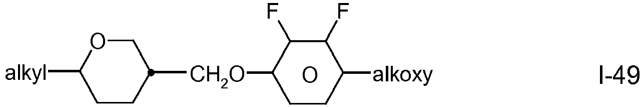 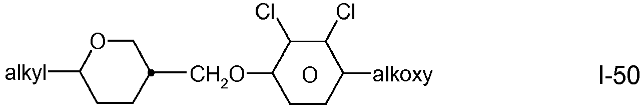 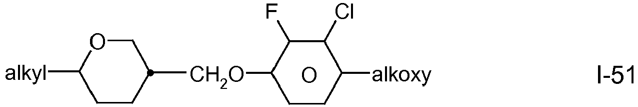 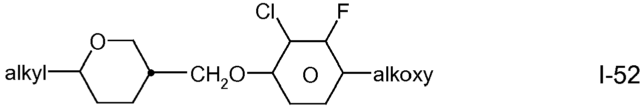 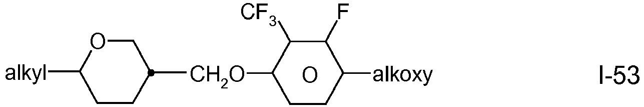 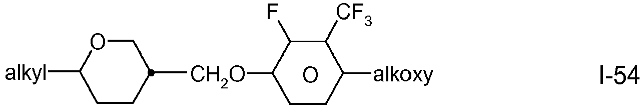 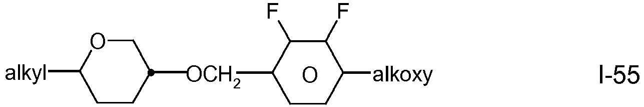 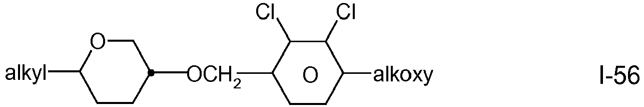 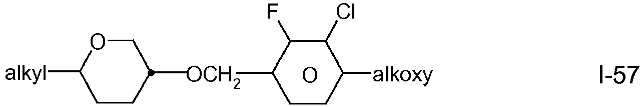 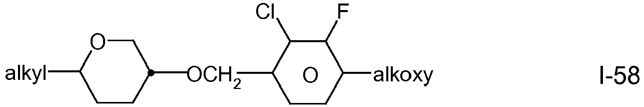 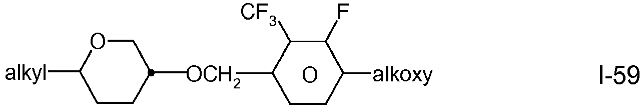 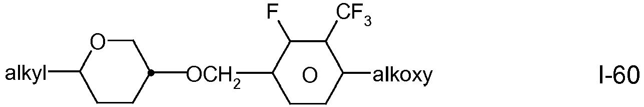 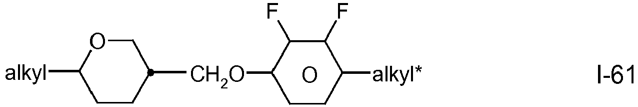 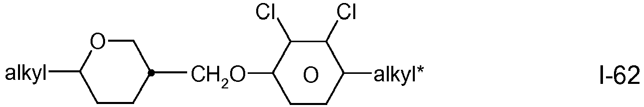 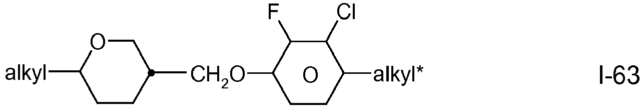 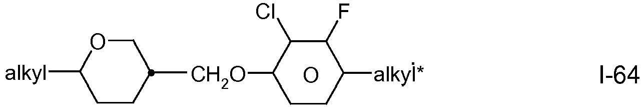 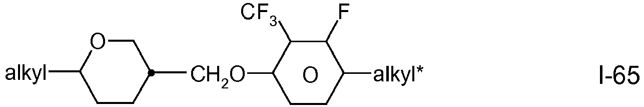 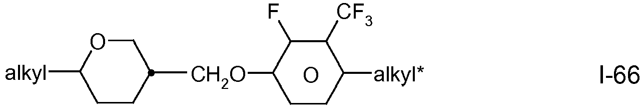 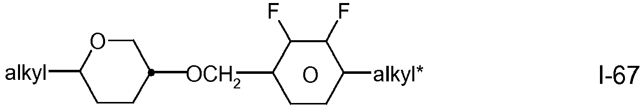 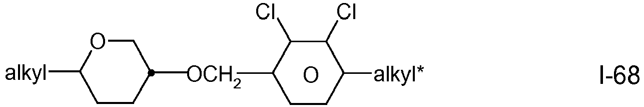 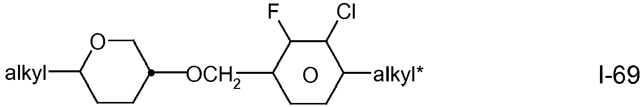 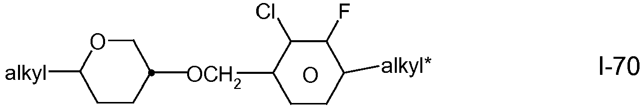 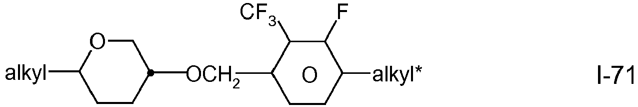 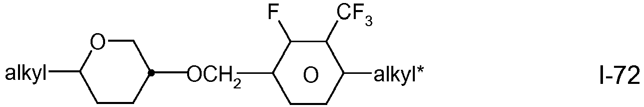 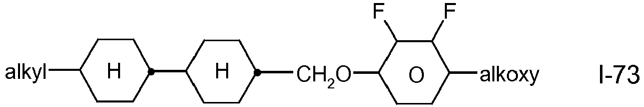 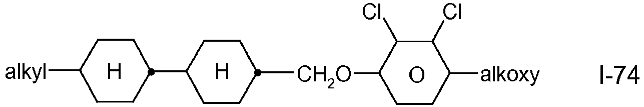 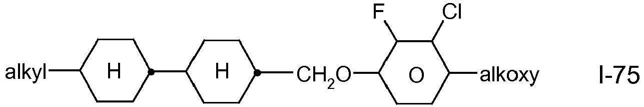 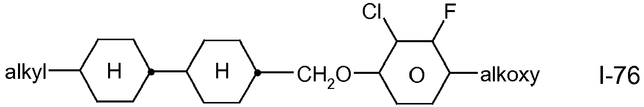 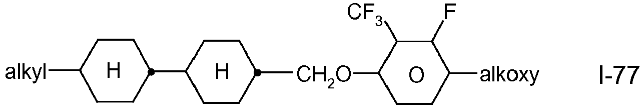 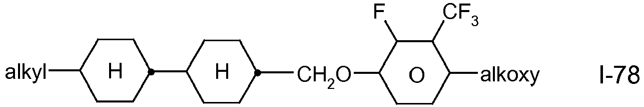 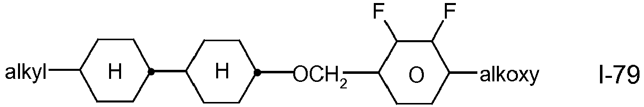 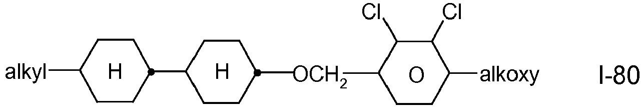 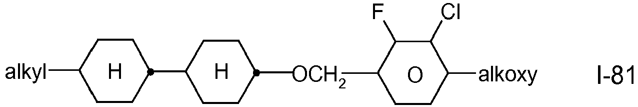 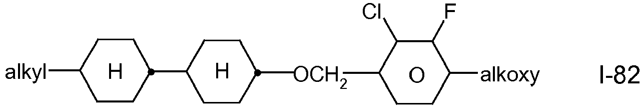 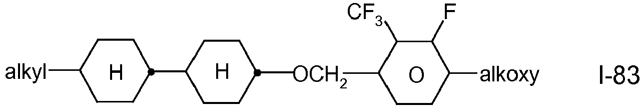 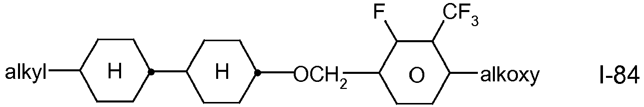 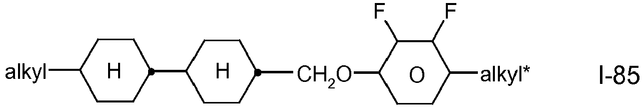 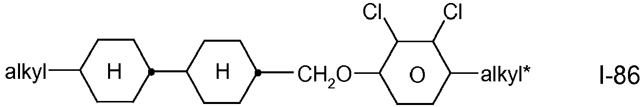 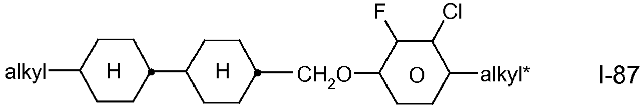 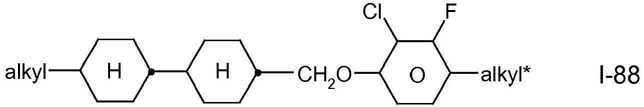 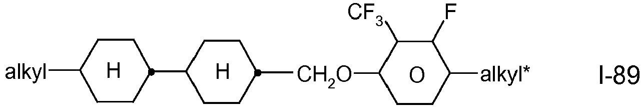 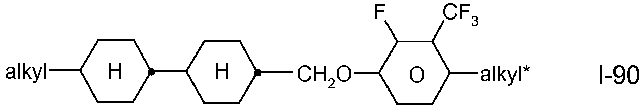 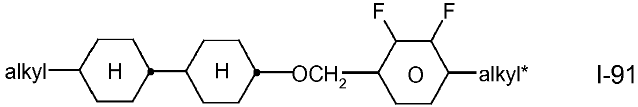 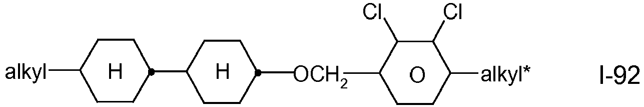 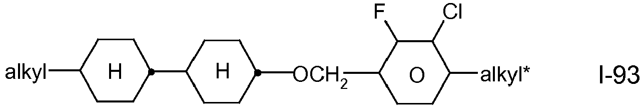 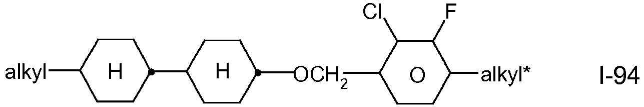 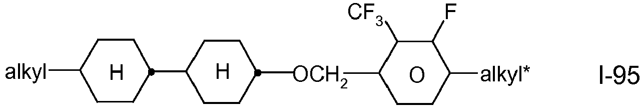 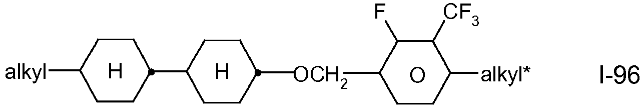 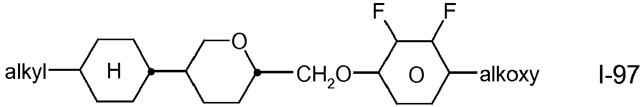 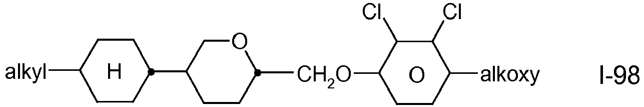 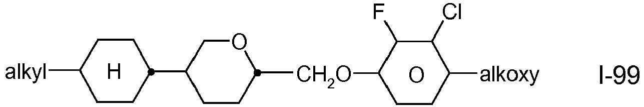 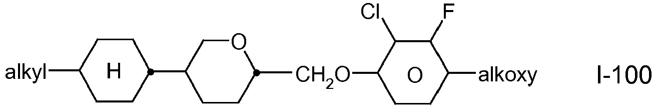 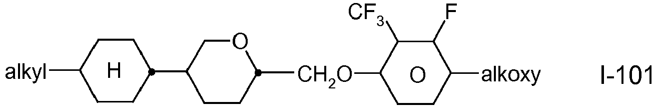 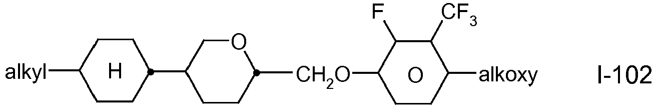 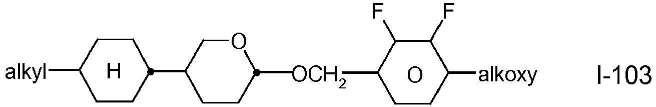 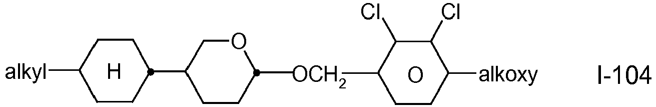 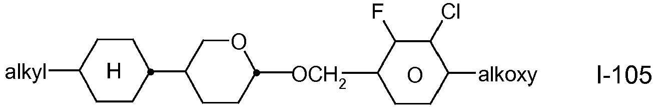 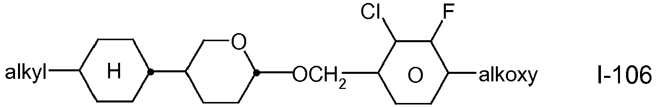 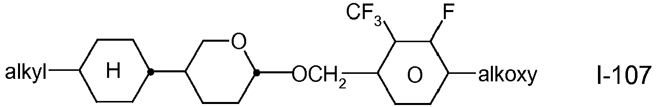 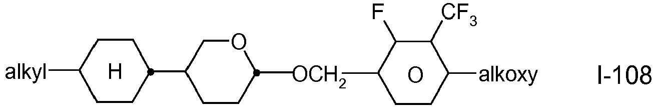 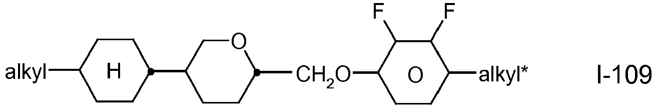 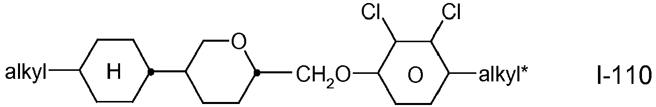 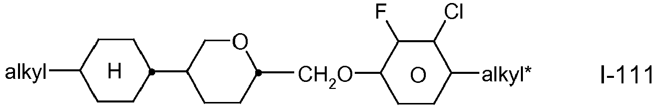 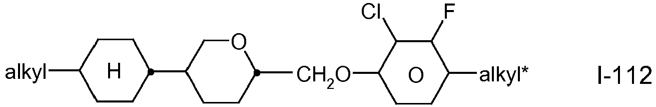 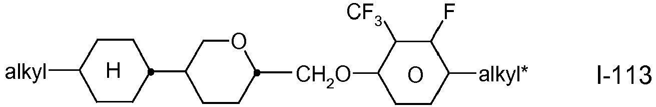 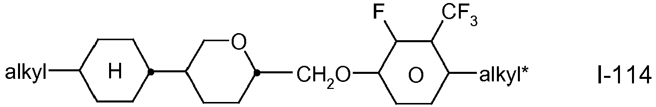 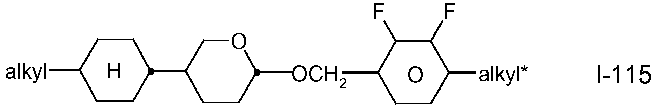 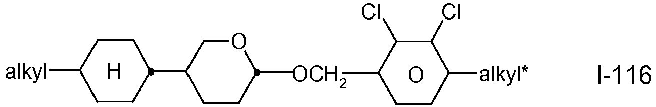 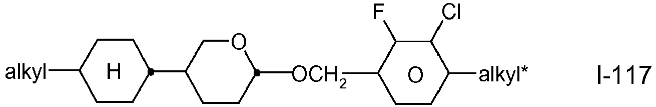 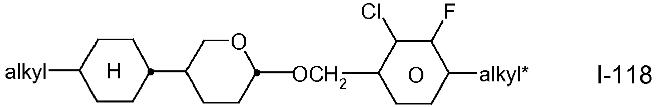 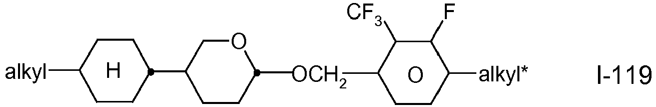 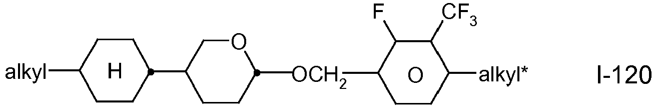 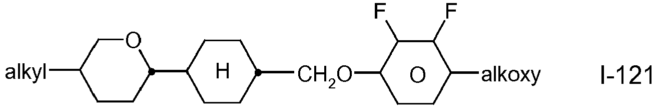 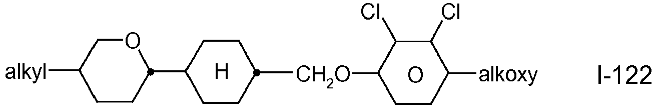 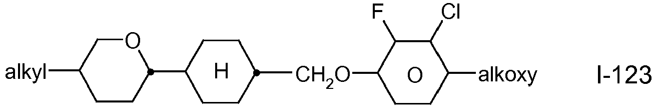 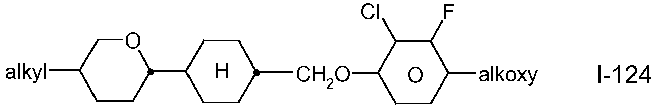 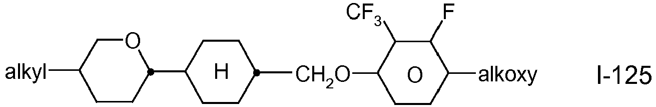 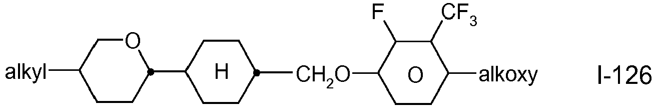 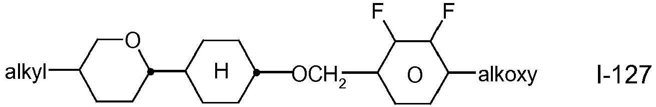 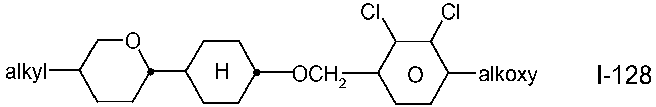 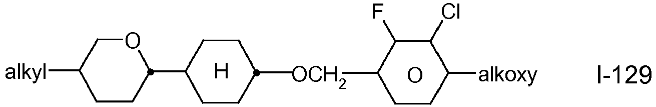 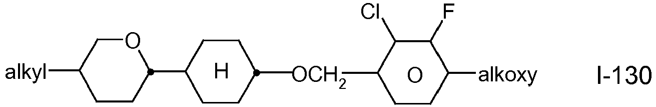 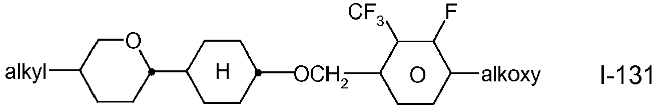 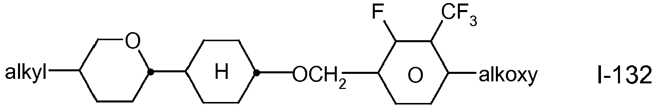 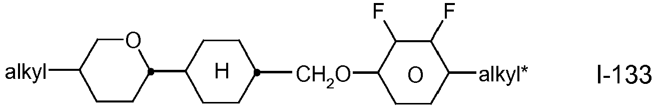 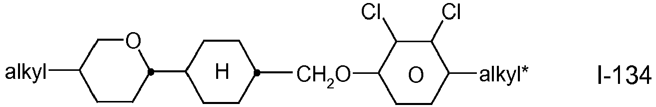 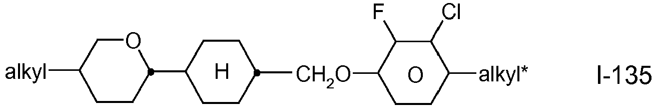 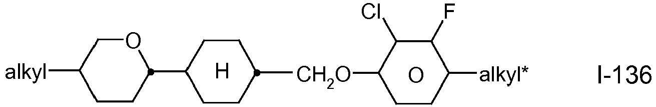 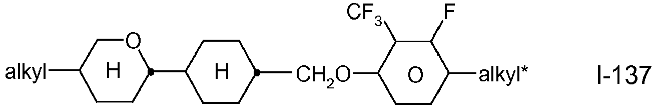 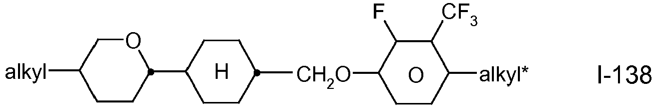 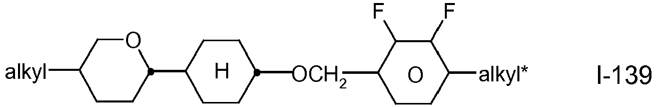 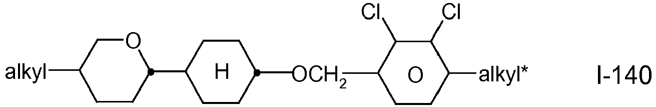 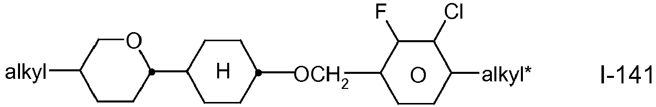 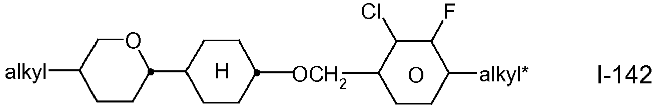 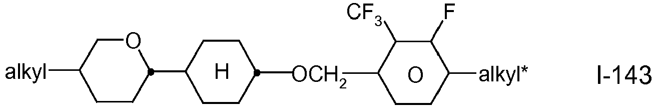 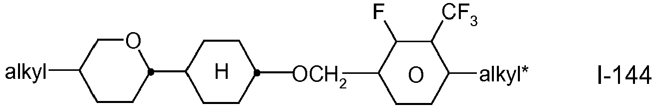 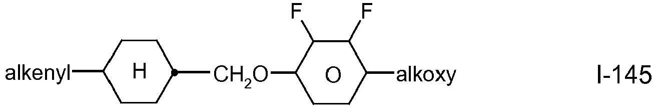 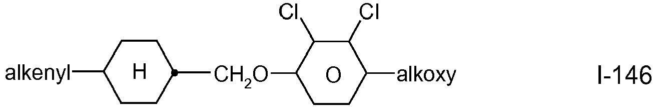 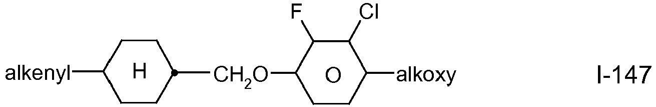 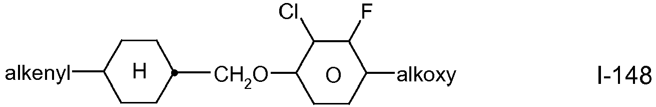 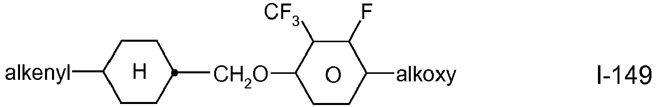 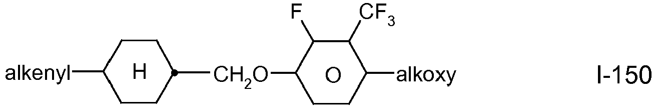 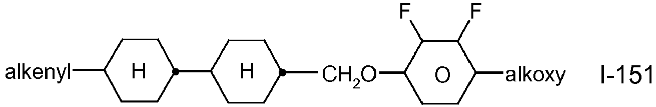 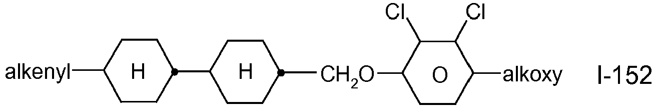 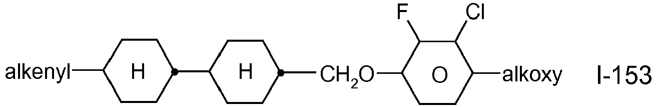 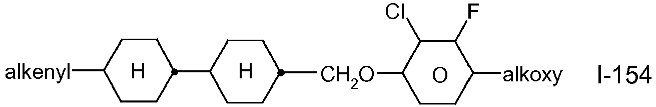 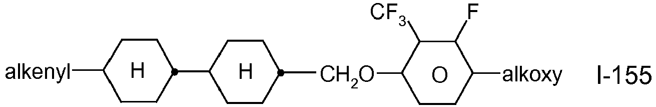 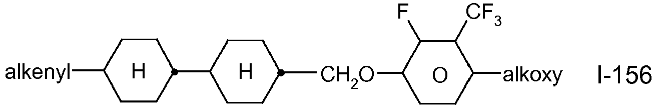 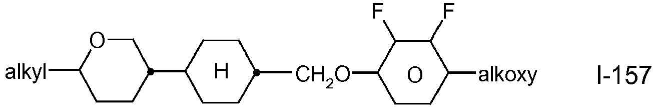 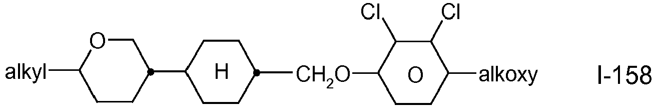 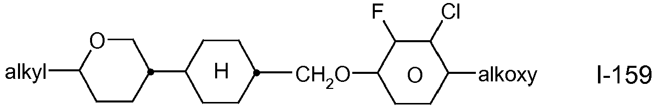 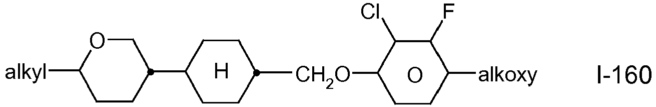 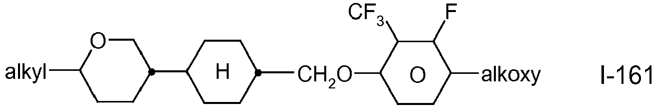 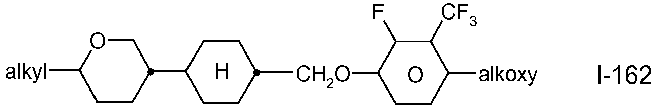 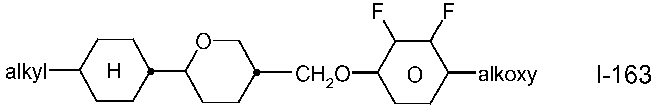 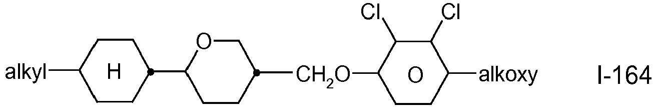 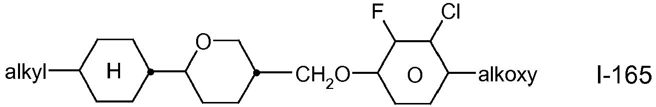 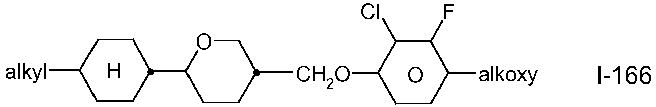 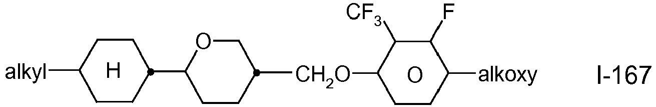 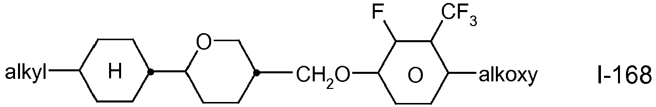 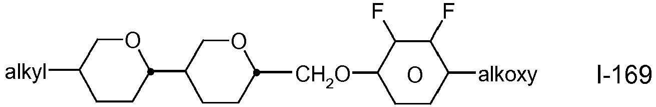 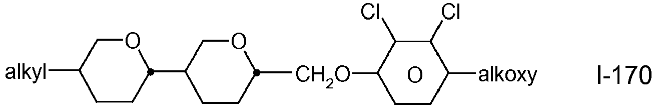 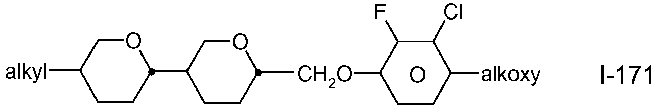 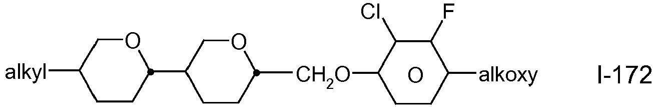 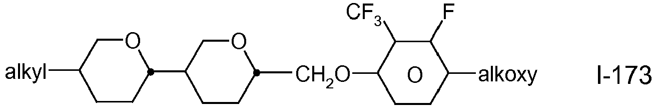 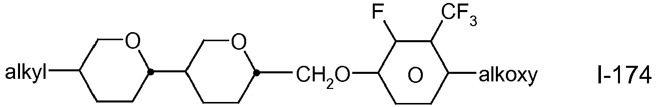 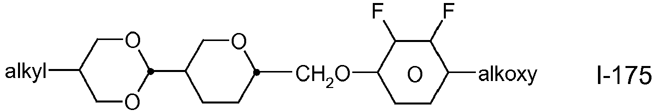 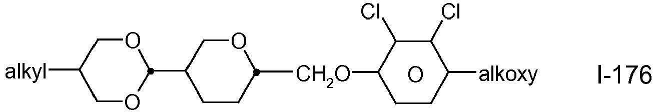 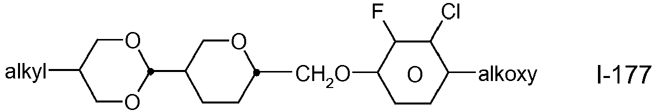 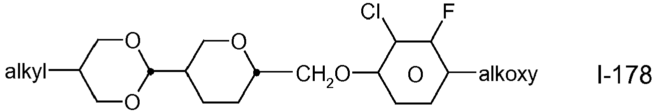 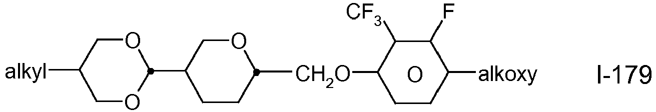 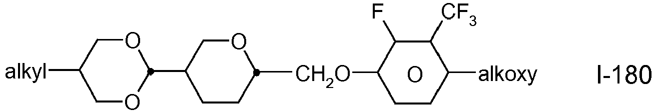 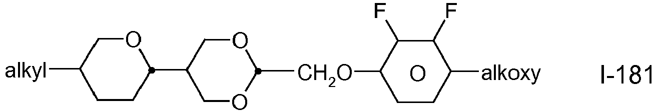 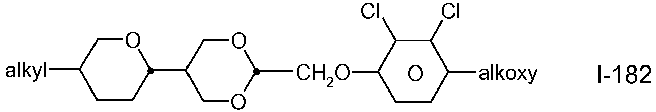 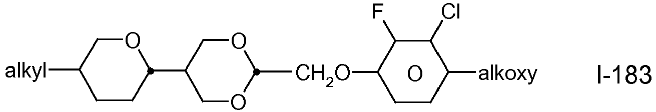 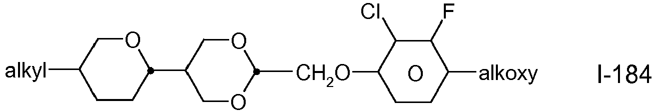 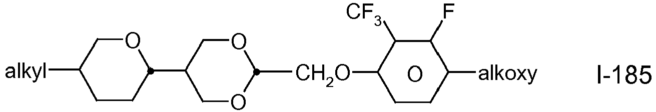 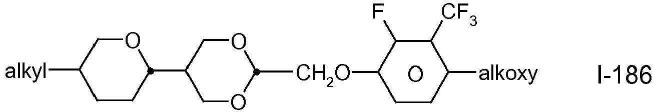 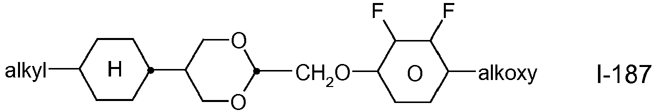 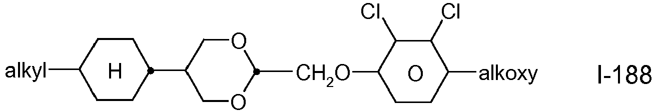 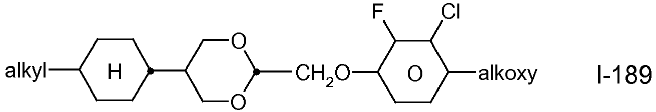 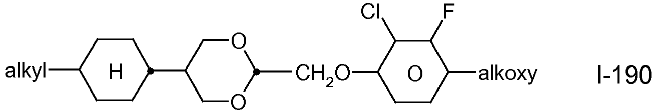 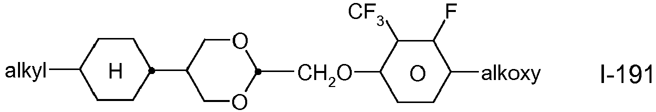 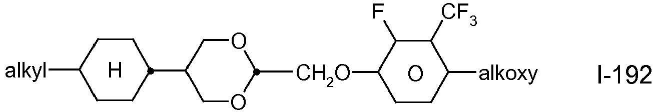 dans lesquelles
alkyl et alkyl* représentent dans chaque cas, de manière indépendante l'un de l'autre, un radical alkyle en chaîne droite qui comporte de 1 à 6 atome(s) de C,
alkenyl représente un radical alkényle en chaîne droite qui comporte de 2 à 6 atomes de C ; et
alkoxy représente un radical alcoxy en chaîne droite qui comporte de 1 à 6 atome(s) de C.

6. Milieu cristallin liquide selon une ou plusieurs des revendications 1 à 5, **caractérisé en ce que** le milieu comprend de façon additionnelle un ou plusieurs composé(s) des formules L-1 à L-11, 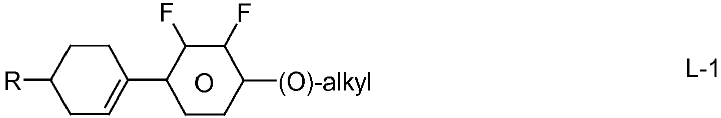 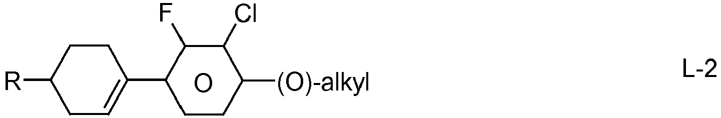 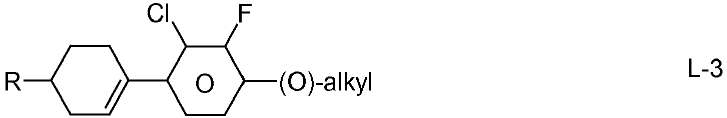 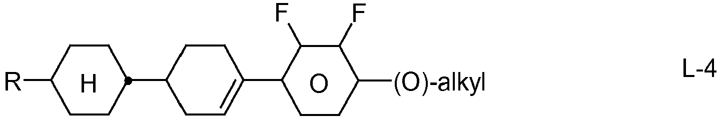 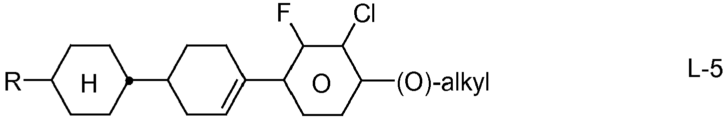 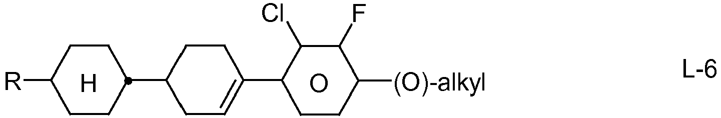 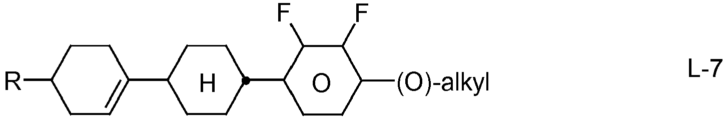 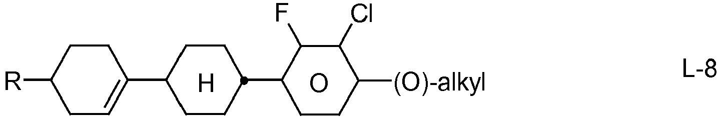 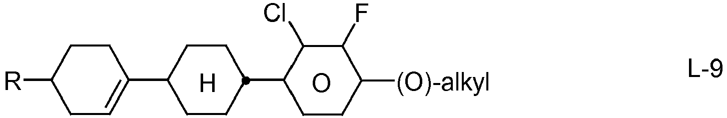 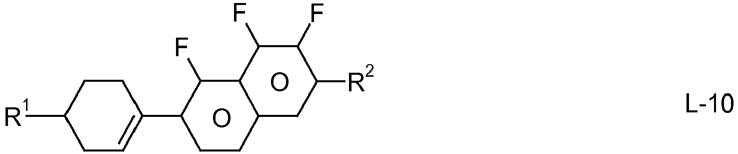 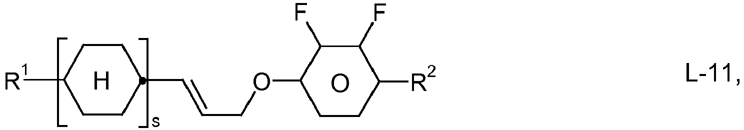 dans lesquelles
R, R¹ et R² présentent dans chaque cas, de manière indépendante les uns des autres, les significations qui ont été indiquées pour R^{2A} selon la revendication 2 et alkyl représente un radical alkyle qui comporte de 1 à 6 atome(s) de C, et
s représente 1 ou 2.

7. Milieu cristallin liquide selon une ou plusieurs des revendications 1 à 6, **caractérisé en ce que** le milieu comprend de façon additionnelle un ou plusieurs terphényle(s) des formules T-1 à T-21, 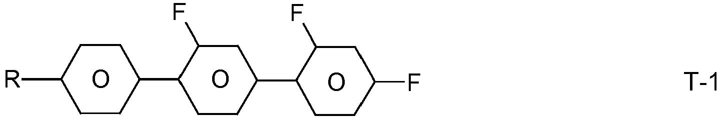 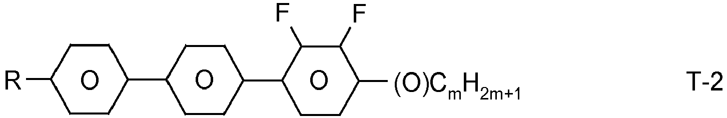 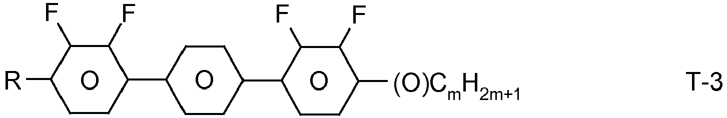 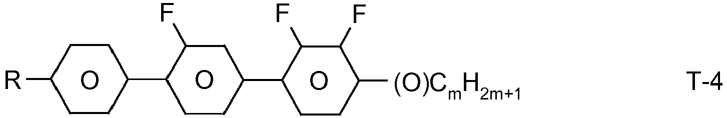 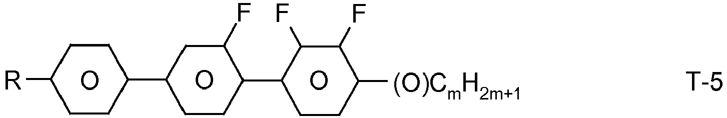 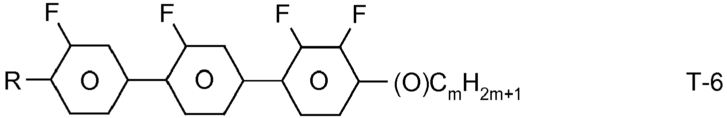 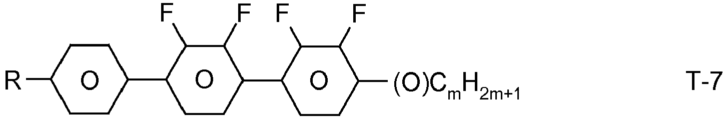 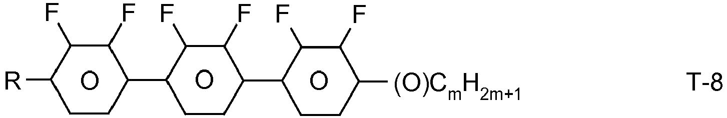 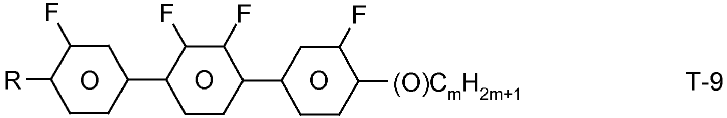 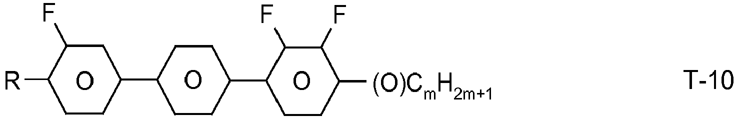 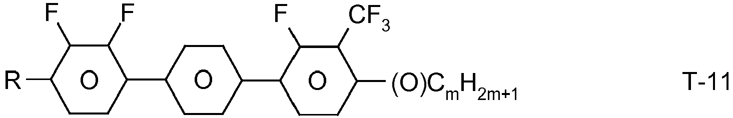 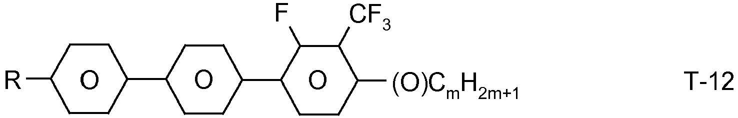 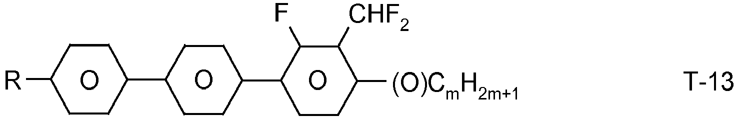 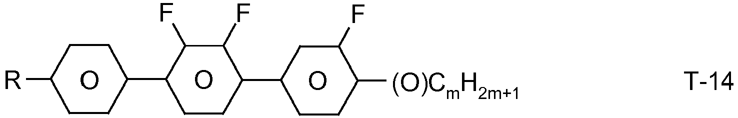 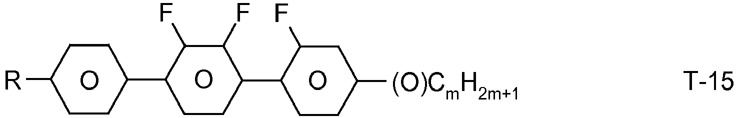 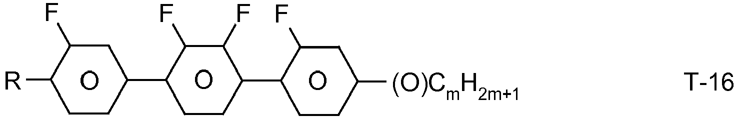 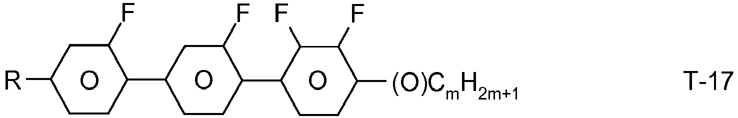 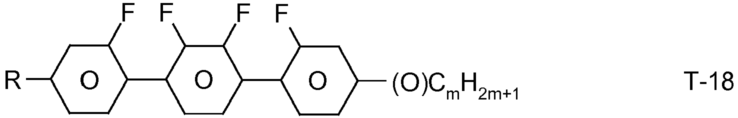 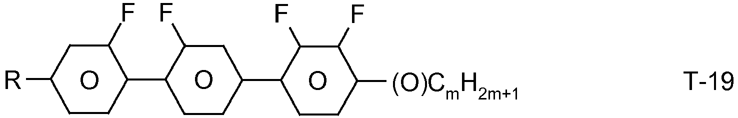 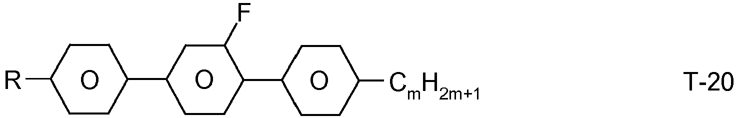 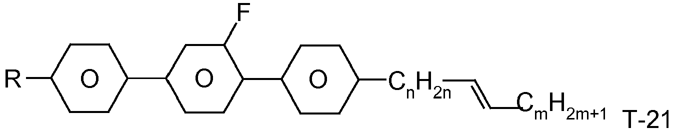 dans lesquelles
R représente un radical alkyle ou alcoxy en chaîne droite qui comporte de 1 à 7 atome(s) de C, et
m représente 1-6.

8. Milieu cristallin liquide selon une ou plusieurs des revendications 1 à 7, **caractérisé en ce que** le milieu comprend de façon additionnelle un ou plusieurs composé(s) des formules O-1 à O-16, 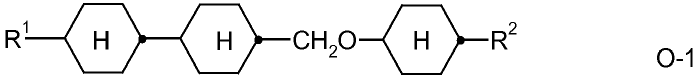 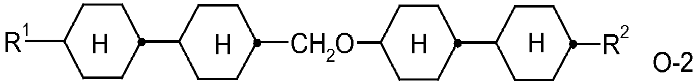 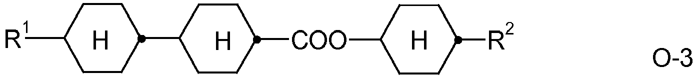 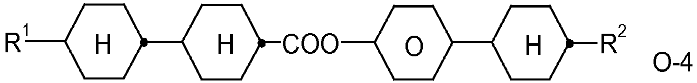 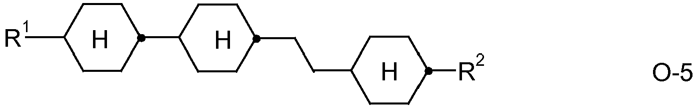 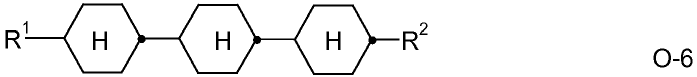 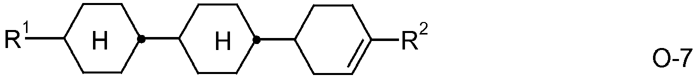 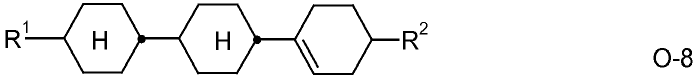 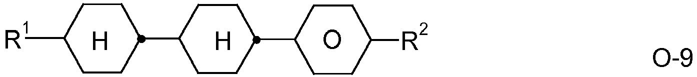 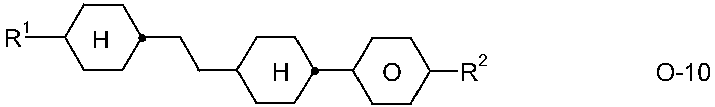 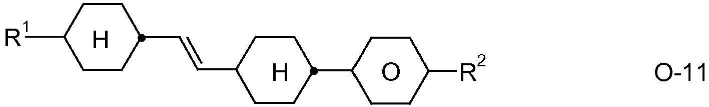 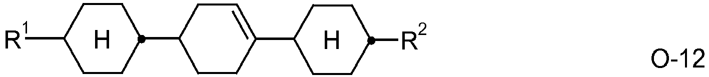 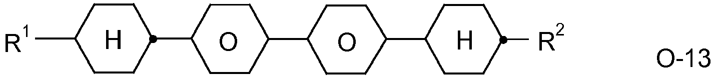 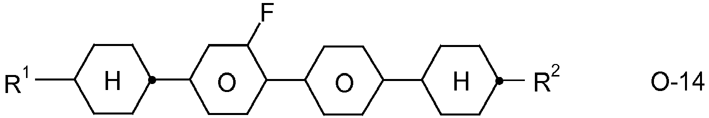 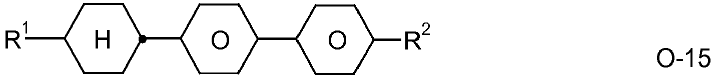 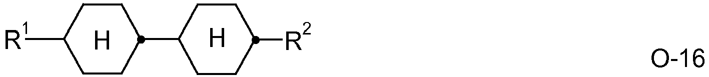 dans lesquelles R¹ et R² présentent dans chaque cas, de manière indépendante l'un de l'autre, les significations qui ont été indiquées pour R^{2A} selon la revendication 2.

9. Milieu cristallin liquide selon une ou plusieurs des revendications 1 à 8, **caractérisé en ce que** le milieu comprend de façon additionnelle un ou plusieurs composé(s) indane de la formule In, 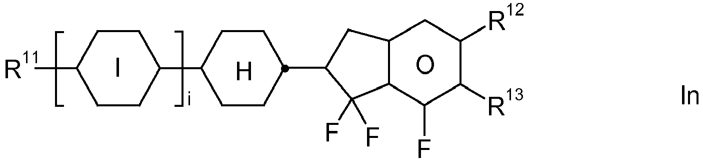 dans laquelle
R¹¹, R¹², R¹³ représentent un radical alkyle, alcoxy, alcoxyalkyle ou alkényle en chaîne droite qui comporte de 1 à 5 atome(s) de C,
R¹² et R¹³ représente de façon additionnelle également halogène, 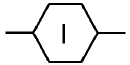 représente 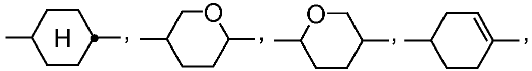 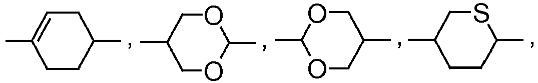 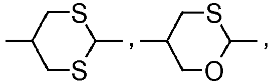
i représente 0, 1 ou 2.

10. Milieu cristallin liquide selon une ou plusieurs des revendications 1 à 9, **caractérisé en ce que** la proportion de composés de la formule I dans le mélange pris dans sa globalité est ≥ 1% en poids.

11. Milieu cristallin liquide selon une ou plusieurs des revendications 1 à 10, **caractérisé en ce qu'**il comprend de façon additionnelle un ou plusieurs composé(s) polymérisable(s) et
la concentration du/des composé(s) polymérisable(s), sur la base du milieu, est de 0,01 à 5% en poids.

12. Milieu cristallin liquide selon une ou plusieurs des revendications 1 à 11, **caractérisé en ce que** le(s) composé(s) polymérisable(s) est (sont) sélectionné(s) parmi les composés de la formule I*
R^{a}-A¹-(Z¹-A²)ₘ-R^{b} I*
dans laquelle les radicaux individuels présentent les significations qui suivent :
R^{a} et R^{b} représentent dans chaque cas, de manière indépendante l'un de l'autre, P, P-Sp-, H, halogène, SFs, NO₂, un groupe carbone ou un groupe hydrocarbone, où au moins l'un des radicaux R^{a} et R^{b} représente ou contient un groupe P ou P-Sp-,
P représente pour chaque occurrence, de manière identique ou différente, un groupe polymérisable,
Sp représente pour chaque occurrence, de manière identique ou différente, un groupe d'espaceur ou une liaison simple,
A¹ et A² représentent dans chaque cas, de manière indépendante l'un de l'autre, un groupe aromatique, hétéroaromatique, alicyclique ou hétérocyclique, de préférence qui comporte de 4 à 25 atomes de cycle, lequel peut également contenir des cycles fusionnés, et lequel peut également être mono- ou polysubstitué par L,
L représente P-Sp-, H, OH, CH₂OH, halogène, SF₅, NO₂, un groupe carbone ou un groupe hydrocarbone,
Z¹ représente pour chaque occurrence, de manière identique ou différente, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ ou une liaison simple,
R⁰ et R⁰⁰ représentent dans chaque cas, de manière indépendante l'un de l'autre, H ou alkyle qui comporte de 1 à 12 atome(s) de C,
m représente 0, 1, 2, 3 ou 4,
n1 représente 1, 2, 3 ou 4.

13. Procédé pour la préparation d'un milieu cristallin liquide selon une ou plusieurs des revendications 1 à 12, **caractérisé en ce qu'**au moins un composé de la formule I est mélangé avec au moins un autre composé mésogène, et un ou plusieurs additif(s) et/ou un ou plusieurs stabiliseur(s) et/ou un ou plusieurs composé(s) polymérisable(s) sont/est en option ajouté(s).

14. Utilisation du milieu cristallin liquide selon une ou plusieurs des revendications 1 à 13 dans les affichages électro-optiques.

15. Utilisation du milieu cristallin liquide selon une ou plusieurs des revendications 1 à 14 dans les affichages VA, PVA et PS-VA, IPS, PS-IPS, FFS, PS-FFS ou PALC.

16. Utilisation du milieu cristallin liquide selon une ou plusieurs des revendications 10 à 12 dans les affichages PS et PSA pour générer un angle d'inclinaison dans le milieu cristallin liquide par polymérisation in-situ du/des composé(s) polymérisable(s) dans l'affichage PSA à l'aide de l'application d'un champ électrique ou magnétique.

17. Affichage électro-optique présentant un adressage par matrice active, **caractérisé en ce qu'**il contient, en tant que diélectrique, un milieu cristallin liquide selon une ou plusieurs des revendications 1 à 12.

18. Affichage électro-optique selon la revendication 17, **caractérisé en ce qu'**il s'agit d'un affichage VA, PSA, PS-VA, PALC, FFS, PS-FFS ou PS-IPS.

19. Affichage électro-optique selon la revendication 17 ou 18, contenant une cellule LC qui est constituée par deux substrats et par deux électrodes, dans lequel au moins un substrat est transparent vis-à-vis de la lumière et au moins un substrat comporte une ou deux électrode(s), et une couche, localisée entre les substrats, d'un milieu cristallin liquide qui comprend un composant polymérisé et un composant de poids moléculaire faible, dans lequel le composant polymérisé peut être obtenu au moyen de la polymérisation d'un ou de plusieurs composé(s) polymérisable(s) dans le milieu cristallin liquide entre les substrats de la cellule LC, de préférence au moyen de l'application d'une tension électrique sur les électrodes, et dans lequel le composant de poids moléculaire faible est un milieu cristallin liquide selon une ou plusieurs des revendications 1 à 12.
